(19) Europäisches Patentamt
European Patent Office
Office européen des brevets

(11) Numéro de publication: **0 056 547**
**B1**

(12) # FASCICULE DE BREVET EUROPEEN

(45) Date de publication du fascicule du brevet: **27.03.85**

(51) Int. Cl.⁴: **G 06 F 1/00**

(21) Numéro de dépôt: **81402040.0**

(22) Date de dépôt: **21.12.81**

(54) **Système d'alimentation microprogrammable pour système de traitement de données, comportant un panneau de service destiné aux opérations de maintenance.**

(30) Priorité: **30.12.80 FR 8027770**

(43) Date de publication de la demande: **28.07.82 Bulletin 82/30**

(45) Mention de la délivrance du brevet: **27.03.85 Bulletin 85/13**

(84) Etats contractants désignés: **DE FR GB IT NL**

(56) Documents cités:
**EP - A - 0 012 951**
**US - A - 4 162 526**
**US - A - 4 204 249**
**US - A - 4 233 666**

**IBM TECHNICAL DISCLOSURE BULLETIN, vol. 23, no. 7A, décembre 1980 New York, US NADERSON et al.: *"Data processing system power controller"*, pages 2651-2652**
**IBM TECHNICAL DISCLOSURE BULLETIN, vol. 22, no. 7, décembre 1979 New York, US GOTTSHAL et al.: "Method to ensure validity of the "Pick backside contact switch", pages 2844-2845**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Takats, Gilbert Louis, 94, Avenue Gambetta, F-75020 Paris (FR)**
Inventeur: **Dumay, Gérald, 94, Avenue Gambetta, F-75020 Paris (FR)**

**EP 0 056 547 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne les systèmes de traitement de données et, plus particulièrement, la commande et le contrôle des sources d'alimentation de ces systèmes.

Il est à remarquer d'ailleurs que les enseignements de la présente invention peuvent s'appliquer directement aux sources d'alimentation de systèmes complexes réclamant des sources d'alimentations multiples comme, par exemple, les automates industriels, le système de contrôle de processus ou encore les systèmes de surveillance médicale intensive.

Dans les systèmes de traitement de données les circuits d'alimentation sont généralement commandés et contrôlés au moyen de circuits logiques câblés. Ces circuits logiques câblés présent des inconvénients:

— ils se prêtent mal à la mise en place de modifications de circuits rendues nécessaires, par exemple, pour obtenir une amélioration de fonctionnement
— ils deviennent très couteux dès que les fonctions demandées se compliquent
— ils permettent difficilement la réalisation de systèmes de traitement de données ayant des configurations modulaires.

Jusqu'à présent, ces inconvénients étaient contrebalancés par les avantages inhérents à ces circuits logiques câblés.

Aujourd'hui, on assiste à une évolution importante de l'architecture des systèmes de traitement de données.

Cette évolution d'architecture a été permise par les progrès réalisés dans le domaine des semiconducteurs. Parmi ces progrès, il faut noter l'apparition des circuits intégrés à grande échelle désignés par le sigle LSI (abréviation de l'Anglais: Large Scale Integration). Ces circuits intégrés LSI ainsi appelés en raison du grand nombre de composants élémentaires qu'ils incorporent voient le nombre de composants élémentaires porté par substrat s'accroître d'année. Cet accroissement de la densité d'intégration se traduit par de nombreux avantages dans la réalisation des systèmes de traitement de données:

— Les circuits logiques sont plus rapides
— Les prix de revient sont plus faibles
— Les encombrements sont plus réduits

Tout ces avantages ont permis aux constructeurs de faire évoluer les structures des ordinateurs:

— des fonctions nouvelles sont ajoutées et en particulier le recours à des systèmes multiprocesseurs est de plus en plus fréquent
— des systèmes modulaires sont réalisés puisque la microprogrammation permet de disposer de systèmes évolutifs aussi bien dans leurs fonctions que dans leurs capacités
— des systémes plus compacts sont réalisés puisqu'un nombre plus important de circuits logiques peut être placé dans le même volume.

Cette évolution de l'architecture des systèmes de traitement de données a pour contre partie, entre autres, une complication des dispositifs d'alimentation:

— ils doivent fournir des débits de plus en plus élevés sous des tensions faibles
— ils doivent présenter la même modularité et le même caractère évolutif que les dispositifs qu'ils alimentent
— ils doivent assurer une protection efficace des circuits alimentés sous peine de voir des destructions massives de composants
— ils doivent règler les problèmes de protocole entre les alimentations au cours des différentes phases de fonctionnement du système de traitement de données.

Les logiques câblées ne peuvent satisfaire ces exigences qu'au prix de difficultés et de prix considérables.

Le document EP-A-12 951 décrit un système modulaire avec une mémoire définissant la présence ou absence de certaint modules de mémoire.

Le brevet US-A-204 249 décrit le principe d'associer au processeur de service d'un système de traitement de données un adaptateur permettant au processeur de service d'exécuter, sous le contrôle d'un programme enregistré, la commande et la surveillance des dispositifs d'alimentation utilisés dans le système. L'adaptateur contient des logiques de commandes d'adresses et de données permettant au processeur de service de détecter les paramètres de fonctionnement des différents dispositifs d'alimentation.

La présente invention, telle qu'elle est caractérisé dans les revendications, a pour objet d'améliorer les possibilités d'un tel système d'alimentation en utilisant un processeur spécialement affecté à la commande et au contrôle du fonctionnement d'une pluralité de dispositifs d'alimentation. Chaque dispositif d'alimentation du système est réalisé par combinaison d'éléments standards appelés »modules d'alimentation élémentaires«. Grâce à cette structure et au moyen de circuits d'interface particuliers, le processeur peut, par simple adressage des circuits d'interface, avoir accès aux paramètres de fonctionnement de chacun des modules d'alimentation élémentaires.

Une telle disposition permet notamment de réaliser

- des systèmes d'alimentation évolutifs c'est-à-dire dont la configuration peut être opportunément modifiée en fonction des variations de configuration du système de traitement de données et cela d'une façon très simple par simple changement d'un module de configuration.
- une commande centralisée de plusieurs systèmes d'alimentation, à partir de la console du système de traitement de données.
- une commande décentralisée d'un système d'alimentation est rendue possible à partir d'un panneau de Service où chaque source est accessible.
- une visualisation globale des incidents surgis dans le ou les systèmes d'alimentations contrôlés est faite sur la console du système de traitement de données.
- une visualisation détaillée des incidents survenus sur un système d'alimentation est faite sur le panneau de service du système d'alimentation.
- un fonctionnement particulier du système d'alimentation en mode maintenance est rendu possible par la présence d'un commutateur dont l'accès est réservé.

Plus précisément, ces buts sont atteints par l'invention par les caractéristiques contenues dans les revendications.

La figure 1 représente le schéma synoptique du dispositif d'alimentation d'un système de traitement de données utilisant les enseignements de l'invention.

La figure 2 est une autre représentation du dispositif d'alimentation de la figure 1. Sur cette figure seuls les signaux de commande et de contrôle sont représentés.

La figure 3 est une représentation schématique du MODULE D'ALIMENTATION (140 et 141).

La figure 4 est une représentation schématique du MODULE D'ALIMENTATION (142 et 143).

La figure 5 est une représentation schématique du MODULE D'ALIMENTATION (144 et 145).

La figure 6 représente une PLAQUE FONCTIONNELLE ne comportant que des connecteurs arrières.

La figure 7 représente und PLAQUE FONCTIONNELLE comportant des connecteurs arrières et des connecteurs avant.

La figure 8 est une représentation schématiques des circuits de branchements des PLAQUES FONCTIONNELLES avec l'OMNIBUS DE PILOTAGE (12) ainsi que les CABLES DE LIAISON PERIPHERIQUE.

La figure 9 est une représentation schématique d'un »PANNEAU DE SERVICE« (11).

La figure 10 représente le mode de raccordement en guirlande de plusieurs systèmes d'alimentation avec la CONSOLE (48) D'EXPLOITATION.

La figure 11 représente le mode de raccordement d'un système d'alimentation isolé avec la CONSOLE (48) D'EXPLOITATION.

La figure 12 représente le chronogramme des signaux échangés dans la guirlande dans le cas particulier de 3 systèmes d'alimentation.

La figure 13 représente schématiquement un MODULE (74) D'INTERFACE D'EXPLOITATION AM904 ainsi que les différentes liaisons qui y aboutissent.

La figure 14 est une représentation schématique plus détaillée du MODULE D'INTERFACE D'EXPLOITATION AM904.

La figure 15 est une représentation détaillée d'une première partie des circuits internes du BLOC (235) D'INTERFACE.

La figure 16 est une représentation détaillée d'une seconde partie des circuits internes du BLOC (235) D'INTERFACE.

La figure 17 est une représentation détaillée d'une troisième partie des circuits internes du BLOC (235) D'INTERFACE.

La figure 18 est une représentation détaillée d'une quatrième partie des circuits internes du BLOC (235) D'INTERFACE.

La figure 19 est une représentation détaillée d'une cinquième partie des circuits internes du BLOC (235) D'INTERFACE.

La figure 20 est une représentation détaillée d'une sixième partie des circuits internes du BLOC (235) D'INTERFACE.

La figure 21 est une représentation détaillée d'une septième partie des circuits internes du BLOC (235) D'INTERFACE.

La figure 22 est une représentation détaillée d'une huitième partie des circuits internes du BLOC (235) D'INTERFACE.

La figure 23 est une représentation schématique des circuits logiques d'entrée dans le MODULE

D'INTERFACE D'EXPLOITATION AM904.

La figure 24 est une représentation schématique des circuits logiques de sortie du MODULE D'INTERFACE D'EXPLOITATION AM904.

La figure 25 est une représentation détaillée des circuits du BLOC (48) DE TRAITEMENT DES DEMANDES DE CHANGEMENT DE REGIME contenu dans le MODULE D'INTERFACE D'EXPLOITATION AM904.

La figure 26 est un tableau donnant la correspondance entre les références attribuées aux signaux sur le schéma du PANNEAU DE SERVICE (11) et les références attribuées aux mêmes signaux sur le schéma du MODULE D'INTERFACE D'EXPLOITATION AM904.

La figure 27 précise les différents signaux véhiculés par les liaisons SPCI-IN et SPCI-OUT.

La figure 28 précise les différents signaux véhiculés par les liaisons (229) et (230).

La figure 29 contient un tableau définissant les signaux échangés directement à travers l'OMNIBUS DE PILOTAGE entre les SOURCES D'ENERGIE et le MODULE D'INTERFACE D'EXPLOITATION AM904.

La figure 30 est un tableau définissant, pour chaque ocntact du connecteur Z01 du MODULE D'INTERFACE D'EXPLOITATION AM904, la ou les appellations logiques du signal qui y aboutit.

La figure 31 est un tableau définissant, pour chaque contact du connecteur Z02 du MODULE D'INTERFACE D'EXPLOITATION AM904, la ou les appellations logiques du signal qui y aboutit.

La figure 32 est une représentation schématique du MODULE D'INTERFACE AVAL AM903.

La figure 33 représente le schéma synoptique d'un DEMI MODULE D'INTERFACE AVAL AM903.

La figure 34 est une représentation détaillée des circuits d'entrée du DEMI MODULE D'INTERFACE AVAL AM903 représenté sur la figure 33.

La figure 35 est une représentation détaillée des circuits de sortie du DEMI MODULE D'INTERFACE AVAL AM903 représenté sur la figure 33.

La figure 36 est une représentation détaillée du BLOC DE COMMANDE ET D'ADRESSAGE et du BLOC D'ELABORATION DES REQUETES du DEMI MODULE D'INTERFACE AVAL AM903 représenté sur la figure 33.

La figure 37 est un tableau qui définit les signaux véhiculés dans l'interface IM1 d'un MODULE D'INTERFACE AVAL AM903.

La figure 38 est un tableau qui définit les signaux véhiculés dans l'interface ISM2 d'un MODULE D'INTERFACE AVAL AM903.

La figure 39 est un tableau qui définit les signaux véhiculés dans l'interface LSSCI d'un MODULE D'INTERFACE AVAL AM903.

La figure 40 est un tableau qui définit les signaux d'interface échangés à traves le connecteur Z01 entre un MODULE D'INTERFACE AVAL AM903 et l'OMNIBUS DE PILOTAGE.

La figure 41 est un tableau qui définit les signaux d'interface échangés à travers le connecteur Z02 entre un MODULE D'INTERFACE AVAL AM903 et l'OMNIBUS DE PILOTAGE.

La figure 42 contient des tableaux définissant la signification des bis d'états et contenus dans les octets d'état et cela en fonction du type de source d'énergie contrôlée.

La figure 43 contient un tableau qui définit l'emplacement dans le ratelier des plaques fonctionnelles supportant les modules d'interface aval. Ce tableau définit également le mode de raccordement des signaux d'entrée sur les broches Z01 et Z02 des modules d'interface aval AM903.

La figure 44 est une représentation schématique du MODULE DE PILOTAGE AM 902B.

La figure 45 est une représentation détaillée des circuits situés sur la moitié gauche de la figure 44.

La figure 46 est une représentation détaillée du bloc tampon des adresses, du bloc de sélection et du bloc de base de temps contenus dans le MODULE DE PILOTAGE AM902B.

La figure 47 est une représentation détaillée du bloc de mémoire, du commutateur de transfert de données, du bloc de commandes externes de ler niveau et du bloc tampon de données ocntenus dans le MODULE DE PILOTAGE AM 902B.

La figure 48 est un tableau qui définit les signaux logiques du module de pilotage AM902B raccordés à travers le connecteur Z01 avec l'omnibus de pilotage.

La figure 49 est un tableau qui définit les signaux logiques du module de pilotage AM902B raccordés à travers le connecteur Z02 avec l'omnibus de pilotage.

La figure 50 est une représentation schématique du MODULE DE CONFIGURATION AM927.

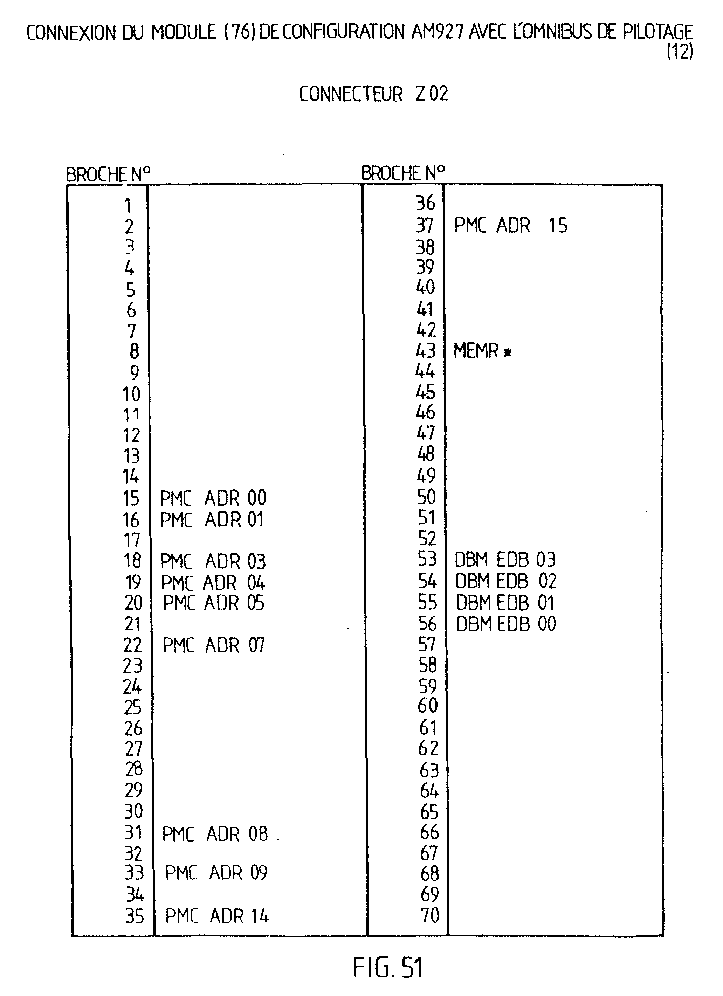

La figure 51 est un tableau qui définit les signaux logiques du module de configuration AM927 raccordés à travers le connecteur Z02 avec l'omnibus de pilotage.

Les figures 52 et 53 contiennent des tableaux qui définissent l'interconnexion des fils de L'OMNIBUS (12) DE PILOTAGE du système d'alimentation.

## DESCRIPTION DE L'INVENTION

Comme il a été dit précédemment, la commande et le contrôle des sources d'alimentation des systèmes de traitement de donnees étaient assurés par un ensemble de circuits logiques cablés. Ces circuits logiques câblés sont souvent appelés, en terme métier, sous le vocable de CIRCUITS GENERAUX.

Dans la présente invention, les »CIRCUITS GENERAUX« sont remplacés par un certain nombre de MODULES FONCTIONNELS ADRESSABLES pilotés par un ou plusieurs MICROPROCESSEURS DE PILOTAGE. Ces MODULES FONCTIONNELS ADRESSABLES sont raccordés aux MICROPROCESSEURS DE PILOTAGE par UN SYSTEME D'OMNIBUS. De la sorte, les MICROPROCESSEURS DE PILOTAGE peuvent:

— émettre des commandes à exécuter vers les MODULES FONCTIONNELS ADRESSABLES
— recevoir des compte-rendus depuis les MODULES FONCTIONNELS ADRESSABLES.

Pour illustrer la présente invention il va être décrit une application particulière qui est le PILOTAGE DES SOURCES D'ENERGIE DANS UN SYSTEME DE TRAITEMENT DE DONNEES.

## DESCRIPTION GENERALE D'UN SYSTEME D'ALIMENTATION SUIVANT L'INVENTION

Un système de traitement de données est composé en général, de différents SOUS-ENSEMBLES FONCTIONNELS.

Comme il a été dit précédemment les opérations de mise en route, de maintien en fonctionnement et d'arrêt des machines complexes présentent des problèmes de commande et de contrôle importants. Ces problèmes de commande et de contrôle sont résolus au moyen d'un ensemble de circuits électriques que l'on désigne souvent sous le nom de »CIRCUITS GENERAUX«. Ces CIRCUITS GENERAUX sont composés de circuits électriques spécialisés dont le fonctionnement est parfois rythmé par un dispositif d'horloge. Ces circuits électriques à cause de leur nature spécialisée se prêtent difficilement aux modifications et il peut être dit que les »CIRCUITS GENERAUX« obtenus par ces moyens présentent un caractère de quasi-immuabilité.

Dans la présente invention les »CIRCUITS GENERAUX« sont obtenus au moyen d'un certain nombre de MODULES FONCTIONNELS ADRESSABLES pilotés par un ou plusieurs PROCESSEURS CENTRAUX. Ces MODULES FONCTIONNELS ADRESSABLES sont raccordés aux PROCESSEURS CENTRAUX par SYSTEME D'OMNIBUS. De la sorte les PROCESSEURS CENTRAUX peuvent:

— émettre des commandes à exécuter vers les MODULES FONCTIONNELS ADRESSABLES
— recevoir des compte-rendus depuis les MODULES FONCTIONNELS ADRESSABLES.

Pour illustrer la présente invention il va être décrit une application particulière qui est le PILOTAGE DES SOURCES D'ENERGIE DANS UN SYSTEME DE TRAITEMENT DE DONNEES.

Un système de traitement de données est composé en général, de différents SOUS—ENSEMBLES FONCTIONNELS:

— une ou plusieurs unités de traitement désignées sous le vocable d'Unité Centrale de traitement,
— une ou plusieurs unités de mémorisation désignées sous le vocable de mémoire principale,
— une ou plusieurs unités d'entrée de données et de sortie désignées sous le vocable d'Unité d'Echange ou quelquefois de Contrôleur d'Entrée-Sortie,
— d'un certain nombre d'unités de commande et de contrôle d'appareils périphériques désignés sous le vocable de coupleurs de périphériques,
— de moyens destinés à l'exploitation et à la maintenance comme le pupitre d'exploitation et la console de maintenance.

Pour fonctionner tous ces sous-ensembles requièrent des SOURCES D'ENERGIE. Ces SOURCES D'ENERGIE sont, en général, réparties dans un certain nombre de MODULES D'ALIMENTATION. Comme il sera vu plus loin cette répartition n'est pas quelconque mais répond à des CRITERES DE BON FONCTIONNEMENT du système de traitement des données au cours du déroulement de ses différentes phases de fonctionnement. Souvent, d'ailleurs, ces critères de bon fonctionnement conduisent à associer un ou plusieurs MODULES D'ALIMENTATION par SOUS-ENSEMBLE FONCTIONNEL.

Une seconde conséquence de ces critères be bon fonctionnement est la nécessité de respecter à la mise sous tension comme à la mise hors tenison un ordre de préseance entre les différents SOUS-ENSEMBLES FONCTIONNELS.

Une autre conséquence de ces critères de bon fonctionnement est la surveillance quasi permanente du REGIME DE FONCTIONNEMENT des différentes SOURCES D'ENERGIE. Cette surveillance doit faciliter à la fois la PREVENTION DES DEFAUTS ainsi que le DIAGNOSTIC et la LOCALISATION DES PANNES.

Tous ces points seront vus en détail ultérieurement.

Pour le moment il faut retenir de ce qui vient d'être dit que chaque MODULE D'ALIMENTATION est capable de commander et de contrôler un ensemble de SOURCES D'ENERGIE qui lui sont associées.

Chaque MODULE D'ALIMENTATION est affecté d'un ORDRE DE PRIORITE par rapport aux autres modules d'alimentation et cela pour chacune de ses PHASES DE FONCTIONNEMENT. Nous appellerons cet ordre de priorité: ORDRE DE PRIORITE MODULAIRE. Il est à noter que, par exemple, cet ordre de priorité modulaire peut être différent, à la mise sous tension et à la mise hors tenison.

Toutes les exigences nécessaires au respect de ces critères de fonctionnement doivent être satisfaites par les ORDRES DE COMMANDE envoyés aux MODULES D'ALIMENTATION.

Dans la présente invention les ORDRES DE COMMANDE sont émis par un MONITEUR DE PILOTAGE DES SOURCES D'ENERGIE. Ce MONITEUR DE PILOTAGE DES SOURCES D'ENERGIE sera appelé par la suite MONITEUR. Le MONITEUR est constitué d'un PROCESSEURS associé à:

- des circuits de mémorisation inaltérables ROM,
- des circuits de mémorisation RAM,
- des circuits d'interface,
- des circuits de chronomètrie et de synchronisation.

Le MONITEUR est accessibles au personnel d'exploitation et de maintenance grâce à:

- un panneau de service,
- une liaison avec la console d'exploitation du système de traitement des données.

Tous ces circuits, le panneau de service ainsi que la liaison avec la console d'exploitation seront vus par la suite.

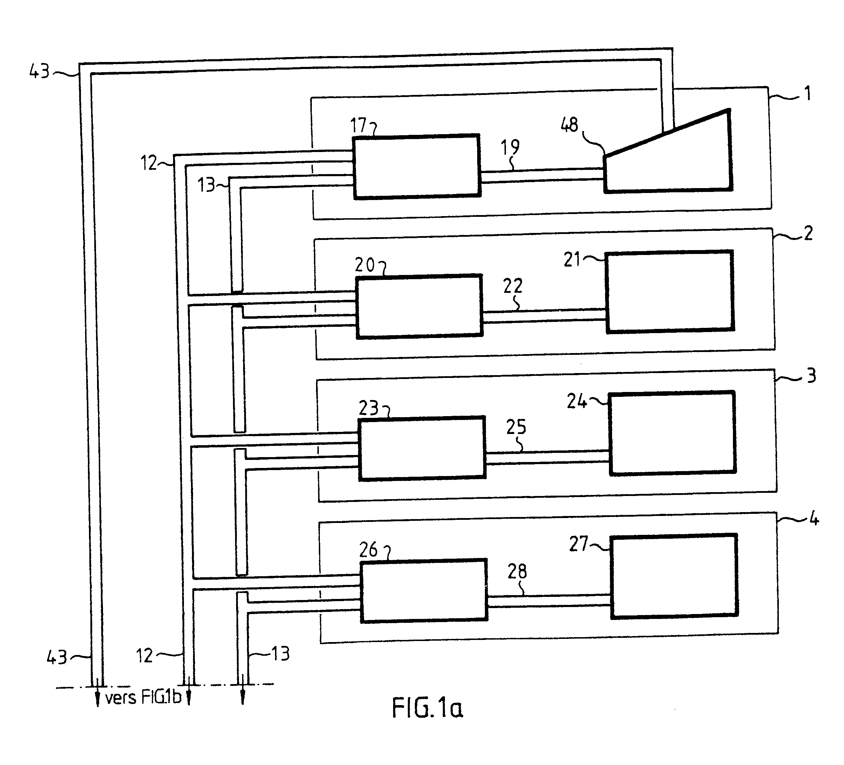

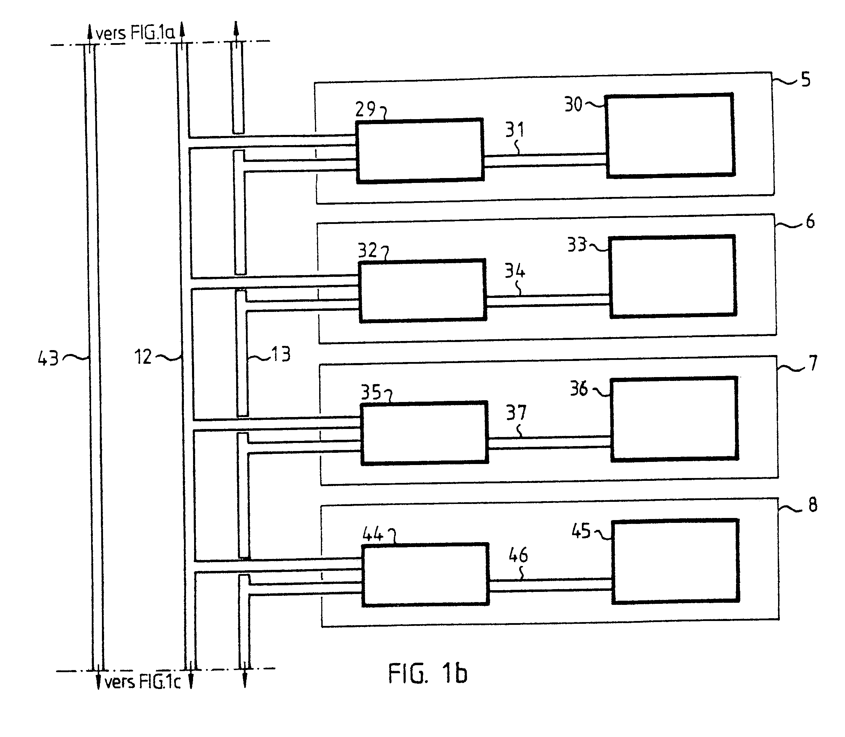

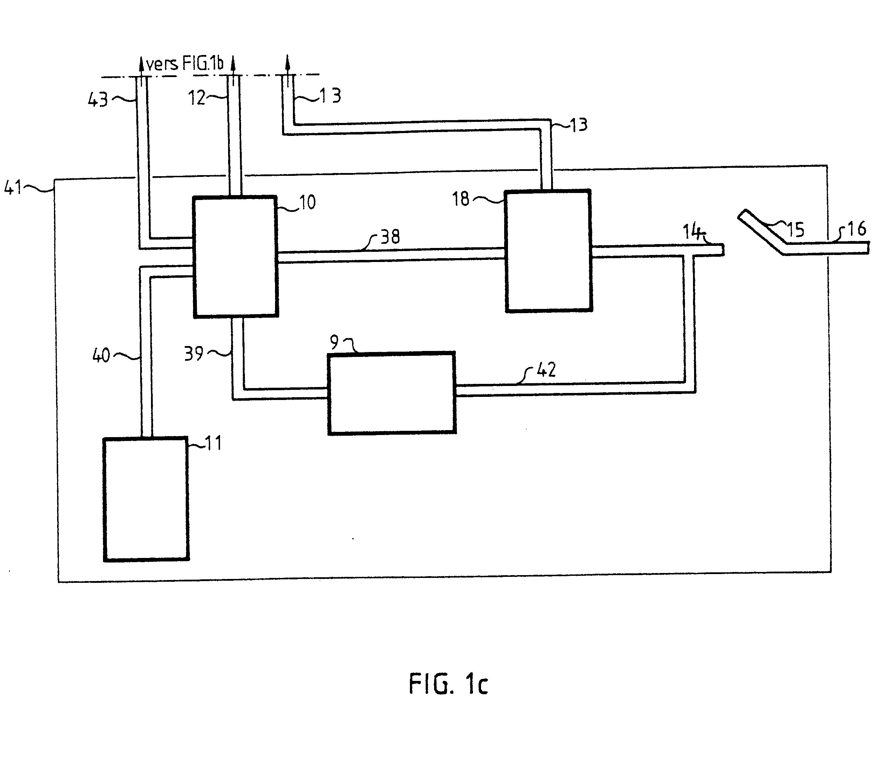

Sur la figure 1 est représenté le schéma synoptique du dispositif d'alimentation d'un système de traitement de données réalisé suivant les enseignements de l'invention.

Sur cette figure ne sont représentés que les circuits concernant l'alimentation de système de traitement de données.

Dans la réalisation concernée le système de traitement de données comporte 8 unités fonctionnelles de traitement de données à savoir les unités (1), (2), (3), (4), (5), (6), (7), (8) et une unité de pilotage (41) des modules d'alimentation.

- l'unité (1) comprend la console de Commande et de Contrôle (48) relié par le câble (19) à son module d'alimentation (17);
- l'unité (2) comprend l'Unité Centrale (21) reliée par le câble (22) à son module d'alimentation (20);
- l'unité (3) comprend la Mémoire principale (24) reliée par le câble (25) à son module d'alimentation (23);
- l'unité (4) comprend l'Echangeur d'entrée-sortie (27) appelé aussi Unité d'Echange relié par le câble (28) à son module d'alimentation (26);
- l'unité (5) comprend le Coupleur d'unités de disques (30) relié par le câble (31) à son module d'alimentation (29);
- l'unité (6) comprend le Coupleur d'unités de dérouleurs de bandes magnétiques (33) relié par le câble (34) à son module d'alimentation (32);
- l'unité (7) comprend le Coupleur de périphériques lents et de téléinformatique (36) relié par le câble (37) à son module d'alimentation (35);
- l'unité (8) comprend le coupleur de disques magnétiques (45) relié par le câble (46) à son module d'alimentation (44).

Ces huit unités fonctionnelles (1), (2), (2), (4), (5), (6), (7), (8) constituent des sous-ensembles du système de traitement de données. Ces sous-ensembles sont considérés par le système de pilotage des modules d'alimentation comme des unités séparées. Elles seront appelées par la suite: SOUS-SYSTEMES LOGIQUES DE TRAITEMENT DE DONNEES. Les huit modules d'alimentation correspondant (17), (20), (23), (26), (29), (32), (35), (44) sont appelés respectivement SOUS-SYSTEME D'ALIMENTATION 0, SOUS-SYSTEME D'ALIMENTATION 1, SOUS-SYSTEME D'ALIMENTATION 2, SOUS-SYSTEME D'ALIMENTATION 3, SOUS-SYSTEME D'ALIMENTATION 4, SOUS-SYSTEME D'ALIMENTATION 5, SOUS-SYSTEME D'ALIMENTATION 6, SOUS-SYSTEME D'ALIMENTATION 7.

- l'unité de pilotage des modules d'alimentation (41) comprend:
  - le moniteur (10),
  - le panneau de service (11),
  - les alimentations de servitude (9),
  - l'alimentation primaire et les servitudes (18) qui comprennent:
    - l'alimentation primaire proprement dite qui fournit une tension prérégulée sur l'omnibus d'énergie
    - les dispositifs de ventilation du systeme de traitement de données
    - les dispositifs de commande et de mise sous tension de l'alimentation primaire et des dispositifs de ventilation
    - les dispositifs de surveillance de l'alimentation primaire et des dispositifs de ventilation

— le sectionneur général (15).

Le moniteur (10) est relié:

- par le câble (40) au panneau de service (11),
- par le câble (39) à l'alimentation du moniteur (9),
- par l'omnibus de pilotage (12) aux unités (1), (2), (3), (4), (5), (6), (7),
- par le câble (38) à l'alimentation primaire et aux servitudes (18).

L'alimentation primaire et les servitudes (18) sont reliés:

- par le câble (38) au moniteur (10),
- par le câble (14) au sectionneur général (15),
- par l'omnibus d'énergie (13) aux unités (1), (2), (3), (4), (5), (6), (7).

Le sectionneur général (15) est relié:

- par le câble (16) au réseau,
- par le câble (14) à l'alimentation primaire (18) et à l'alimentation de servitude (9).

Le panneau de service (11) est relié par le câble (40) au moniteur (10).

Sur la figure est représenté également la console de commande (48). Cette console de commande (48) est relié au moniteur (10) par le câble (43).

Le fonctionnement d'un tel dispositif d'alimentation est le suivant. Quand l'utilisateur veut mettre en fonctionnement le dispositif d'alimentation la première opération à effectuer est la fermeture manuelle du sectionneur général (15). La fermeture de ce sectionneur général (15) met sous tenison le câble (14) qui est raccordé d'une part à l'alimentation primaire et aux servitudes (18), d'autre part à l'alimentation du moniteur (9). Les alimentations du moniteur (9) sont raccordées directement sur le câble (14) et la mise sous tension de ce câble (14) provoque la mise sous tension de l'alimentation du moniteur (9). Cette mise sous tension de l'alimentation moniteur (9) met en fonctionnement le moniteur (10). Par contre, un contacteur se trouve placé à l'entrée de l'alimentation primaire et des servitudes (18) et cette alimentation primaire ainsi que les servitudes ne seront mises sous-tension que sur commande du moniteur (10).

L'alimentation primaire (18) ne débitera donc dans l'omnibus d'énergie (13) que sur ordre du moniteur (10). L'alimentation primaire (18) est asservie par le moniteur (10) à travers le câble (38) qui véhicule à la fois les ordres de commande du moniteur (10) et les compte-rendus de fonctionnement de l'alimentation primaire et des servitudes (18).

L'alimentation du moniteur (9) mise sous tension fournit au moniteur (10) l'énergie nécessaire à son fonctionnement. Comme il sera expliqué ultérieurement le moniteur (10) va, maintenant qu'il est sous tension, émettre des commandes et recevoir des compte-rendus sur les câbles (38), (39), (40), et sur l'omnibus de pilotage (12): il va prendre en charge le pilotage du système d'alimentation.

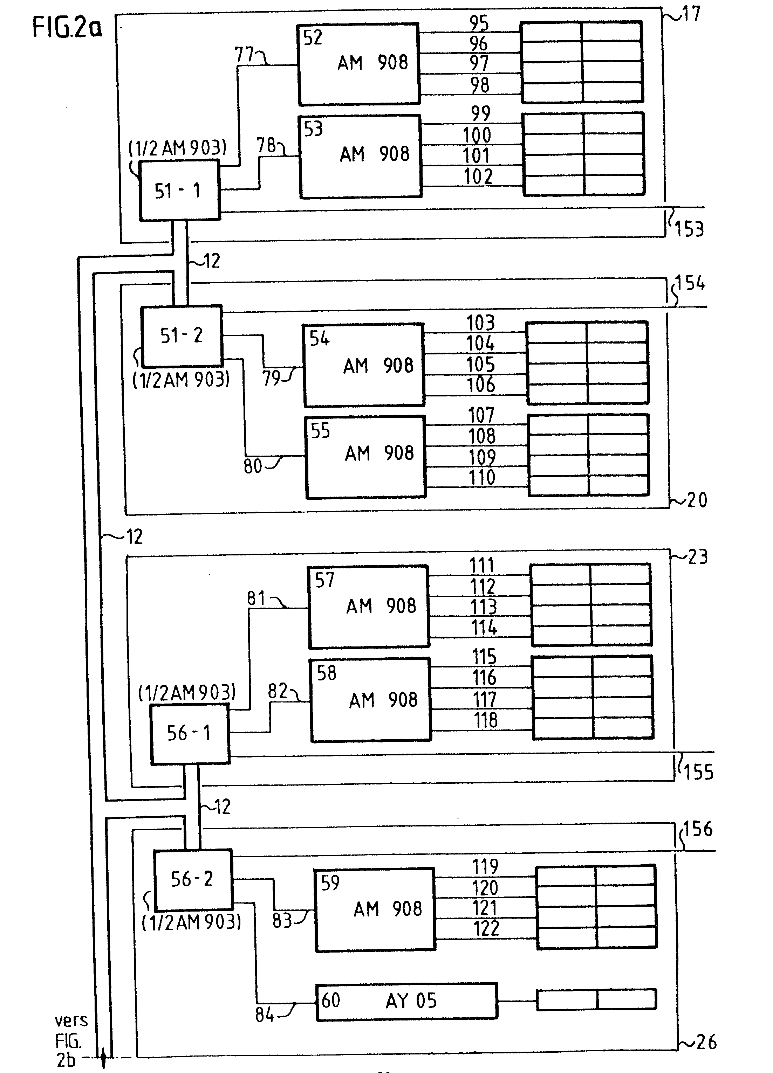

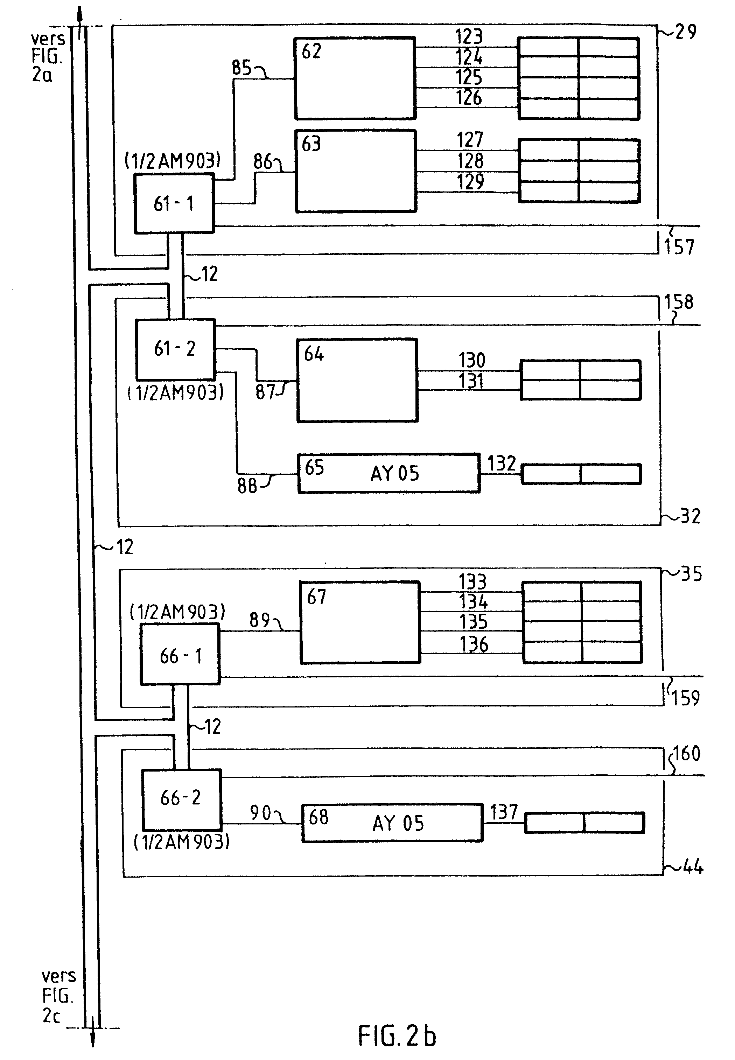

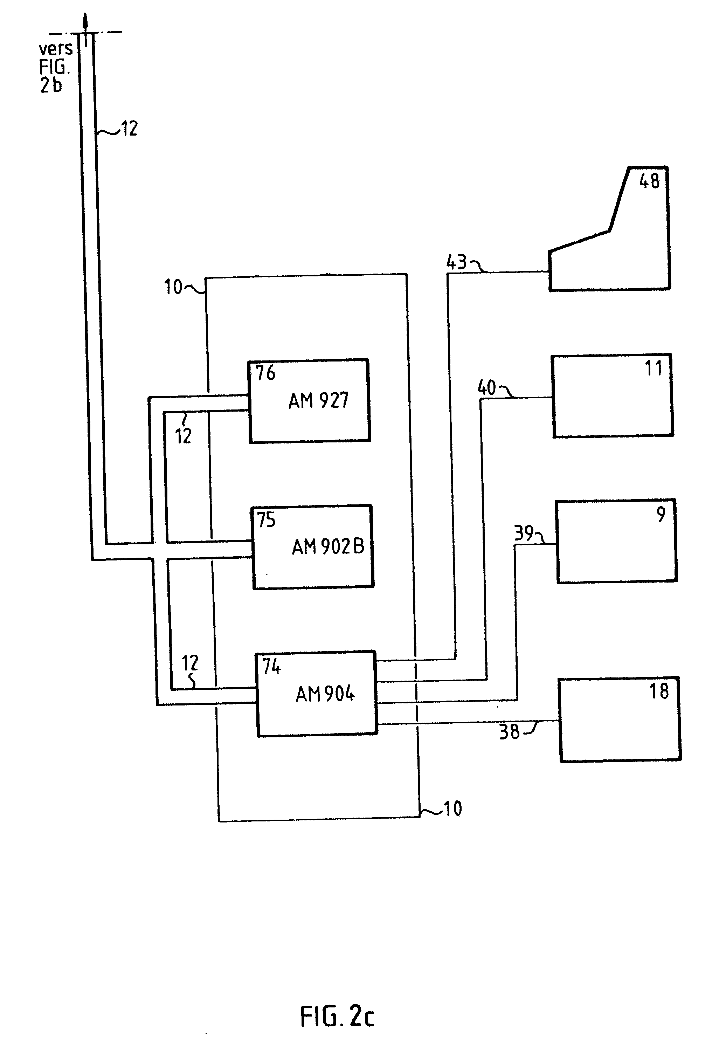

La figure 2 est une autre représentation du dispositif d'alimentation réalisé suivant les enseignements de l'invention. Par souci de simplification, seules les liaisons concernant les signaux de commande et de contrôle sont représentées.

Sur cette figure apparaissent les blocs désignés par AM902B (75), AM927 (76), AM904 (74), AM903 [(51), (56), (61), (66)], AM908 [(52), (53), (54), (55), (57), (58), (59), (60), (62), (63), (64), (65), (67), (68)].

Ces blocs representent chacun un sous-ensemble fonctionnel. Chacun de ces sous-ensembles est situé entièrement sur une plaque de circuit imprimé. Cette disposition permet d'avoir un ensemble modulaire dont on peut adapter les caractéristiques par adjonction ou retrait d'un certain nombre de plaques de circuit imprimé. Ceci est avantageux aussi bien sur le plan de la fabrication que sur le plan de la maintenance. Sur le plan de la fabrication cela permet d'avoir des éléments standard ce qui réduit le nombre des outillages nécessaires et permet de faire évoluer les équipements sans modifications compliquées. Sur le plan de la maintenance cela réduit la variété des circuits utilisés et donc simplifie la constitution des lots de maintenance ainsi que la formation du personnel.

Ces sous-ensembles fonctionnels seront appelés par la suite PLAQUES FONCTIONNELLES.

Sur cette figure 2, il apparaît que le MONITEUR (10) est constitué de 4 sous-ensembles: AM904 (74), AM902B (75), AM903 (56, 61, 66, 51, 71) et AM927 (76). Chacun de ces sousensembles est relié à l'OMNIBUS DE PILOTAGE (12).

Le sous-ensemble fonctionnel central est la PLAQUE FONCTIONNELLE AM902B (75). Cette PLAQUE, qui sera décrite en détail ultérieurement, contient un MICROPROCESSEUR, des MEMOIRES et une BASE DE TEMPS. Elle sera appelée MODULE DE PILOTAGE.

La PLAQUE FONCTIONNELLE AM927 (76) contient une MEMOIRE INALTERABLE du type ROM. Cette mémoire inaltérable contient des tables où sont sonsignés les renseignements concernant la CONFIGURATION du système d'alimentation aussi cette plaque sera appelée MODULE DE CONFIGURATION. En particulier cette carte contient les informations permettant au microprocesseur de connaître tous les paramètres qui lui sont utiles dans les différentes phases de fonctionnement du système d'alimentation. Cette plaque fonctionnelle est réalisée sur mesure pour chaque système d'alimentation au moment de sa fabrication et joue en quelque sorte le rôle d'une »FICHE ANTHROPOMETRIQUE« que le microprocesseur viendra consulter au fur et à mesure de ses besoins.

La PLAQUE FONCTIONNELLE AM904 (74) est un MODULE D'INTERFACE entre d'une part l'OMNIBUS DE PILOTAGE (12) et d'autre part: l'ALIMENTATION PRIMAIRE ET LES SERVITUDES (18), l'ALIMENTATION DU MONITEUR (9), le PANNEAU DE SERVICE (11) et 1A CONSOLE DU SYSTEME DE TRAITEMENT DE DONNEES (48). Par la suite ce module sera désigné par le nom de MODULE D'INTERFACE D'EXPLOITATION pour rappeler qu'il dessert essentiellement des fonctions nécessaires à l'exploitation du système d'alimentation.

Sur la figure 2 sont également représentées 5 PLAQUES FONCTIONNELLES AM903 [(51), (56), (61), (66), (71),]. Ces 5 plaques fonctionnelles sont raccordées d'une part à l'OMNIBUS DE PILOTAGE (12) et d'autre part à des PLAQUES FONCTIONNELLES AM908 ou AY05:

- la plaque fonctionnelle (51) est reliée avec les plaques fonctionnelles [(52), (53), (54), (55)],
- la plaque fonctionnelle (56) est reliée avec les plaques fonctionnelles [(57), (58), (59), (60)],
- la plaque fonctionnelle (61) est reliée avec les plaques fonctionnelles [(62), (63), (64), (65)],
- la plaque fonctionnelle (66) est reliée avec les plaques fonctionnelles [(67), (68)].

Les PLAQUES FONCTIONNELLES AM903 sont en fait des modules d'interface permettant les échanges entre l'OMNIBUS DE PILOTAGE (12) et les PLAQUES FONCTIONNELLES AM908.

Les PLAQUES FONCTIONNELLES AM903 seront appelées MODULES D'INTERFACE AVAL pour évoquer le fait qu'elles servent à commander et à contrôler les tensions et les débits en aval des sources d'énergie.

Comme il apparaît sur la figure 2 chaque plaque fonctionnelle AM903 est en fait symétrique et comporte deux modules d'interface aval.

Les PLAQUES FONCTIONNELLES AM908 sont des modules dont le rôle est de servir d'intermédiaire entre chaque MODULE D'INTERFACE AVAL et les SOURCES D'ENERGIE qu'il est chargé de piloter. Ces modules contiennent essentiellement des registres et des amplificateurs. Les PLAQUES FONCTIONNELLES AM908 seront appelées MODULES INTERMEDIAIRES pour rappeler leur fonction.

Chaque plaque fonctionnelle AM908 peut commander et contrôler un maximum de 4 SOURCES D'ENERGIE. Cela est représenté sur la figure 2, où, par exemple, la plaque fonctionnelle AM908 (52) contrôle et commande 4 sources d'énergie au moyen de 4 liaisons (95), (96), (97), (98). Il sera vu plus loin que la mémorisation des états d'une source d'énergie nécessite 2 octets. Donc, dans la configuration maximale, une plaque fonctionnelle AM908 réclamera 8 octets au moniteur (10) pour mémoriser les états correspondant aux 4 sources d'énergie qu'elle contrôle.

La PLAQUE FONCTIONNELLE AY05 est un module spécial utilisé pour satisfaire les besoins de sources d'énergie à puissance réduite. Ce module est mixte car il comporte deux parties:

- une partie de commande et de contrôle qui remplit les mêmes fonctions que le module intermédiaire AM908,
- une partie »Sources d'énergie« qui contient les sources à contrôler.

La PLAQUE FONCTIONNELLE AY05 sera appelée par la suite MODULE DES SOURCES A ENERGIES MODEREES en raison des puissances délivrées.

Par ailleurs chaque PLAQUE FONCTIONNELLE AM903 comporte au maximum 2 liaisons de service vers l'unité fonctionnelle desservie. Sur la figure 2 il a été représenté 2 liaisons de service par plaque fonctionnelle AM903 bien que dans la réalité certaines de ces liaisons peuvent ne pas exister. Les liaisons représentées sont les liaisons [(153), (154)] [(155), 156)] [(157), (158)] [(159), (160)] [(161), (162)] dont le rôle sera vu ultérieurement.

Dans la configuration maximale une $^1/_2$ plaque fonctionnelle AM903 peut commander et contrôler deux plaques fonctionnelles AM908. Si ces plaques fonctionnelles sont elles-mêmes dans leur configuration maximale, elles contrôlent chacune 4 sources d'énergie. Cette configuration est représentée en (17) sur la figure 2. Dans ce cas, le moniteur (10) devra ranger en mémoire 16 octets d'état par $^1/_2$ plaque fonctionnelle AM903.

Toutes ces plaques fonctionnelles: AM902B (75), AM904 (74), AM927 (76), AM903 [(51), (56), (61), (66)], AM908 [(52), (53), (54), (55), (57), (58), (59), (62), (63), (64), (67)], AY05 [(60), (65), (68)] seront décrits dans la suite de cette description mais auparavant un certain nombre de détails technologiques doivent être précisés.

Tout d'abord il a été dit que ces plaques fonctionnelles AM902B, AM904, AM927, AM903, AM908, AY05 étaient réalisés chacun sur une plaque de circuits imprimés. Dans sa réalisation, toutes les plaques de circuits imprimés sont placées dans un support désigné en terme de métier par le nom de PANIER mais qui sera appelé par la suite RATELIER. Ce ratelier est conçu pour pouvoir contenir toutes les plaques de circuits imprimés nécessaires pour réaliser le système exigeant la capacité maximale du système de contrôle des sources d'énergie. Pour les systèmes exigeant des capacités inférieures seul le nombre de plaques nécessaires sera mis en place, laissant ainsi des positions vacantes dans le RATELIER.

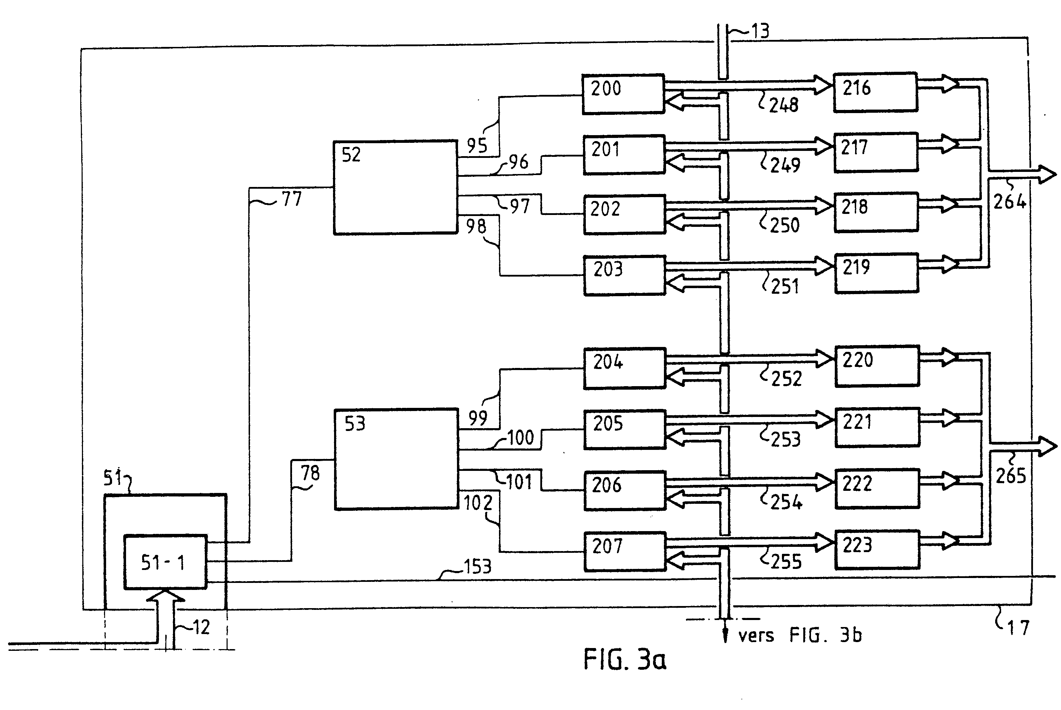

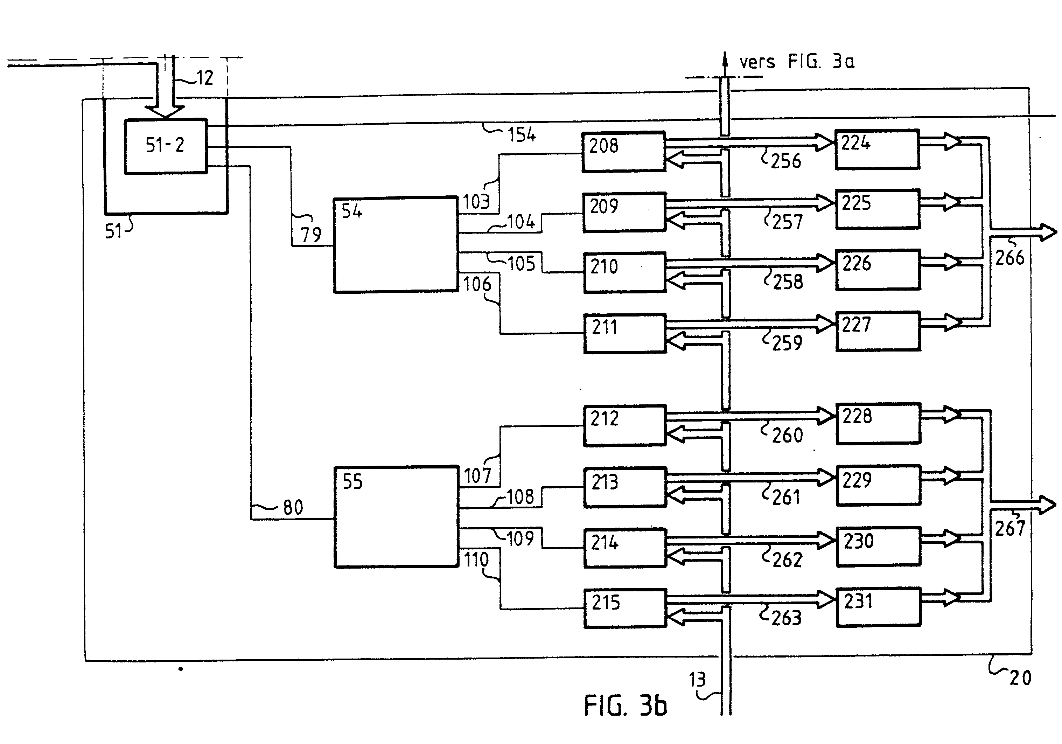

La figure 3 est une représentation schématique du MODULE D'ALIMENTATION (140) et (141). Cette figure permet de mieux voir comment, dans la réalisation particulière de l'invention, est constitué un module d'alimentation. Les MODULES D'ALIMENTATION (140) et (141) correspondent à la configuration maximale autorisée par les circuits de la réalisation décrite.

Le module d'alimentation (140) fournit 2 tensions ainsi qu'une liaison de service. Les 2 tensions sont délivrées respectivement par les câbles (264) et (265). La liaison de service est la liaison (153).

Comme il est représenté sur le schéma le débit de courant sur le câble (264) est produit par la mise en parallèle de 4 sources:

- un REGULATEUR DE TENSION (200) suivi d'un FILTRE (216),
- un REGULATEUR DE TENSION (201) suivi d'un FILTRE (217),
- un REGULATEUR DE TENSION (202) suivi d'un FILTRE (218),
- un REGULATEUR DE TENSION (203) suivi d'un FILTRE (219).

L'intensité débitée sur le câble (264) se répartit donc entre les 4 REGULATEURS DE TENSION (200), (201), (202), (203).

Ces régulateurs de tension sont alimentés en énergie par l'OMNIBUS D'ENERGIE (13) et sont commandés et contrôlés individuellement par une PLAQUE FONCTIONNELLE AM908 (52) ou MODULE INTERMEDIAIRE (52) au moyen de liaisons (95), (96), (97) et (98).

Dans la réalisation décrite chaque MODULE INTERMEDIAIRE AM908 peut commander et contrôler au maximum 4 REGULATEURS DE TENSION.

Comme il sera expliqué plus loin c'est le débit demandé qui définit le nombre de Régulateurs de tensions mis en parallèle. En effet une des caractéristiques de l'invention est de permettre la réalisation d'un système d'alimentation modulaire.

La même configuration se retrouve pour la tension délivrée sur le câble (265). Cette tension est produite par un groupe de 4 REGULATEURS DE TENSION (204), (205), (206) et (207) associés aux 4 FILTRES (220), (221), (222), (223). Ces 4 Régulateurs de tension sont commandés et contrôlés par le MODULE INTERMEDIAIRE (53) au moyen des liaisons (99), (100), (101) et (102).

Le module d'alimentation (141) est analoque au module d'alimentation (17). La tension délivrée sur le câble (266) est fournie par les 4 REGULATEURS DE TENSION (208), (209), (210) et (211) associés aux 4 FILTRES (224), (225), (226), (227). Ces 4 régulateurs de tension sont commandés et contrôlés par le MODULE INTERMEDIAIRE (54) au moyen des liaisons (103), (104), (105) et (106).

Enfin l'énergie fournie sur le câble (267) est obtenue au moyen des 4 REGULATEURS DE TENSION (212), (213), (214) et (215) associés aux 4 FILTRES (228), (229), (230), (231). Ces 4 régulateurs de tension sont commandés et contrôlés par le MODULE INTERMEDIAIRE (55) au moyen des liaisons (107), (108), (109) et (110).

Les CABLES (264), (265), (153), (154), (266), (267) sont représentés sur la figure 1 par les câbles (19) et (22).

Les 4 MODULES INTERMEDIAIRES (52), (53), (54) et (55) sont reliés respectivement par les liaisons (77), (78), (79) et (80) aux MODULES D'INTERFACE AVAL (51-1) et (51-2). Ces MODULES D'INTERFACE AVAL sont raccordés à l'OMNIBUS DE PILOTAGE (12).

La liaison (153) sert au demi module d'interface aval (51-1) pour communiquer avec l'unité logique desservie par les câbles (264) et (265). De la même façon, la liaison (154) sert au demi module d'interface aval (51-2) pour communiquer avec l'unité logique desservie par les câbles (266) et (267).

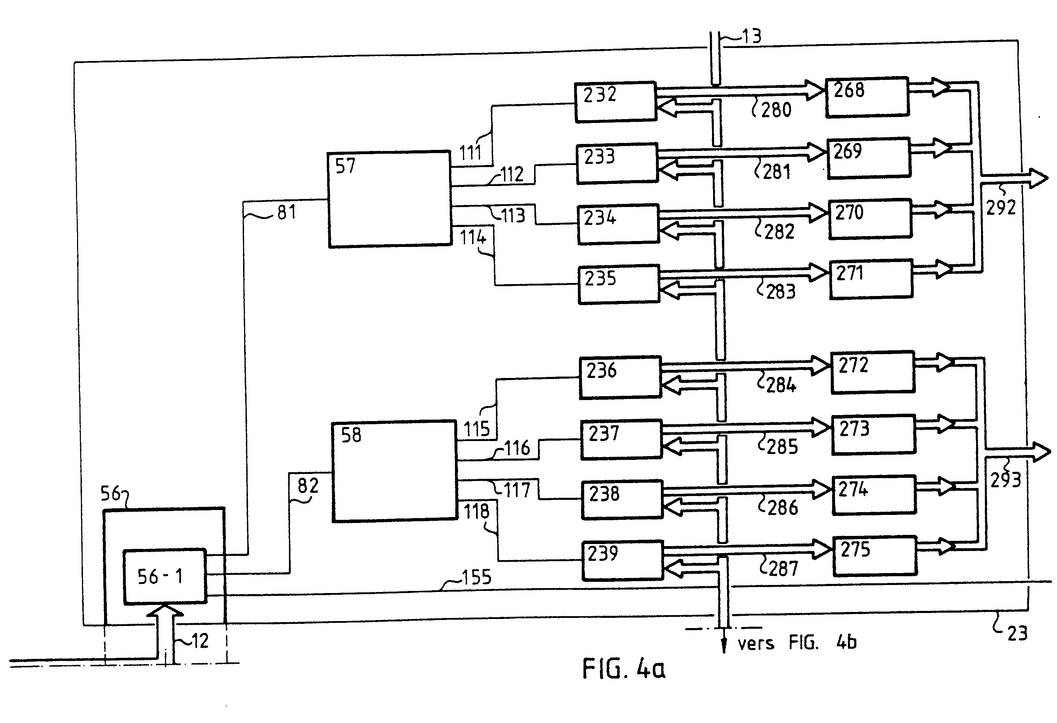

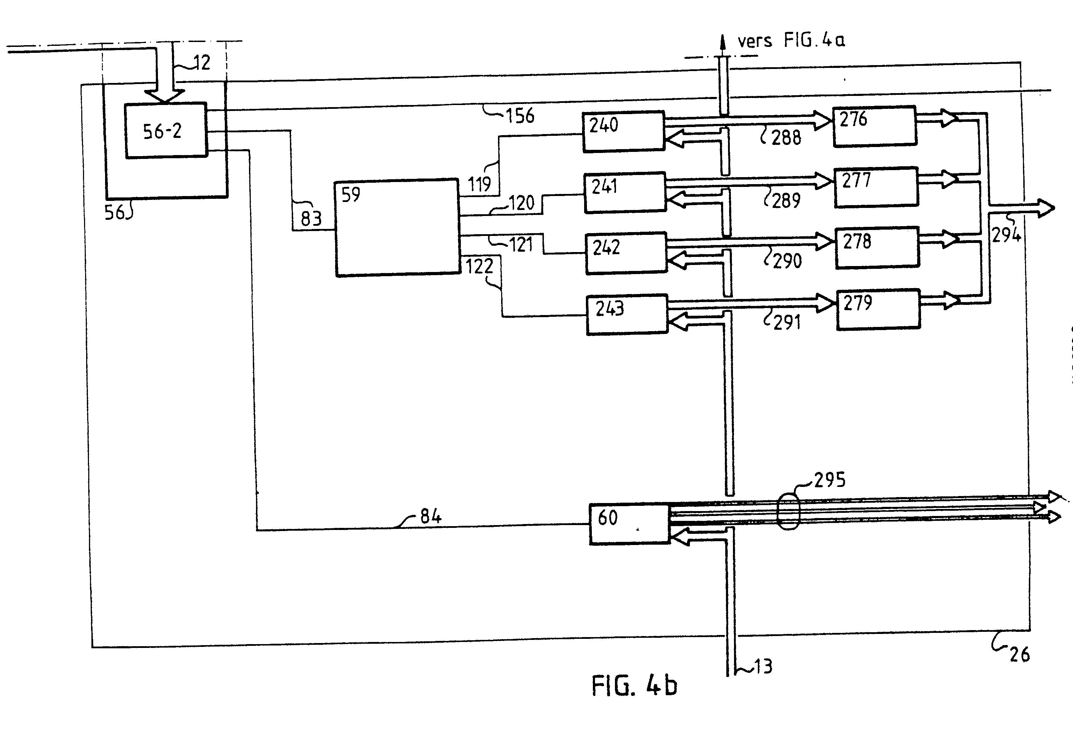

La figure 4 est une représentation schématique du MODULE D'ALIMENTATION (142) et (143).

Le module (23) est un module d'alimentation analoque aux modules (17) et (20) précédemment décrits. Il ne sera pas décrit car son fonctionnement découle des explications fournies à l'occasion de la description des modules (140) et (141).

La tension délivrée sur le câble (294) est une tension qui débite le courant maximum. Cette tension est donc délivrée par 4 REGULATEURS DE TENSION (240), (241), (242), (243) associés aux 4 FILTRES (276), (277), (278), (279). Ces 4 REGULATEURS DE TENSION sont commandés et contrôlés par le MODULE INTERMEDIAIRE (59).

Par contre, le module (26) comporte une SOURCE A ENERGIE MODEREE (60).

Le câble multifilaire (295) délivre un ensemble de tensions à débit modéré. Ces tensions sont formées par un module spécifique AY05 contenu sur une PLAQUE FONCTIONNELLE (60) AY05. En raison du débit modéré réclamé il a été possible, dans la réalisation décrite, de placer sur la même plaque fonctionnelle à la fois, les régulateur de tension, leur filtre associé ainsi que les circuits électriques jouant le rôle de module intermédiaire. Pour cette raison la PLAQUE FONCTIONNELLE AY05 ou MODULE DES SOURCES A ENERGIE MODEREE est reliée directement par la liaison (84) au MODULE D'INTERFACE AVAL (56-2).

Les câbles (292), (293), (294), (295), (155), (156) sont représentés par les câbles (25) et (28) sur la figure (1). Les câbles (155) et (156) servent aux MODULES D'INTERFACE AVAL (56-1) et (56-2) pour communiquer avec les unités logiques qu'ils desservent. Le rôle des signaux véhiculés par ces câbles (155) et (156) sera vu ultérieurement.

Les 4 MODULES INTERMEDIAIRES (57), (58), (59) sont reliés respectivement par les câbles (81), (82) et (83) au MODULE D'INTERFACE AVAL (56-1) et (56-2). Comme il a été dit ci-dessus, le MODULE DES SOURCES A ENERGIE MODEREE (60) est relié par le câble (84) au MODULE D'INTERFACE AVAL (56).

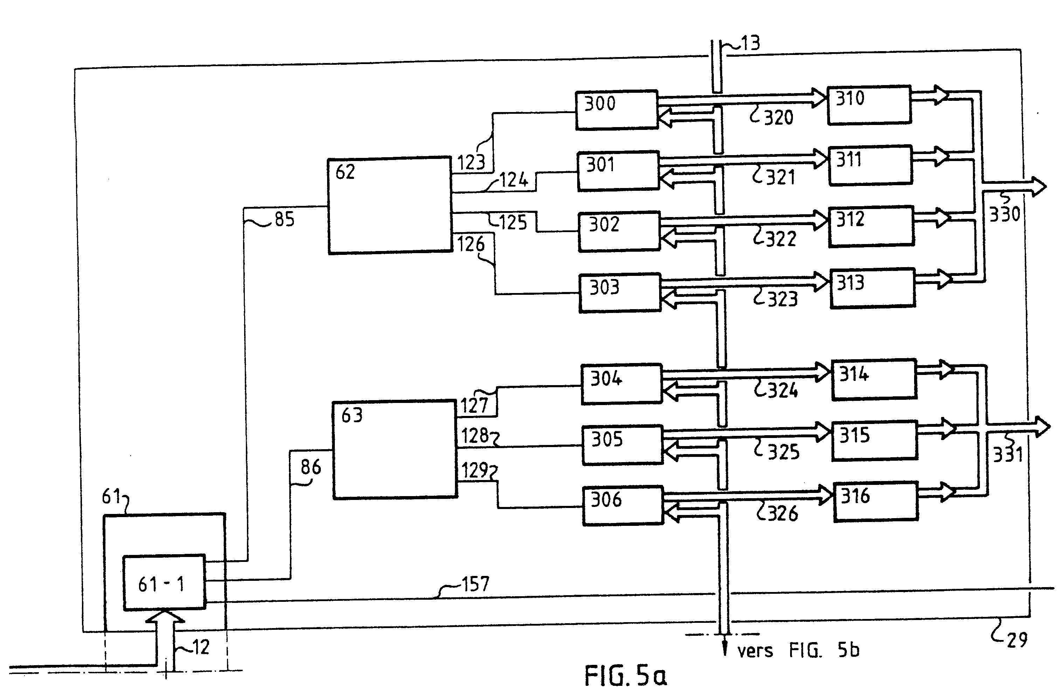

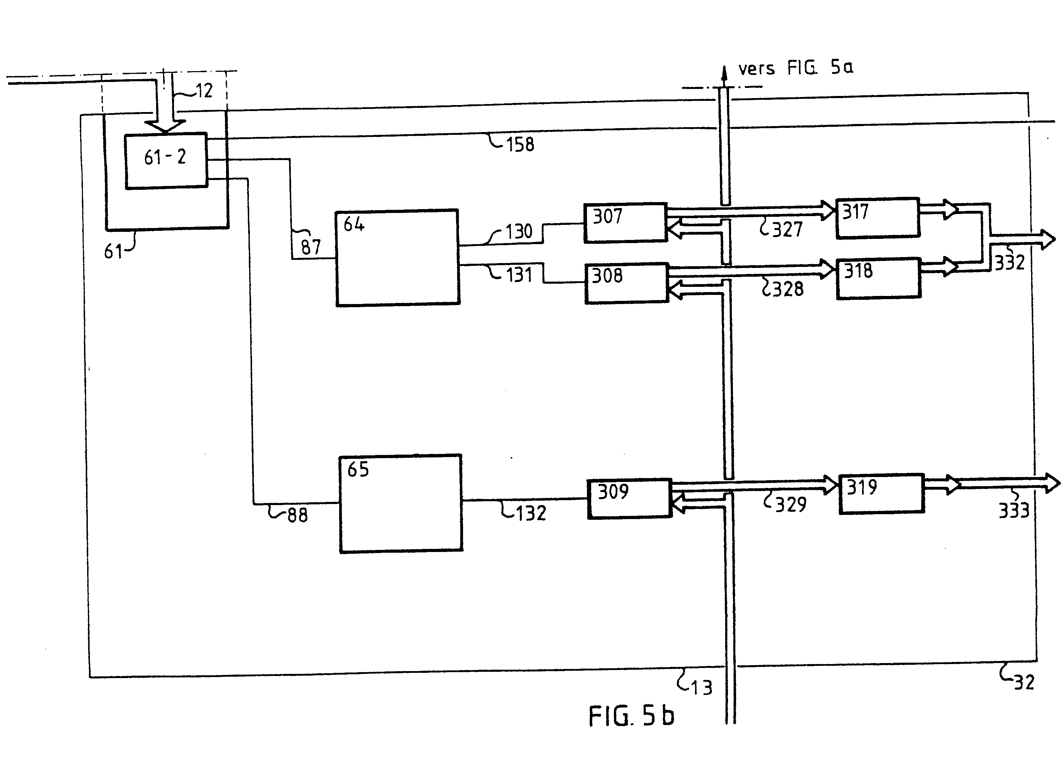

La figure 5 est une représentation schématique du MODULE D'ALIMENTATION (144) et (145). Ces modules sont représentés pour illustrer les 4 configurations possibles pour la délivrance d'une tension à débit élevé.

La première source à débit élevé est celle connectée sur le câble (330). Cette source d'énergie est constituée par l'association en parallèle de 4 REGULATEURS DE TENSION (300), (301), (302), (303) associés aux 4 FILTRES (310), (311), (312), (313). Ces 4 régulateurs de tension sont reliés respectivement par les câbles (123), (124), (125) et (126) au MODULE INTERMEDIAIRE (62).

Le débit réclamé sur le câble (331) est inférieur à celui du câble (330) précédent et 3 REGULATEURS DE TENSION (304), (305), (306) associés aux 3 FILTRES (314), (315), (316) suffisent à assurer ce débit. Ces 3 régulateurs de tension sont reliés respectivement par les câbles (127), (128) et (129) au MODULE INTERMEDIAIRE (63).

Sur le câble suivant (332) le débit demandé est encore inférieur et seulement 2 REGULATEURS DE TENSION (307), (308) associés aux 2 FILTRES (317), (318) sont suffisants. Ces 2 régulateurs de tension sont reliés respectivement par les câbles (130) et (131) au MODULE INTERMEDIAIRE (64).

Le dernier câble (334) exige un débit qui n'excède pas le débit maximal autorisé pour un régulateur de tension. Par conséquent ce câble (334) est alimenté par un seul REGULATEUR DE TENSION (309) associé au FILTRE (319). Ce régulateur de tension est relié au MODULE INTERMEDIAIRE (65) par le câble (132).

Les MODULES INTERMEDIAIRES (62), (63), (64), (65) sont reliés respectivement par les câbles (85), (86), (87), (88) au MODULE D'INTERFACE AVAL (61-1) et (61-2).

Les câbles (330), (331), (332), (333), (157), (158) sont représentés par les câbles (31) et (38) sur la figure 1.

Le rôle des câbles (157) et (158) qui servent à échanger des signaux entre le MODULE D'INTERFACE AVAL (61) et les modules logiques (30) et (33).

La description des MODULES D'ALIMENTATION (140), (141), (142), (143), (144), (145) faite à l'occasion des explications relatives aux figures 3, 4 et 5 montre comment est réalisée la MODULARITE DE LA CONFIGURATION des MODULES D'ALIMENTATION.

Le réalisateur d'un système de traitement de données après avoir défini les différentes unités composant ce système se pose le problème de satisfaire les besoins en tension ou courant d'alimentation de ces unités. Pour chaque unité il effectue le bilan des tensions et courants requis pour la faire fonctionner. Une fois ces bilans établis le réalisateur possède tous les éléments pour définir le MODULE D'ALIMENTATION correspondant à chaque unité. Comme il a été expliqué lors des figures 3, 4 et 5 chaque MODULE D'ALIMENTATION peut comporter:

- soit de 1 à 4 SOURCES D'ENERGIE ELEVEE. La figure 3 représente le cas où l'énergie fournie est maximale c'est-à-dire 4 SOURCES D'ENERGIE ELEVEE comprenant chacune 4 REGULATEURS DE TENSION. Cette configuration peut être modifiée à la demande jusqu'à atteindre la configuration minimale constituée d'une seule SOURCE D'ENERGIE ELEVEE comprenant un seul REGULATEUR DE TENSION;
- soit de 1 à 3 SOURCES D'ENERGIE ELEVEE comme défini ci-dessus et un MODULE DES SOURCES A ENERGIE MODEREE;
- soit de 1 à 2 SOURCES D'ENERGIE ELEVEE et de 1 à 2 MODULES DES SOURCES A ENERGIE MODEREE;
- soit de 1 à 4 MODULES DES SOURCES A ENERGIE MODEREE.

Le réalisateur de système de traitement do données dispose donc de tout une palette de configurations possibles pour alimenter les unités du système de traitement.

Il a été déjà expliqué précédemment que chaque source d'énergie qu'elle soit source d'énergie élevée ou source d'énergie modérée réclame un octet de mémoire pour emmagasiner les états caractérisant son fonctionnement. Pour stocker les états des sources d'énergie appartenant au système d'alimentation, le moniteur (10) dispose d'une mémoire où les états sont stockés dans un ordre bien défini. Cet ordre est défini à 3 niveaux:

- par le rang de la source à l'intérieur du module intermédiaire AM908 à laquelle la source est raccordée
- par le rang du dit module intermédiaire AM908 à l'intérieur du $^{1}/_{2}$ module d'interface aval AM903 qui contrôle et commande le dit module intermédiaire AM908
- par le rang du dit $^{1}/_{2}$ module d'interface aval AM903 à l'intérieur du ratelier car la position physique de la plaque fonctionnelle supportant le $^{1}/_{2}$ module d'interface aval AM903 correspond à une adresse dans le système d'adressage du moniteur.

Dans la réalisation préférée de l'invention, il a été prévu un emplacement de mémoire d'une capacité totale de 128 octets. Ceci revient à dire que le concepteur peut utiliser au maximum 128 sources d'énergie pour constituer les modules d'alimentation (17), (20), (23), (26), (29), (32), (35), (44). Les octets d'état sont rangés en mémoire par ordre d'adresse croissante de sorte que le moniteur (10) peut accéder directement à l'octet d'état d'une source d'énergie s'il connaît son numéro d'ordre.

Le concepteur a la possibilité de répartir les sources d'énergie dans un nombre maximum de 8 sous-systèmes d'alimentation. Dans la figure 1 les 8 sous-systèmes d'alimentation sont utilisés et correspondent chacun à un module d'alimentation: le sous-système d'alimentation 0 au module d'alimentation (17), le sous-système 1 au module (20), le sous-système 2 au module (23), le sous-système 3 au module (26), le sous-système 4 au module (29), le sous-système 5 au module (32), le sous-système 6 au module (35) et le sous-système 7 au module (44). C'est cette répartition qui est définie dans les tables du module 76 de configuration AM927.

Cette disposition permet également des facilités de dépannage. En effet, il arrive que les modules d'alimentation comportent un grand nombre de sources d'énergie. Il suffit qu'une source d'énergie présente un défaut pour que tous le module d'alimentation soit inutilisable. Pour pallier cet inconvénient, l'invention permet d'avoir un emplacement de ratelier comportant un module d'interface aval AM903 dit de diagnostic non connecté en fonctionnement normal. Dans ce module d'interface aval, chacune des 4 liaisons vers les modules intermédiaires AM908 est affectée à un sous-système d'alimentation. Comme il sera vu plus loin, il est possible d'isoler un sous-système d'alimentation en le plaçant en mode LOCAL. En présence d'une panne le technicien de maintenance peut retirer les liaisons périphériques des sources pour lesquelles il a des doutes pour les raccorder à ce module d'interface aval AM903 dit de diagnostic. Si parmi les sources d'énergie retirées se trouvent la ou les sources d'énergie en panne le module d'alimentation pourra fonctionner sous réserve d'effectuer certains allègements. Par contre, le technicien de maintenance pourra librement effectuer des interventions au niveau des sources d'énergie transférée. Il est à noter que pour permettre au système d'alimentation de fonctionner et de s'y retrouver dans ces changements de liaisons périphériques, le technicien de maintenance met un bouchon sur toutes les sorties d'interface aval AM903 qui sont inutilisées. Ces bouchons comportent un câblage électrique qui place un code défini sur la sortie du module d'interface aval AM903. Quand le moniteur (10) vient lire l'état de la source d'énergie correspondante, il trouve le code imposé par le bouchon et ce code signifie pour lui qu'il n'y a pas de source d'énergie à cet endroit et que cette absence est justifiée.

Ainsi qu'il a déjà été dit les circuits sont réalisés sur des PLAQUES FONCTIONNELLES. Ces PLAQUES FONCTIONNELLES sont en fait des plaques de circuits imprimés sur lesquelles sont fixés des composants. Elles sont prévues pour être enfichées dans un RATELIER. Ce RATELIER comporte sur sa partie arrière un RESEAU DE CABLAGE D'INTERCONNEXION INTERPLAQUES, désigné en jargon informatique par le terme FOND DE PANIER, ce réseau sera appelé par la suite le CABLE INTERPLAQUES. Ce CABLE INTERPLAQUES est constitué d'un réseau de connexions reliant suivant un schéma établi les bornes de CONNECTEURS ARRIERE où viennent s'enficher les PLAQUES FONCTIONNELLES.

Par ailleurs, certaines PLAQUES FONCTIONNELLES possèdent également des CONNECTEURS AVANT sur lesquels viennent se brancher des CABLES DE LIAISON PERIPHERIQUES raccordant lesdites PLAQUES FONCTIONNELLES avec des dispositifs non contenus dans le RATELIER.

Tous ces points vont être revus dans ce qui suit.

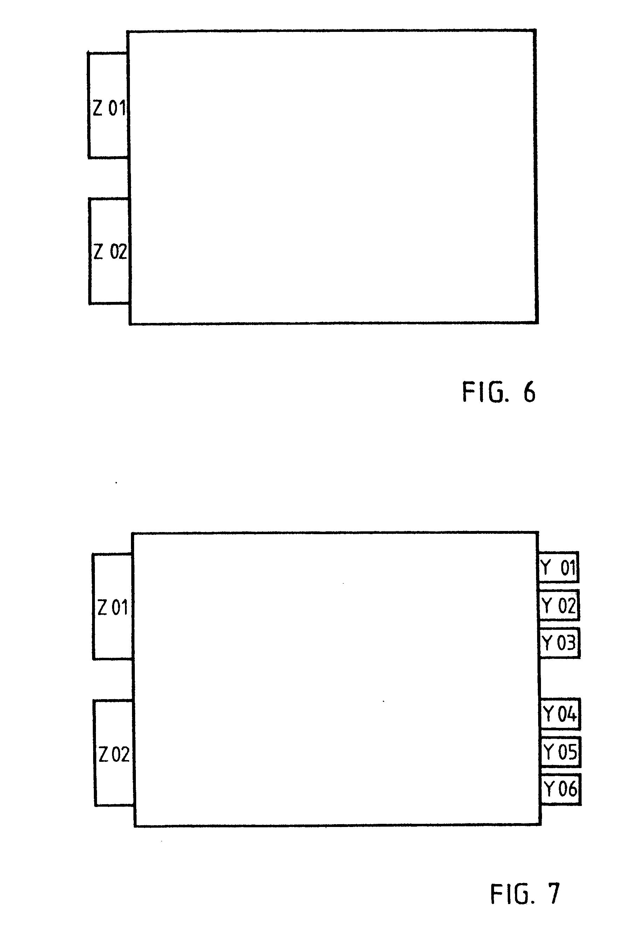

Sur la figure 6 est représentée une PLAQUE FONCTIONNELLE ne comportant que des CONNECTEURS ARRIERES. Ces connecteurs sont respectivement désignés sur les schémas par la désignation Z01 et Z02. Chacun de ces connecteurs comporte 70 PLOTS DE CONTACT. Sur les schémas électriques ces plots sont désignés par la référence du connecteur auquel ils appartiennent suivi du numéro du plot. Par exemple les plots du CONNECTEUR ARRIERE Z01 sont désignés par: Z01-01, Z01-02, Z01-03... Z01-70. La même chose est faite pour le CONNECTEUR ARRIERE Z02 où les plots sont désignés par Z02-01, Z02-02... Z02-70.

Sur la figure 7 est représentée une PLAQUE FONCTIONNELLE comportant des CONNECTEURS ARRIERES et des CONNECTEURS AVANT. La désignation des PLOTS des CONNECTEURS ARRIERE se fait de la même façon que pour la figure 6. Les 6 CONNECTEURS AVANT sont désignés par Y01, Y02, Y03, Y04, Y05, Y06. Chacun de ces connecteurs comporte 24 PLOTS DE CONTACT dont 22 sont réservés aux branchements électriques et 2 sont utilisés pour réaliser une CLEF DE DETROMPAGE en vue d'éviter certaines erreurs de branchement des CABLES DE LIAISON PERIPHERIQUES. Les différents PLOTS DE CONTACT sont référencés en les appelant par la référence du connecteur auquel ils appartiennent suivie du numéro du plot. Par exemple les PLOTS seront appelés sur les schémas: Y01-01, Y01-02,... Y01-22, Y02-01,... Y02-22,..., Y06-22.

Les PLAQUES FONCTIONNELLES sans CONNECTEUR AVANT sont celles raccordées uniquement sur l'OMNIBUS DE PILOTAGE (12) à savoir:

- le MODULE DE PILOTAGE AM902B,
- le MODULE DE CONFIGURATION AM927.

Les PLAQUES FONCTIONNELLES avec CONNECTEUR AVANT sont celles comprenant des connexions vers l'extérieur à savoir:

- le MODULE D'INTERFACE D'EXPLOITATION AM904,
- les MODULES D'INTERFACE AVAL AM903.

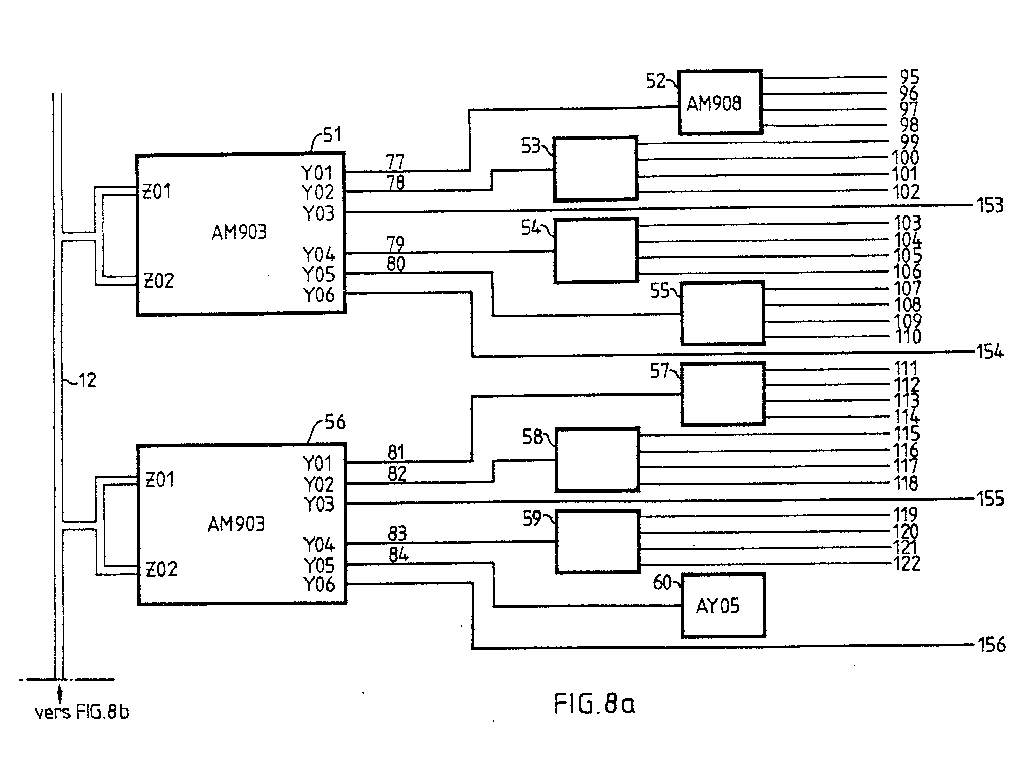

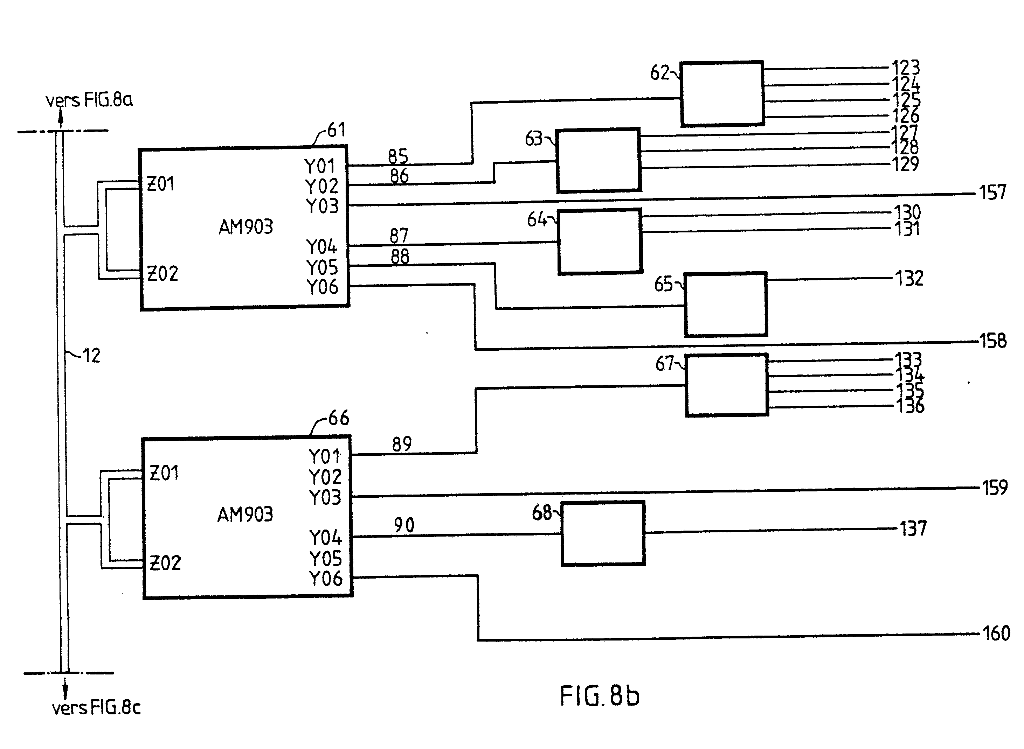

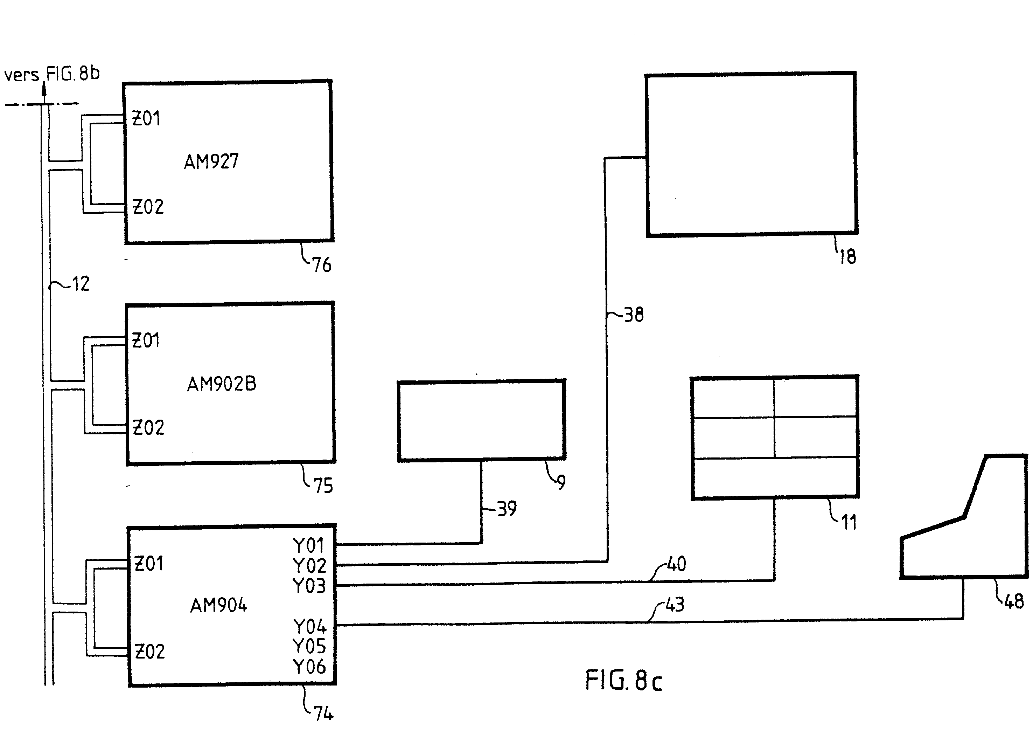

La figure 8 est une représentation schématique des circuits de branchement des plaques fonctionnelles avec l'OMNIBUS DE PILOTAGE (12) ainsi que les CABLES DE LIAISON PERIPHERIQUE.

Sur cette figure apparaissent les connecteurs Z01 et Z02 qui servent au raccordement avec le CABLE INTERPLAQUE ou OMNIBUS DE PILOTAGE (12). Les connecteurs Y01, Y02, Y03, Y04, Y05, Y06 apparaissent également ainsi que les CABLES DE LIAISON PERIPHERIQUES.

Les CABLES DE LIAISON PERIPHERIQUE (77), (78) . . . (83), (85) . . . (89) permettent le raccordement d'une sortie YOx d'un MODULE D'INTERFACE AVAL du type AM903 avec un MODULE INTERMEDIAIRE du type AM908.

Le CABLE DE LIAISON PERIPHERIQUE (84) permet le raccordement de la sortie Y05 du MODULE D'INTERFACE AVAL (56) du type AM903 avec le MODULE DES SOURCES A FAIBLE ENERGIE (60) du type AY05. De même, le câble de liaison périphérique (90) permet le raccordement de la sortie YO4 du module d'interface aval (66) avec le module à faible énergie AY05 (68).

Pour mémoire, les sorties (95), (96) . . . (136) sont respectivement raccordées à un REGULATEUR DE TENSION de type AY10.

Le CABLE DE LIAISON PERIPHERIQUE (38) est raccordé au MODULE D'ALIMENTATION PRIMAIRE (8). Le CABLE DE LIAISON PERIPHERIQUE (39) est raccordé au MODULE DES ALIMENTATIONS DE SERVITUDE (9) et le CABLE DE LIAISON PERIPHERIQUE (43) est relié au PUPITRE D'EXPLOITATION (48) DU SYSTEME DE TRAITEMENT DE DONNEES. Le CABLE DE LIAISON PERIPHERIQUE (40) est relié au PANNEAU DE SERVICE.

Arrivé à ce point de la description de la réalisation préférée de l'invention et avant d'entrer dans la description détaillée du PANNEAU DE SERVICE (11), il est indispensable de préciser la notion de modularité du système de traitement de données vu du côté des alimentations.

Sur la figure 1 le système de traitement de données est divisé en un certain nombre de sous-ensembles fonctionnels.

- le sous-ensemble fonctionnel (1) qui contient le module d'alimentation (17) et le pupitre (48) du système de traitement de données
- le sous-ensemble fonctionnel (3) qui contient le module d'alimentation (23) et la mémoire principale (24)
- le sous-ensemble fonctionnel (4) qui contient le module d'alimentation (26) et l'unité d'échanges d'entrée-sortie (27)
- le sous-ensemble fonctionnel (5) qui contient le module d'alimentation (29) et l'unité de couplage de disques magnétiques (30)
- le sous-ensemble fonctionnel (6) qui contient le module d'alimentation (32) et l'unité de couplage de bandes magnétiques (33)
- le sous-ensemble fonctionnel (7) qui contient le module d'alimentation (35) et l'unité de couplage de périphériques lents (36)
- le sous-ensemble fonctionnel (8) qui contient le module d'alimentation (44) et la deuxième unité de couplage de disques magnétiques (45).

Dans la suite de la description et conformément à la réalisation particulière choisie pour illustrer l'invention, les modules d'alimentation (17), (20), (23), (26), (29), (32), (35) et (44) seront appelés respectivement: sous système d'alimentation 0, sous système d'alimentation 1, sous système d'alimentation 2, sous système d'alimentation 3, sous système d'alimentation 4, sous système d'alimentation 5, sous système d'alimentation 6, sous système d'alimentation 7.

Bien entendu, toute autre répartition des sources est possible. Par exemple, il est parfaitement possible que plusieurs sources soient rattachées à un même sous-système d'alimentation. Le choix fait ici a uniquement pour objet de faciliter les explications qui suivent. En effet, la répartition des sources parmi les sous-systèmes d'alimentation est faite au niveau du module de configuration AM927. Il serait, par exemple, tout à fait possible d'avoir un système d'alimentation dont les sous-systèmes seraient répartis:

- sous-système 0 comprend les modules d'alimentation des organes suivants:
  - pupitre du système de traitement de données
  - unité centrale
  - mémoire centrale
  - première unité d'échange d'entrée sortie
  - première unité de couplage de disques magnétiques
  - première unité de couplage de périphériques lents.

- sous-système 1 comprend le module d'alimentation des quatre unités de disques magnétiques suivantes.
- sous-système 2 comprend le module d'alimentation des quatre unités de bandes magnétiques.
- sous-système 3 comprend le module d'alimentation de la deuxième unité d'échange d'entrée sortie.

Ainsi de suite jusqu'au sous-système 7.

La répartition des modules d'alimentation se trouve inscrite sous forme de tables dans le module de configuration AM927. C'est en consultant ces tables que le module de pilotage (75) connaîtra la composition de chaque sous-système. Pour changer cette composition, il suffira de placer le module de configuration AM927 dont les tables correspondent à la composition des sous-systèmes d'alimentation.

Ceci étant dit, il apparaît que le moniteur (10) veut communiquer avec un sous-système d'alimentation, ou une source d'un sous-système, il doit définir son adresse. Pour appeler le sous-système d'alimentation 0, il doit adresser le module d'interface aval (51-1). Pour appeler le sous système d'alimentation 1, il doit adresser le module d'interface aval (51-2). Ainsi de suite, pour le sous système d'alimentation 2 le module d'interface aval (56-1), pour le sous système d'alimentation 3 le module d'interface aval (56-2), pour le sous système d'alimentation 4 le module d'interface aval (61-1), pour le sous système d'alimentation 5 le module d'interface aval (61-2), pour le sous système d'alimentation 6 le module d'interface aval (66-1), pour le sous système d'alimentation 7 le module d'interface aval (66-2).

Dans la réalisation préférée de l'invention le nombre de sous-système d'alimentation a été arrêté à 8 mais bien entendu, ce nombre n'est pas limitatif. Par ailleurs, il sera vu par la suite, qu'il est possible de constituer par chaînage une association de systèmes d'alimentation, ce qui est un autre moyen d'accroître le nombre des sous-systèmes d'alimentation desservis tout en conservant les caractéristiques propres à chaque système d'alimentation. Par exemple, le chaînage de systèmes d'alimentation permet d'alimenter des systèmes de traitement de données à multiprocesseurs.

Le panneau de service (11) constitue le moyen de dialogue entre l'opérateur ou le technicien de maintenance et le système d'alimentation. Ce dialogue est rendu possible par l'existence sur ce panneau de service d'un certain nombre de bouton-poussoir, de clefs, d'interrupteurs-inverseurs et de voyants lumineux.

Ce dialogue entre l'opérateur et le technicien de maintenance et le système d'alimentation est rendu nécessaire dans trois circonstances:

- pendant les périodes d'autosurveillance quand le moniteur désire alerter l'opérateur de l'apparition d'une situation anormale
- pendant les périodes d'exploitation normales de système d'alimentation quand l'opérateur désire être renseigné sur la situation de fonctionnement et éventuellement apporter des modificiations dans ce fonctionnement, pendant les périodes de maintenance quand le technicien de maintenance intervient sur le système d'alimentation en vue de la détection et de la localisation des pannes.

Le PANNEAU DE SERVICE (11) en raison de sa fonction comprend plusieurs zones fonctionnelles:

- une zone fonctionnelle de COMMANDE GENERALE. Dans cette zone fonctionnelle de COMMANDE GENERALE sont regroupés les commandes et les compte-rendus concernant les éléments communs au SYSTEME D'ALIMENTATION: c'est là que se trouvaient, par exemple, les boutons poussoirs MARCHE et ARRET qui provoque la mise sous tension de l'ensemble du système d'alimentation
- une zone fonctionnelle de COMMANDE ET DE CONTROLE DES SOUS-SYSTEMES D'ALIMENTATION. Dans cette zone fonctionnelle sont situées les commandes destinées aux sous-systèmes ainsi que les compte-rendus émis depuis les sous-systèmes en rentur vers le PANNEAU DE SERVICE (11)
- enfin, une zone fonctionnelle de MAINTENANCE qui contient les organes nécessaires aux opérations de maintenance. Il arrive, comme dans la réalisation ici décrite, que les deux précédentes zones fonctionnelles ont une partie commune.

Par ailleurs, il existe, à l'extérieur du PANNEAU DE SERVICE (11), dans un endroit d'accès réservé aux techniciens qualifiés pour effectuer la MAINTENANCE un dispositif qui permet de modifier le fonctionnement du SYSTEME D'ALIMENTATION. Dans la position »FONCTIONNEMENT D'EXPLOITATION« le système d'alimentation fonctionne suivant des caractéristiques normales, c'est-à-dire, par exemple, toutes les protections électriques sont effectives et certains circuits de mémorisation de pannes sont inaccessibles à la remise à zéro. Dans la position »FONCTIONNEMENT DE MAINTENANCE« le fonctionnement du système d'alimentation est modifié afin de permettre les fonctionnements et les opérations susceptibles de permettre au technicien de maintenance de diagnostiquer et de localiser les pannes et les défauts. Ce dispositif sera appelé par la suite »COMMUTATEUR DE FONCTIONNEMENT EXPLOITATION/MAINTENANCE«.

Ce commutateur peut occuper deux positions:

- la position EXPLOITATION où le fonctionnement du système d'alimentation est normal
- la position MAINTENANCE où le fonctionnement du système est celui réservé à la maintenance.

LE PANNEAU DE SERVICE

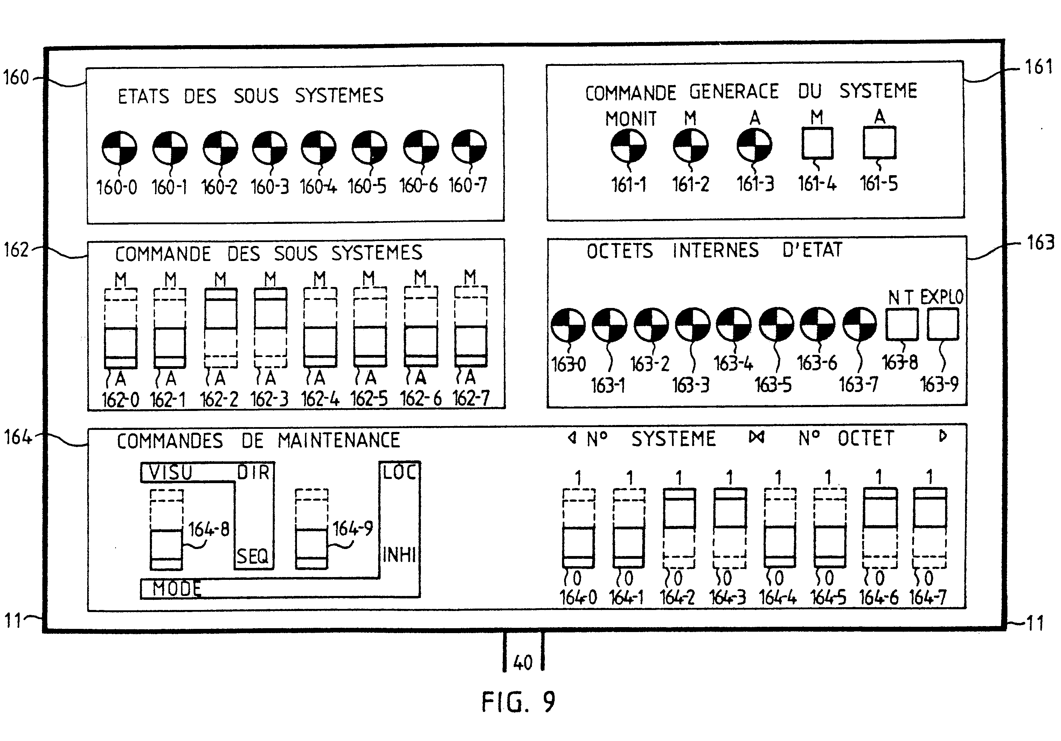

La figure 9 est une représentation schématique d'un »PANNEAU DE SERVICE (11)«. Ce panneau de service (11) comprend cinq zones:

- en (161) la COMMANDE GENERALE DU SYSTEME D'ALIMENTATION
- en (160) la VISUALISATION DES ETATS DES SOUS-SYSTEMES D'ALIMENTATION
- en (162) les COMMANDES DES SOUS-SYSTEMES D'ALIMENTATION
- en (163) la VISUALISATION SELECTIVE DES OCTETS D'ETATS INTERNES DES SOUS-SYSTEMES D'ALIMENTATION
- en (164) les COMMANDES DE MAINTENANCE.

Non représenté sur cette figure 9 mais placé dans un endroit d'accès réservé comme il a été expliqué plus haut, existe un COMMUTATEUR DE FONCTIONNEMENT EXPLOITATION/MAINTENANCE à deux positions: position EXPLOITATION et position MAINTENANCE.

Dans le description qui va suivre, le PANNEAU DE SERVICE (11) sera considéré dans son FONCTIONNEMENT EXPLOITATION c'est-à-dire que le commutateur de fonctionnement exploitation/maintenance sera placé sur la position EXPLOITATION. Il sera également décrit les fonctions des organes du Panneau de Service (11), il sera vu plus tard comment ces fonctions sont assumées. Il n'est pas fait état ici du SELECTIONNEUR GENERAL (15) qui doit être fermé manuellement par l'opérateur avant d'effectuer toute opération de mise en route du système d'alimentation.

La zone (161) de COMMANDE GENERALE DU SYSTEME D'ALIMENTATION comprend:

- un BOUTON-POUSSOIR (161-4) »MARCHE«. Ce bouton poussoir (161-4) commande la mise sous tension de l'ALIMENTATION PRIMAIRE (18). Une pression sur ce bouton poussoir (161-4) »MARCHE« a les conséquences suivantes:
  - Si le système d'alimentation se trouve déjà »SOUS-TENSION«, il y a REMISE A ZERO PARTIELLE OU TOTALE DES BASCULES DE DEFAUT DES SOUS-SYSTEME. Cette remise à zéro a une portée différente suivant le MODE DE FONCTIONNEMENT DU SYSTEME D'ALIMENTATION. Dans le mode de fonctionnement en EXPLOITATION NORMALE, la remise à zéro n'est faite que pour les bascules mèmorisant des DEFAUTS MINEURS. Il sera vu plus loin ce qu'il faut entendre par défauts mineurs; pour l'instant, il faut considérer comme DEFAUTS MINEURS, des défauts dont l'existence ne compromet pas la sécurité de fonctionnement du système d'alimentation.
  - Si le système d'alimentation est »HORS TENSION«, il y a »MISE EN MARCHE« de l'ALIMENTATION PRIMAIRE (18) puis de tous les sous-systèmes pour lesquels la »CLEF DE MISE SOUS TENSION« (162-0 à 162-7) contenue dans la ZONE FONCTIONNELLE DE COMMANDE ET DE CONTROLE DES SOUS SYSTEMES est placée sur la position »MARCHE«.

Il est à noter que les opérations de »MISE EN MARCHE« qui viennent d'être décrites peuvent avoir également leur origine par une action au niveau du PUPITRE DE COMMANDE ET DE CONTROLE (48) du système de traitement de données sous réserve que le système d'alimentation se trouve en mode de fonctionnement d'EXPLOITATION normale. Si le système d'alimentation se trouve en mode de fonctionnement de MAINTENANCE, les actions de MISE EN MARCHE à partir du pupitre de commande et de contrôle (48) seront impossibles afin de protéger les techniciens de maintenance effectuant un éventuel dépannage. Cette disposition se comprend aisément en considérant qu'il est normal que l'opérateur du système de traitement de données puisse en mode d'exploitation mettre sous tension le SYSTEME D'ALIMENTATION à partir du pupitre de commande et de contrôle (48) sans avoir à se déplacer pour accéder au PANNEAU DE SERVICE (11). Il sera vu ultérieurement comment cette commande du pupitre de commande et de contrôle (18) est acheminée à travers la liaison (43) jusqu'au moniteur (10).

Il sera vu également que suivant l'invention, il est possible de raccorder en série les commandes de MARCHES et les commandes d'ARRET de plusieurs systèmes d'alimentation. Ce mode de raccordement est appelé en anglais: »DAISY CHAIN«, en trançais le terme le plus proche serait »GUIRLANDE«. Dans le raccordement réalisé dans l'invention, le système de la guirlande le plus rapproché du pupitre (48) du système de traitement de données est le premier à exécuter les ordres reçues. Ce n'est qu'après exécution de l'ordre reçu que le système transmet l'ordre au système suivant. Ainsi de suite jusqu'au dernier système qui une fois l'ordre exécuté retransmet l'ordre au pupitre (48) du système de traitement de données. Cet ordre en retour constitue pour le pupitre (48) du système de traitement de données un signal d'acquittement de bonne exécution de l'ordre reçu par tous les systèmes de la guirlande. Si un des systèmes d'alimentation est MIS HORS SERVICE par l'ouverture de son Sectionneur Manuel (15), un dispositif est prévu pour que la guirlande ne soit pas ouverte. Pour cela l'ouverture du Sectionneur Manuel entraîne un court-circuit de la guirlande à travers le système d'alimentation. Les circuits de la guirlande sont appelés »CIRCUITS DE TELECOMMANDE«.

- un BOUTON »ARRET« (161-5). Une pression sur ce bouton poussoir »ARRET« (161-5) déclenche la mise hors tension du Système d'Alimentation. Cette mise hors tension s'effectue en deux étapes:
  - d'abord, les sous-systèmes d'alimentation sont séquentiellement arrêtés.
  - ensuite, l'alimentation primaire (8) est arrêtée.

La mise hors tension du système d'alimentation peut également être obtenue à partir du pupitre de commande et de contrôle (18) au moyen de la liaison en guirlande comme il a été expliqué ci-dessus pour la mise sous-tension du système d'alimentation.

- un VOYANT LUMINEUX (161-2) »MARCHE«. Ce voyant lumineux (161-2) »MARCHE« peut présenter 3 modes d'éclairage différents:
  - si le voyant lumineux (161-2) MARCHE est ETEINT d'une façon permanente, cela signifie que la dernière commande reçue par le système d'alimentation est une commande »ARRET« c'est-à-dire de mise hors tension. Les système d'alimentation est hors tension.
  - si le voyant lumineux (161-2) MARCHE est »ALLUME« d'une façon permanente, cela signifie que la dernière commande reçue par le système d'alimentation est une commande »MARCHE« c'est-à-dire de mise sous tension. Dans ces conditions, le système d'alimentation fonctionne: les alimentations de servitude (9) et l'alimentation primaire (8) sont sour tension et le MONITEUR (10) a mis sous tension tous les sous-systèmes pour lesquels la clef de commande (162-0 à 162-7) est placée sur MARCHE, lesquels sous-systèmes ne sont le siège d'aucun défaut.
  - Si le voyant lumineux (161-2) »MARCHE« CLIGNOTE c'est-à-dire qu'il s'allume et s'éteint successivement, cela peut provenir de deux circonstances différentes:
  - soit le processus de mise sous-tension du système d'alimentation est en cours d'exécution et tout se passe normalement
  - soit le processus de mise sous tension est en cours ou est terminé mais au moins un défaut a été constaté par le MONITEUR (10) dans le système d'alimentation.
  - un VOYANT LUMINEUX (161-3) »ARRET«. Ce voyant lumineux (161-3) »ARRET« peut présenter 3 modes d'éclairage.
  - si le voyant lumineux (161-3) ARRET est ETEINT d'une façon permanente. Cela signifie que la dernière commande reçue par le système d'alimentation est une commande »MARCHE« c'est-à-dire de mise sous tension. Une séquence de mise sous tension est donc soit en cours d'exécution, soit terminée.
  - si le voyant lumineux (161-3) ARRET est ALLUME d'une façon permanente, cela signifie que le système d'alimentation se trouve complètement hors tension.
  - si le voyant lumineux (161-3) ARRET CLIGNOTE c'est-à-dire s'allume et s'éteint successivement, ce phénomène peut avoir deux origines différentes:
  - soit le processus de mise hors tension du système d'alimentation est commencé mais n'est pas encore achevé
  - soit le processus de mise hors tension a été commencé mais au moins un des signaux d'acquittement n'est pas parvenu. Ces signaux d'acquittement sont envoyés par les sous-systèmes d'alimentation en »MARCHE« et l'alimentation primaire (8) ainsi que l'alimentation de servitude (9). Ce n'est qu'après avoir reçu la totalité de ces signaux que le système est certain que la séquence de mise hors tension s'est déroulée favorablement. Dans le cas concerné par le clignotement du voyant lumineux (161-3) signifie qu'une anomalie s'est produite dans le processus de mise hors tension.

- un VOYANT LUMINEUX (161-1) »MONITEUR«. Ce voyant sert à visualiser la détection de défaut par le MONITEUR (10). Quand ce voyant lumineux (161-1) »MONITEUR« est allumé d'une façon permanente, cela signifie qu'une anomalie a été décelée au cours du déroulement des »MICROPROGRAMMES D'AUTOSURVEILLANCE« (WATCH-DOG) accompli dans le MONITEUR (10). Ces »MICROPROGRAMMES D'AUTOSURVEILLANCE« seront vus ultérieurement. Quand cette situation se présente le moniteur (10) émet un SIGNAL GENERAL D'INHIBITION vers tous les sous-systèmes afin de les mettre hors tension.

La zone (162) DE COMMANDE DES SOUS-SYSTEME D'ALIMENTATION comprend un certain nombre d'INTERRUPTEURS-INVERSEURS (162-0), (162-1), (162-2), (162-3), (162-4), (162-5), (162-6), (162-7).

Ces interrupteurs-inverseurs (162-0 à 162-7) sont en nombre égal au nombre de SOUS-SYSTEME D'ALIMENTATION composant le SYSTEME D'ALIMENTATION. Dans la réalisation ici décrite à titre d'exemple le Système d'Alimentation comporte 8 sous-système d'alimentation référencés par les désignations: SOUS-SYSTEME D'ALIMENTATION 0 à SOUS-SYSTEME D'ALIMENTATION 7. A chaque Sous-Système d'Alimentation est affecté un interrupteur inverseur (162-0 à 162-7) l'indice correspondant au numéro de sous-système d'alimentation. Ainsi l'interrupteur-inverseur (162-0) est associé au sous-système d'alimentation 0; l'interrupteur-inverseur (162-1) est associé au sous-système d'alimentation 1, ainsi de suite jusqu'à l'interrupteur (162-7) qui est associé au sous-système d'alimentation 7. Bien entendu ce nombre de 8 sous-systèmes d'alimentation n'est pas limitatif et le nombre de sous-systèmes d'alimentation contenu dans un système d'alimentation conçu suivant les enseignements de l'invention peut être aussi élevé que le désire le concepteur.

Chacun des interrupteurs-inverseurs (162-0 à 162-7) peut occuper une position parmi deux: une position »MARCHE« ou une position »ARRET«. Ces deux positions correspondent respectivement aux fonctions suivantes:

- Pour les sous-systèmes pour lesquels l'interrupteur-inverseur se trouve placé sur la position »MARCHE« au moment de la mise sous tension du système d'alimentation il y a mise sous tension des sous-systèmes pour lesquels les interrupteurs-inverseurs sont sur la position »MARCHE« et exclusivement pour ces sous-systèmes d'alimentation. Tous les sous-systèmes pour lesquels l'interrupteur-inverseur se trouve sur la position »ARRET« ne seront pas mis sous tension.
- Quand le système est sous tension, le passage d'un interrupteur-inverseur de la position »ARRET« à la position »MARCHE« entraîne une séquence de mise sous tension du sous-système considéré.
- Quand le système est sous tension, le passage d'un interrupteur-inverseur de la position »MARCHE« à la position »ARRET« entraîne une séquence de mise hors tension du sous-système considéré.

Il apparaît clairement que ces interrupteurs-inverseurs (162-0 à 162-7) permettent à l'opérateur de pouvoir à volonté mettre sous tension ou hors tension les sous-systèmes d'alimentation.

Il faut préciser que le positionnement de l'interrupteur-inverseur sur la position »ARRET« inhibe la transmission des défauts détectés au niveau du sous-système vers le MONITEUR (10). Pour le MONITEUR (10) les sous-systèmes d'alimentation en position »ARRET« ne sont plus pris en compte.

- La ZONE (160) DE VISUALISATION DE L'ETAT DES SOUS-SYSTEMES D'ALIMENTATION comprend dans la réalisation préférée de l'invention HUIT VOYANTS LUMINEUX (160-0 à 160-7). Bien entendu ce nombre n'est pas limitatif: il y a autant de voyants lumineux qu'il y a de sous-systèmes d'alimentation dans le système d'alimentation. Sur la figure 9 chaque voyant lumineux a été affecté du chiffre 160 suivi d'un indice. L'indice indique le numéro du sous-système auquel est affecté le voyant lumineux: ainsi le voyant lumineux (160-0) correspond au sous-système 0, le voyant lumineux (160-1) correspond au sous-système 1, ainsi de suite jusqu'au voyant lumineux (160-7) qui correspond au sous-système 7.

Les conditions d'éclairement de chaque voyant lumineux (160-0 à 160-7) correspondent à l'état de fonctionnement du sous-système d'alimentation correspondant ainsi:

- un voyant lumineux »ECLAIRE EN PERMANENCE« indique que le sous-système correspondant est sous tension et qu'AUCUN défaut n'a été détecté.
- un voyant lumineux qui »CLIGNOTE BRIEVEMENT« c'est-à-dire dont la période d'éclairement est interrompue périodiquement par une courte période d'extinction indique que le sous-système correspondant est sous tension mais qu'au moins un »DEFAUT MINEUR« a été détecté. Un défaut mineur est une anomalie ne justifiant pas l'arrêt du sous-système d'alimentation.
- un voyant lumineux qui »CLIGNOTE A PERIODES EGALES« c'est-à-dire que la durée des périodes d'éclairement est sensiblement égale à la durée de la période d'extinction indique:
- soit que le sous-système d'alimentation n'a pas pu être amené à l'arrêt complet à la suite du passage de l'interrupteur-inverseur (162-x) correspondant à la position »MARCHE« à la position »ARRET« et lors d'un arrêt général;
- soit que le sous-système d'alimentation ayant présenté un »DEFAUT MAJEUR« a nécessité une opération de mise hors tension qui peut d'ailleurs soit avoir abouti, soit avoir échoué;
- un voyant lumineux »ETEINT EN PERMANENCE« signifie que le sous-système d'alimentation correspondant est en »MISE HORS TENSION« normale.

- La ZONE (163) D'EXPLORATION ET DE VISUALISATION DU CONTENU DES MEMOIRES INTERNES DES SOUS-SYSTEMES D'ALIMENTATION contient huit VOYANTS LUMINEUX (163-0 à 163-7), un BOUTON POUSSOIR (163-8) D'INITIALISATION, un BOUTON POUSSOIR (165-9) D'EXPLORATION D'ADRESSE.

La zone (163), comme son nom l'indique, permet d'accéder à des octets d'états contenus dans des tables associées au sous-système. Ces tables contiennent des informations concernant le fonctionnement des sous-systèmes. Comme il sera expliqué plus loin l'opérateur ou le technicien de maintenance peut extraire, octet par octet le contenu de ces tables par action sur le bouton poussoir (163-8) d'INITIALISATION et ainsi que sur le bouton poussoir (163-9) d'EXPLORATION d'adresse.

En dehors des périodes où l'opérateur ou le technicien de maintenance utilisent cette zone (163) d'exploitation et de visualisation du contenu des mémoires internes des sous-systèmes d'alimentation, les huit voyants lumineux (163-0 à 163-7) sont affectés à la visualisation des bits d'état de l'alimentation primaire et des ressources communes (18).

Pendant les périodes de fonctionnement comme par exemple, celles transitoires de mise sous tension à la suite d'une commande MARCHE et de mise hors tension à la suite d'une commande ARRET, les huit voyants lumineux (163-0 à 163-7) vont se mettre à clignoter.

Par contre quand le système d'alimentation se trouve en régime établi les huits voyants lumineux (163-0 à 163-7) servent à signaler les défauts détectés au niveau de l'alimentation de servitude (9) et au niveau de l'alimentation primaire (8). Il faut entendre par là que chaque défaut détecté provoquera l'éclairement d'un des voyants lumineux (163-0 à 163-7) indiquant par là à l'opérateur d'exploitation qu'un incident s'est produit. En l'absence d'incident tous les voyants sont éteints.

Mais, comme il a été dit plus haut, l'opérateur et/ou le technicien de maintenance peuvent avoir besoin de consulter les tables d'état des sous-systèmes. Pour cela ils vont pouvoir visualiser les différents octets d'état grâce aux deux boutons poussoir: le bouton poussoir (163-8) d'INITIALISATION et le bouton poussoir (163-9) d'EXPLORATION d'adresse:

Le bouton poussoir (163-8) d'INITIALISATION permet d'initialiser la séquence d'exploration d'adresse à l'intérieur de tables. C'est-à-dire qu'il remet à zéro la séquence d'exploration d'adresse dans le cas où la séquence d'exploration précédente n'aurait pas été menée à terme. Cette remise à zéro se traduit par le retour de l'affectation des voyants lumineux (163-0 à 163-7) à la visualisation des bits d'état de l'alimentation de servitude (9) et de l'alimentation primaire (18). L'appui sur le bouton-poussoir (163-8) de l'INITIALISATION est utilisé en outre, pour contrôler le bon fonctionnement des voyants lumineux de tout le panneau de service (11) à l'exception du voyant lumineux (161-1) MONITEUR. En effet, pendant toute la période où le bouton poussoir (163-8) d'INITIALISATION est tenu, les voyants lumineux doivent clignoter. Les voyants lumineux qui ne clignoteraint pas ont un fonctionnement défectueux et doivent être remplacés. Le voyant lumineux (161-1) MONITEUR ne peut pas faire l'objet d'un test car il est relié directement au MONITEUR (11) sur les circuits de TRAP.

Le bouton poussoir (163-9) d'exploration d'adresse permet l'exploration séquentielle des tables d'état des sources en défaut par ordre d'adresses croissantes.

Avant de commencer une séquence d'exploration des octets internes des sources en défaut, il est indispensable que la séquence d'exploration soit placée dans son état initial. Cette mise à l'état initial peut réalisée de plusieurs façons. D'abord, cette mise à l'état initial se fait automatiquement si une période déterminée s'est écoulée depuis la dernière action sur le bouton-poussoir (163-9) EXPLORATION. Ensuite, cette mise à l'état initial peut être obtenue comme expliqué ci-dessus par la pression sur le bouton-poussoir (163-8) INITIALISATION. Enfin, comme il va être vu ci-dessous, l'état initial est obtenu en fin de séquence lors de la dernière pression sur le bouton-poussoir (163-9) EXPLORATION.

La séquence d'exploration d'adresse étant placée dans son état initial, le premier appui sur le bouton-poussoir (163-9) EXPLORATION commence la séquence d'exploration d'adresse. Ce commencement est indiqué à l'opérateur par un éclairement particulier des voyants lumineux (163-0 à 163-7): un seul voyant lumineux parmi les 8 est allumé à la fois et ce voyant allumé est permuté périodiquement. Ce mode d'éclairement signifie pour l'opérateur que le prochain appui sur le bouton poussoir (163-9) EXPLORATION déclenchera la première phase de la procédure ou cycle d'exploration des adresses. C'est cette procédure ou cycle qui va être maintenant décrite.

- Au deuxième appui sur le bouton poussoir (163-9) d'exploration d'adresse les voyants lumineux (163-0 à 163-7) éclairés désigneront les sous-systèmes d'alimentation placés en états d'inhibition. La mise d'un sous-système d'alimentation en état d'inhibition sera vue ultérieurement. Il faut entendre par là que le sous-système d'alimentation concerné est mis hors service. Si le sous-système d'alimentation 0 est en état d'inhibition le voyant lumineux (163-0) sera allumé, si ce sous-système d'alimentation 0 est en service normal le voyant lumineux (163-0) sera éteint. Et ainsi de suite chaque voyant lumineux (163-1 à 163-87) indiquera si le sous-système correspondant est en état d'inhibition ou en fonctionnement normal suivant qu'il sera allumé ou éteint.
- Au troisième appui sur le bouton-poussoir (163-9) d'exploration d'adresse, deux cas peuvent se produire
  - s'il n'y a aucune source de tension en défaut, la séquence d'exploration d'adresse est placée dans un état de fin d'exploration puisque le moniteur n'a trouvé aucune source en défaut. Dans ce cas, le moniteur indique la fin de séquence en allumant tous les voyants lumineux (163-0 à 163-7) sauf un, le voyant lumineux éteint se déplaçant par permutation parmi les voyants lumineux. En somme, cette phase de fin de séquence est signalée par un éclairement complémentaire de celui de la phase de commencement. Si à ce moment là l'opérateur effectue une nouvelle pression sur le bouton-poussoir (163-9) EXPLORATION, la séquence d'exploration d'adresse se trouve en état initial c'est-à-dire que les voyants lumineux (163-0 à 163-7) sont affectés à la visualisation des défauts de l'alimentation de servitude (9) et de l'alimentation primaire (8).

— s'il y a au moins une source en défaut, les voyants lumineux (163-0 à 163-7) vont donner l'adresse de l'octet d'état de la première source en défaut. Pour bien indiquer qu'il s'agit d'une adresse et non d'un octet d'état les voyants lumineux ex-cités clignotent.

Cette adresse contient deux octets qui seront explorés successivement. Le premier octet d'état caractérise la situation avant l'apparition du défaut: c'est »l'octet d'ETAT-PREINCIDENT«. Le deuxième octet d'état caractérise la situation après l'apparition du défaut: c'est »l'OCTET-POSTINCIDENT«.

Comme il a été expliqué précédemment, les octets d'état sont stockés à des adresses consécutives: le premier octet rangé est l'octet de rang 0 du sous-système d'alimentation 0, l'octet suivant est l'octet de rang 1 du sous-système d'alimentation 0 ainsi de suite jusqu'au dernier octet du sous-système de rang le plus élevé. Le moniteur (10) connaît la répartition des octets parmi les sous-systèmes d'alimentation grâce aux tables contenues dans le module (76) de configuration AM927.

— Au quatrième appui sur le bouton poussoir (163-9) d'exploration d'adresse, les voyants lumineux (163-0 à 163-7) indiquent la valeur de l'octet d'état PREINCIDENT.
— Au cinquième appui sur le bouton poussoir (163-9) les voyants lumineux (163-0 à 163-7) indiquent la valeur de l'octet d'état POSTINCIDENT.
— Au sixième appui sur le bouton poussoir (163-9) la situation est similaire à celle rencontrée au cours du troisième appui sur le bouton poussoir. S'il n'y a plus de source en défaut ce sixième appui sur le bouton poussoir (163-9) EXPLORATION placera la séquence d'exploration en phase de fin d'exploration et le moniteur (10) indiquera cette situation en éclairant tous les voyants lumineux (163-0 à 163-7) sauf un et en permuttant périodiquement le voyant lumineux éteint par les 8.
— s'il y a encore au moins une source en défaut les voyants lumineux (163-0 à 163-7) vont donner l'adresse de l'octet d'état de la source en défaut suivante. Ici encore pour bien indiquer qu'il s'agit d'une adresse et non d'un octet d'état les voyants lumineux excités clignotent.
— Au septième appui sur le bouton poussoir (163-9) d'exploration d'adresse, les voyants lumineux (163-0 à 163-7) donnent la valeur de l'octet d'état PREINCIDENT contenu à l'adresse obtenue au précédent appui sur le bouton poussoir (163-9).
— Au huitième appui sur le bouton poussoir (163-9) d'exploration d'adresse, c'est l'octet d'état POSTINCIDENT qui est visualisé sur les voyants lumineux (163-0 à 163-7).

Ainsi de suite, par appuis successifs sur le bouton poussoir (163-9), l'opérateur comme le technicien de maintenance ont la possibilité d'explorer successivement les sources en défaut, de connaître l'adresse des octets d'état ainsi que le contenu des octets PREINCIDENT et POSTINCIDENT.

Une fois cette exploration terminée, ce qui est signalé par l'éclairage de tous les voyants lumineux sauf un avec déclage circulaire, une dernière pression sur le bouton poussoir (163-9) ramène les voyants à leur attribution première qui est la visualisation des bits d'états de l'alimentation de servitude (9) et de l'alimentation primaire (8).

Comme il l'a déjà été dit, si le bouton poussoir (163-9) d'exploration n'a pas été manœuvré depuis un laps de temps égal à 3 minutes, il y a remise à zéro automatique de la séquence d'exploration d'adresse: c'est-à-dire que les voyants lumineux (163-0 à 163-7) sont à nouveau affectés à la visualisation des défauts de l'alimentation de servitude (9) et de l'alimentation primaire (18).

Le panneau de service (11) est considéré maintenant dans son FONCTIONNEMENT EN MODE DE MAINTENANCE c'est-à-dire que le commutateur EXPLOITATION/MAINTENANCE a été bascule sur la position MAINTENANCE par le technicien de maintenance. Dans cette position les COMMANDES DE MAINTENANCE (164) sont validées dans le fonctionnement en mode de MAINTENANCE, la remise à zéro des bascules de défauts s'effectue différemment suivant les sous-systèmes. En effet, pendant les périodes de maintenance, le technicien de maintenance choisit d'opérer plus particulièrement sur un ou plusieurs sous-systèmes. Pour cela, il dispose d'un moyen de particulariser ces sous-systèmes. Quand ce moyen est mis en service sur un sous-système, ce sous-système est dit placé en CONTROLE LOCAL ou plus simplement »EN LOCAL« pour indiquer que ce système échappe partiellement au contrôle normal du système d'alimentation et que par conséquent il nécessite un contrôle local. En particulier, pour les sous-systèmes placés en »CONTROLE LOCAL«, une pression sur le boutons poussoir (161-4) MARCHE effectue la remise à zéro de la totalité des bascule de mémorisation des défauts, aussi bien les bascules mémorisant les DEFAUTS MINEURS que celles mémorisant les DEFAUTS MAJEURS. Ce fonctionnement en »CONTROLE LOCAL« sera vu plus en détail ultérieurement.

La ZONE (64) est la zone de DISPOSITIFS DE CONTROLE DE MAINTENANCE. Cette zone n'est opérationnelle que si le commutateur EXPLOITATION/MAINTENANCE est placé sur la position MAINTENANCE. Elle contient:

- HUIT INTERRUPTEURS-INVERSEURS (164-0, 164-1, 164-2, 164-3, 164-4, 164-5, 164-6, 164-7) pouvant chacun occuper deux positions: une marquée 1, l'autre marquée 0. Ces huits interrupteurs-inverseurs seront appelés par la suite CLEF (164-0), CLEF (164-2) . . . CLEF (164-7) et constitueront le CLAVIER D'AFFICHAGE (164-0 à 164-7);
- UN INTERRUPTEUR-INVERSEUR (164-8) DE DEFINITION DES FONCTIONS DE L'INTERRUPTEUR (164-9) Dans la position haute marquée VIS (abréviation de VISUALISATION), l'interrupteur inverseur (164-9) assume des FONCTIONS DE VISUALISATION SEULE. Dans la position basse marquée MODE l'interrupteur (164-9) permet la commande et le contrôle des MODES DE FONCTIONNEMENT DES SOURCES.
- UN INTERRUPTEUR-INVERSEUR (164-9) DE SELECTION DE FONCTION qui comme il vient d'être dit permet de sélectionner des fonctions de maintenance à partir d'un choix préalable effectué par l'interrupteur-inverseur (164-8).

En résumé, il peut être dit que la zone de maintenance (164) fonctionne de 2 façons suivant la position de l'interrupteur-inverseur (164-8). Si l'interrupteur-inverseur (164-8) est positionné en haut sur la position VISU, le technicien de maintenance peut utiliser les voyants lumineux (163-0 à 163-7) pour visualiser des octets internes à la machine. Si l'interrupteur (164-8) est positionné en bas sur la position MODE le technicien de maintenance peut effectuer des commandes sur les sources et lire le compte rendu de ces commandes sur les voyants lumineux (163-0 à 163-7).

Ces 2 façons de fonctionner de la zone de maintenance (164) vont être vues maintenant en détail:

- la première façon de fonctionner examinée est celle où l'interrupteur-inverseur (164-8) est placé sur la position haute »VISU«.

Dans ce cas si l'interrupteur-inverseur (164-9) est placé en haut sur la position marquée DIR (abréviation de DIRECT) le CLAVIER (164-0 à 164-7) sert à définnir l'adresse de l'octet que le technicien demaintenance désire voir affiché sur les voyants lumineux (163-0 à 163-7). Pour cela, le technicien de maintenance définet le NUMERO DE SOUS-SYSTEME D'ALIMENTATION CONCERNE en positionnant les CLEFS (164-0 à 164-3) puis il définit le NUMERO D'ORDRE D'OCTET en positionnant les CLEFS (164-4 à 164-7).

Une fois cette adresse affichée, le technicien de maintenance a deux possibilités qu'il peut utiliser dans un ordre indifférent. Par pression sur le bouton-poussoir (163-8) INITIALISATION l'octet visualisé est l'octet d'état interne de la source adresse avant l'exécution de la dernière commande ARRET ou MARCHE ou REMISE A ZERO ou avant traitement de défaut éventuel. Par pression sur le bouton poussoir (163-9) EXPLORATION l'octet visualisé est l'octet d'état actuel.

Dans le cas où l'interrupteur-inverseur (164-8) étant toujours en position haute, l'interrupteur-inverseur (164-9) se trouve placé en bas sur la position SEQU (Abréviation de SEQUENTIEL) le fonctionnement des voyants de visualisation (163-0 à 163-7) est identique à celui qui a été décrit lors du fonctionnement en mode EXPLOITATION du système d'alimentation.

Le bouton poussoir (163-9) EXPLORATION sert à faire évoluer les adresses d'octets affichés et le bouton-poussoir (163-8) INITIALISATION sert à initialiser la séquence d'exploration des adresses.

Dans la deuxième façon de fonctionner qui est définie par l'interrupteur-inverseur (164-8) placé en position basse marquée MODE le technicien de maintenance peut modifier le MODE DE FONCTIONNEMENT DES SOUS-SYSTEMES. Il va être vu maintenant comment.

Quand l'interrupteur-inverseur (164-9) est placé en haut sur la position LOCAL, le technicien de maintenance a la possibilité de placer à volonté des SOUS-SYSTEMES dans un mode de fonctionnement dit »LOCAL«.

Quand un sous-système est placé en mode LOCAL, les défauts mineurs et majeurs détectés au niveau de ce sous-système ne sont pas répercutés à la console (11). Cette disposition permet au technicien de maintenance de pouvoir travailler sur un sous-système ayant un défaut sans que le MONITEUR (11) place ce sous-système hors tension. En fait, il sera vu par la suite que cette manœuvre nécessite parfois que le sous-système en défaut fonctionne en simulation c'est-à-dire que ce sous-système ne débite aucun courant ce qui évite la destruction de matériel. Ce mode de fonctionnement LOCAL n'existe que lorsque le commutateur EXPLOITATION/MAINTENANCE est placé sur la position MAINTENANCE; tout passage de ce commutateur sur la position EXPLOITATION entraîne la disparition définitive du mode LOCAL pour tous les sous-systèmes qui étaient placés dans ce mode. Pour revenir au mode LOCAL, il faudra effectuer les opérations qui seront décrites plus bas. Pour effectuer la remise à zéro des bascules de défaut mineur et de défaut majeur des sous-systèmes placés en mode LOCAL, le technicien de maintenance appuie sur le bouton-poussoir (161-4) MARCHE. Il est à noter que cette action sur le bouton-poussoir (161-4) MARCHE effectuée dans les conditions décrites est sans effet sur les bascules d'erreur des sous-systèmes ne se trouvant pas en mode LOCAL.

Pour placer des sous-systèmes en mode LOCAL le technicien doit agir sur le CLAVIER (164-0 à 164-7). Chaque CLEF du CLAVIER est affectée à un sous-système: la CLEF 0 au sous-système 0, la CLEF 1 au sous-système 1, ... la CLEF 7 au sous-système 7. Le technicien de maintenance place sur la position haute marquée »1« les CLEFS correspondant au sous-système qu'il désire voir placer ou maintenir en mode LOCAL et place sur la position basse marquée »0« les CLEFS correspondant aux sous-systèmes qu'il désire voir placer ou maintenir en mode NORMAL. Par une pression sur le bouton-poussoir (163-9) EXPLORATION le technicien de maintenance valide le positionnement des CLEFS et le MONITEUR (11) place les sous-systèmes dans les modes affichés. Le technicien de maintenance est informé de la bonne marche de l'opération par les voyants lumineux (163-0 à 163-7). En effet, chaque voyant lumineux est affecté à un sous-système: le voyant lumineux (163-0) au sous-système 0, le voyant (163-1) au sous-système 1, ... le voyant lumineux (163-7) au sous-système 7. Pour chaque sous-système placé en mode LOCAL le voyant lumineux (163-X) correspondant s'allume et réciproquement les voyants lumineux (163-X) correspondant aux sous-système en mode NORMAL sont éteints.

Quand l'interrupteur-inverseur (164-8) étant toujours placé en position basse »MODE«, l'interrupteur-inverseur (164-9) est placé en position basse désignée par INHI (abréviation d'INHIBITION), le technicien de maintenance a la possibilité de placer des sous-systèmes en état d'INHIBITION. Cet état d'INHIBITION est aussi appelé état d'INVALIDATION. Il faut entendre par état d'inhibition un mode de fonctionnement d'un sous-système où tous les organes de commande et de contrôle fonctionnent mais où un signal de verrouillage interdit l'établissement de la puissance. Ce régime de fonctionnement en INHIBITION permet d'effectuer des opérations de détection et de localisation de défauts sans mettre en danger les circuits électriques.

Le passage en régime INHIBITION se fait par affichage sur le CLAVIER (164-0 à 164-7). Chaque CLEF du CLAVIER (164-0 à 164-7) est affectée à un SOUS-SYSTEME dont le numéro est celui de l'indice de la CLEF: le sous-système 0 correspond à la clef (164-0), le sous-système 1 correspond à la clef (164-1) ..., le sous-système 7 correspond à la CLEF (164-7).

Par conception du système d'alimentation le passage en régime d'INHIBITION ou le retour en régime NORMAL ne peuvent être effectués que sur des sous-systèmes préalablement passés en mode LOCAL comme décrit précédemment. Le technicien de maintenance effectue donc au préalable l'operation de passage en mode LOCAL des sous-systèmes dont il veut changer le régime de TENSION NORMALE en régime d'INHIBITION ou inversement. Ensuite, il positionne en »1« les CLEFS correspondant aux sous-systèmes qu'il veut passer en régime INHIBITION et en »0« les CLEFS correspondant aux sous-systèmes qu'il veut faire venir ou maintenir en régime »TENSION NORMALE«.

Le changement de régime est validé par une pression sur l'appui du bouton-poussoir (163-9) EXPLORATION. Cet appui sur le bouton-poussoir (163-9) EXPLORATION autorise le MONITEUR (11) à effectuer le changement éventuel de régime. La situation des sous-systèmes est reproduite sur les voyants lumineux (163-0 à 163-7) qui sont affectés chacun au sous-système dont le numéro correspond à l'indice: le voyant lumineux (163-0) correspond au sous-système 0, le voyant lumineux (163-1) au sous-système 1, ..., le voyant lumineux (163-7) au sous-système 7. Les voyants lumineux (163-X) allumés indiquent les sous-systèmes placés en régime d'INHIBITION et les voyants lumineux (163-Y) éteints indiquent les sous-systèmes placés en régime de TENSION NORMALE.

Pour tous les sous-systèmes qui n'auront pas été placés en mode LOCAL le régime ne sera pas changé, que ce régime soit un régime de TENSION NORMALE ou un régime d'INHIBITION.

Il est à noter également que le régime de fonctionnement d'un sous-système n'est pas affecté par le changement de position du commutateur EXPLOITATION/MAINTENANCE. Par conséquent, un sous système placé en régime d'INHIBITION par le technicien de maintenance conserve ce régime au retour en mode EXPLOITATION.

La commande d'ARRET émise à partir du bouton poussoir (161-5) ARRET aussi bien que la commande ARRET émise à partir du pupitre du système de traitement de données n'effacent pas les régimes INHIBITION. En effet, les régimes INHIBITION sont mémorisés dans le MONITEUR (11) qui est toujours alimenté par l'ALIMENTATION DE SERVITUDE (9).

Le régime INHIBITION ne peut être effacé que par la procédure de maintenance décrite précédemment.

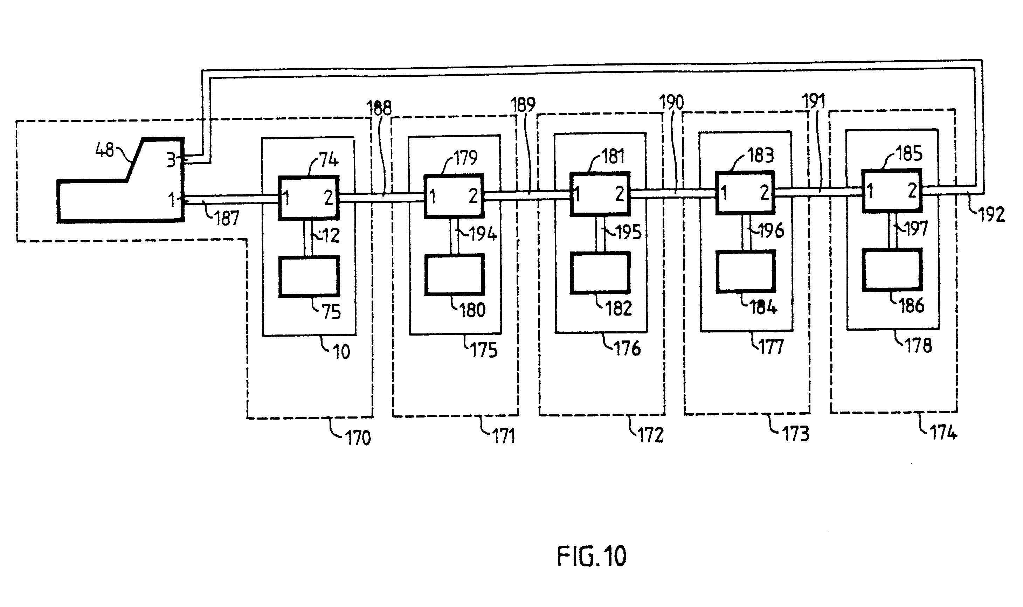

Le Panneau de Service (11) n'est pas le seul moyen de communication existant entre l'opérateur et le système d'alimentation: l'opérateur peut commander et contrôler le système d'alimentation à partir de la console (48) et du système de traitement de données. L'ensemble est d'ailleurs conçu pour permettre à partir d'une seule console (48) de commander et de contrôler plusieurs systèmes d'alimentation. Pour cela, les liaisons de commande et de contrôle des systèmes d'alimentation sont organisées, comme il l'a déjà été dit, en guirlande. Ce mode de raccordement des systèmes d'alimentation est représenté sur la figure 10.

## L'INTERCONNEXION DE PLUSIEURS SYSTEMES D'ALIMENTATION

Sur cette figure 10 sont représentés 5 systèmes de traitement de données (170), (171), (173), (174). Le système (170) représente le système de traitement de données décrit précédemment. Pour mémoire le système (170) est composé:

- de la console (48) de commande et de contrôle
- d'une unité centrale (21)
- d'une mémoire principale (24)
- d'un échangeur d'entrée-sortie (27)
- d'une unité de couplage de disques magnétiques (30)
- d'une unité de couplage de bandes magnétiques (33)
- d'une unité de couplage de périphériques lents (36)
- enfin d'une deuxième unité de couplage de disques magnétiques (45).

Ce système (170) constitue en soi un système complet de traitement de données.

L'utilisateur peut compléter ce système en y adjoignant par exemple, d'autres systèmes de traitement de données afin de constituer un système de traitement de données à base de multiprocesseurs. C'est ce que représente la figure 10: les systèmes (171), (172), (173), (174) sont des systèmes complets ayant chacun une unité centrale.

Le système (170) sera appelé système de traitement 0, le système (171) sera le système de traitement 1, le système (172) sera le système de traitement 2, le système (173) sera le système de traitement 3 et le système (174) sera le système de traitement 4.

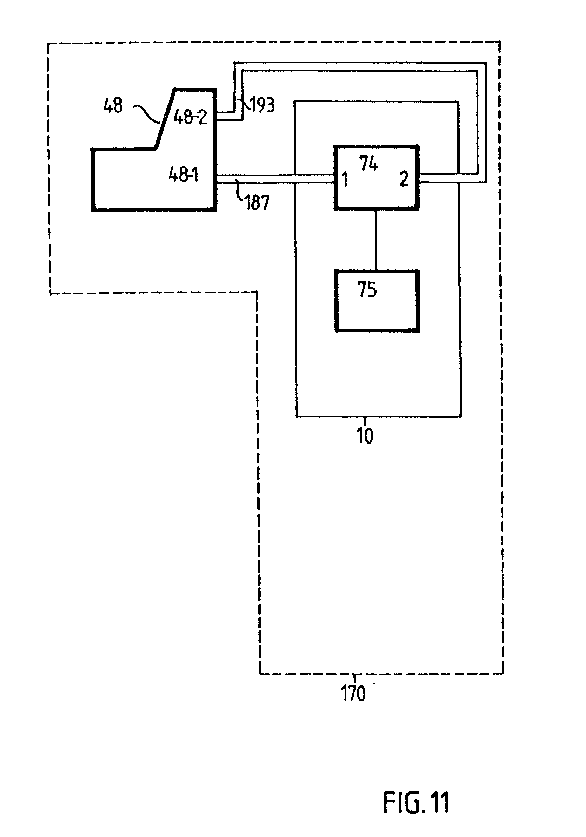

Dans le système (170) représenté dans les figures précédentes et sur la figure 11, la console (48) d'exploitation communique avec le moniteur (10) par la liaison (43). Cette liaison est représentée sur la figure 11 par la liaison (187) qui relie la sortie (48-1) de la console (48) à l'entrée (74-1) du module (74) d'interface d'exploitation du type AM904 et par la liaison (193) qui relie la sortie (74-2) du module (74) d'interface d'exploitation avec l'entrée (48-2) de la console.

Sur la figure 10 qui représente un système de traitement de données multiple, la sortie (74-2) est raccordée par la liaison (188) à l'entrée (179) du module (179-1) d'interface d'exploitation AM904 du système (171). La sortie (179-2) du module (179) d'interface d'exploitation AM904 est relièé par la liaison (189) à l'entrée (181-1) du module (181) d'interface d'exploitation AM904 du système (172). La sortie (181-2) est reliée par la liaison (190) à l'entrée (183-1) du module (183) d'interface d'exploitation AM904 du système (173). La sortie (183-2) est raccordée par la liaison (191) à l'entrée (185-1) du module (185) d'interface d'exploitation AM904 du système (174). La sortie (185-2) est raccordée par la liaison (192) à l'entrée (48-2) de la console. La boucle est fermée par ce retour vers la console (48).

Dans le dispositif représenté sur la figure 10, les signaux émis vers le système multiple par l'opérateur au moyen de la console (48) de commande et de contrôle sont transmis au travers de la liaison (187) jusqu'au système (170). Les signaux arrivent à l'entrée (74-1) du module (74) d'interface d'exploitation (AM904) qui appartient au MONITEUR (10). Le module (74) répercute ces signaux vers le module de pilotage (75) à travers l'omnibus de pilotage (12). Ces ordres reçus sont exécutés par le MONITEUR (10) et ce n'est qu'après l'exécution complète de ces ordres que le MONITEUR (10) par la sortie (74-2) du module (74) d'interface d'exploitation AM904 place les signaux à transmettre sur la liaison (188). Cette liaison (188) aboutit à l'entrée (179-1) du module (179) d'interface d'exploitation AM904 qui appartient au Moniteur (175). Ce moniteur (175) contrôle le système d'alimentation du système de traitement de données (171). Le module (179) d'interface d'exploitation transmet par l'omnibus de pilotage (194) les ordres vers le module (180) de pilotage. Ce module (180) de pilotage exécute les ordres reçus et ce n'est qu'une fois ces ordres exécutés qu'il va transmettre au module (179) d'interface d'exploitation AM904 l'ordre de placer sur la sortie (179-2) les signaux à acheminer par la liaison (189) vers le système (172) de traitement de données. Et ainsi de suite les signaux émis progressent et évoluent à travers les systèmes de traitement de données jusqu'à ce que le dernier système (174) de traitement de données ait exécuté lui-même les commandes reçus. Cette exécution entraîne l'ordre pour le module (185) d'interface d'exploitation AM904 de placer les signaux sur la liaison (192) qui est raccordée à la sortie (185-2). La liaison (192) achemie ces signaux vers la console (48) de commande et de contrôle qu'ils pénètrent par l'entrée (48-2). C'est ce retour des signaux résultants qui permet à la console (48) de commander et de contrôler la bonne exécution des commandes.

Sur la figure 11 est représenté le cas d'un système de traitement de données composé d'un seul système d'alimentation (170). Dans ce système l'opérateur émet des ordres à partir de la console (48) du système de traitement de données. Les ordres sont transmis par des signaux véhiculés par la liaison (187) qui est raccordée d'une part à la sortie (48-1) de la console (48) du système de traitement de données et d'autre part à l'entrée (74-1) des modules (74) d'interface d'exploitation AM904. Les signaux reçus par le module (74) d'interface d'exploitation AM904 sont exploités, comme il sera expliqué ultérieurement par le module (75) de pilotage AM902B. Une fois sa tâche accomplie, le module (75) de pilotage AM902B renverra à travers l'omnibus de pilotage (12) vers le module (74) d'interface d'exploitation AM904 les signaux d'acquittement correspondant à la manière dont s'est effectuée la tâche demandée au module (75) de pilotage AM902B. Ces signaux d'acquittement seront vus ultérieurement. Ces signaux d'acquittement sont transmis par le module (74) d'interface d'exploitation à travers la liaison (193) vers l'entrée (48-2) de la console (48) du système de traitement de données. Ces signaux d'acquittement sont transformés dans la console (48) du système de traitement de données en signaux de visualisation qui permettent d'informer l'opérateur de la façon dont s'est déroulée l'action qu'il a demandée. Dans la réalisation particulière décrite ici de l'invention les signaux véhicules par les liaisons (187) et (193) sont désignés sous le terme de signaux SPCI (abréviation de SYSTEM POWER CONTROL INTERFACE). Dans ce qui suit, les signaux SPCI arrivant sur l'entrée (1) des modules d'interface d'exploitation AM904 seront désignés par le terme SPCI-IN et les signaux émis par les sorties (2) des modules d'interface d'exploitation AM904 seront appelés SPCI-OUT.

Pour effectuer les opérations de commande et de contrôle du ou des systèmes d'alimentation qui lui sont raccordés, la console (48) comporte un ensemble de circuits appropriés. Ces circuits ne seront pas décrits car ils sont analogues aux circuits existant dans la plupart des systèmes de traitement de données comme en particulier ceux fabriqués par la demanderesse.

Pour éclairer le fonctionnement de l'invention, il sera fait appel essentiellement aux signaux d'interface échangé entre d'une part la console (48) et d'autre part les différents sous-systèmes d'alimentation que la console (48) est chargée de commander et de contrôler. Comme il l'a été expliqué précédemment ces signaux d'interface sont véhicules par des liaisons d'interface câblées en guirlande (Interface SPCI).

Il est considéré en premier lieu les signaux émis par la console (48) en direction des systèmes d'alimentation: le signal de demande de la mise sous-tension LOGON (abréviation de LOGICAL ON), le signal de demande de la mis hors tension LOGOFF (abréviation de LOGICAL OFF), le signal de synchronisation ENAB (abréviation de ENABLE):

## SIGNAL DE DEMANDE DE LA MISE SOUS TENSION LOGON

Au départ quand tout est arrêté aussi bien la console (48) que le ou les systèmes d'alimentation, l'opérateur doit dans un premier temps mettre sous tension la console (48) qui possède une alimentation autonome. Cette mise sous tension est immédiatement suivie d'une séquence d'initialisation des circuits de la console (48). Cette séquence est destinée à placer tous les circuits de la console (48) dans un état initial déterminé. Cet état initial déterminé sera appelé par la suite état initial »ORIGINE«.

L'état initial »ORIGINE« du signal de demande de la mise sous tension LOGON est un niveau bas. Cela s'explique puisqu'à ce moment là, il n'y a pas eu encore de demande de mise sous tension. En effet, ce signal de demande de la mise sous tension est destiné à signifier aux systèmes d'alimentation connectés que l'opérateur a demandé la mise sous tension des sources d'énergie. Pour effectuer cette demande l'opérateur doit appuyer sur un bouton poussoir désigné par POWER ON. La montée du signal de demande de la mise sous tension LOGON commence au moment où l'opérateur relâche le bouton poussoir POWER ON de la console (48). Le signal de demande de la mise sous tension LOGON reste à une position haute jusqu'à ce que l'opérateur demande l'exécution d'une séquence de mise hors tension des systèmes d'alimentation ou met la console (48) hors tension.

## SIGNAL DE DEMANDE DE LA MISE HORS TENSION LOGOFF

Le signal de demande de mise hors tension LOGOFF indique aux systèmes d'alimentation que l'opérateur a demandé une mise hors tension de l'ensemble des systèmes d'alimentation. L'état initial »ORIGINE« du signal de demande de mise hors tension LOGOFF est un niveau haut. Cela s'explique aisément puisqu'à l'origine l'ensemble des systèmes d'alimentation est hors tension en attente d'une demande de mise sous tension par l'opérateur. Ce signal reste à une position haute jusqu'à ce que l'opérateur accomplisse une demande de mise sous tension par une pression sur le bouton poussoir POWER ON de la console (48). A ce moment là le signal de demande de mise hors tension LOGOFF passe à un niveau bas. Il restera à ce niveau bas jusqu'à ce que l'opérateur sollicite une mise hors tension des systèmes d'alimentation par pression sur le bouton poussoir POWER OFF de la console (48). A ce moment là le signal de mise hors tension LOGOFF passera à un niveau haut.

Le signal de demande de la mise sous tension LOGON et le signal de demande de la mise hors tension LOGOFF ne sont que des requêtes. Pour que la séquence de mise sous tension ou la séquence de mise hors tension soit excécutée, il est nécessaire qu'apparaisse un signal de synchronisation ENI (abréviation de ENABLE IN). C'est ce signal de synchronisation qui va déclencher l'exécution de la séquence demandée.

## SIGNAL DE SYNCHRONISATION ENI

Ce signal est constitué par une impulsion d'une durée déterminée 02. Cette impulsion se produit au bout d'un intervalle de temps 01 après que l'opérateur ait relâché soit le bouton poussoir POWER ON soit le bouton poussoir POWER OFF de la console (48). C'est cette impulsion ENI qui est propagée à travers la guirlande SPCI des liaisons entre les systèmes d'alimentation et la console (48).

Chaque système d'alimentation possède une entrée de synchronisation et une sortie de synchronisation. A l'entrée de synchronisation est placée le signal de synchronisation ENI (abréviation de ENABLE IN). Ce signal de synchronisation d'entrée ENI initialise la séquence demandée par l'un des signaux LOGON ou LOGOFF. Une fois cette séquence terminée le système d'alimentation émet sur sa sortie de synchronisation un signal de synchronisation de sortie ENO (abréviation de ENABLE OUT) en direction du prochain système d'alimentation où il servira de signal de synchronisation d'entrée ENI. Dans le cas où le système d'alimentation est le dernier de la guirlande SPCI ce signal de synchronisation de sortie ENO est transformé par un câblage spécial de la liaison de connection périphérique avec la console (48) en un signal d'acquittement de fin de séquence SEQC (abréviation de SEQUENCE COMPLETE).

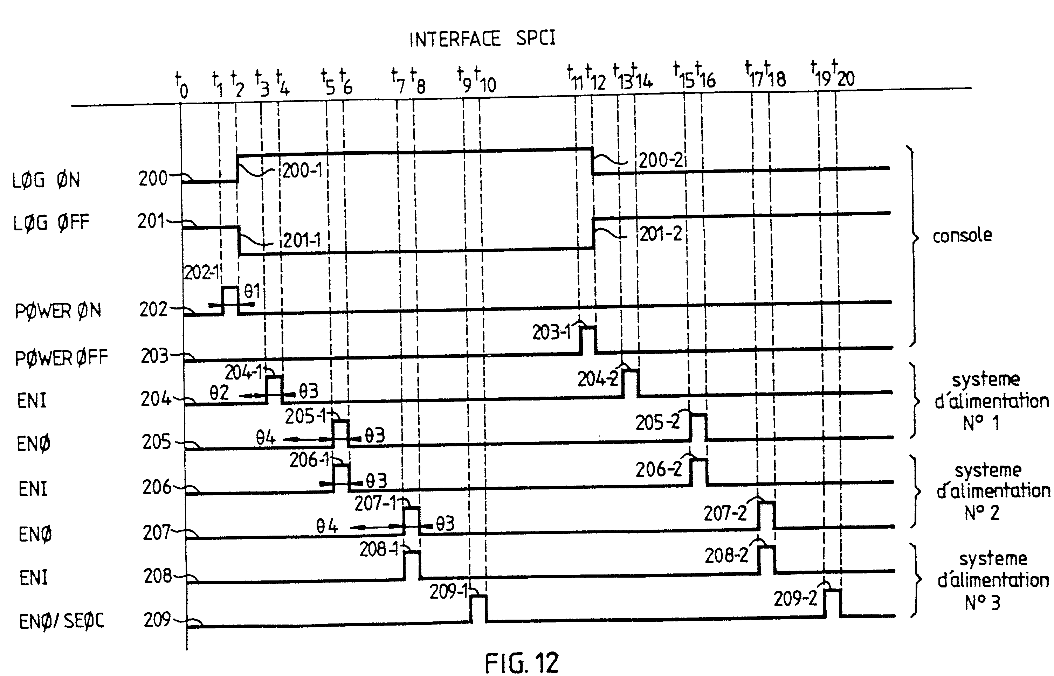

La figure 12 représente le chronogramme des signaux échangés dans le cas particulier d'un système de traitement de données comprenant 3 système d'alimentation. Bien entendu, ce nombre de systèmes d'alimentation n'est pas limitatif, il a été limité à 3 dans le cas de la figure pour éviter d'alourdir inutilement la figure.

En (200) est représenté le signal de demande de mise sous tension LOGON, en (201) est représenté le signal de mise hors tension LOGOFF, en (202) est représenté le signal délivré par le bouton poussoir POWER ON de la console (48), en (203) est représenté le signal délivré par le bouton poussoir POWER OFF de la console (48), en (204) est représenté le signal de synchronisation ENI délivré par la console (48) après chaque pression sur un des boutons poussoirs POWER ON ou POWER OFF.

L'instant t0 représente l'instant initial ORIGINE, celui où, par exemple, la console (48) ayant été mise en route les circuits on été mis à l'état initial: le signal LOGON (200) est bas, le signal LOGOFF (201) est haut, le signal de sortie du bouton poussoir POWER ON (202) est bas ainsi que le signal du bouton poussoir POWER OFF (203), le signal de synchronisation ENI (204) est lui aussi bas. En examinant chronologiquement les temps, il apparaît qu'en t1 l'opérateur presse le bouton poussoir POWER ON afin de demander la mise sous tension des systèmes d'alimentation. Cette pression fait monter le signal (202) jusqu'à l'instant t2 où l'opérateur libère le bouton poussoir POWER ON ce qui fait tomber le signal (202). Il y a eu production sur le signal (202) d'une impulsion (202-1) d'une durée t1—t2 = 01. Le front descendant de cette impulsion sollicite les circuits de production du signal de synchronisation ENI (204). Ce signal de synchronisation ENI se produit à l'instant t3 après un délai t3-t2 = 02 et a une durée égale à l'intervalle de temps 03 séparant l'instant t4 de l'instant t3. Cette impulsion de synchronisation ENI (204-1) est transmise à l'entrée du système d'alimentation placé en tête le long de la guirlande SPCI: ce système d'alimentation sera appelé SYSTEME D'ALIMENTATION N° 1. Cette impulsion ENI (204-1) va déclencher dans le système d'alimentation N° 1 l'exécution de la séquence de mise sous tension du système d'alimentation puisque le signal LOGON est haut et le signal LOGOFF est bas. Cette séquence débute à l'instant t4 pour finir à l'instant t5 ce qui représente un intervalle de t5-t4 = 04. En t5 le signal d'alimentation ayant terminé sa séquence de mise sous tension, le moniteur de ce système d'alimentation élabore un signal de synchronisation de sortie ENO (205-1) (abréviation de ENABLE OUT). Ce signal de synchronisation de sortie ENO (205-1) est destiné au système d'alimentation suivant sur la guirlande SPCI: le système d'alimentation N° 2. Ce signal de synchronisation de sortie ENO (205-1) va servir de signal de synchronisation ENI (206-1) au moniteur du système d'alimentation N° 2. Ce moniteur en présence de ce signal de synchronisation (206-1) et du signal de demande LOGON (200) haut va effectuer la mise sous tension du système d'alimentation N° 2. Une fois cette séquence terminée, il va émettre un signal de synchronisation de sortie ENO (207-1). Ce signal de synchronisation (207-1) est transmis au système d'alimentation N° 3 où il sert de signal de synchronisation d'entrée ENI (208). Ce système d'alimentation effectue alors sa mise sous tension. Une fois cette mise sous tension effectuée, le système d'alimentation N° 3 va émettre un signal de synchronisation de sortie ENO (209-1) mais ce système étant le dernier système d'alimentation de la guirlande SPCI, le signal de synchronisation de sortie ENO (209-1) est transmis au moyen d'un bouchon placé sur le connecteur libre de la guirlande SPCI vers la console (48) à travers une liaison appelée SEQC (abréviation de SEQUENCE COMPLETE). L'arrivée de l'impulsion SEQC signifie pour les circuits de la console (48) que la totalité des opérations de mise sous tension s'est déroulée favorablement.

Il peut être vu maintenant ce qui se passe quand l'opérateur demande une opération de mise hors tension des systèmes d'alimentation. C'est ce qui se produit à l'instant t11 où l'opérateur presse sur le bouton poussoir POWER OFF jusqu'au temps t12: ceci est représenté en (203-1) où il y a production d'une impulsion. Au relachement du bouton poussoir en t12 il y a passage à zéro du signal de demande de mise sous tension LOGON (200-2) et passage à 1 du signal de demande de mise hors tension LOGOFF (201-2): cette situation signifie bien qu'il y a demande d'un cycle ce mise hors tension. Les circuits de synchronisation de la console (48) élaborent à la suite de cette transition des signaux LOGON (200) et LOGOFF (201) une impulsion de synchronisation ENI (204-2) qui se produit entre les instants t13 et t14. Cette impulsion de synchronisation d'entrée ENI (204-2) est transmise au système d'alimentation N° 1. Le moniteur de ce système d'alimentation en présence de cette impulsion de synchronisation ENI (204-2) et d'un signal LOGOFF (201) haut va lancer une séquence de mise hors tension du système d'alimentation N° 1. Une fois cette séquence de mise hors tension terminée, le moniteur va émettre entre les temps t15 et t16 un signal de synchronisation de sortie ENO (205-2) en direction du système N° 2. Cette impulsion de synchronisation de sortie ENO (205-2) sert d'impulsion de synchronisation d'entrée ENI (206-2) pour le système d'alimentation N° 2. A son tour, ce système d'alimentation accomplit une séquence de mise hors tension puis émet entre les temps t17 et t18 un signal de synchronisation de sortie ENO (207-2) vers le système d'alimentation N° 3. Le système d'alimentation N° 3 en recevant cette impulsion en qualité de signal de synchronisation ENI (208-2) effectue une séquence de mise hors-tension avant d'émettre entre les temps t19 et t20 un signal de synchronisation de sortie ENO (209-2). Ce signal de sortie ENO (209-2) sert à produire l'impulsion SEQC qui est retournée vers la console (48) pour signifier que la séquence de mise hors tension est achevée pour tous les système d'alimentation.

Par ailleurs, la console applique sur une liaison une tension continue appelée TENSION DE PROTECTION ou aussi TENSION AUXILIAIRE (AUXILIARY VOLTAGE). Cette tension de protection est fournie par une source à impédance élevée et est appliquée sur toutes les plaques d'interfaces d'exploitation AM904 du système de traitement de données. Dans chaque plaque d'interface d'exploitation AM904 cette tension est appliquée sur le circuit délivrant le signal ERREUR DE SEQUENCE (SEQUERR) qui sera vu ultérieurement. Cette tension est en conflit d'accès avec le signal de commande du circuit d'erreur de séquence émis par le moniteur. Toutefois, en fonctionnement normal, le moniteur l'emporte sur la tension de protection pour le contrôle du circuit d'émission du signal ERREUR DE SEQUENCE. L'utilité de la tension de protection apparaît en cas de défaillance du moniteur. Dans ce cas, la tension de sauvegarde oblige le circuit d'erreur de séquence à émettre un signal d'erreur de séquence. Sans cette disposition, l'anomalie n'aurait pas été signalée en raison de la défaillance du moniteur.

Après cet examen des signaux que la console (48) émet en direction des modules d'interface d'exploitation AM904 il est utile d'examiner les signaux que ces modules d'interface d'exploitation retournet vers la console (48). Ces signaux sont:

- ERREUR DE SEQUENCE* (en anglais SEQUENCE ERROR*) SEQUERR
- PANNE SYSTEME* (en anglais SYSTEM FAULT*) SYSFLT*
- PANNE DE VENTILATION* (en anglais COOLING FAULT*) FANFLT*
- SEQUENCE TERMINEE (en anglais SEQUENCE COMPLETE) SEQC*
- DEFAUT RESSOURCES COMMUNES (en anglais COMMON RESSOURCES ERROR*) CRERR*.

Chacun de ces signaux sert à allumer un voyant lumineux sur la console (48). Ces voyants lumineux informe l'opérateur des conditions dans lesquelles se déroule le fonctionnement des système d'alimentation.

Une remarque préalable doit être faite. Les signaux marqués d'un astérisque (*) sont des signaux inversés: c'est-à-dire, par exemple, que le signal ERREUR DE SEQUENCE* en position haute signifie qu'il n'y a pas d'erreur de séquence. Il y aura erreur de séquence si le signal ERREUR DE SEQUENCE* est en position basse. Cette remarque est valable chaque fois qu'un signal est marqué d'un astérisque (*).

Tous ces signaux envoyés vers la console (48) sont émis par des dispositifs dont l'outil de sortie est un transistor à collecteur ouvert. Les collecteurs des transistors qui sont la branche de sortie d'un signal donné comme par exemple ERREUR DE SEQUENCE sont branchés en parallèle sur un omnibus dont la résistance de rappel est placée dans la console (48). Par ailleurs, cet omnibus traverse tous les modules d'interface aval: ils entrent par le connection Y01 et ressortent par le connecteur Y02. De la sorte, si une des liaisons périphériques n'est pas branchée, le système sera bloqué puisque l'omnibus étant ouvert, la partie non alimentée de cet omnibus sera à un niveau bas que le niveau »anormal« c'est-à-dire celui qui signale une anomalie de fonctionnement.

Il est également à remarquer que si la console (48) n'est pas sous tension ou si la tension de rappel est absente, les omnibus ne seront pas alimentés et le système sera également bloqué

Le signal ERREUR DE SEQUENCE* (SEQUERR*)

Il a été expliqué dans ce qui précède que les opérations de mise sous tension des systèmes d'alimentation comme les opérations de mise hors tension s'effectuent séquentiellement. Pour la mise sous tension, par exemple, l'appui sur le bouton poussoir POWER ON par l'opérateur amène le signal de mise sous tension LOGON à prendre une valeur haute. Ce passage à une valeur haute du signal de mise sous tension LOGON est suivi de l'émission d'un signal de synchronisation d'entrée ENI. Ce signal est transmis au système d'alimentation N° 1 qui démarre sa séquence de mise sous tension. Une fois cette mise sous tension terminée, le système d'alimentation N° 1 émet un signal de synchronisation de sortie ENO qui est transmis au système d'alimentation N° 2 qui reçoit ce signal comme un signal de synchronisation d'entrée ENI. Ainsi de suite, tous les système d'alimentation raccordés sur la guirlande SPCI se mettent sous tension séquentiellement. Le processus de mise hors tension est analogue comme il a été vu auparavant.

Toutefois, il y a lieu de considérer ce qui se passe au niveau de chaque système d'alimentation pendant cette période transitoire qui va s'écouler entre l'instant où l'opérateur a appuyé sur le bouton poussoir »POWER ON« et l'instant où tous les systèmes auront terminé leur séquence de mise sous tension ou de mise hors tension suivant le cas.

A l'intérieur de chaque système d'alimentation, le Moniteur (10) possède une mémoire où il note l'état de fonctionnement du système qu'il est chargé de surveiller. Cette mémoire peut contenir une des deux informations suivantes: système d'alimentation sous tension ou système d'alimentation hors tension. Le moniteur (10) est vigilant et il compare périodiquement le contenu de cette mémoire avec l'état des signaux LOGON et LOGOFF qui lui indiquent les désirs de l'opérateur. Il est clair que quand l'opérateur demande un changement d'état de fonctionnement des systèmes d'alimentation, il s'écoule un intervalle de temps pendant lequel le moniteur (10) constate une divergence entre la demande de l'opérateur et l'état du système d'alimentation. Cet intervalle de temps est celui nécessaire au signal de synchronisation ENI pour prévenir au moniteur auquel il faut ajouter le temps d'exécution de la séquence demandée par le système d'alimentation. Le Moniteur (10) signale donc à la console (48) qu'il a constaté cette divergence. Pour cela, il amène à un niveau bas, l'omnibus SEQUERR* et il maintiendra cette position aussi longtemps qu'il n'aura pas constaté la conformité de l'état de fonctionnement du système d'alimentation qu'il contrôle avec la demande exprimée par l'opérateur sur l'omnibus LOGON ou sur l'omnibus LOGOFF suivant le cas.

Il existe une autre circonstance où le moniteur est amené à amener l'omnibus SEQUERR à une position basse. C'est le cas où, à la suite d'un incident, les 2 signaux LOGON et LOGOFF sont tous les deux à un niveau bas. En effet, dans cette situation, le Moniteur n'est pas en mesure de reconnaître la demande de l'opérateur et il n'est pas capable de savoir si l'état de fonctionnement du système d'alimentation qu'il contrôle est satisfaisant.

Il est à noter que par construction, il est impossible que les signaux LOGON et LOGOFF soient sumultanément à un niveau haut.

Le signal PANNE SYSTEME* (SYSFLT)*

Il a été expliqué qu'un système de traitement de données conçu suivant les enseignements de l'invention comporte un ou plusieurs système d'alimentation. Chaque système d'alimentation comprend un certain nombre de sources d'énergie pilotées par un moniteur. Pour une raison quelconque, une ou plusieurs sources d'énergie peuvent présenter des défauts de fonctionnement. Ces défauts de fonctionnement présentent des inconvénients plus ou moins graves pour la bonne marche du système de traitement de données. Le moniteur qui est informé de ces défauts de fonctionnement en avise la console (48) en portant à un niveau bas l'omnibus »PANNE SYSTEME*«. Ce signal bas entraîne l'allumage ou le clignotement du voyant »SYSFLT*« selon le type de défaut rencontré: majeur ou mineur qui est situé sur la console (48). Ceci informe l'opérateur qu'un incident s'est produit au niveau d'une ou plusieurs sources d'énergie.

Le signal PANNE DE VENTILATION* (FANFLT*)

Lors de la mise en route de l'alimentation primaire (18) il y a également mise en route d'un jeu de ventilateurs destinés à évacuer la chaleur dissipée dans le système d'alimentation. En cas de défaillance de ce système de ventilation, il peut se produire un échauffement anormal de certaines parties du système d'alimentation. Pour surveiller l'échauffement des organes du système d'alimentation des sondes thermiques sont placées dans des endroits judicieusement choisis à l'intérieur du système d'alimentation. Ces sondes thermiques sont conçues pour informer le moniteur en cas d'apparition de tout échauffement excessif capable de détériorer les équipements. Si un tel incident se produit le Moniteur l'enregistre et en informe la console (48) en plaçant un niveau bas sur l'omnibus »FANFLT*« ce qui se traduit par l'allumage du voyant FANFLT* de la console (48).

Le signal PANNE ALIMENTATION PRIMAIRE ET DES RESSOURCES COMMUNES* (CRERR*)

Chaque système d'alimentation comprend un module ALIMENTATION PRIMAIRE (18) qui est en fait dans la réalisation préférée de l'invention und alimentation à courant continu régulée à fort débit et à taux de régulation modéré. Son rôle est double: d'une part fournir une tension continue appropriée à l'entrée des sources d'énergie et d'autre part par une prérégulation grossière soulager le travail des régulateurs de tension des sources d'énergie.

Par ailleurs, il existe également ce qui est ici désigné par le nom de RESSOURCES COMMUNES, un ensemble de circuits électriques comme par exemple le contacteur de mise sous tension de l'armoire et des ventilateurs. Quand le Moniteur commande la fermeture ou l'ouverture de ce contacteur. Ce dernier suivant le cas ouvre ou ferme un contact qui fait connaître au Moniteur que la commande a bien été exécutée.

Quand un incident se produit sur l'alimentation primaire (18) comme par exemple une tension de sortie trop élevée, l'alimentation primaire émet du signal de SURTENSION DE LA PREREGULATION »PREGOV« (abréviation de l'anglais PREREGULATION OVERVOLTAGE). Dans le cas où la tension de sortie est au contraire trop faible, l'alimentation primaire émet un signal de SOUS TENSION DE LA PREREGULATION »PREGUV« (abréviation de l'anglais PREREGULATION UNDERVOLTAGE). En ce qui concerne le contacteur, ce dernier envoie un signal »RELAIS FERME« »COMREL« (abréviation de l'anglais RELAY CONTROL) quand ses contacts sont dans la position fermée. Ces signaux sont destinés au MONITEUR (10) mais une synthèse en est faite à destination de la console (48). Cette synthèse est obtenue par le mélange des signaux PREGOV, PREGUV, COMREL qui fournit le signal CRER* sur l'omnibus »DEFAUT DE L'ALIMENTATION PRIMAIRE ET DES RESSOURCES COMMUNES«. Ce signal CRER* provoque l'allumage du voyant CRER* de la console (48).

Le signal SEQUENCE COMPLETE (SEQC)

Il a été vu que lors des demandes de changement d'état de fonctionnement de système d'alimentation, les opérations de changement d'état de fonctionnement des systèmes d'alimentation se fait séquentiellement. Ces séquences de changement d'état sont synchronisées par une impulsion d'entrée ENI qui se déplace le long de la guirlande d'interconnexion des systèmes d'alimentation SPCI. Un système d'alimentation recevant un signal de synchronisation d'entrée ENI effectue son changement d'état. Quand ce changement d'état est terminé, il émet un signal de synchronisation de sortie ENO vers le système d'alimentation qui le suit sur la guirlande SPCI. Ce signal de synchronisation de sortie ENO constitue pour le système d'alimentation suivant un signal de synchronisation d'entrée ENI. Ainsi de suite, le signal de synchronisation se propage le long de la guirlande SPCI jusqu'à arriver au dernier système d'alimentation de la guirlande. Ce dernier système d'alimentation de la guirlande va, après réception du signal de synchronisation d'entrée ENI, changer d'état de fonctionnement. Une fois ce changement d'état effectué, il élabore un signal qui ne sera pas cette fois un signal de synchronisation de sortie ENO mais un signal de SEQUENCE COMPLETE SEQC. Ce signal SEQUENCE COMPLETE SEQC est envoyé à la console (48) où il informe les circuits de contrôle que la séquence est terminée.

Comme il est représenté sur la figure 2, le module (74) d'interface d'exploitation AM904 dessert également deux autres blocs: le bloc (9) ALIMENTATION DE SERVITUDE et le bloc (18) d'ALIMENTATION PRIMAIRE.

Le bloc (9) d'ALIMENTATION DE SERVITUDE comprend des sources fournissant les tensions de servitudes du système d'alimentation.

Dans la réalisation décrite de l'invention, le bloc (9) ALIMENTATION DE SERVITUDES échange à travers la liaison (39) outre, certaines tensions de servitude, un signal de compte rendu SERVUV.

Le signal SERVUV (abréviation de Servitude Undervoltage) est un signal qui est haut quand au moins l'une des tensions délivrée par l'alimentation de servitude est descendue au dessous d'une certaine tension limite. Ce signal SERVUV indique au Moniteur (10) que, au moins l'une des tensions fournie par l'alimentation de servitude est sortie de la tolérance admise.

Le bloc (18) d'ALIMENTATION PRIMAIRE comporte:

- les circuits de mise sous tension de l'alimentation primaire et des servitudes
- ces circuits de contrôle de l'alimentation primaire
- l'alimentation primaire
- les circuits de mise sous tension des ventilateurs de refroidissement de l'enceinte contenant le système d'alimentation
- les circuits de contrôle de température interne de la dite enceinte.

Dans la réalisation préférée de l'invention, les signaux échangés entre le bloc (18) d'alimentation primaire et de servitudes sont les suivants:

- Signaux d'entrée dans le bloc (18) d'alimentation primaire et de servitudes

  RELCON
  BLDCON1
  BLDCON2
  DCRES

- Signaux de sortie du bloc (18) d'alimentation primaire et de servitudes

  DCON
  DCOFF
  COOLF1
  COOLF2
  COOLF3
  PREGUV
  PREGOV
  COMREL
  SERVUV

Le signal RELCON (abréviation de RELAY COMMAND) est un signal qui commande la fermeture du CONTACTEUR GENERAL du système d'alimentation. En se fermant, ce contacteur met sous tension l'alimentation primaire, les alimentations de service et le système de ventilation.

Les signaux BLDCON1 (abréviation de BLEEDER 1 COMMAND) et BLDCON2 (abréviation de BLEEDER 2 COMMAND) sont des signaux qui commandent les contacteurs mettant en ou hors service des résistances ballast.

Le signal DCRES (abréviation de Direct Current Reset) est un signal qui effectue la remise à l'état initial des circuits possédant une fonction de mémorisation. C'est ce signal DCRES qui permet par exemple, à la mise en route du système d'alimentation de placer les circuits dans un état convenable.

Le signal DCON (abréviation de Direct Current On) est un signal qui est haut quand la tension de sortie de l'alimentation primaire se trouve dans une zone déterminée autour de la valeur nominale de la dite tension de sortie. C'est ce signal DCON qui informe le moniteur (10) que la tension de sortie de l'alimentation primaire est établie et qu'elle se situe dans les bonnes tolérances.

Le signal DCOFF (abréviation de Direct Current Off) est un signal qui est haut quand la tension de sortie de l'alimentation primaire est comprise entre la valeur zéro et une tension limite déterminée au dessus de la tension nulle. C'est ce signal DCOFF qui informe le moniteur (10) que la tension de sortie de l'alimentation primaire se trouve au voisinage de la tension nulle, c'est-à-dire que la tension de sortie de l'alimentation est au repos.

Les signaux COOLF1 (abréviation de Cool Fan 1), COOLF2 (abréviation de Cool Fan 2) et COOLF3 (abréviation de Cool Fan 3) sont des signaux qui sont haut quand les sondes thermiques placées respectivement dans le couloir de ventilation 1, le couloir de ventilation 2 et le couloir de ventilation 3 détectent une température excessive. Chacun de ces signaux COOLF1, COOLF2, COOLF3 renseigne le Moniteur (10) sur l'éventualité d'une surchauffe dans un ou plusieurs couloirs de ventilation.

Le signal PREGUV (abréviation de Preregulation Undervoltage) est un signal qui es haut quand la tension de l'alimentation primaire est inférieure à la limite inférieure de la tension nominale et supérieure à la limite supérieure de la tension de repos. Ce signal PREGUV informe le moniteur (10) quand la tension de sortie de l'alimentation primaire est inférieure à la tension normale sans pour autant atteindre la valeur de repos.

Le signal PREGOV (abréviation de Preregulation Overvoltage) est un signal qui est haut quand la tension de sortie de l'alimentation primaire dépasse la limite supérieure de la tension nominale. Ce signal PREGOV informe le Moniteur (10) que la tension de sortie de l'alimentation primaire dépasse la limite supérieure de la zone allouée.

Le signal COMREL (abréviation de RELAIS CONTROL) est un signal qui est haut quant le CONTACTEUR GENERAL est fermé. Ce signal COMREL indique au Moniteur (10) que le contacteur général a bien répondu au signal RELCON et qu'il est bien fermé, alimentant ainsi le système d'exploitation.

## LE MODULE D'INTERFACE D'EXPLOITATION AM904

La figure (13) représente schématiquement un module (74) d'interface d'exploitation AM904 ainsi que les différentes liaisons (12), (227), (228), (230), (231) et (232) qui y aboutissent:

- la liaison (12) est l'omnibus de pilotage du système d'alimentation
- les liaisons (231) et (232) servent à raccorder le module (74) d'interface d'exploitation AM904 avec le Panneau de Service (11)
- les liaisons (227) et (228) sont les liaisons constituant la guirlande SPCI permettant de constituer un bouclage des systèmes d'alimentation commandés et contrôlés à partir de la console (48)
- la liaison (229) relie le module (74) d'interface d'exploitation AM904 avec:
  - l'alimentation de servitude (222)
  - le contacteur de mise sous tension (223)
  - les contrôleurs thermiques (224)
  - le contrôle des résistances ballast (225)
- la liaison (230) relie le module (74) d'interface d'exploitation AM904 avec l'alimentation primaire proprement dite.

La liaison (12) est l'omnibus de pilotage qui sera vu en détail ultérieurement. Cet omnibus sert à la communication entre le module (74) d'interface l'exploitation et le moniteur (10). Cet omnibus (12) de pilotage comprend un certain nombre de fils qui sont raccordés au module (74) d'interface d'exploitation AM904 au moyen de 2 connecteurs désignés par Z01 et Z02. Ces connecteurs comportant chacun 70 broches repérées par les nombres 1 à 70. Sur les figures qui suivent les connexions sont indiquées par l'indication Z01 et Z02 suivant le connecteur concerné suivi d'un nombre qui indique le numéro de broche. Ainsi la notation Z01—42 PMC-MEMR signifie que le signal logique PMC-MEMR aboutit sur la broche 42 du connecteur Z01I.

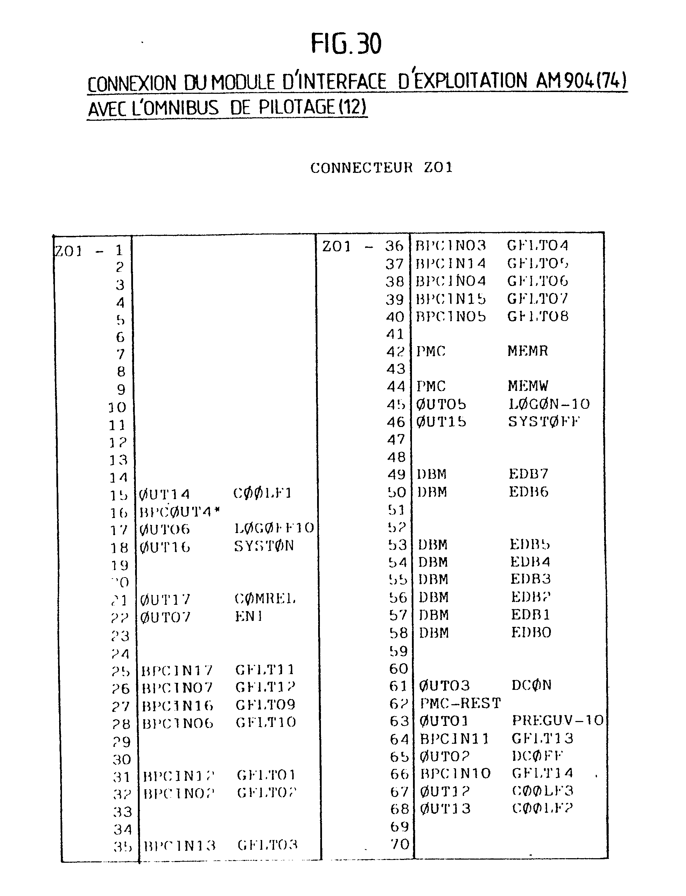

La figure 30 est un tableau définissant pour chaque contact du connecteur Z01 la ou les apellations logiques du signal qui y aboutit.

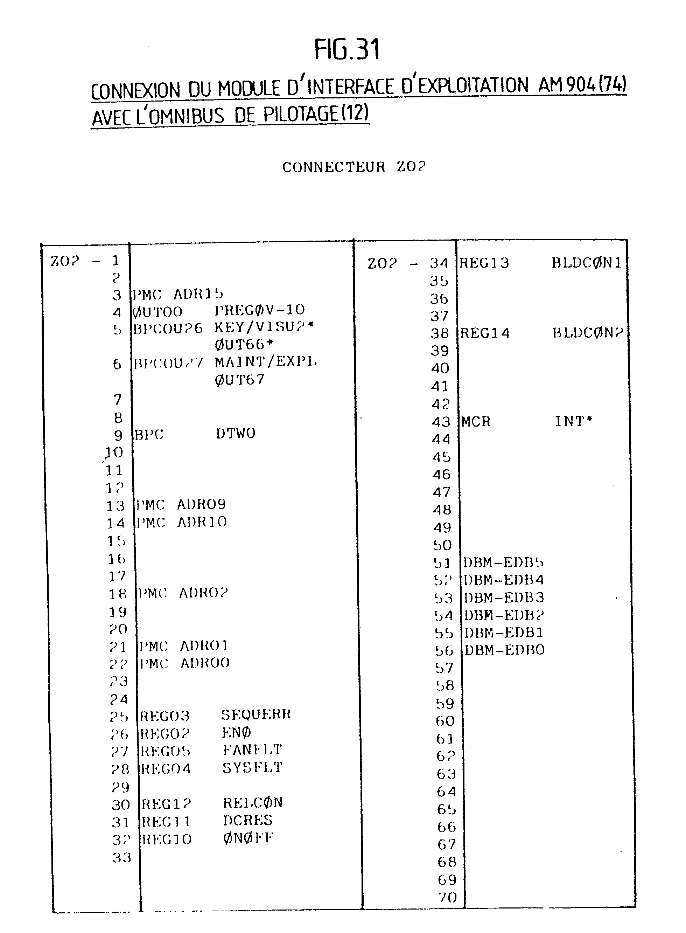

La figure 31 donne les mêmes informations pour le connecteur Z02. Les fonctions de ces signaux seront vus ultérieurement.

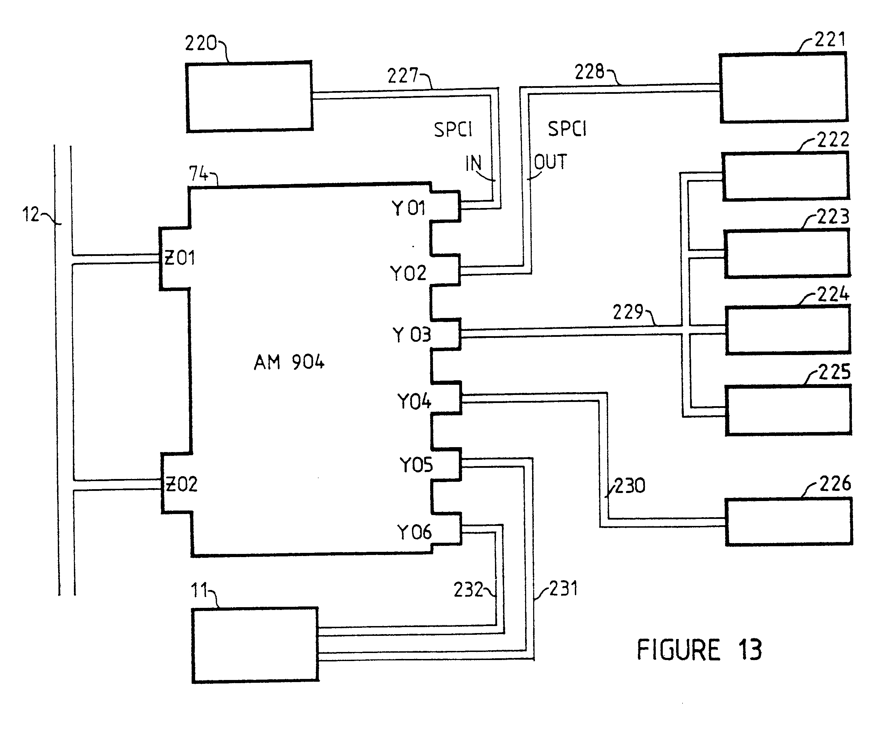

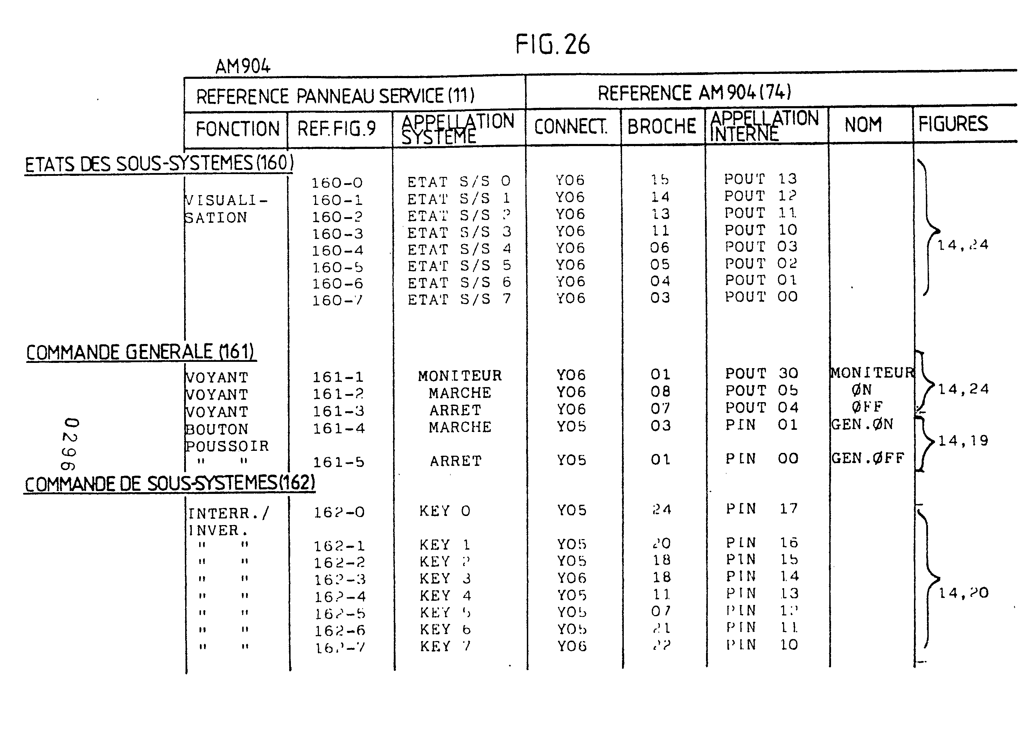

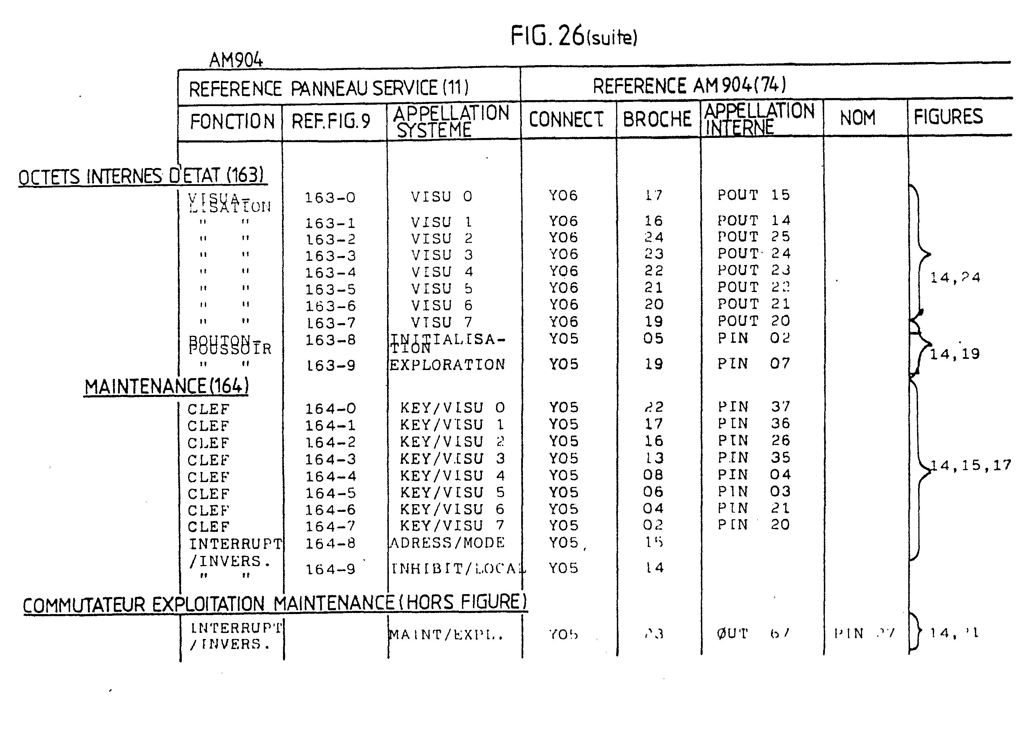

Les liaisons (231) et (232) de la figure 13 servent à raccorder le panneau de service (11) au module (74) d'interface d'exploitation AM904. La figure 26 est un tableau qui précise les différents signaux véhiculés par les liaisons (231) et (232). Dans ce tableau, les signaux sont classés suivant leur fonction:

- les signaux (160) Etats des sous systèmes d'alimentation
- les signaux (161) de commande générale du système d'alimentation
- les signaux (162) de commande des sous systèmes
- les signaux (163) de visualisation des octets internes d'état
- les signaux (164) d'opérations de maintenance.

Sur ce même tableau, il est également indiqué le signal fourni par le commutateur MAINTENANCE/EXPLOITATION.

Le tableau de la figure 26 donne la correspondance entre les références du panneau de service (11) et les références du module d'interface d'exploitation AM904 (74). Ce tableau comprend 2 parties:

- la partie gauche comprenant 3 colonnes correspond aux références utilisée à l'occasion de la description du panneau de service (11) avec l'appui de la figure 9.

Ces trois colonnes sont, à partir de la gauche:

- une colonne FONCTION qui définit la fonction correspondant au signal. Ces fonctions sont: VISUALISATION, BOUTON-POUSSOIR, INTERRUPTEUR/INVERSEUR et CLEF. Ces fonctions sont décrites à l'occasion de la description de la figure 9.
- une colonne REFERENCE FIG 9. Cette colonne contient les références sur la figure 9 des dispositifs où aboutissent les différents signaux dans le panneau de service (11).
- une colonne APPELLATION SYSTEME qui donne l'appellation logique des signaux au niveau du système d'alimentation.
- la partie droite comprenant 5 colonnes correspond aux références et appellations utilisées lors de la présente description du module (74) d'interface d'exploitation AM904.

Ces 5 colonnes sont, à partir de la gauche:

- une colonne CONNECT qui définit le connecteur où aboutit chaque signal
- une colonne BROCHE qui définit la broche du connecteur où est raccordé chaque signal
- une colonne APPELLATION INTERNE qui donne pour chaque signal la désignation utilisée dans la description du module (74) d'interface d'exploitation AM904
- une colonne NOM qui donne pour chaque signal ayant plusieurs dénominations le ou les noms supplémentaires le désignant
- une colonne FIGURES qui donne les numéros des figures où les signaux sont représentés.

Les liaisons (227) et (228) de la figure 13 sont les liaisons de la guirlande ou interface SPCI qui relie la console (48) et des différents systèmes d'alimentation comme il es représenté sur les figures 10 et 11. La liaison (227) est la liaison qui relie le système d'alimentation soit avec la console (48) si c'est le premier système d'alimentation de la guirlande, soit avec le système d'alimentation situé en aval dans le cas contraire. La liaison (227) est désignée par SPCI-IN pour indiquer qu'elle véhicule les signaux entrant dans le module (74) d'interface d'exploitation. La liaison (228) est la liaison qui relie le système d'exploitation soit avec la console (48) si le système d'alimentation est le dernier de la guirlande, soit avec le système d'alimentation situé en amont dans le cas contraire. La liaison (228) est désignée par SPCI-OUT pour indiquer qu'elle véhicule les signaux sortant du module (74) d'interface d'exploitation.

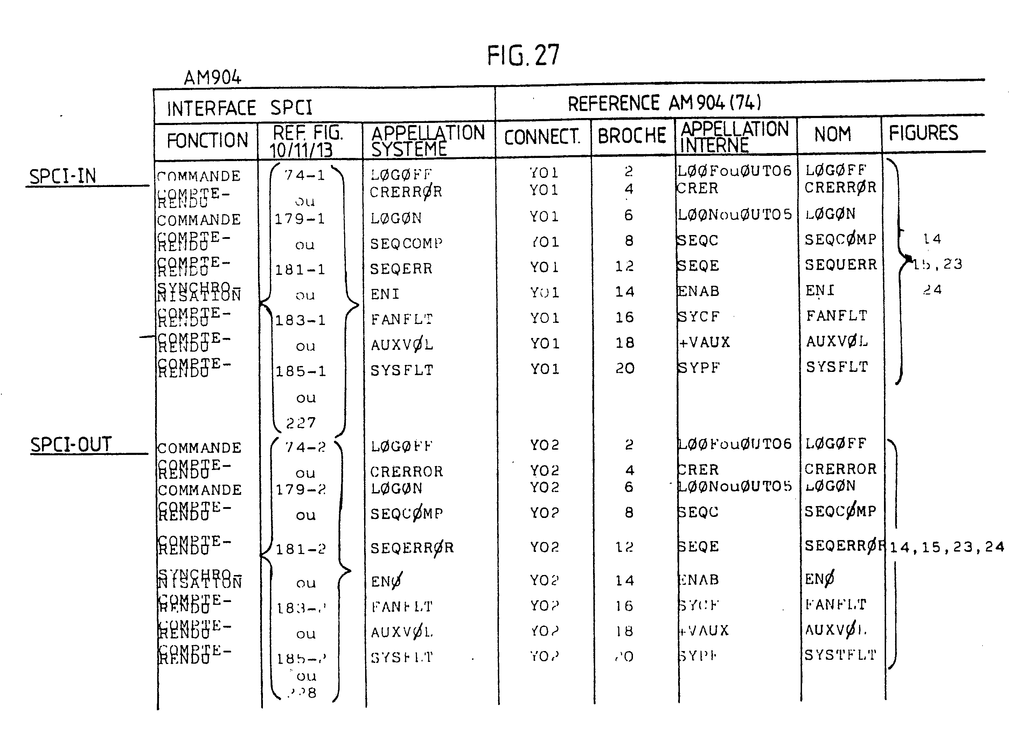

La figure 27 précise les différents signaux véhiculés par les liaisons (227) et (228). Cette figure 27 comprend un tableau divisé en 2 parties dans le sens horizontal. La partie supérieure désignée par SPCI-IN concerne les signaux transportés par la liaison (227). Ces signaux sont des signaux entrant dans le module (74) d'interface d'exploitation AM904. La partie inférieure désignée par SPCI-OUT concerne les signaux transportés par la liaison (228). Ces signaux sont des signaux sortant du module (74) d'interface d'exploitation AM904.

Le tableau de la figure 27 est également divisé en deux parties dans le sens vertical. La partie gauche composée de 3 colonnes concerne l'Interface SPCI et la partie droite qui est composée de 5 colonnes concerne la module (74) d'interface d'exploitation AM904.

La partie gauche comporte les 3 colonnes suivantes:

- colonne FONCTION. La colonne contient la désignation de la fonction du signal concerné par la ligne. Trois types fonctions sont réalisées: les COMMANDES, les COMPTES-RENDUS et la SYNCHRONISATION.
- colonne REFERENCES DES FIGURES 10/11/13. Cette colonne donne les références portées par les signaux dans les figures 10, 11 et 13.
- colonne APELLATION SYSTEME. Cette colonne contient les noms attribués aux signaux au niveau du système d'alimentation.

La partie droite comporte les 5 colonnes suivantes:

- la colonne CONNECTEUR qui contient la référence du connecteur Y01 ou Y02 à travers lequel transite chaque signal
- la colonne BROCHE qui indique la broche à laquelle la ligne associée à chaque signal est raccordée
- la colonne APPELLATION INTERNE qui donne pour chaque signal le NOM donné au signal dans le module (74) d'interface d'exploitation AM904
- la colonne NOM qui donne pour chaque signal ayant plusieurs dénominations le ou les noms supplémentaires le désignant
- une colonne FIGURES qui donne les numéros des figures où les signaux sont représentés.

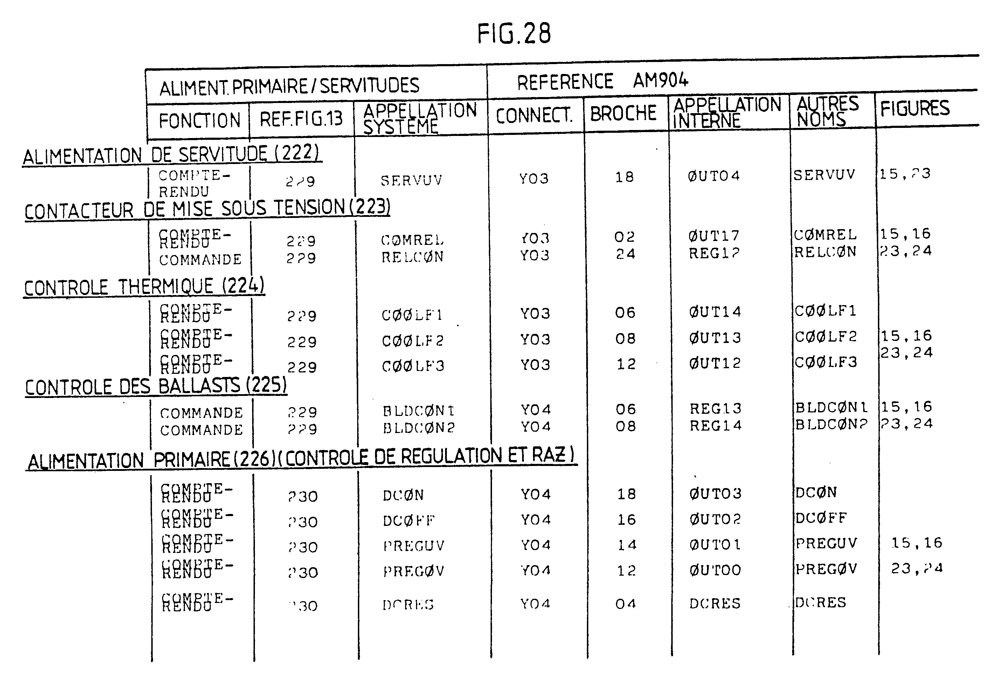

La figure 28 contient un tableau précisant les signaux véhiculés par les liaisons (229) et (230). Ce tableau comprend 5 parties. Chacune de ces parties correspond à un bloc de la figure 13: l'Alimentation de servitude (222), le contacteur de mise sous tension (223), le contrôle thermique (224), le contrôle des ballasts (225) et l'alimentation primaire (226). Pour chaque partie, le tableau donne la liste des signaux échangés avec le module (74) d'interface d'exploitation AM904.

Dans le sens vertical, le tableau 28 est divisé en 2 parties: une partie gauche qui comprend 3 colonnes et qui concerne l'alimentation primaire et les servitudes et une partie droite qui comprend 5 colonnes et qui concerne le module (74) d'interface d'exploitation AM904.

Pour la partie gauche, les 3 colonnes sont:

- une colonne FONCTION qui définit la fonction assumée par chaque liaison
- une colonne REF. FIG 13 qui définit pour chaque liaison le numéro correspondant sur la figure 13
- une colonne APPELLATION SYSTEME qui définit l'appellation de chaque signal au signal au niveau du système d'alimentation.

Pour la partie droite, les 5 colonnes sont:

- une colonne CONNECT qui définit le connecteur traversé par chaque signal
- une colonne BROCHE qui définit pour chaque signal la broche du connecteur à laquelle est rattaché
- une colonne APPELLATION INTERNE qui définit pour chaque signal l'appellation interne au module (74) d'interface d'exploitation AM904
- une colonne AUTRES NOMS qui donne les autres noms utilisés pour désinger le signal
- une colonne FIGURES où sont indiqués les numéros des figures où les liaisons véhiculent les signaux sont représentés.

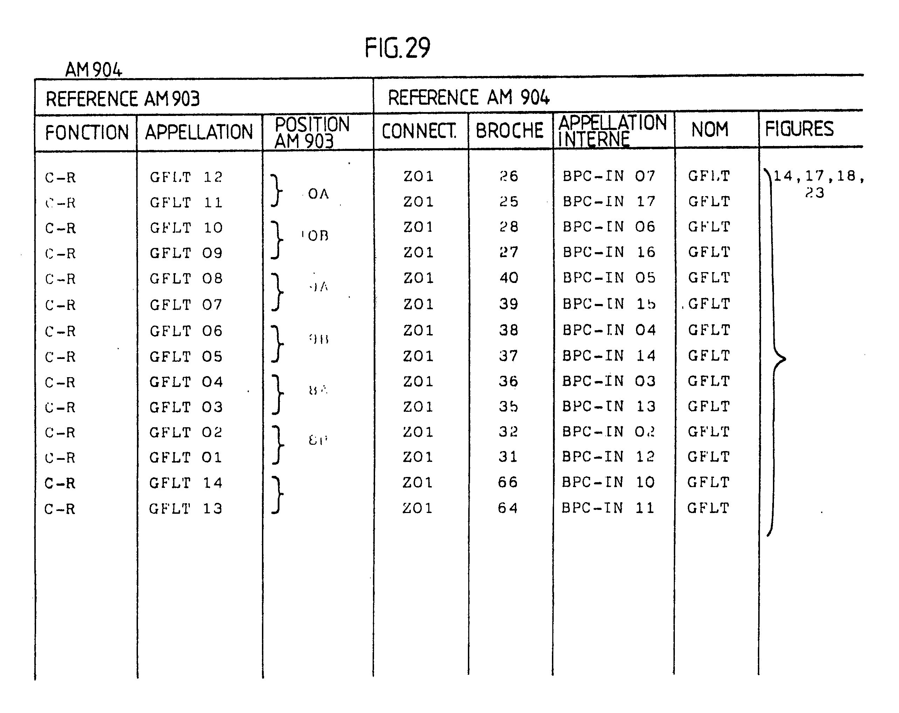

La figure 29 contient un tableau définissant les signaux échangés directement à travers l'omnibus de pilotage (12) entre les sources d'énergie et la carte AM904. En effet, chaque source d'énergie du système d'alimentation dispose d'une ligne spécialisée désignée sous le nom de GFLT xx (abréviation de GENERATOR FAULT) où le post-fixe xx représente le numéro de la source d'énergie concerné par le signal GFLT. Le numéro d'une source d'énergie xx est défini par la position dans le RATELIER du module d'interface aval AM903 qui la pilote. Il sera vu plus loin que cette ligne permet à la source d'énergie associée de faire connaître au module de pilotage (11) toute apparition d'un défaut de fonctionnement. Ce tableau (29) permet d'établir la correspondance entre les lignes GFLT, les numéros de source d'énergie, les appellations et les broches des connecteurs.

Bien entendu les signaux GFLT se retrouvent également sur la figure 30 qui représente la totalité des signaux appartenant à l'omnibus de pilotage (12).

Il apparaît à l'examen de ce tableau (29) que dans la réalisation préférée de l'invention, il a été retenu la possibilité d'avoir 14 demi-cartes AM903: soit 28 interfaces ISM (source moniteur) et 14 interfaces LSSCI puisqu'il y a un signal GFLT par demi carte AM903.

Bien entendu, ce nombre n'est pas limitatif, il n'a été choisi ici que pour des raisons d'opportunité et tout autre nombre aurait pu être adopté sous réserve de prévoir les liaisons et les emplacements de cartes dans le ratelier nécessaires à la réalisation du système d'alimentation.

Le tableau de la figure 29 est divisé en 2 parties verticales. La partie gauche concerne les signaux dans leur relation avec le module d'interface aval AM903 et le système d'alimentation et la partie droite concerne la relation des mêmes signaux avec le module d'interface d'exploitation AM904.

La partie gauche du tableau 29 contient 3 colonnes:

- la colonne FONCTION où la fonction remplie par le signal est précisée
- la colonne APPELLATION où par chaque signal est définie l'appellation du signal au niveau du système d'alimentation.
- la colonne »POSITION AM903« qui définit la position dans le ratelier du module d'interface aval AM903 qui émet chaque signal.

La partie droite du tableau 29 contient 5 colonnes:

- la colonne CONNECTEUR qui définit le connecteur traversé pour chaque signal
- la colonne BROCHE qui définit sur quelle broche arrive chaque signal GFLT
- la colonne APPELLATION INTERNE où pour chaque signal est portée l'appellation attribuée au signal à l'intérieur du module d'interface d'exploitation AM904
- la colonne NOM où se trouvent portés les autres noms éventuels attribués aux signaux
- la colonne FIGURES où sont indiqués les numéros de figures dans lesquelles les signaux sont représentés.

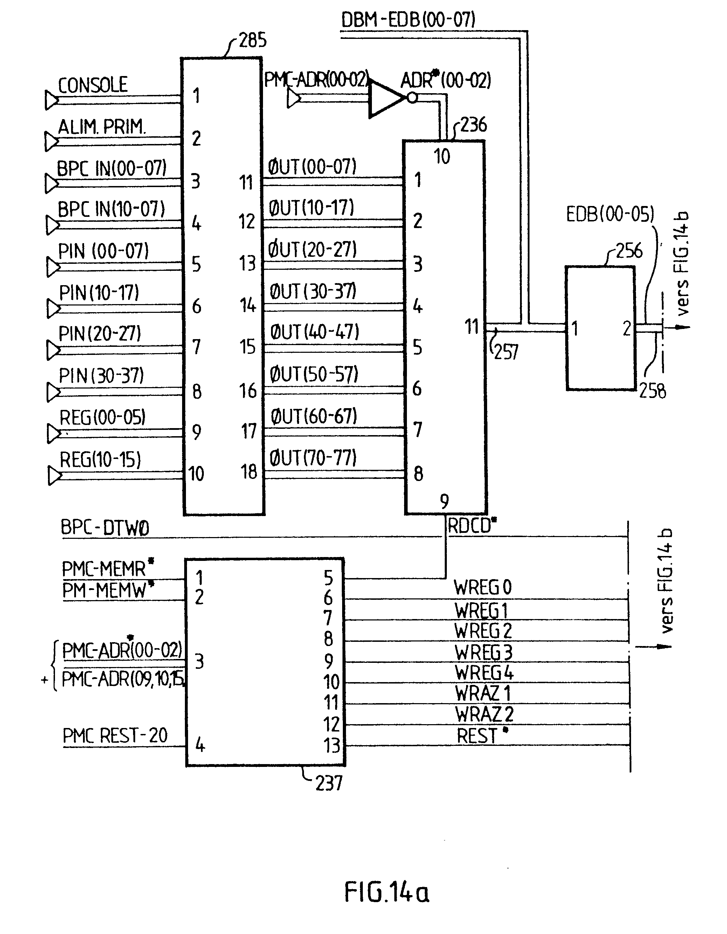

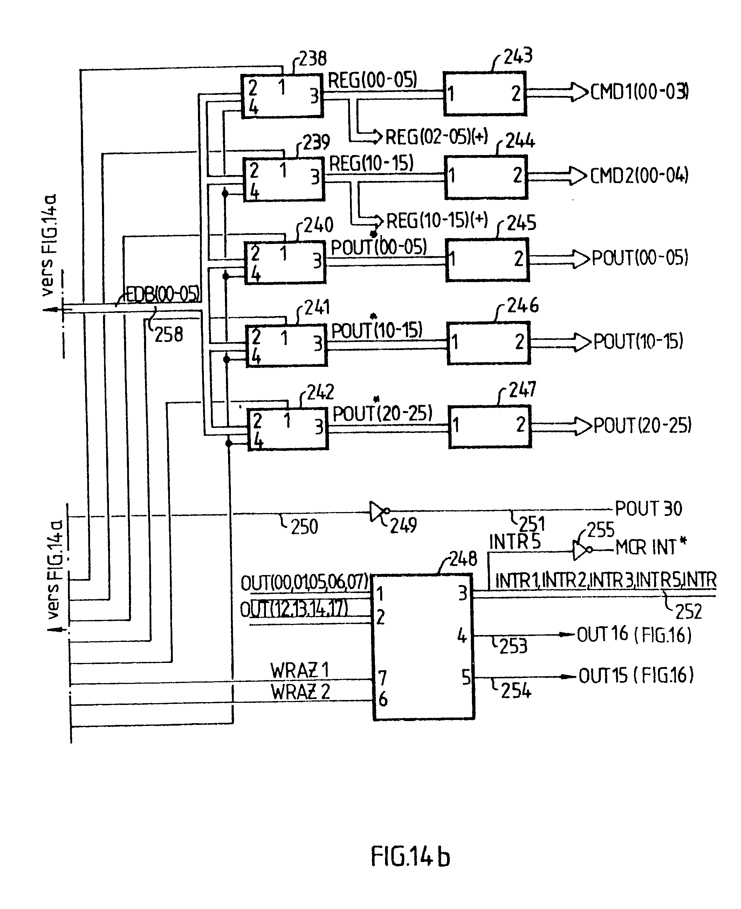

La figure 14 est une représentation schématique du module (74) d'interface d'exploitation AM904. Dans ce schéma, les signaux circulent de la gauche vers la droite à l'exception de l'omnibus DBM-EDB (00—07) (abréviation de Data Bus Monitor — Externat Data Bus) qui véhicule les signaux de données émis ou reçus par le moniteur (10). Pour cet omnibus, les signaux peuvent circuler dans un sens ou dans l'autre suivant le cas.

Les signaux d'entrée dans le module (74) d'interface d'exploitation AM904 appartiennent à 3 catégories: les signaux de données, les signaux d'adressage, les signaux de commande et de contrôle.

Les signaux de données entrantes sont désignés par les dénominations suivantes:

- CONSOLE: désigne les signaux en provenance de la Console (48) à savoir: LOGON, LOGOFF, ENI (voir figure 27)
- ALIM. PRIM. désigne les signaux en provenance de l'alimentation de servitude (222), du contacteur (223), du contrôle thermique (224), du contrôle des ballast (225) et du contrôle de prérégulation et de remise à zéro. Ces signaux sont: SERVUV, COMREL, DCON, DCOFF, PREGUV, PREGOV (voir figure 28)
- BPC-IN (00—07) et BPC-IN (10—17) désigne des signaux en provenance des sources d'alimentation véhiculés à travers le câblage du panneau arrière du ratelier. Ces signaux sont référencés par l'abréviation GFLT (abréviation de Generator Fault) suivi d'un indice correspondant à la source qui émet le signal GFLT. Ce signal indique, quand il est haut, que la source correspondante a détecté un défaut de fonctionnement. Ces signaux GFLT1 à GFLT14 sont définis sur la figure 29.
- PIN (00—07), PIN (20—27), PIN (30—37) désignent des signaux en provenance de panneau de service (11). Ces signaux sont définis sur le tableau de la figure 26
- REG (02—05) et REG (10—15) désignent des signaux émis par les registres (238) et (239) du module (74) d'interface d'exploitation. Comme il sera indiqué plus loin, ces signaux servent à effectuer un rebouclage permettant au moniteur (10) de lire le contenu des registres (238) et (239).

Par ailleurs, le module (74) d'interface d'exploitation génère des signaux d'interruption INTR1* et INTR2* qui jouent eux aussi le rôle de signaux d'entrée. Comme il sera vu plus loin, ces signaux servent à alerter le moniteur (10) à travers l'omnibus DBM-EDB (00—07).

Les signaux d'adressage sont désignés par les dénominations suivantes: PMC-ADR* (00—02) et PMC-ADR* (09, 10, 15). Les signaux PMC-ADR 09, PMC-ADR 10 et PMC-ADR 15 servent à sélectionner le module (74) d'interface d'exploitation AM904. Les signaux PMC-ADR00, PMC-ADR01 et PMC-ADR02 servent à adresser un des 5 registres (238), (239), (240), (241), (242) en fonction écriture ou l'un des 8 canaux du multiplexeur (236) en fonction lecture.

Les signaux de commande et de contrôle sont désignés par les dénominations:

- PMC-MEMR* (abréviation de Power Monitor Control — Memory Read) désigne le signal indiquant une demande de lecture émise par le Moniteur (10)
- PMC-MEMW* (abréviation de Power Monitor Control — Memory Write) désigne le signal indiquant une demande d'écriture émise par le moniteur (10)
- PMC-REST-20 (abréviation de Power Monitor Control — Reset) désigne un signal de remise à zéro des circuits émis par le moniteur (10)
- BPC-DTWO (abréviation de Back Pannel Control — Direct Trap Write Operation) désigne un signal de suspension de cycle (de Trap en anglais) qui est émis par une base de temps quand cette dernière constate une durée anormale du déroulement d'un programme.

Sur la figure 14, les signaux de données entrantes arrivent sur un bloc (235) d'interface. Les signaux arrivent sur les 10 entrées numérotées 0 à 10 du bloc (235) d'interface: les signaux CONSOLE sur l'entrée 1, les signaux ALIM. PRIM sur l'entrée 2, les signaux BPC-IN (00—07) sur l'entrée 3, les signaux BPC-IN (10—17) sur l'entrée 4, les signaux PIN (00—07) sur l'entrée 5, les signaux PIN (10—17) sur l'entrée 6, les signaux PIN (20—27) sur l'entrée 7, les signaux PIN (30—37) sur l'entrée 8, les signaux REG (02—05) sur l'entrée 9 et les signaux REG (10—15) sur l'entrée 10. Ces signaux après passage dans les circuits du bloc (235) d'interface ressortent sous forme de 8 groupes de signaux, chaque groupe comportant 8 signaux. Ces groupes de signaux ressortent par les sorties 11 à 18 du bloc (235) d'interface. Ces groupes sont désignés par les appellations suivantes:

- OUT (00—07) pour la sortie 11
- OUT (10—17) pour la sortie 12
- OUT (20—27) pour la sortie 13
- OUT (30—37) pour la sortie 14
- OUT (40—47) pour la sortie 15
- OUT (50—57) pour la sortie 16
- OUT (60—67) pour la sortie 17
- OUT (70—77) pour la sortie 18

Ces 8 groupes rentrent respectivement sur les entrées 1 à 8 du multiplexeur (236) à 8 voies. Ce multiplexeur (236) est commandé sur sa borne 9 par un signal de lecture RDCD* (abréviation de Read Command). Il sera vu plus loin que ce signal de lecture RDCD* est produit sur demande du moniteur (10). Par ailleurs, la voie à lire par le multiplexeur (236) est définie par les signaux d'adressage ADR (00—02) placés sur son entrée (10). En présence d'un signal des lecture RDCD* le multiplexeur (236) place par sa sortie (10) un groupe de 8 signaux sur l'omnibus (257) DBM-EDB (abréviation de Data Bus Monitor — External Data Bus) qui est l'omnibus de données général du système d'alimentation. Cet omnibus fait partie de l'omnibus de pilotage (12).

Cet omnibus (257) DBM-EDB est raccordé par ailleurs à l'entrée 1 du bloc (256) d'amplificateur (256) inverseurs. Ce bloc (256) d'amplificateurs inverseurs à tranvers sa sortie 2 alimente l'omnibus (258) EDB* (00—05).

Il apparaît ainsi que l'omnibus (257) DBM-EDB est le moyen de communication de données entre le moniteur (10) et le module (74) d'interface d'exploitation AM904. A travers cet omnibus (257) DBM-EDB le moniteur (10) peut soit extraire des données du multiplexeur (236) soit envoyer des données dans l'amplificateur (256) inverseur. Il est à remarquer que dans la réalisation préférée de l'invention, l'omnibus (258) EDB* (00 à 07) comporte 8 fils puisqu'il est connecté à un microprocesseur à 8 bits. Cependant, dans la réalisation de l'invention des registres à 6 bits ont été utilisés dans le module d'interface d'exploitation AM904 puisque cela suffisait. Par conséquent, seuls les six fils EDB* (00 à 05) sont utilisés sur l'omnibus (258) EDB* (00—07). Bien entendu, des registres à 8 bits pourraient être utilisés sans pour autant sortir des enseignements de l'invention. Ce bloc (256) d'amplificateurs inverseur à travers sa sortie 2 alimente donc l'omnibus EDB* (00—05). Cet omnibus EDB* (00—05) alimente en parallèle les entrées 2 des 5 registres (238), (239), (240), (241) et (242). Un seul de ces registres (238), (239), (240), (241) et (242) peut être accédé à la fois. Ce contrôle d'accès se fait par la borne (1) des registres. Les signaux de contrôle sont respectivement: WREG0 pour le registre (238), WREG1 pour le registre (239), WREG2 pour le registre (240), WREG3 pour le registre (241) et WREG4 pour le registre (242). Il sera vu plus loin comment ces signaux de validation d'accès WREG sont élaborés à partir des signaux fournis par le moniteur (10). Chacun des registres (238), (239), (240), (241) et (242) possède une sortie 3 à travers laquelle il alimente un omnibus:

- le registre (238) alimente l'omnibus REG (00—05)
- le registre (239) alimente l'omnibus REG (10—15)
- le registre (240) alimente l'omnibus POUT* (00—05)
- le registre (241) alimente l'omnibus POUT* (10—15)
- le registre (242) alimente l'omnibus POUT* (20—25)

En fait, comme il sera expliqué plus loin, chaque module d'interface AM904 ainsi que chaque registre contenu sur ce module d'interface d'exploitation AM904 est considéré par le processeur comme une adresse mémoire.

Chacun de ces omnibus alimente l'entrée I d'un amplificateur de sortie:

- l'omnibus REG (00—05) attaque l'amplificateur (243) de sortie
- l'omnibus REG (10—15) attaque l'amplificateur (244) de sortie
- l'omnibus POUT* (00—05) attaque l'amplificateur (245) de sortie
- l'omnibus POUT* (10—15) attaque l'amplificateur (246) de sortie
- l'omnibus POUT* (20—25) attaque l'amplificateur (247) de sortie.

Par ailleurs, les omnibus REG (00—05) et REG (10—15) comportent une branche qui va attaquer respectivement les entrées 9 et 10 du bloc (235) d'interface comme il a été dit précédemment.

Ces 5 amplificateurs de sortie alimentent par leur sortie 2 des lignes de commandes:

- le registre (243) alimente le groupe de 4 lignes désigné par CMD1 (00—03) (abréviation de COMMANDE No 1). Ces 4 lignes véhiculant les signaux de sortie vers la guirlande SPC1: ENO, SEQUERR, SYSFLT, FAULT. Ces signaux sont définis sur le tableau de la figure 27.
- le registre (244) alimente le groupe de 5 lignes désigné par CMD2 (00—04) (abréviation de COMMANDE No 2). Ces 5 lignes véhiculent les signaux de sortie vers l'alimentation primaire (226) et le contacteur (223): ONOFF, DCRES, RELCON, BLD CON1, BLD CON2. Ces signaux sont définis sur le tableau de la figure 27.
- le registre (245) alimente le groupe de 6 lignes POUT (00—05). Ces 6 lignes véhiculent les signaux de commande du moniteur (10) vers le panneau de service (11). Ces signaux sont définis sur le tableau de la figure 26.
- le registre (247) alimente le groupe de 6 lignes POUT (20—25). Ces 6 lignes véhiculent les signaux de commande du moniteur (10) vers le panneau de service (11). Ces signaux sont définis sur le tableau de la figure 26.

Un 6ème amplificateur (249) inverseur de sortie amplifie le signal d'entrée BPC-DTWO pour fournir le signal de sortie POUT30. Ce signal de sortie POUT30 est envoyé sur la guirlande SPC1 pour allumer au pupitre un voyant indiquant que le moniteur (10) est en état de suspension de cycle.

Ce qui précède concerne le cheminement des données à l'intérieur du module (74) d'interface d'exploitation AM904. Il va être vu maintenant comment ce cheminement est commandé et contrôlé par le moniteur (10). Pour assurer les commandes et les contrôles, le moniteur (10) dispose de liaisons d'adressage et de liaisons de définition de fonction. Ces liaisons d'adressage et ces liaisons de définition de fonctions sont connectées au bloc (237) de sélection des circuits et de définition de fonction.

A partir des signaux d'adressage et des signaux de définition de fonctions placés sur son entrée, le bloc (237) de sélection des circuits et de définition de fonctions élabore des signaux de commande pour commander les circuits fonctionnels du module (74) d'interface d'exploitation AM904.

Les signaux d'adressage PMC-ADR* (00—02, 09, 10, 15) sont appliqués à l'entrée 3 du bloc (237) de sélection des circuits et de définition des fonctions et les signaux d'adressage PMC-ADR* (00—02) sont appliqués après inversion à l'entrée 10 du bloc (236) multiplexeur. Les signaux d'adressage PMC-ADR* (00—15) sont véhiculés dans l'omnibus PMC-ADR* qui est l'omnibus d'adressage du moniteur (10). Cet omnibus (PMC-ADR*) appartient à l'omnibus de pilotage (12).

Le rôle des signaux d'adressage PMC-ADR* (00—15) est de définir:

- en mode lecture le canal OUT (X0—X7) qui doit être sélectionné par le multiplexeur (236)
- en mode écriture le registre qui doit être sélectionné parmi les 5 registres (238), (239), (240), (241) ou (242).

Le rôle des signaux d'adressage PMC-ADR* (09, 10, 15) est de sélectionner le module (74) d'interface d'exploitation AM904.

Les signaux de contrôle et de commande sont les suivants:

- PMC-MEMR* (abréviation de Power Monitor Control — Memory Read). Ce signal qui est produit par le moniteur (10) signifie que le moniteur (10) réclame un cycle de lecture
- PMC-MEMW* (abréviation de Power Monitor Control — Memory Write). Ce signal qui est produit par le moniteur (10) réclame un cycle d'écriture
- PMC-REST — 20 (abréviation de Power Monitor Control — Reset). Ce signal qui est produit par le moniteur (10) signifie que le moniteur (10) réclame une remise à zéro des circuits.

Ces signaux de contrôle et de commande sont véhiculés par les lignes de commande et de contrôle qui appartiennent à l'omnibus de pilotage (12).

Le bloc (237) reçoit:

- sur sa borne 1 le signal de commande PMC-MEMR*
- sur sa borne 2 le signal de commande PMC-MEMW*
- sur sa borne 3 les signaux d'adressage PMC-ADR* (00—02, 09, 10, 15)
- sur sa borne 4 le signal de remise à zéro PMC-REST — 20.

Quand le moniteur (10) veut adresser le module (74) d'interface d'exploitation AM904, il place l'adresse de ce module (74) d'interface d'exploitation AM904 sur les lignes PMC-ADR* (09, 10, 15). D'une façon similaire, il définit par les lignes PMC-ADR* (00—02) soit le groupe de signaux OUT (X0—X7) en mode lecture soit l'un des 5 registres (238), (239), (240), (241) ou (242) en mode écriture.

Par ailleurs, le moniteur (10) signifie le mode de fonctionnement réclamé:

- le mode lecture par la liaison PMC-MEMR*
- le mode écriture par la liaison PMC-MEMW*

Sil le mode lecture est demandé par le moniteur (10) le bloc (237) de sélection de circuits et de définition de fonction émet sur sa sortie 5 un signal RDCD* (abréviation de Read Command) qui est un signal de commande de lecture. Ce signal est appliqué sur l'entrée (8) du bloc (236) multiplex. Ce signal RDCD* conjugué avec les signaux d'adressage DMC-ADR* (00—02) permet le transfert du groupe de signaux OUT (X0—X7) sélectionné vers la sortie 11 du bloc (237) multiplexeur. Par conséquent, le groupe de signaux OUT (X0—X7) sélectionné est transféré d'une part vers l'omnibus de données DBM-EDB (00—07) et d'autre part vers l'entrée 1 du bloc (256) d'amplificateurs inverseurs. L'omnibus de données DBM-EDB (00—07) transmet vers le moniteur (10) les données contenues dans le groupe de signaux OUT (X0—X7) sélectionné. Le moniteur aura ainsi effectué la lecture du contenu des signaux d'entrée qu'il a sélectionnés. Par ailleurs, puisqu'il s'agit d'une fonction lecture les signaux placés sur l'entrée 1 du groupe (256) d'amplificateurs inverseurs seront sans effet sur les 5 registres (238), (239), (240), (241) et (242).

Si le mode écriture est demandé par le moniteur (10) le bloc (237) de sélection de circuits et de définition de fonction émet:

- sur sa sortie 6 un signal WREG0 (abréviation de Write Register 0) si l'écriture doit se faire dans le registre 0
- sur sa sortie 7 un signal WREG1 (abréviation de Write Register 1) si l'écriture doit se faire dans le registre 1
- sur sa sortie 8 un signal WREG2 (abréviation de Write Register 2) si l'écriture doit se faire dans le registre 2
- sur sa sortie 9 un signal WREG3 (abréviation de Write Register 3) si l'écriture doit se faire dans le registre 3
- sur sa sortie 10 un signal WREG4 (abréviation de Write Register 4) si l'écriture doit se faire dans le registre 4.

Le signal WREG émis vient sur l'entrée 1 du registre sélectionné à l'écriture. Ce signal WREG permet l'écriture dans le registre sélectionné des signaux placés à l'entrée 2 de ce registre. Ces signaux sont désignés par EDB* (00—05). Ces signaux EDB* (00—05) sont émis par la sortie 2 du bloc (256) des amplificateurs inverseurs. Ces signaux EDB* (00—05) sont par conséquent l'inversion des signaux DBM-EDB (00—05) placés sur l'entrée 1 du bloc (256) d'amplificateurs inverseurs. Il apparaît donc que cette opération d'écriture permet d'écrire le contenu de l'omnibus DBM-EDB (00—05) dans le registre sélectionné par le moniteur (10).

Si le moniteur (10) réclame un cycle de remise à zéro par émission du signal PMC-REST — 20 associé à un signal d'écriture PMC-MEMW* le bloc (237) de sélection des circuits et de définition de fonctions émet:

- sur sa sortie 11 un signal WRAZ1 (abréviation de Write Remise à Zéro 1) qui est placé sur l'entrée 7 du bloc (248) de traitement des changements de régime (RAZ IT SPCI)
- sur sa sortie 12 un signal WRAZ2 (abréviation de Write Remise à Zéro 2) qui est placé sur l'entrée 6 du bloc (248) de traitement des changements de régime (RAZ de LOGON, LOGOFF du SPCI)
- sur sa sortie 13 un signal REST* (abréviation de Reset) qui est appliqué sur les entrées 4 des 5 registres (238), (239), (240), (241) et (242). Ce signal REST* remet à zéro le contenu des 5 registres.

Le bloc (248) de traitement des changements de régime, comme son nom l'indique est chargé de traiter les changements de régime requis par les signaux d'entrée signalant des incidents de fonctionnement dans le système d'alimentation ou simplement signalant une demande de changement du régime de fonctionnement du système d'alimentation comme par exemple la mise sous tension ou la mise hors tension.

Sur la borne 1 du bloc (248) de traitement des changements de régime, sont appliqués les signaux OUT (00, 01, 05, 06, 07). Ces signaux issus de la borne 11 du bloc (235) d'interface correspondent aux signaux suivants:

OUT 00 est le signal PREGOV
OUT 01 est le signal PREGUV
OUT 05 est le signal LOGON
OUT 06 est le signal LOGOFF
OUT 07 est le signal ENI

Sur la borne 2 du bloc (248) du traitement des changements de régime sont appliqués les signaux OUT (12, 13, 14, 17). Ces signaux issus de la borne 12 du bloc (235) d'interface correspondent aux signaux suivants:

OUT 12 est le signal COOLF1
OUT 13 est le signal COOLF2
OUT 14 est le signal COOLF3
OUT 17 est le signal COMREL

Le bloc (248) de traitement de changement de régime élabore deux types de signaux:

— les signaux de changement de régime naturel c'est à dire les signaux correspondant à des changements de régime de fonctionnement du système d'alimentation réclamés par l'opérateur ou l'inspecteur de maintenance par action soit à partir de la console (48) soit à partir du panneau de service (11).
— les signaux de changement de régime accidentel, c'est à dire les signaux correspondant à des changements de régime du système d'alimentation nécessités par un ou des incidents survenus dans le système d'alimentation.

Il existe 2 types de changement de régime naturel:

— la mise sous tension occasionnée, comme il a été dit, par la conjugaison des signaux LOGON et ENI
— la mise hors tension occassionnée par la conjugaison des signaux LOGOFF et ENI.

Une demande de mise sous tension se traduit par l'émission d'un signal OUT 16 sur la borne 4 du bloc (248) de traitement de changement de rémise. Ce signal OUT 16 est appliqué sur la ligne correspondante de l'entrée 2 du bloc (236) multiplexeur.

Une demande de mise hors tension se traduit par l'émission d'un signal OUT 15 sur la borne 5 du bloc (248) de traitement de changement de régime. Ce signal OUT 15 est appliqué sur la ligne correspondante de l'entreé 2 du bloc (236) multiplexeur.

L'arrivée d'un signal de synchronisation ENI engendre un signal de demande d'interruption INTR1*. Ce signal de demande d'interruption est appliqué sur l'entrée OUT 20 du multiplexeur (236). De la sorte, le moniteur (10) peut connaître l'existence de cette demande d'interruption INTR1*.

Les changements de régime accidentels correspondent à l'apparition d'un incident au niveau du système d'alimentation. Ces incidents sont dans la réalisation préférée de l'invention:

— absence de fermeture du contacteur signalé par COMREL
— surchauffe des circuits signalés par COOLF1 COOLF2 et COOLF3
— sur-tension dans l'alimentation primaire 226 signalée par PREGOV
— sous tension dans l'alimentation primaire 226 signalée par PREGUV.

Ces signaux sont regroupés pour fournir un signal de demande d'interuption INTR2*.

Ce signal de demande d'interruption INTR2* est appliqué à l'entrée OUT 21 du multiplexeur (236). De la sorte, le moniteur (10) peut connaître l'existence de cette demande d'interruption INTR2*.

Par ailleurs, ces deux signaux de demande d'interruption INTR1* et INTR2 sont regroupés pour engendrer un signal de regroupement de demande d'interruption MCR INT*. Ce signal est transmis sur une ligne de contrôle appelée elle aussi MCR INT* qui appartient à l'omnibus de pilotage (12). Comme il sera vu plus tard, ce signal MCR INT* informe directement le moniteur (10) de l'existence d'au moins une demande d'interruption, source ou ressource communes ou SPCI. Il appartient ensuite au moniteur (10) de prendre l'initiative de reconnaître les demandes d'interruption ayant été à l'origine de l'émission du signal MCR INT*.

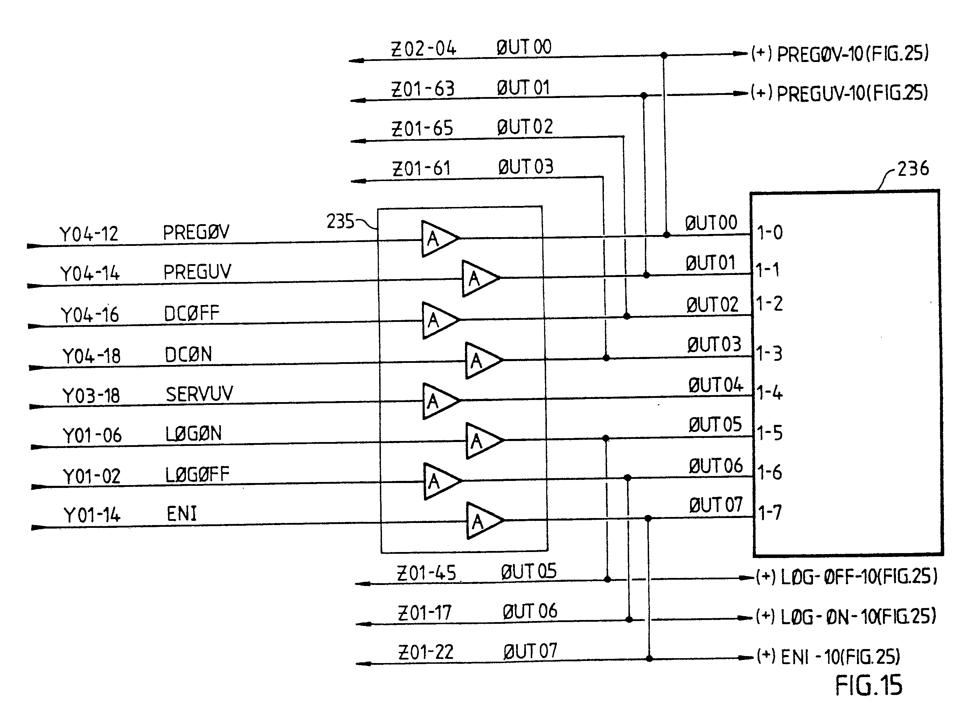

La figure 15 donne une représentation détaillée partielle des circuits internes du bloc (235) d'interface. Les circuits internes représentés sur cette figure sont ceux réalisant le groupe des 8 signaux OUT (00—07). Sur cette figure, chaque triangle contenant la lettre A represénte une référence du connecteur Y01 ou Y03 ou Y04 ainsi que le numéro de la broche.

Les signaux OUT (00—07) sont raccordés d'une part au multiplexeur (236) sur les bornes 1-0 à 1—7 et d'autre part au cable interplaque au moyen des connecteurs Z01 et Z02. Pour chaque signal le référence de connecteur est accompagnée du numéro de la broche correspondante. Les lignes OUT00, OUT01, OUT05, OUT06 et OUT07 portent également des départs marqués d'une croix (+). Cette croix (+) signifie que ces départs vont à l'intérieur même du module (74) d'interface d'exploitation où ils sont utilisés dans la logique du module (74) d'interface d'exploitation. Ils seront retrouvés sur les autres schémas sous leur désignation respective OUT00, OUT01, OUT05, OUT06 et OUT07.

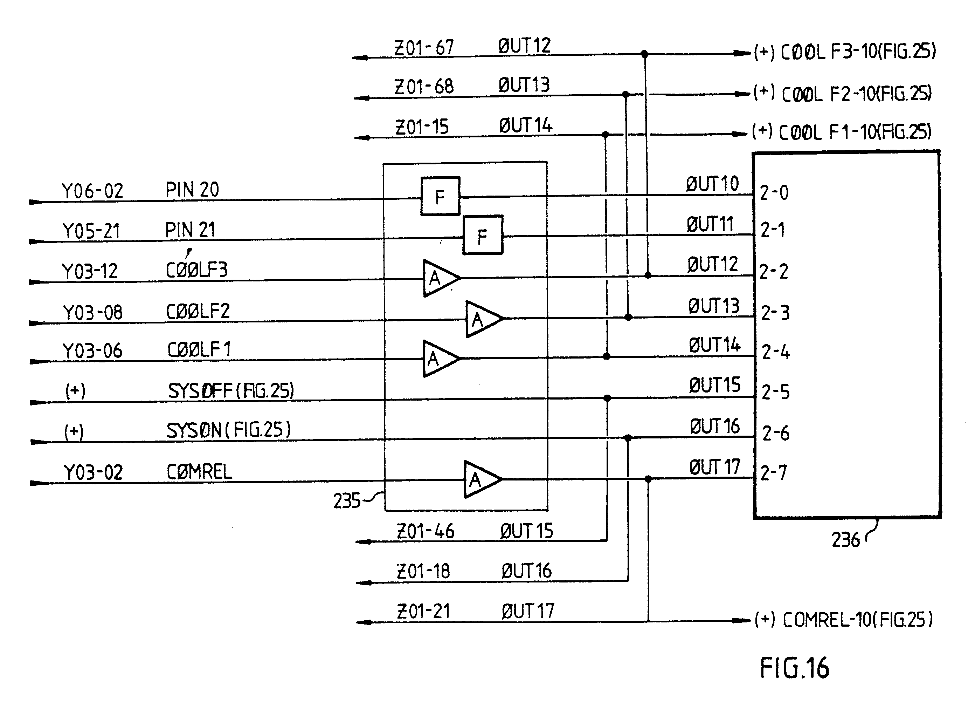

La figure 16 est une représentation détaillée partielle des circuits internes du bloc (235) d'interface. Les circuits internes représentés sur cette figure sont ceux produisant le groupe des 8 signaux OUT (10—17). Sur cette figure, chaque triangle contenant la lettre A représente un amplificateur et chaque carré contenant le lettre F représente un filtre électrique. A côté de chaque signal d'entrée sur la gauche de la figure est indiquée la référence du connecteur Y03 ou Y05 ou Y06 ainsi que le numéro de la broche correspondante. Deux signaux OUT15 et OUT16 ne portent pas de référence à une broche mais sont accompagnés d'une croix (+): cela signifie que ces signaux sont produits au sein même du module (74) d'interface d'exploitation.

Les signaux OUT (10—17) sont raccordés d'une part au multiplexeur (236) sur les bornes 2-0 à 2—7 et d'autre part au cable interplaque au moyen du connecteur Z01. Pour chaque signal, la référence du connecteur est accompagnée du numéro de broche. Les lignes OUT (12—17) portent également des départs marqués d'une croix (+). Ces départs vont à l'intérieur même du module (74) d'interface d'exploitation où ils sont utilisés dans la logique du module (74) d'interface d'exploitation. Ils seront retrouvés sur les autres schémas sous leur désignation respective OUT12, OUT13, OUT14, OUT15, OUT16 et OUT17.

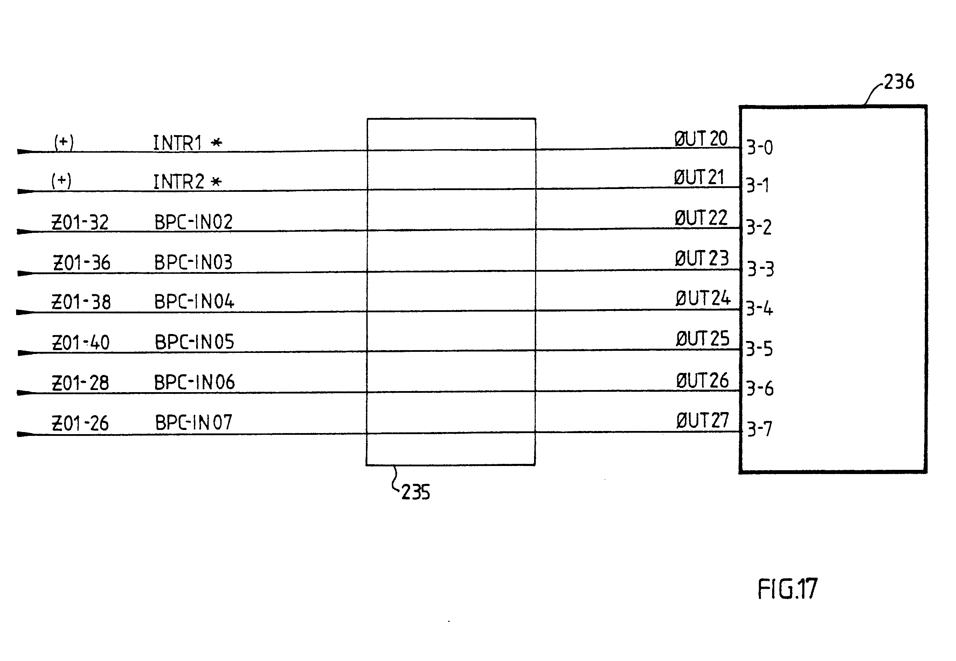

La figure 17 est une représentation détaillée partielle des circuits internes du bloc (235) d'interface. Les circuits internes représentés sur cette figure sont ceux réalisant le groupe des 8 signaux OUT (20—27). A côté de chaque signal d'entrée sur la gauche de la figure est indiquée la référence du connecteur Z01 ainsi que le numéro de la broche correspondante. Deux signaux INTR1* et INTR2* ne portent pas de référence à un connecteur mais sont accompagnés d'une croix (+): cela signifie que ces signaux ont été vus à l'occasion de la description de la figure 14 à propos du bloc (248) de traitement de changement de régime. Les signaux OUT (20—27) sont raccordés au multiplexeur (236) sur les bornes (3-0 à 3—7).

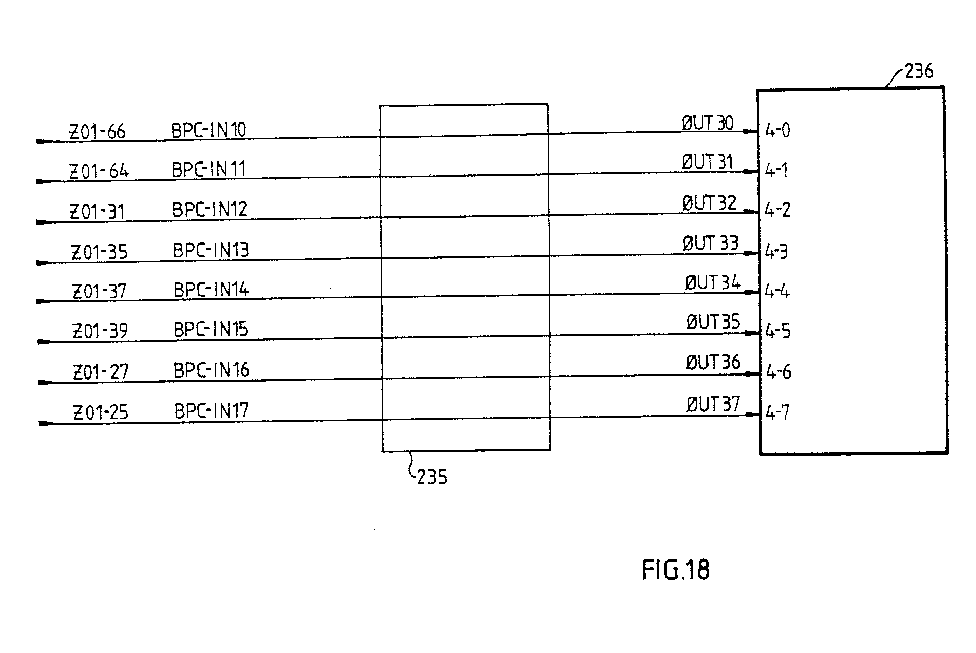

La figure 18 est une représentation détaillée partielle des circuits internes du bloc (235) d'interface. Les circuits internes représentés sur cette figure sont ceux réalisation le groupe des 8 signaux OUT (30—37). A côte de chaque signal d'entrée sur la gauche de la figure est indiqué la référence du connecteur Z01 ainsi que le numéro de la broche correspondante. Les signaux OUT (30—37) sont raccordés au multiplexeur (236) sur les bornes (4.0 à 4.7).

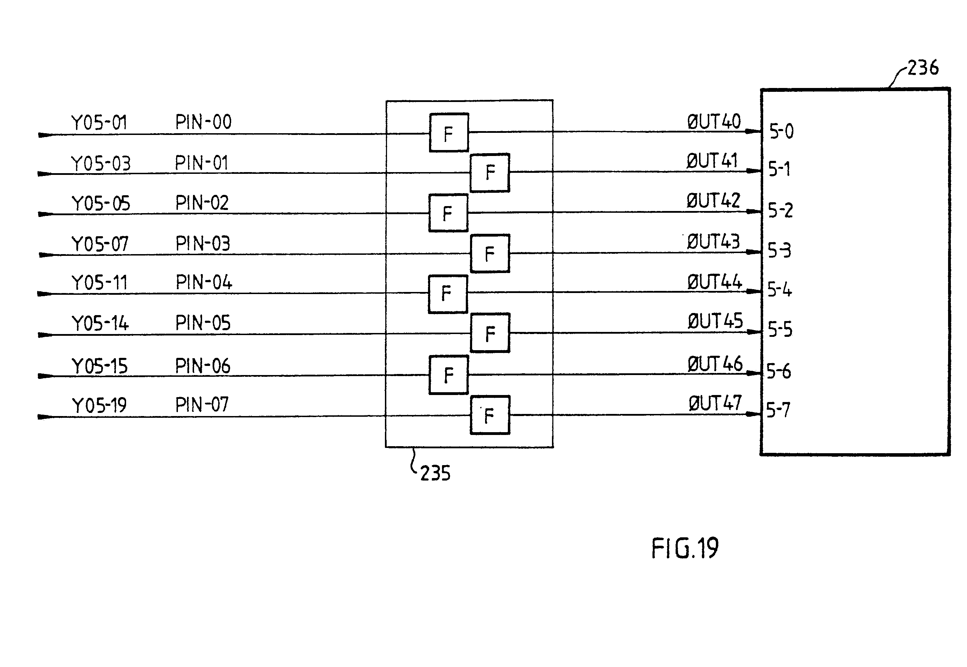

La figure 19 est une représentation détaillée partielle des circuits internes du bloc (235) d'interface. Les circuits internes représentés sur cette figure sont ceux réalisant le groupe des 8 signaux OUT (40—47). Sur cette figure chaque carré contenant la lettre F représente un filtre électrique. A côté de chaque signal d'entrée sur la gauche de la figure est indiquée la référence du connecteur Y05 ainsi que le numéro de la broche correspondante. Les signaux OUT (40—47) sont raccordés au multiplexeur (236) sur les bornes 5-0 à 5—7.

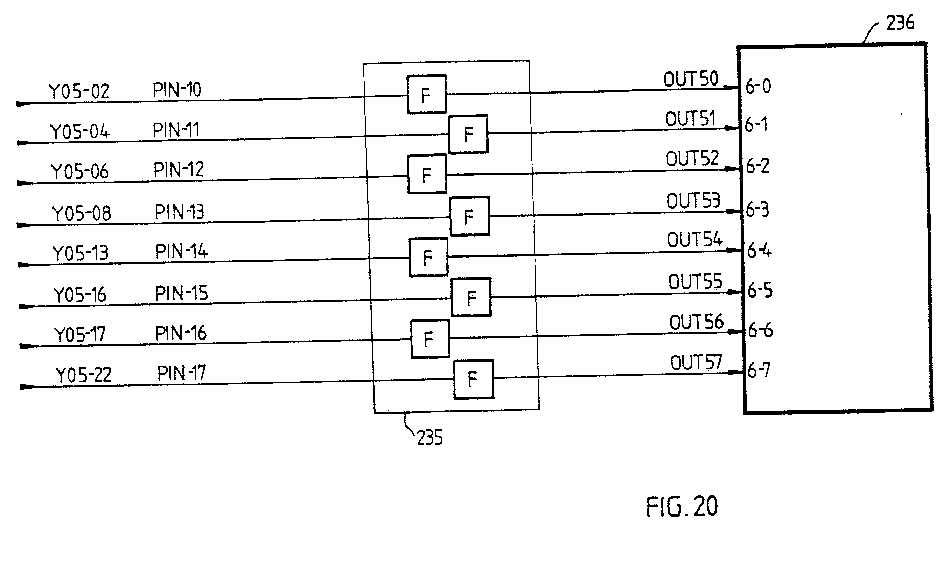

La figure 20 est une représentation détaillée partielle des circuits internes du bloc (235) d'interface. Les circuits internes représentés sur cette figure sont ceux réalisant le groupe des 8 signaux OUT (50—57). Sur cette figure chaque carré contenant la lettre F représente un filtre électrique. A côté de chaque signal d'entrée sur la gauche de la figure est indiquée la référence du connecteur Y05 ainsi que le numéro de la broche correspondante. Les signaux OUT (50—57) sont raccordés au multiplexeur (236) sur les bornes 6-0 à 6—7.

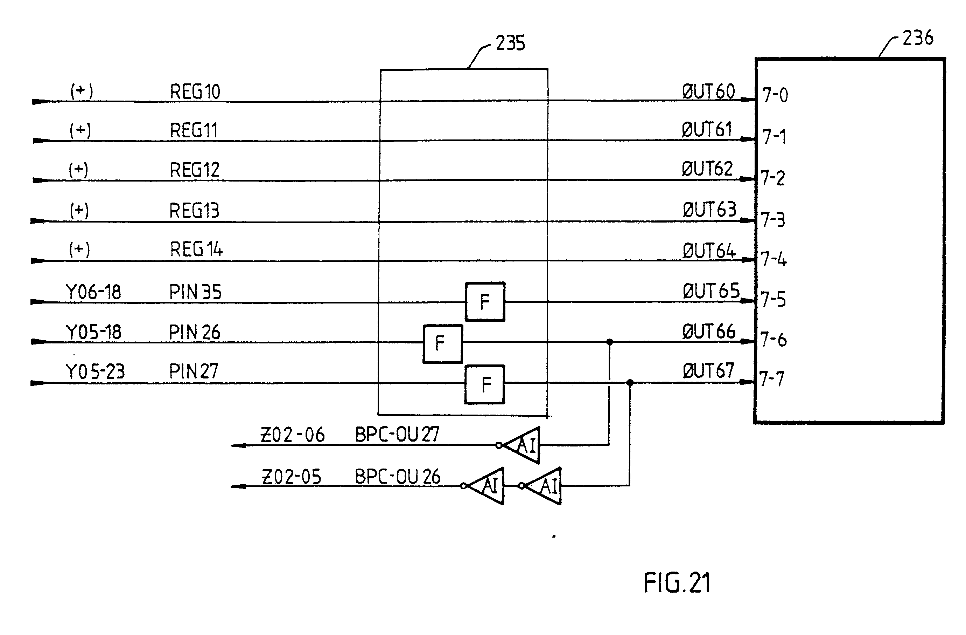

La figure 21 est une représentation détaillée partielle des circuits internes du bloc (235) d'interface. Les circuits internes représentés sur cette figure sont ceux réalisant le groupe des 8 signaux OUT (60—67). Sur cette figure, chaque carré contenant la lettre F représente un filtre électrique. A côté de chaque signal d'entrée, sur la gauche de la figure est indiquée la référence du connecteur Y05 ou Y06 ainsi que le numéro de la broche correspondante. Par ailleurs, les signaux REG10, REG11, REG12, REG13 et REG14 ne portent pas de référence à un connecteur mais sont accompagnés d'une croix (+): cela signifie que ces signaux sont produits au sein même du module (74) d'interface d'exploitation. Ces signaux REG (10—14) sont les signaux produits par le registre (244) qui a été vu à l'occasion de la description de la figure 14. Les signaux OUT (60—67) sont raccordés au multiplexeur (236) sur les bornes 7-0 à 7-7.

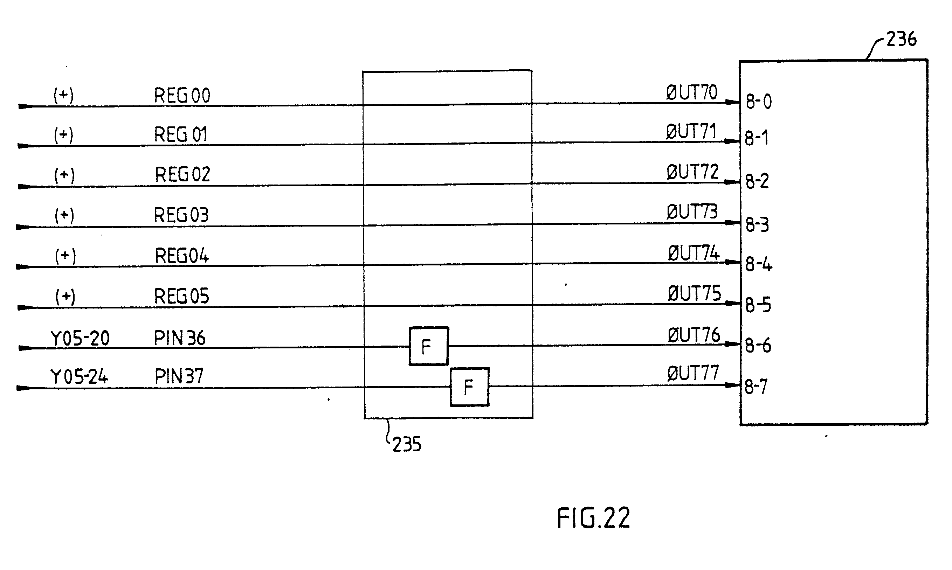

La figure 22 est une représentation détaillée partielle des circuit internes du bloc (235) d'interface. Les circuits internes représentés sur cette figure sont ceux réalisant le groupe des 8 signaux OUT (70—77). Sur cette figure, chaque carré contenant la lettre F représente un filtre électrique. A côté de chaque signal d'entrée sur la gauche de la figure est indiquée la référence du connecteur Y05 ainsi que le numéro de la broche correspondante. Par ailleurs, les signaux REG00, REG01, REG02, REG03, REG04, REG05 ne portent pas de référence à un connecteur mais sont accompagnés d'une croix (+): cela signifie que ces signaux sont produits au sein même du module (74) d'interface d'exploitation. Ces signaux REG (00—05) sont les signaux produits par le registre (243) qui a été vu à l'occasion de la description de la figure 14. Les signaux OUT (70—77) sont raccordés au multiplexeur (236) sur les bornes 8-0 à 8-7.

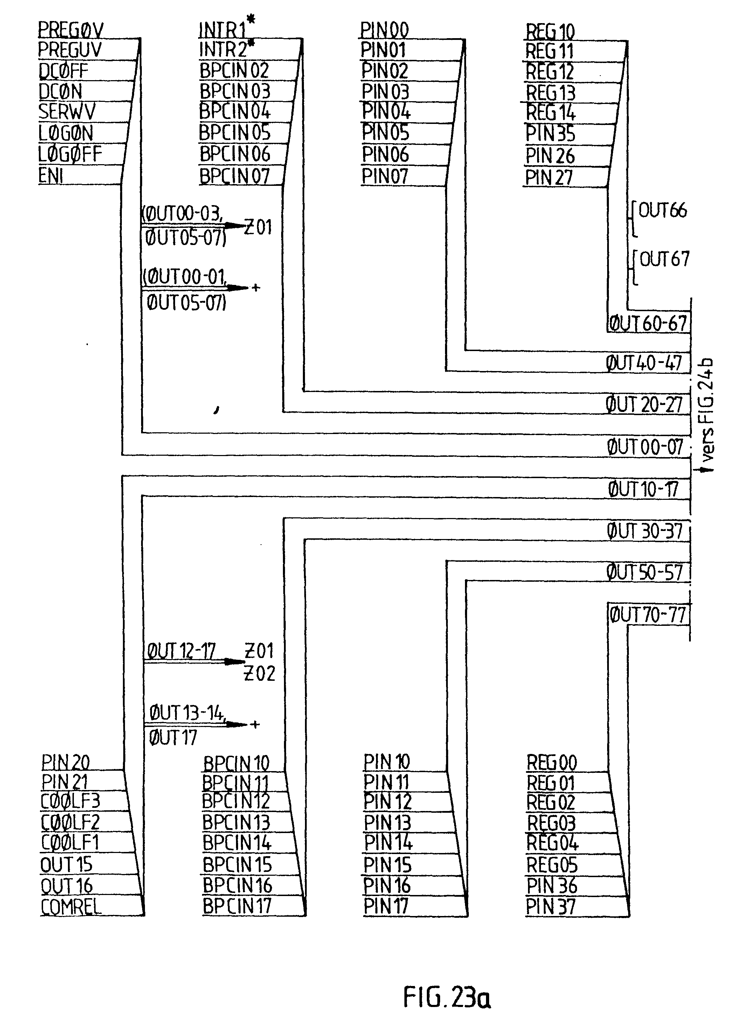

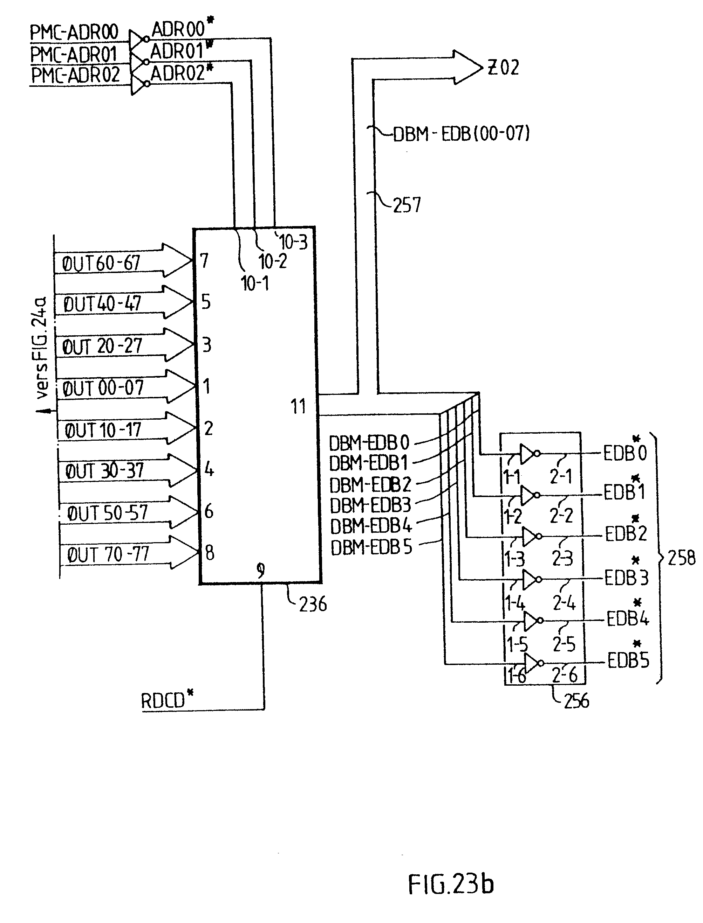

La figure 23 est une représentation schématique des signaux mis en jeu dans la moitié gauche de la figure 14.

Sur la gauche sont représentés les 8 groupes de signaux:

— OUT (00—07) arrivant sur la borne 1 du multiplexeur (236) et engendré à partir des signaux d'entrée: PREGOV, PREGUV, DCOFF, DCON, SERVUV, LOGON, LOGOFF, ENI. Une partie de ces signaux OUT (00—03), OUT (05—07) est dérivée vers le connecteur Z01 et une autre partie de ces signaux (OUT (00—01), OUT (05—07)) est dérivée vers l'intérieur même du module (74) d'interface d'exploitation.

- OUT (10—17) arrivant sur la borne 2 du multiplexeur (236) et engendré à partir des signaux d'entrée: PIN20, PIN21, COOLF3, COOLF2, COOLF1, OUT15, OUT16, COMREL. Une partie de ces signaux OUT (12—17) est dérivée vers les connecteurs Z01 et Z02 et une autre partie de ces signaux OUT (13—14), OUT17 est dérivée vers l'intérieur même du module (74) d'interface d'exploitation.
- OUT (20—27) arrivant sur la borne 3 du multiplexeur (236) et engendré à partir des signaux d'entrée: INTR1*, INTR2*, BPCIN02, BPCIN03, BPCIN04, BPCIN05, BPCIN06, BPCIN07.
- OUT (30—37) arrivant sur la borne 4 du multiplexeur (236) et engendré à partir des signaux d'entrée: BPCIN10, BPCIN11, BPCIN12, BPCIN13, BPCIN14, BPCIN15, BPCIN16, BPCIN17.
- OUT (40—47) arrivant sur la borne 5 du multiplexeur (236) et engendré à partir des signaux d'entrée: PIN00, PIN01, PIN02, PIN03, PIN04, PIN05, PIN06, PIN07.
- OUT (50—57) arrivant sur la borne 6 du multiplexeur (236) et engendré à partir des signaux d'entrée: PIN10, PIN11, PIN12, PIN13, PIN14, PIN15, PIN16, PIN17.
- OUT (60—67) arrivant sur la borne 7 du multiplexeur (236) et engendré à partir des signaux d'entrée: REG10, REG11, REG12, REG13, REG14, PIN35, PIN26, PIN27. Les signaux OUT66 et OUT67 sont utilisés pour produire les signaux BPCOU27 et BPCOU26.
- OUT (70—77) arrivant sur la borne 8 du multiplexeur (236) et engendré à partir des signaux d'entrée: REG00, REG01, REG02, REG03, REG04, REG05, PIN36, PIN37.

Le multiplexeur est commandé par des signaux d'adressage ADR00*, ADR01* et ADR02* et un signal de sélection RDCD*:

- les signaux d'adressage ADR* (00—02) sont obtenus par inversion des signaux PMC-ADR (00—02) de l'omnibus d'adressage du moniteur. Cette inversion est faite uniquement pour les besoins technologiques du multiplexeur (236). Ces signaux d'adressage sont appliqués sur les bornes 10-1, 10-2, 10-3 du multiplexeur (236). Ces signaux d'adressage échantillonnent un des groupes de signaux OUT.
- le signal de sélection RDCD* est engendré par le bloc (237) de sélection des circuits et de définition des fonctions comme il a été dit à l'occasion de la discription de la figure 14. Ce signal de sélection RDCD* rend actif le multiplexeur quand le moniteur (10) a d'une part appelé le module (74) d'interface d'exploitation par les signaux PMC-ADR* (09, 10, 15) et d'autre part demandé un cycle de lecture par le signal PMC-MEMR*.

Quand le multiplexeur (236) est sélectionné par le signal RDCD* et qu'un des groupes OUT a été adressé par les signaux ADR* (00—02), le contenu du groupe OUT adressé est transféré sur la sortie 11 du multiplexeur (236). Cette sortie est raccordée à l'omnibus (257) de données DBM-EDB (00—07). Cet omnibus de données DBM-EDB (00—07):

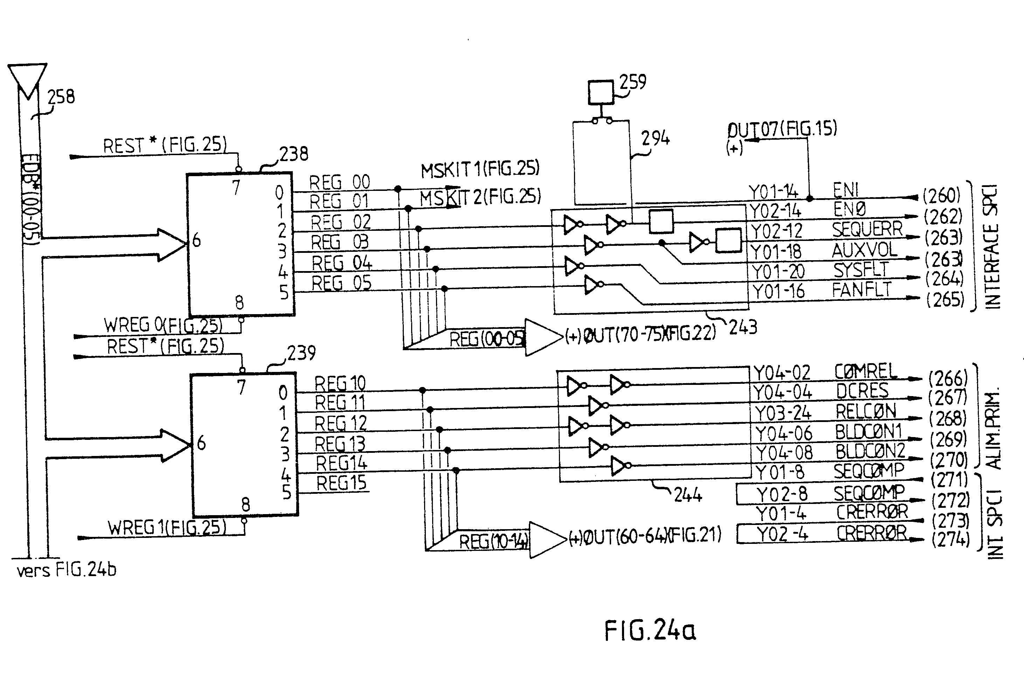

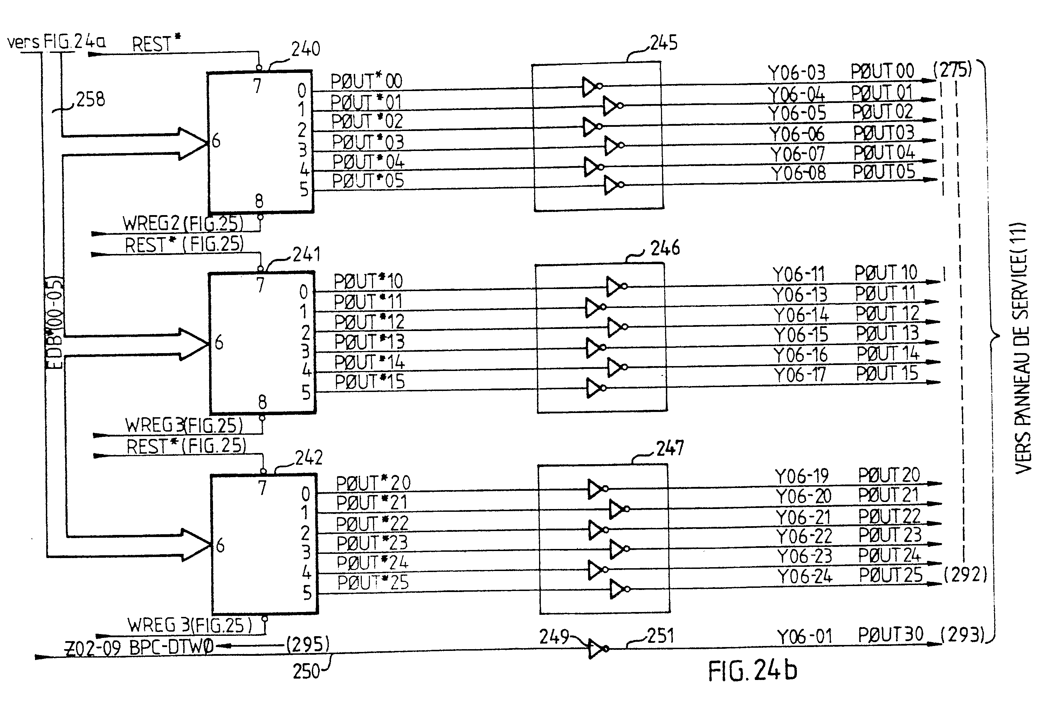

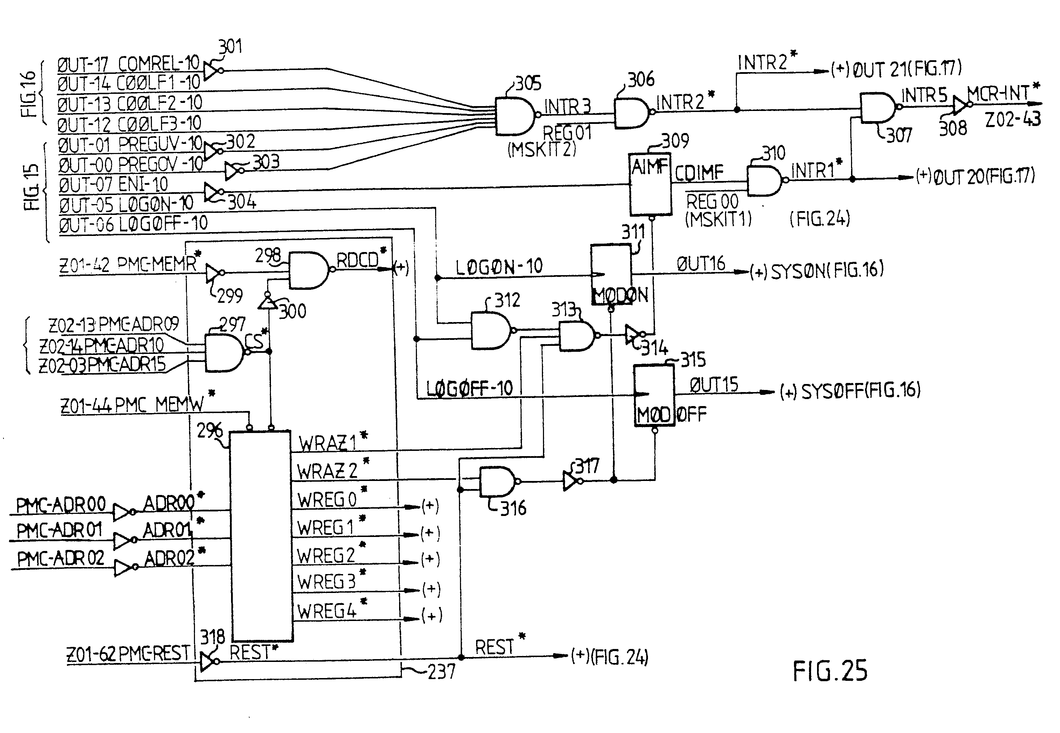

- d'une part traverse le connecteur Z02 pour atteindre le moniteur (10)
- d'autre part alimente par les lignes DBM-EDB (00—05) les entrées 1-1, 1—2, 1—3, 1—4, 1—5 et 1—6 du groupe 256 d'amplificateurs inverseurs. Les sorties 2-1, 2-2, 2—3, 2—4, 2—5 et 2—6 de ces amplificateurs inverseurs alimentent l'omibus (258) EDB* (00—05). Cet omnibus attaque en parallèle les entrées 6 des 5 registres (238), (239), (240), (241) et (242) qui sont représentés sur la figure 24.

En fonction lecture, c'est-à-dire quand le signal RDCD* sélectionne le multiplexeur (236), les registres (238), (239), (240), (241) et (242) voient leurs entrées 6 bloquées et l'omnibus DBM-EDB (00—07) transmet les signaux uniquement vers le moniteur (10).

En fonction écriture, les choses se passent différemment comme il va être vu maintenant à l'occasion de la description de la figure 24.

Quand le moniteur (10) réclame un cycle écriture dans le module (74) d'interface d'exploitation AM904, il effectue les opérations suivantes:

- il adresse le module (74) d'interface d'exploitation AM904 au moyen des signaux d'adresse PMC-ADR* (09, 10, 15)
- il adresse un des registres (238), (239), (240), (241) ou (242) au moyen des signaux d'adresse PMC-ADR* (00—02)
- il commande un cycle écriture au moyen du signal PMC MEMW*.

Quand ces conditions sont remplies, le bloc (237) (figure 14) de sélection des circuits et de définition des fonctions alimentent la ligne WREGX correspondant au registre sélectionné pour l'écriture. Ce signal WREGX appliqué sur la borne 8 du registre provoque le transfert du contenu de l'omnibus (258) EDB* (00—05) dans le registre. A la suite de cette opération, le contenu du registre a été modifié et les signaux EDB* (00—05) qui se trouvaient placés à l'entrée 6 du registre sont maintenant mémorisés dans le registre. Du même coup, ces signaux sont reproduits respectivement sur les sorties 0, 1, 2, 3, 4, 5 du registre.

Il est à noter que les registres comportent une autre entrée de commande portant la référence 7. Cette entrée est une entrée de commande de remise à zéro. Quand le moniteur (10) désire effectuer une remise à zéro, il envoie un signal PMC-REST 20 au bloc (237) de sélection des circuits et de définition des fonctions qui envoie un signal REST* à l'intérieur du module (74) d'interface d'exploitation. Ce signal REST* effectue la remise à zéro de tous les circuits qu'il commande.

La figure 24 est une représentation partielle schématique de la figure 14. Sur cette figure 24 est représentée la moitié droite de la figure 14.

Comme il a été expliqué à l'occasion de la description de la figure 23, les signaux de sortie des amplificateurs-inverseurs (256) sont placés sur l'omnibus (258) EDB* (00—05). Cet omnibus (258) EDB* (00—05) se trouve sur l'extrémité gauche de la figure 24. Cet omnibus (258-EDB* (00—05) alimente en parallèle les entrées 6 des 5 registres (238), (239), (240), (241) et (242). Pour qu'il y ait écriture dans un des registres (238), (239), (240), (241) et (242) il faut, comme il a été expliqué précédemment, que le moniteur (10) ait:

- demandé un cycle écriture par le signal PMC-MEMW*
- sélectionné le module (74) d'interface d'exploitation par les signaux d'adresse PMC-ADR* (09, 10,15)
- désigné un des registres (238), (239), (240), (241) ou (242) par les signaux d'adresse PMC-ADR* (00—02).

Quand ces conditions sont remplies, le registre désigné est sélectionné par un signal WREGX placé sur son entrée 8: le registre (238) est sélectionné par le signal WREG0, le registre (239) est sélectionné par le signal WREG1, le registre (240) est sélectionné par le signal WREG2, le registre (241) est sélectionné par le signal WREG3, le registre (242) est sélectionné par le signal WREG4.

Quand un registre est sélectionné, le contenu de l'omnibus EDB* (00—05) est transféré dans le registre sélectionné. Ce contenu restera mémorisé dans le registre sélectionné jusqu'à ce qu'une autre opération vienne y apporter un nouveau contenu ou jusqu'à ce qu'un signal de remise à zéro REST* soit appliqué sur l'entrée 7 du registre.

Le registre (238) situé en haut à gauche de la figure 24 fournit à sa sortie les signaux REG00, REG01, REG02, REG03, REG04 et REG05. Ces signaux correspondent un à un aux signaux qui ont été chargés à partir de l'omnibus EDB* (00—05): REG00 correspond à EDB*00, REG01 à EDB*01, . . ., REG05 à EDB*05.

Les signaux REG (00—05) alimentent les entrées du bloc (235) d'interface où ils servent à produire, comme indiqué sur la figure 22, les signaux OUT (70—75).

Par ailleurs, les signaux REG (02—05) alimentent le bloc (243) amplificateur de sortie. A l'intérieur de ce bloc (243) amplificateur de sortie les triangles représentent des amplificateurs inverseurs et les carrés des filtres électriques.

Le signal REG02 traverse deux amplificateurs inverseurs et un filtre électrique avant de produire le signal (261) de synchronisation ENO. Ce signal (261) de synchronisation ENO est le signal de synchronisation dont il a été fait état à l'occasion de la description des figures 10, 11 et 12. Ce signal (261) de synchronisation ENO est émis par le système d'alimentation vers le système d'alimentation suivant dans la guirlande afin de provoquer la mise en route de ce dit système d'alimentation suivant.

Il apparaît ici que si un système d'alimentation est arrêté, il devient nécessaire de prévoir un moyen qui court-circuite le système d'alimentation arrêté dans la guirlande sans quoi le système arrêté recevra bien le signal des synchronisation ENI mais ne réemettra jamais de signal ENO. C'est pour cette raison que le relais (259) a été placé dans le module (74) d'interface d'exploitation AM904. Quand le système d'alimentation est en marche, ce relais est excité et ses contacts sont ouverts. Dans ces conditions, le signal (260) de synchronisation ENI va alimenter une entrée du bloc (235) d'interface comme indiqué sur la figure 15. Ensuite, le système d'alimentation élaborera ce signal en vue de la production ultérieure du signal de synchronisation ENO. Par contre, si le système d'alimentation est à l'arrêt, le relais (259) est désexcité et les contacts sont fermés. Le signal (260) de synchronisation ENI est alors transmis directement sur le fil (294) et de là produit le signal (261) de synchronisation ENO.

Le relais (259) a donc permis de court-circuiter le système d'alimentation et le cheminement du signal de synchronisation ENI/ENO dans la guirlande n'a pas été interrompu.

Le signal REG03 traverse deux amplificateurs inverseurs et un filtre pour produire le signal (262) d'erreur de séquence SEQUERR. Ce signal d'erreur de séquence SEQUERR est généré par le moniteur (10) quand il constate que certaines opérations dépassent un temps déterminé. Mais il peut se produire qu'une défaillance affecte le système d'alimentation de sortie et que le signal (262) d'erreur de séquence ne puisse pas d'établir faute d'une tension (9) d'alimentation de servitude suffisante.

Pour pallier cette situation, la console (48) possède, comme il a été dit lors de la description de la console (48), une tension auxiliaire AUXVOL à impédance de sortie relativement forte. Cette tension (263) auxiliaire AUXVOL est appliquée à l'entrée du dernier amplificateur inverseur situé sur le parcours du signal REG03. Si la tension (222) d'alimentation de servitude du système d'alimentation est défaillante, la tension (263) auxiliaire AUXVOL va forcer l'entrée de ce dernier amplificateur inverseur pour imposer un signal d'erreur de séquence SEQUERR. Par ce moyen, une défaillance de la tension (222) d'alimentation de servitude sera signalée à la console (48) comme une erreur de séquence.

Le signal REG04 traverse un amplificateur inverseur pour fournir à la console (48) le signal (264) de défaut système SYSFLT qui est produit par le moniteur (10) quand il détecte un défaut de fonctionnement du système d'alimentation.

Le signal REG05 traverse un amplificateur inverseur pour fournir à la console (48) le signal (265) de défaut thermique FANFLT qui est produit par le moniteur (10) quand il détecte au moins un des défauts thermiques COOLF1, COOLF2 ou COOLF3.

Le registre (239) produit les signaux REG10, REG11, REG12, REG13 et REG14. Ces signaux correspondent un à un aux signaux qui ont été changés à partir de l'omnibus EDB* (00—05): REG10 correspond à EDB*00, REG11 à EDB01*, . . ., REG14 à EDB*04.

Les signaux REG (10—14) alimentent l'entrée du bloc (235) d'interface où ils servent à produire, comme indiqué sur la figure 21, les signaux OUT (60—64).

Par ailleurs, les signaux REG (10—14) alimentent le bloc (244) amplificateur de sortie. A l'intérieur de ce bloc (244) amplificateur de sortie, les triangles représentent des amplificateurs-inverseurs.

Le signal REG10 traverse deux amplificateurs avant de produire le signal (266) COMREL. Ce signal (266) COMREL est le signal de commande du contacteur de mise sous tension de l'alimentation primaire (266).

Le signal REG11 traverse un amplificateur inverseur et produit le signal (267) DCREST. Ce signal est un signal de remise à zéro qui permet au moniteur (10) de remettre à zéro les circuits commandés.

Le signal REG12 traverse deux amplificateurs inverseurs et fournit le signal (268) RELCON. Ce signal (268) RELCON indique que le contacteur de mise sous tension de l'alimentation primaire (226) a bien répondu au signal (266) de commande: c'est un compte-rendu de fermeture émis par le contacteur.

Les signaux REG13 et REG14 traversent chacun un amplificateur inverseur avant de produire respectivement les signaux (269) BLDCON1 et (270) BLDCON2. Ces signaux sont des signaux de commande de mise en service de résistances ballasts situées dans l'alimentation primaire (226).

Le signal (271) SEQCOMP est le signal qui indique que la séquence de mise en route d'un ensemble de système d'alimentation inclus dans une guirlande SPCI est terminée. Ce signal (271) SEQCOMP n'est autre que le signal de synchronisation de sortie ENO émis par le dernier système d'alimentation situé sur la guirlande SPCI. En effet, le dernier système d'alimentation de la chaîne émet un signal de synchronisation de sortie ENO qui n'est attendu par aucun système d'alimentation mais qui par contre indique que tous les systèmes d'alimentation en marche ont effectué leur mise sous tension. Cette information est utile pour l'opérateur ou le technicien qui a lancé l'opération de mise tous tension, le signal de synchronisation de sortie ENO du dernier système d'alimentation de la chaîne est donc, au niveau de ce système, raccordé à la borne 8 du connecteur Y01 par un strap sur le connecteur Y01. Le signal de synchronisation de sortie ENO est retransmis par la borne 8 du connecteur Y02 vers l'avant dernier système d'alimentation de la guirlande SPCI. A son tour, l'avant dernier système d'alimentation reçoit le signal de synchronisation de sortie ENO qui est devenu le signal SEQCOMP sur la borne 8 du connecteur Y01 de son module d'interface d'exploitation AM904. Ce signal SEQCOMP est retransmis par la borne 8 du connecteur Y02 du module d'interface d'exploitation AM904 de l'avant dernier système d'alimentation vers l'avant-avant dernier système d'alimentation sur la borne 8 du connecteur Y01 de son module d'interface d'exploitation AM904. Et ainsi de suite, jusqu'au premier système d'alimentation qui envoie, à partir de la borne 8 du connecteur Y02 de son module d'interface d'exploitation AM904, le signal SEQCOMP vers la console (48). L'arrivé du signal SEQCOMP sur la console (48) signifie pour l'opérateur ou le technicien de maintenance que la séquence de mise sous tension de l'ensemble des systèmes d'alimentation a abouti.

Les signaux (273) CRERROR et (274) CRERROR sont des signaux d'interverrouillage permettant le contrôle du bon branchement de tous les connecteurs (Y01) et (Y02) des systèmes d'alimentation rattachés à la guirlande SPCI. Pour cela, la console (48) émet un signal CRERROR qui arrive sur la borne 4 du connecteur Y01 du module d'interface AM904 du premier système d'alimentation de la guirlande. Ce signal est directement raccordé à la borne 4 du connecteur Y02 du module d'interface d'exploitation AM904. Cette borne 4 du connecteur Y02 est raccordée par le câble d'interface SPCI à l'entrée 4 du connecteur Y01 du module d'interface d'exploitation AM904 du second système d'exploitation qui à son tour retransmet le signal CRERROR au troisième système d'exploitation. Et ainsi de suite jusqu'au dernier système d'alimentation qui transmet le signal CRERROR vers la console (48). L'arrivée de ce signal dans la console (48) permet, puisque le signal a transité à travers tous les connecteurs Y01 et Y02 des modules d'interface d'exploitation AM904, d'être certain que tous les connecteurs Y01 et Y02 concernés sont correctement enfichés.

En résumé, les signaux (260) à (274) sont des signaux qui appartiennent à l'interface SPCI. Ces signaux servent au contrôle, par la console (48), du fonctionnement du ou des systèmes d'alimentation qui lui sont raccordés.

Les signaux (275) à (293) sont les signaux de commande de visualisation du panneau de service (11) du système d'alimentation. Ces signaux sont définis sur le tableau de la figure 26.

Le registre (240) produit les signaux POUT* (00—05) qui sont en correspondance directe avec les signaux qui ont été chargés sur l'entrée 6 à partir de l'omnibus EDB* (00-05): POUT*00 correspond à EDB*00, . . ., POUT*05 à EDB*05.

Le bloc (245) amplificateur-inverseur contient les 6 amplificateurs-inverseurs nécessaires pour amplifier, en les inversant, les signaux POUT* (00—05) afin de permettre l'attaque directe par les signaux POUT (00—05) des visualisations du panneau de service (11).

Le registre (241) produit les signaux POUT* (10—15) qui sont en correspondance directe avec les signaux qui ont été chargés sur l'entrée 6 à partir de l'omnibus EDB* (00—05): POUT*10 correspond à EDB*00, . . ., POUT*15 à EDB*05.

Le bloc (246) amplificateur inverseur contient les 6 amplificateurs-inverseurs nécessaires pour amplifier, en les inversant, les signaux POUT* (10—15) afin de permettre l'attaque directe par les signaux POUT (10—15) des visualisations du panneau de service (11).

Le registre (242) produit les signaux POUT* (20—25) qui sont en correspondance directe avec les signaux qui ont été chargés sur l'entrée 6 à partir de l'omnibus EDB* (00—05) : POUT*20 correspond à EDB00, . . .; POUT*25 à EDB*05.

Le bloc (247) amplificateur inverseur contient les 6 amplificateurs-inverseurs nécessaires pour amplifier, en les inversant, les signaux POUT* (20—25) afin de permettre l'attaque directe par les signaux POUT (20—25) des visualisations du panneau de service (11).

Enfin, le signal (295) BPC-DTWO qui est un signal de suspension de cycle (TRAP) émis par le moniteur (10) est transmis par la liaison (250) à l'entrée de l'amplificateur inverseur (249). La sortie de cet amplificateur inverseur (249) produit sur la liaison (251) le signal POUT30 qui va attaquer la visualisation (161-1) »MONITEUR« du panneau de service (11).

La figure 25 est une représentation détaillée des circuits de bloc (48) de traitement des changements de régime de fonctionnement. Le bloc (237) de sélection des circuits et de définition des fonctions n'est pas détaillé car il relève des techniques courantes de l'informatique: pour mémoire, il est facilement réalisé à partir d'un circuit intégré (296) 75LS138, ce qui est le cas dans la réalisation préférée de l'invention, auquel il faut ajouter 2 portes ET (297) et (298) à sortie inversée et 2 amplificateurs inverseurs (299) et (300). Le schéma montre bien que la porte ET (297) à sortie inversée constitue l'organe sélecteur du module (74) d'interface d'exploitation AM904. Quand le module (74) d'interface d'exploitation AM904 est sélectionné, il y a apparition du signal CS* (abréviation de Chip Select). Par cela, il faut entendre que le signal CS* est actif auf niveau zéro puisque ce signal est suivi d'une étoile (*) pour indiquer qu'il est inversé. Ce signal CS* viendra d'une part attaquer l'amplificateur (298) inverseur dont la sortie devient haute et d'autre part valider le circuit (296) intégré 74LS138.

Dans ce schéma les signaux circulent de la gauche vers la droite et par conséquent, les signaux d'entrée se trouvait sur la gauche de la figure 25. Les signaux d'entrée appartiennent à 3 catégories:

- les signaux de données ou simplement DONNEES: OUT17 (COMREL), OUT14 (COOLF1), OUT13 (COOLF2), OUT12 (COOLF3), OUT01 (PREGUV), OUT00 (PREGOV), OUT07 (ENI), OUT05 (LOGON-10) et OUT06 (LOGOFF-10)
- les signaux d'adressage ou simplement ADRESSES: ADR*00, ADR*01, ADR*02, PMC-ADR09, PMC-ADR10, PMC-ADR15
- les signaux de commande ou simplement COMMANDES: PMC-MEMR*, PMC-MEMW*, PMC-REST-20.

Le rôle des signaux d'adressage et des signaux de commande a été vu par ailleurs ils ne seront pas revus dans ce qui suit à l'exception des signaux de remise à zéro qui jouent un rôle particulier dans le bloc (248) de traitement de changement de régime de fonctionnement.

Dans les données, il faut considérer deux familles:

- les données concernant un changement de régime de fonctionnement d'origine externe, c'est-à-dire un changement de régime volontaire et normal demandé par l'opérateur on le technicien de maintenance. C'est le cas des données OUT07 (ENI), OUT06 (LOGOFF-10) et OUT05 (LOGON-10)
- les données concernant un changement de régime de fonctionnement d'origine interne, c'est-à-dire un changement de régime occasionné par la détection d'un défaut ou d'un changement d'état interne par le moniteur (10). C'est le cas de données OUT17 (COMREL1), OUT14 (COOLF1), OUT13 (COOLF2), OUT12 (COOLF3), OUT01 (PREGUV), OUT00 (PREGOV).

A la partie supérieure de la figure 25 se trouvent les circuits gérant les données de la 2ème famille c'est-à-dire les données concernant les changements de régime d'origine interne. Ces données concernant les changement de régime d'origine interne viennent attaquer l'entrée de la porte (305) ET à sortie inversée. La sortie INTR3 de cette porte (305) ET à sortie inversée est haute si au moins une de ses entrées est basse: c'est-à-dire qu'il suffit qu'un seul des signaux de changement de régime d'origine interne soit bas pour que le signal INTR3 devienne haut. Les signaux ou données de changement de régime d'origine interne sont:

— le signal COMREL qui est un signal de compte rendu de fermeture du contacteur de l'alimentation primaire (226). Ce signal COMREL traverse l'amplificateur (301) inverseur avant d'attaquer la porte (395) ET à sortie inversée. Par conséquent, que le contacteur (223) de l'alimentation primaire (226) se ferme, mettant cette alimentation primaire (226) sous tension, le signal COMREL devient haut et la sortie de l'amplificateur (301) inverseur devient basse. La sortie basse de l'amplificateur (305) inverseur provoque la montée du signal d'interruption INTR3: si aucun autre signal n'a contribué à la moitié du signal d'interruption INTR3, ce signal d'interruption INTR3 signifie que l'alimentation primaire (18) est sous tension et qu'une intervention du moniteur (10) est nécessaire pour poursuivre la mise sous tension du système d'alimentation.
— le signal COOLF1 attaque directement l'amplificateur (305) inverseur. Ce signal inactif indique que les conditions d'échauffement d'une zone déterminée du système d'alimentation sont normales. Il est produit par les circuits (224) de contrôle thermique. Ce signal devient bas si ces conditions d'échauffement deviennent anormales. Ce signal COOLF1 bas provoque la montée de la sortie INTR3 de l'amplificateur (305) inverseur. Si cette montée du signal d'interruption INTR3 est due uniquement à la chute du signal COOLF1 cela signifie qu'un échauffement anormal s'est produit dans la zone surveillée par le signal COOLF1. Dans ce cas, le signal d'interruption INTR3 entraînera une intervention du moniteur (10) pour faire cesser cette élévation anormale de température.
— les signaux COOLF2 et COOLF3 jouent des rôles analoques à COOLF1 mais pour 2 autres zones du système d'alimentation. Ils indiquent pour leur zone respective l'apparition d'un phénomène de surélévation anormale de la température.
— le signal PREGUV (abréviation de Prérégulation Undervoltage) est un signal de surveillance émanant de l'alimentation primaire (226). L'alimentation primaire (226) est une alimentation dont un des rôles est de fournir une ou des tensions prérégulées aux sources du système d'alimentation. Quand le signal PREGUV est haut, cela signifie que la ou les tensions régulées fournies par l'alimentation primaire (226) sont inférieures à une ou des limites inférieures déterminées. Dans ces conditions, le fonctionnement correct du système d'alimentation est compromis. Le signal PREGUV traverse l'amplificateur (302) inverseur et c'est donc un signal bas qui est appliqué à l'entrée de la porte (305) ET à sortie inversée quand le signal PREGUV est haut. Ce signal bas provoque l'apparition du signal d'interruption INTR3. Si le signal PREGUV est le seul à provoquer l'apparition est demandée au moniteur (10) à la suite d'une ou de sous-tension survenues dans l'alimentation primaire (226)
— le signal PREGOV (abréviation de Prérégulation Overvoltage) est un autre signal de surveillance émanant de l'alimentation primaire (226). A l'inverse du signal PREGUV qui vient d'être décrit, le signal PREGOV caractérise le fait que la ou les tensions de sortie de l'alimentation primaire (226) dépassent une ou des limites supérieures de tension. Cette situation est elle aussi, mais pour des raisons différentes, préjudiciables au bon fonctionnement du système d'alimentation. L'apparition d'une ou de surtensions provoque la montée du signal PREGOV. Ce signal PREGOV traverse l'amplificateur (303) inverseur avant d'attaquer la porte (305) ET à sortie inversée et par conséquent, un signal PREGOV haut entraîne la montée du signal d'interruption INTR3. Dans ce cas et sous réserve que le signal PREGOV soit le seul à entraîner la montée du signal INTR2, ce signal d'interruption INTR3 signifie que l'intervention du moniteur (10) est sollicité par une ou des surtensions au niveau de l'alimentation primaire (226).

Il résulte de ce qui vient d'être dit et du mode de fonctionnement même de la porte (305) à sortie inversée que le signal INTR3 d'interruption signifie qu'une intervention du moniteur (10) est demandée à la suite d'au moins un des signaux: COMREL, COOLF1, COOLF2, COOLF3, PREGUV et PREGOV. En somme, la porte (305) ET à sortie inversée effectue le regroupement des requêtes émises dans le cadre des demandes de changement de régime de fonctionnement d'origine interne.

Comme expliqué ultérieurement quand la demande d'intervention au moyen du signal d'interruption INTR3 est transmise au moniteur (10), il appartient au moniteur (10) de venir rechercher le ou les signaux qui ont réclamé son intervention. Comme il sera expliqué plus loin cette intervention est provoquée par le signal MCR-INTR*.

Le signal d'interruption INTR3 est appliqué à l'entrée de la porte (306) ET à sortie inversée. La porte (306) ET à sortie inversée possède une autre entrée attaquée par la sortie REG01 du registre (238). Cette porte REG01 du registre (238) est aussi appelée MSKIT2 (abréviation de masque de l'interruption 2). Cette sortie REG01 du registre (238) ou MSKIT2 est mise en condition sur l'entrée de la porte (306) ET à sortie inversée: le signal d'interruption INTR3 ne pourra traverser la porte (306) ET à sortie inversée que si le signal MSKIT2 est haut. Le signal MSKIT2 est donc un MASQUE POUR LE SIGNAL D'INTERRUPTION INTR3. Le moniteur (10) peut donc à volenté occulter ou autoriser la transmission du signal d'interruption INTR3 en positionnant la sortie REG01 du registre (238) soit sur 0 pour l'occultation soit sur 1 pour l'autorisation. Cette facilité est utilisée, comme il est expliqué plus loin, pendant les périodes de dépannage où les services sont utilisés en mode d'INHIBITION. Cette facilité est également utilisée pendant certaines périodes transitoires où des aléas fugitifs peuvent se produire sur les lignes de défaut comme par exemple lors des mises sous-tension et lors des mises hors tension.

Si le signal de masque MSKITZ est haut, l'apparition du signal INTR3 donne un signal INTR2* (bas puisqu'il s'agit d'un signal étoilé) à la sortie de la porte (306) ET à sortie inversée. Ce signal INTR2* est distribué en 2 endroits:

- d'une part, il est envoyé à l'entrée 3-1 du multiplexeur (236) comme il est indiqué sur la figure 17 où il est désigné également sous le nom de OUT21
- d'autre part, il est envoyé sur l'une des entrées de la porte (307) ET à sortie inversée. Cette porte (307) ET à sortie inversée effectue le regroupement des 2 familles de demande d'interruption: la demande d'interruption INTR2* émise par des signaux de demande de changement de régime de fonctionnement d'origine interne la demande d'interruption INTR1* émise par des signaux de demande de changement de régime de fonctionnement d'origine externe.

Avant d'aller plus avant dans le cheminement du signal INTR2*, il est bon d'examiner comment le signal de demande d'interruption INTR1* est engendré.

Il a été vu précédemment que lorsque l'opérateur ou le technicien de maintenance demande la mise sous tension du ou des systèmes d'alimentation. A cette demande était signalée au moniteur (10) par l'apparition du signal LOGON et que la mise sous tension proprement dite est démarrée par le signal de synchronisation ENI. A l'inverse, quand c'est une demande de mise hors tension qui est demandée, la demande est signalée au moniteur par l'apparition du signal LOGOFF et la mise hors tension est mise en route par l'apparition du signal de synchronisation ENI.

Dans la réalisation préférée de l'invention, les 3 signaux ENI, LOGON et LOGOFF ou tout au moins leurs signaux dérivés ENI*, LOGON-10 et LOGOFF-10 sont chacun mémorisé dans un circuit bistable: ENI* dans le circuit (309) bistable AIMF (Abréviation de Autorisation d'Inversion du Mode de Fonctionnement), LOGON dans le circuit (311) bistable MODON (abréviation de Mode ON) et LOGOFF dans le circuit (315) bistable MODOFF (abréviation de Mode OFF).

Il est nécessaire que ces 3 circuits bistables (309), (311) et (315) puissent être remis à zéro à volonté par le moniteur (10). Ces opérations d'initialisation sont permises par le bloc (237) de sélection des circuits et de définition des fonctions. En effet, il a été expliqué que dans ce bloc (237) de sélection des circuits et de définition des fonctions se trouve un circuit (296) intégré de type 74LS138. Ce circuit (296) intégré 74LS138 est attaqué par les signaux:

- PMC-MEMW* qui est le signal de demande de cycle écriture en provenance du moniteur (10)
- CS* qui est le signal de sélection du module (74) d'interface d'exploitation AM904
- ADR00, ADR01*, ADR02* qui sont les 3 signaux d'adresse de poids faibles de l'omnibus d'adressage du moniteur (10).

Quand le moniteur demande un cycle d'écriture par le signal MEMW* au module (74) d'interface d'exploitation AM904 sélectionné par CS*, le circuits (296) intégré 74LS138 qui est alimenté par 3 lignes d'adresses ADR00*, ADR01* et ADR02* peut sélectionner 8 adresses.

Il a été vu déjà 4 adresses sélectionnées: WREG0*, WREG1*, WREG2* et WREG3*. Il reste donc 4 adresses disponibles dont 2 sont utilisées précisément pour la remise à zéro:

- WRAZ1* est utilisé pour la remise à zéro du circuit (309) bistable AIMF
- WRAZ2* est utilisé pour la remise à zéro des circuits bistables (311) MODON et (315) MODOFF.

Quand le moniteur (10) veut remettre à zéro la bascule (309) AIMF, il sélectionne le module (74) d'interface d'exploitation AM904 au moyen des signaux d'adresse PMC-ADR (09, 10, 15), il demande un cycle d'écriture par le signal PMC-MEMW* puis il place en ADR* (00—02) l'adresse correspondant au signal WRAZ1*.

Dans ces conditions, le signal WRAZ1* sera bas puisqu'il est étoilé. Ce signal bas applique à l'entrée de la porte (313) ET à sortie inversée produit un signal haut à l'entrée de l'amplificateur (314) inverseur. La sortie basse de l'amplificateur (314) inverseur force à zéro la bascule (309) AIMF à travers son entrée de forçage à zéro.

Quand le moniteur (10) veut remettre à zéro les bascules (311) MODON et (315) MODOFF, il utilise un procédé similaire à l'exception près que l'adresse placée en ADR* (00—02) correspond au signal WRAZ2*. Quand ce signal WRAZ2* est produit, c'est dire qu'il est est bas, un niveau bas est appliqué à l'entrée de la porte (316) ET à sortie inversée. La sortie de cette porte (316) ET à sortie inversée qui est haute est appliquée à l'entrée de l'amplificateur (317) inverseur. La sortie de l'amplificateur (317) qui est basse est appliquée sur les entrées de remise à zéro du bistable (311) MODON et du bistable (315) MODOFF.

Pour le moniteur (10), il existe un autre moyen de forçage à zéro l'émission du signal de remise à zéro générale PMC-REST-20.

Ce signal de remise à zéro générale PMC-REST-20 est amplifiée par l'amplificateur (318) inverseur. Le signal résultant REST* est appliqué:

- à l'entrée de la porte (313) ET à sortie inversée où il a le même résultat que le signal de remise à zéro WRAZ1*, c'est-à-dire la remise à zéro du bistable (309) AIMF
- à l'entrée de la porte (316) ET à sortie inversée où il a le même résultat que le signal de remise à zéro WRAZ0* c'est-à-dire la remise à zéro des bistables (311) MODON et (315) MODOFF
- enfin, il est transmis aux entrées de remise à zéro (des registres (238), (239), (240), (241) et (242) de la figure 24.

Ce signal de remise à zéro générale REST* effectue la remise à zéro générale des registres et bascules du module (74) d'interface d'exploitation.

Les circuits de remise à zéro étant vus, il est examiné maintenant le déroulement d'une séquence de mise sous tension du système d'alimentation. Il est donc supposé que le système d'alimentation est hors tension, c'est-à-dire que:

- le bistable (311) MODON est bas
- le bistable (315) MODOFF est haut
- le bistable (309) AIMF est:
  - bas si la mise hors tension ou sous tension du système d'alimentation a été prise en compte par le moniteur (10) puisque le moniteur (10) effectue cette remise à zéro par le signal WRAZ1* dès qu'il a pris en compte l'interruption INTR1* de changement de mode par demande externe
  - haut parcequ'il vient de recevoir un signal de synchronisation ENI associé au changement de mode.

Il a été expliqué à l'occasion de la description de la figure 12 comment est faite la succession chronologique des signaux LOGON, LOGOFF et ENI.

La prise de décision par l'opérateur ou le technicien de maintenance de faire passer le système d'alimentation du mode de fonctionnement hors tension au mode de fonctionnement sous tension se traduit par l'émisson d'un signal logique LOGON suivi au bout d'un certain temps d'un signal de synchronisation ENI.

Le signal LOGON, comme indiqué sur la figure 15, est amplifié pour donner le signal OUT05 qui est aussi appelé LOGON-10. Ce signal LOGON-10 est appliqué:

- d'une part à l'entrée du circuit (311) bistable MODON qui se positionne à un mémorisant ainsi la demande de mise sous tension qui vient d'être faite
- d'autre part, à l'entrée de la porte (312) ET à sortie inversée. Ce signal LOGON qui est haut se trouve mis en condition à l'entrée de cette porte (312) ET à sortie inversée avec le signal LOGOFF qui est, lui aussi, haut puisque le système est effectivement hors tension à la suite d'une demande antérieure.

Les deux signaux LOGON et LOGOFF étant tous les deux hauts, la sortie de la porte (312) ET à sortie inversée sera basse. Ce signal bas est appliqué à une entrée de la porte (313) ET à sortie inversée. La porte (313) ET à sortie inversée émet donc un signal haut qui est inversé dans l'amplificateur (314) inverseur. Le signal de sortie de l'amplificateur (314) inverseur qui est bas attaque l'entrée de remise à zéro du circuit (309) bistable AIMF. Le circuit (309) bistable AIMF so trouve donc ramené à zéro d'autorité si il était resté en position haute par suite de la non satisfaction du signal ENI précédent. Le circuit (309) bistable AIMF sera à nouveau positionné à 1 à l'arrivée du signal de synchronisation ENI qui traversant l'amplificateur (304) inverseur viendra par le signal ENI* faire basculer le circuit (309) bistable AIMF. La sortie haute du bistable (309) AIMF produit le signal CDIMF (abréviation de commande d'inversion de mode de fonctionnement). Ce signal CDIMF est mis en condition à l'entrée de la porte (310) ET à sortie inversée avec le signal REG00 émis par le registre 238. Ce signal REG00 appelé aussi MSKIT1 (abréviation de Masque de l'interruption 1) est un signal de masquage permettant au moniteur (10) de pouvoir à volonté soit occulter l'émission du signal d'interruption INTR1* en donnant une valeur basse à REG00 soit autoriser l'émission du signal d'interruption INTR1* en donnant une valeur haute à REG00. Dans cette deuxième hypothèse, le signal COMIF produit un signal bas INTR1* à la sortie de la porte (310) ET à sortie inversée. Ce signal INTR1* prend 2 directions:

- d'une part, il attaque l'entrée OUT20 multiplexeur (236) permettant ainsi au moniteur (10) de reconnaître cette interruption INTR1* par adressage du multiplexeur et par demande d'un cycle lecture.
- d'autre part, il attaque une entrée de la porte (307) ET à sortie inversée.

Cette porte (307) ET à sortie inversée est celle qui a été rencontrée lors de la description du signal INTR2*. En fait, cette porte (307) ET à sortie inversée fait la conjonction des 2 signaux de demande d'interruption INTR1* et INTR2*. Si l'un au moins de ces 2 signaux INTR1* ou INTR2* est bas, le signal INTR5 à la sortie de la porte (307) ET à sortie inversée est haut. Ce signal INTR5 haut est inversé dans l'amplificateur (308) inverseur pour donner le signal d'interruption MCR-INT* qui est transmis par l'omnibus de commande et de contrôle jusqu'au moniteur (10).

En résumé, les 2 signaux de demande d'interruption INTR1* et INTR2* sont sommés pour créer un signal MCR-INT* qui informe le moniteur (10) de la présence d'au moins un d'eux. Il appartient au moniteur (10) ainsi alerté de venir reconnaître qu'elle est l'origine de cette demande globale d'interruption MCR-INT*. Pour cela le moniteur (10) doit venir adresser le multiplexeur (236) et interroger des entrées OUT20 et OUT21: si l'entrée OUT20 est basse, cela signifie la présence de INTR1* et si l'entrée OUT21 est basse cela signifie la présence de INTR2*. Pour en savoir davantage, le moniteur (10) doit interroger:

— pour les demandes internes:

  OUT17 pour COMREL
  OUT14 pour COOLF1
  OUT13 pour COOLF2
  OUT12 pour COOLF3
  OUT01 pour PREGUV
  OUT00 pour PREGOV

— pour les demandes externes:

  OUT15 pour LOGOFF
  OUT16 pour LOGON

Dans le cas concerné, qui est celui de la mise sous tension, le moniteur (10) informé par MCR-INT* de l'apparition d'une demande d'interruption va rechercher le type d'interruption ayant provoqué cette demande d'interruption MCR-INT*. En supposant pour simplifier que seule la demande de mise sous tension est à l'origine de cette demande d'interruption MCR-INT*, le moniteur va interroger les signaux INTR1* (OUT20) et INTR2 (OUT21). La réponse sera positive pour OUT20 puisqu'il s'agit d'une requête émanant du bistable (309) AIMF.

Le moniteur (10) informé du fait que la demande de fonctionnement est d'origine externe, va chercher à savoir s'il s'agit d'une mise sous tension ou une mise hors tension du système d'alimentation. Pour cela, il interroge OUT16 (SYSTON) et OUT15 (SYSTOFF). La réponse affirmative vient de OUT16 (SYSTON) puisqu'il s'agit d'une demande de mise sous tension. Fort ce cette réponse SYSTON le moniteur (10) entreprend le processus de mise sous tension du système d'alimentation.

Le mécanisme de la mise hors tension du système d'alimentation se déroule d'une façon analoque à celui de la mise sous tension mais à ce moment, la réponse positive vient de OUT15 (SYSTOFF) et le moniteur (10) entreprend alors le processus de mise hors tension du système d'alimentation.

Dans ce qui vient d'être décrit, il a été considéré qu'il n'y avait pas de demande d'interruption d'origine interne INTR2*. Dans l'hypothèse contraire où une telle demande d'interruption d'origine interne INTR2* existe, le moniteur (10) en interrogeant OUT21 (INTR2*) reçoit une réponse OUT21 positive. A ce moment là le moniteur (10) recherche la ou les origines de cette demande d'interruption interne INTR2* en interrogeant OUT19 (COMREL), OUT14 (COOLF1), OUT13 (COOLF2), OUT12 (COOLF3), OUT01 (PREGUV), OUT00 (PREGOV). En fonction des réponses qu'il recevra, le moniteur (10) lancera l'exécution des opérations nécessitée par la présence de ces demandes internes d'interruption.

Dans ce qui précède a été décrit le module (74) d'interface d'exploitation AM904, il va être vu maintenant un nouveau type de module d'interface. Alors que le module (74) d'interface d'exploitation AM904 sert à assurer les échanges entre le moniteur (10) et la console (48) d'exploitation, le panneau de service (11), l'alimentation primaire (18) et l'alimentation de servitude (9) le nouveau type de module sert à assurer les échanges entre moniteur (10) et les différentes sources d'énergie. Ce nouveau type de module est appeler module d'interface aval AM903.

## LE MODULE D'INTERFACE AVAL AM903

Sur la figure 2 sont représentés 4 modules d'interface aval AM903: le module (51), le module (56), le module (61) et le module (66). Bien entendu, ce nombre de module n'est aucunement limitatif et il n'est donné ici qu'à titre d'exemple. Sur cette figure 2, il apparaît clairement que chacun des modules d'interface aval (51), (56), (61) et (66) est divisé en deux parties égales:

— le module (51) comporte les deux parties (51-1) et (51-2)
— le module (56) comporte les deux parties (56-1) et (56-2)
— le module (61) comporte les deux parties (61-1) et (61-2)
— le module (66) comporte les deux parties (66-1) et (66-2).

En fait, cette particularité tient à ce que les dimensions chosisies pour les plaques fonctionnelles permettent de loger deux circuits complets d'interface. Par la suite, le module d'interface aval AM903 sera donc considéré comme constitué de deux demi-modules désignés par un $\frac{1}{2}$ AM903.

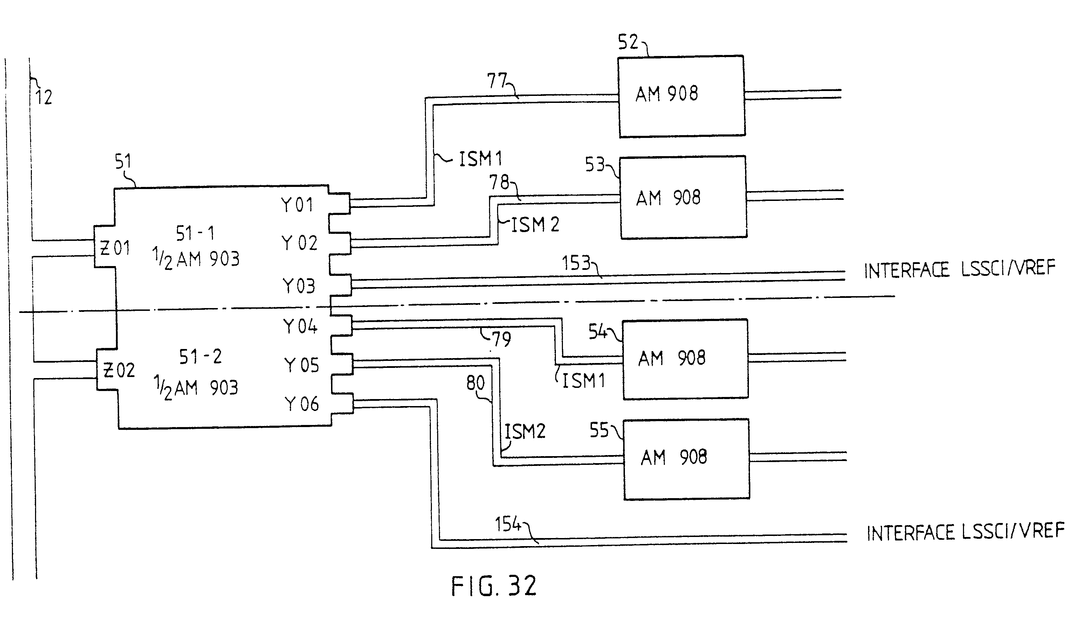

Sur la figure 32 est représenté schématiquement le module (51) d'interface aval AM903. Bien entendu, les modules (56), (61) et (66) sont identiques à ce module (51) aussi,les explications de la présente description limitées au module (51) peuvent être facilement étendues aux autres modules (56), (61) et (66).

Sur cette figure 32 il est montré que le module (51) d'interface aval AM903 est contenu sur une plaque fonctionnelle comportant 8 connecteurs:

- deux connecteurs arrière Z01 et Z02
- six connecteurs avant Y01, Y02, Y03, Y04, Y05 et Y06.

La symétrie du module (51) d'interface aval AM903 est indiquée sur la figure 32 par un trait mixte horizontal. Ce trait mixte horizontal divise le module (51) d'interface aval en deux parties désignées respectivement par un $\frac{1}{2}$ AM903 (51-1) et $\frac{1}{2}$ AM903 (51-2). Le demi module (51-1) comporte le connecteur arrière (Z01) et les trois connecteurs avant (Y01, Y02, Y03) et le demi module (51-2) comporte le connecteur arrière (Z02) et les trois connecteurs avant (Y04, Y05, Y06).

Le demi module (51-1) est raccordé aux organes qui l'entourent de la façon suivante:

- le connecteur (Z01) est raccordé à l'omnibus de pilotage (12),
- le connecteur (Y01) est raccordé par la ligne (77) au module (52) intermédiaire AM908. La ligne (77) est aussi appelée ISM1 (abréviation de INTERFACE SOURCE MONITEUR N° 1),
- le connecteur (Y02) est raccordé par la ligne (78) au module (53) intermédiaire AM908. La ligne (78) est aussi appelée ISM2 (abréviation de INTERFACE SOURCE MONITEUR N° 2),
- le connecteur (Y03) est racordé par la ligne (153) à des circuits de commande et de contrôle situés à l'intérieur de l'ensemble alimenté par les sources d'énergie contrôlées par les deux modules intermédiaires AM908 (52) et (53). Cette ligne (153) est aussi désignée par LSSCI (abréviation de LOGICAL SUB SYSTEM CONTROL INTERFACE).

Cette ligne (153) est optionelle et, par exemple, peut être supprimée si l'ensemble alimenté par les sources d'énergie contrôlées par les deux modules intermédiaire AM908 (52) et (53) reçoivent par ailleurs une ligne analogue. C'est le cas en particulier d'un ensemble alimenté par les sources d'énergie contrôlées par les quatre modules intermédiaire AM908 (52), (53), (54) et (55) puisqu'il existe dans ce cas deux lignes LSSCI: la ligne (153) et la ligne (154). Dans ce cas, une de ces deux lignes (153) ou (154) n'est pas utilisée.

Le demi module (51-2) est similaire au demi module (51-2) et est raccordé:

- par le connecteur (Z02) à l'omnibus de pilotage (12),
- par le connecteur (Y04) et à travers la ligne (79) au module (54) intermédiaire AM908. La ligne (79) est désignée aussi par l'appellation ISM1,
- par le connecteur (Y05) et à travers la ligne (80) au module (55) intermédiaire AM908, la ligne (80) est désignée aussi par l'appellation ISM2,
- par le connecteur (Y06) et à travers la ligne (154) à des circuits de commande et de contrôle situés dans l'ensemble alimenté par les sources d'energie par les deux modules intermédiaires AM908 (54) et (55). Cette ligne (154) est aussi désignée par LSSCI.

De ce qui vient d'être dit, il ressort que la symétrie entre les deux demi modules (51-2) et (51-2) est complète:

- le connecteur ((Z02) joue pour le demi module (51-2) le même rôle que le connecteur (Z01) pour le demi module (51-1),
- le connecteur (Y04) joue pour le demi module (51-2) le même rôle que le connecteur (Y01) pour le demi module (51-1),
- le connecteur (Y05) joue pour le demi module (51-2) le même rôle que le connecteur (Y02) pour le demi module (51-1),
- le connecteur (Y06) joue pour le demi module (51-2) le même rôle que le connecteur (Y03) pour le demi module (51-1).

Cette symétrie s'etend aux broches des connecteurs. Par exemple, la broche (21) du connecteur (Y04) joure pour le demi module (51-2) le même rôle que la broche (21) du connecteur (Y01) pour le demi module (51-1).

Etant donné cette symétrie totale, la description qui suit ne concernera que le demi module (51-1):

l'extension de la description au demi module (51-2) se fera aisément.

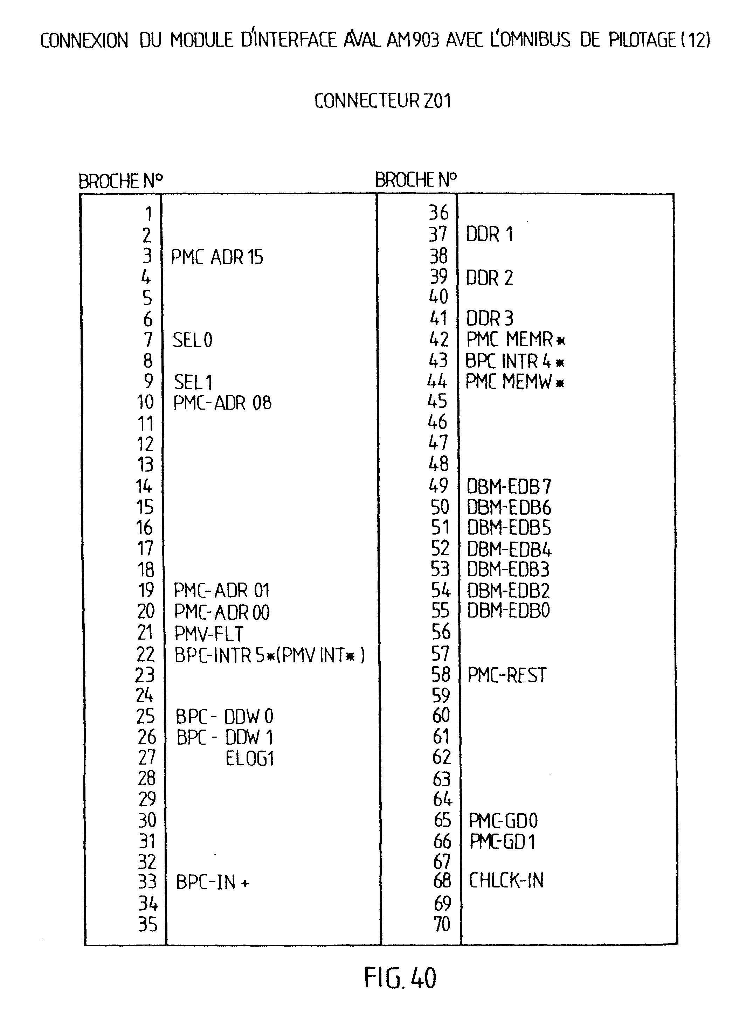

Les signaux de l'omnibus de pilotage (12) qui sont raccordés au connecteur (Z01) du demi module AM903 (51-1) sont définis sur la figure 40. Ce connecteur (Z01) comporte 70 broches numérotées de 1 à 70. Sur la figure 40 en face chaque numéro de broche est le nom logique du signal qui y est raccordé.

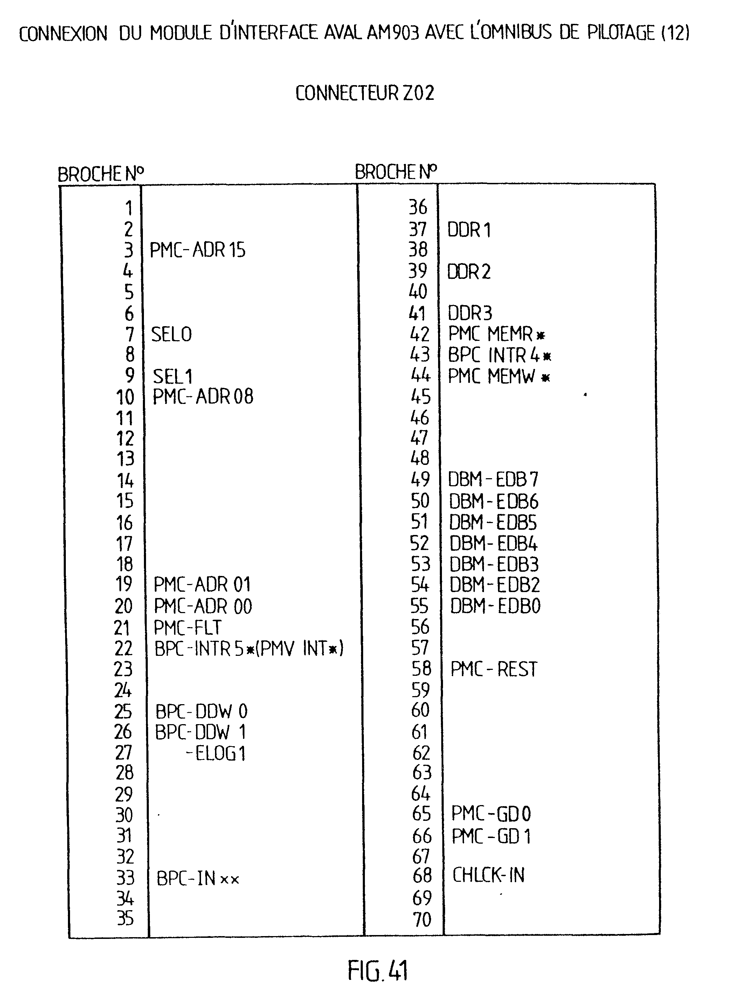

La figure 41 définit les signaux logiques raccordés au connecteur (Z02). Comme il a été dit précédemment, les broches du connecteur (Z02) sont raccordées de façon identiques aux broches du connecteur (Z01).

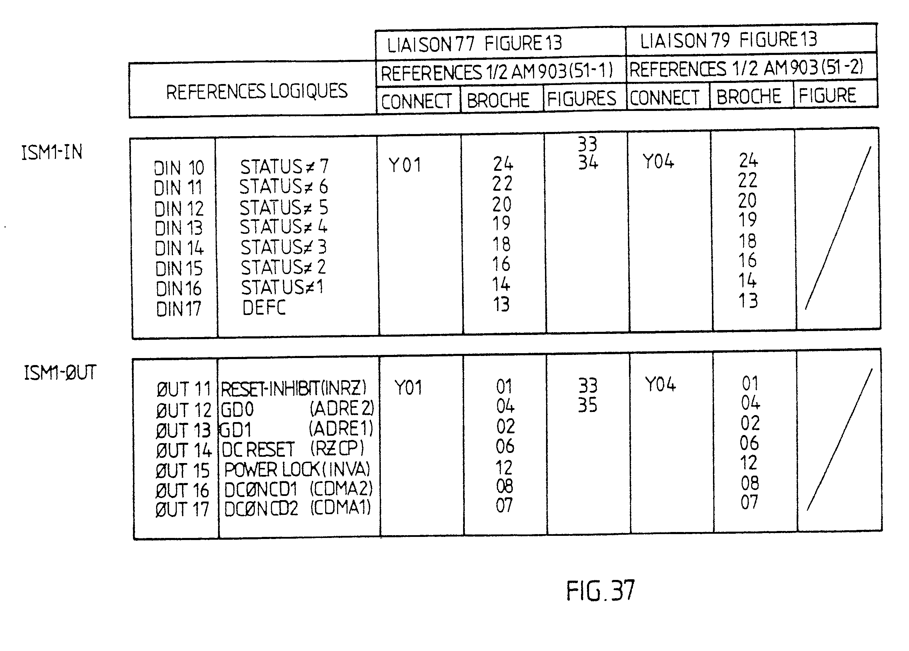

La figure 37 définit les signaux véhiculés dans l'interface ISM1. Pour un module d'interface aval AM903, il existe deux liaisons ISM1. Cela est clairement illustré par les liaisons (77) et (79) de la figure 37. La liaison ISM1 (77) véhicule les signaux concernant le demi module AM903 (51-1) et la liaison ISM1 (79) véhicule les signaux concernant le demi module AM903 (51-2). Le tableau de la figure 37 est divisé en deux parties dans le sens horizontal: la partie supérieure désignée par l'appellation ISM1-IN concerne les signaux d'entrée des liaisons (77) et (79) c'est-à-dire les signaux émis par les sources en direction du moniteur (10). La partie inférieure désignée par l'appellation ISM1-OUT concerne les signaux de sortie des liaisons (77) et (79) c'est-à-dire les signaux émis par le moniteur (10) en direction des sources.

Dans le sens vertical, le tableau de la figure 37 est divisé en 3 parties principales. La partie gauche désignée par le titre »référence logique« contient pour chaque signal la ou les réfénreces logiques utilisées dans la description des schémas. La partie centrale désignée par l'appellation »liaison (77) figure 13« contient elle-même trois colonnes:

- la colonne CONNECT qui contient la référence du connecteur où est raccordée la liaison (77),
- la colonne BROCHE qui définit le numéro de la broche où est raccordé chaque signal,
- la colonne FIGURE qui indique les numéros de figure où les signaux logiques sont utiliés.

La partie située à droite désignée par l'apellation »liaison (79) figure 13« remplit la même fonction que la partie centrale pour la liaison (79).

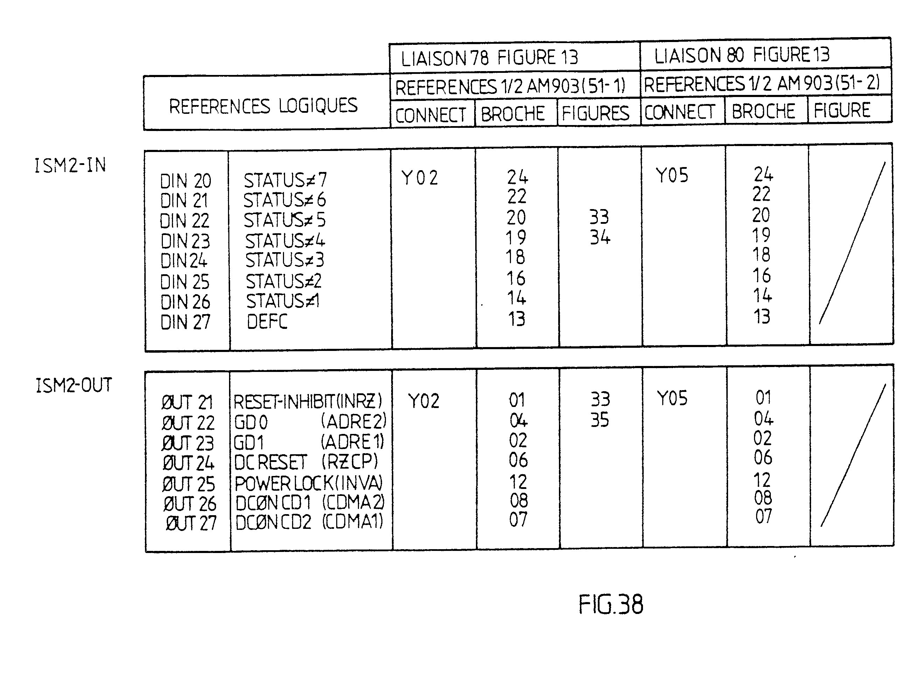

La figure 38 est similaire à la figure 37 mais elle concerne les signaux d'interface ISM2 alors que la figure 38 concerne les signaux d'interface ISM1. L'organisation de la figure 38 est identique à la figure 37 et pour la comprendre, il suffit de se rappeler que le module d'interface aval AM903 comprend deux liaisons ISM2 comme il est indiqué sur la figure 13: la liaison ISM2 (78) et la liaison ISM2 (80).

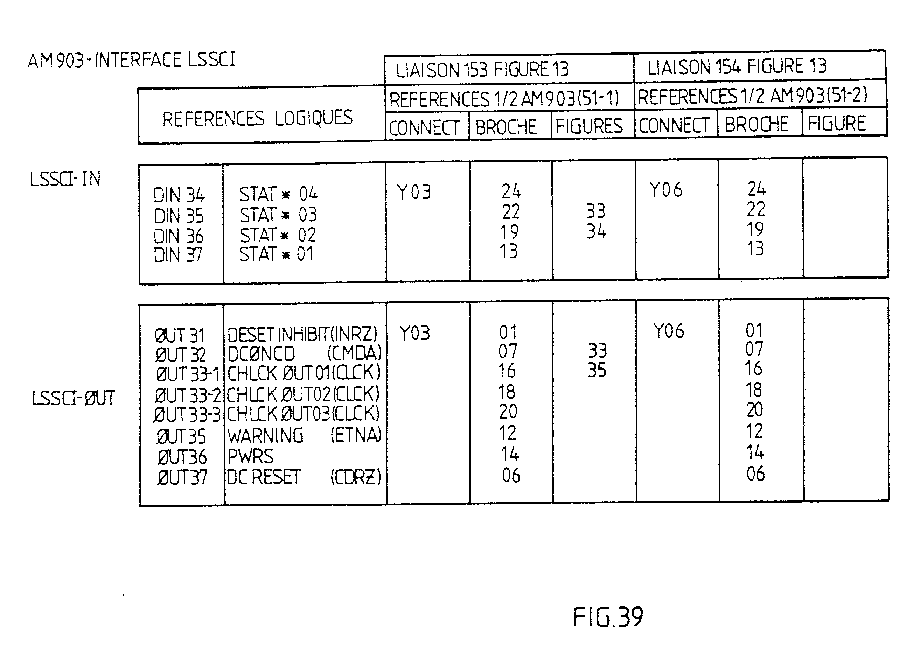

La figure 39 contient un tableau définissant les signaux d'interface LSSCI. Ce tableau est divisé en deux parties dans le sens horizontal. La partie supérieure désignée par l'appellation LSSCI-IN concerne les signaux émis par l'ensemble alimentée vers le moniteur (10) et la partie inférieure désignée par l'appellation LSSCI-OUT concerne les signaux émis par le moniteur (10) vers l'ensemble alimenté. Dans le sens vertical le tableau est divisé en trois parties principales comme pour les figures 37 et 38: la partie de gauche donne la ou les appellations logiques de chaque signal, la partie centrale définit le raccordement de chaque signal pour la liaison (153) de la figure 13 et la partie de droite définit le raccordement de chaque signal pour la liaison (154) de la figure 13.

Bien entendu, les définitions des figures 37, 38 et 39 sont valables pour tous les modules d'interface aval AM903 puisque dans tous les cas:

- les interfaces ISM1 sont raccordées au connecteur Y01 pour le demi module AM903 supérieur et au connecteur Y04 pour le demi module AM903 inférieur,
- les interfaces ISM2 sont raccordés au connecteur Y02 pour le demi module AM903 supérieur et au connecteur Y05 pour le demi module AM903 inférieur,
- les interfaces LSSCI sont raccordées au connecteur Y03 pour le demi module AM903 supérieur et au connecteur Y06 pour le demi module AM903 inférieur.

Il ressort des figures 32, 37, 38 et 39 que le module d'interface aval AM903 comporte deux types d'interface: l'interface de type ISM et l'interface de type LSSCI. Il va être vu maintenant comment sont constitués ces interfaces: Interface de type ISM (figure 37 pour ISM1 et figure 38 pour ISM2).

L'interface ISM est constitué par la zone frontière située d'une part entre l'un des connecteurs Y01 ou Y02 ou Y04 ou Y05 d'un module d'interface aval AM903 et les circuits de commande et de contrôle d'un module AM908. Cet interface comporte deux types de signaux: d'une part les signaux ISM-OUT de commande et de contrôle générés à partir du moniteur (10), d'autre part les signaux ISM-IN de compte rendu et d'acquittement retournés par les sources contrôlées en direction du moniteur (10).

Les signaux ISM-OUT de commande et de contrôle sont:

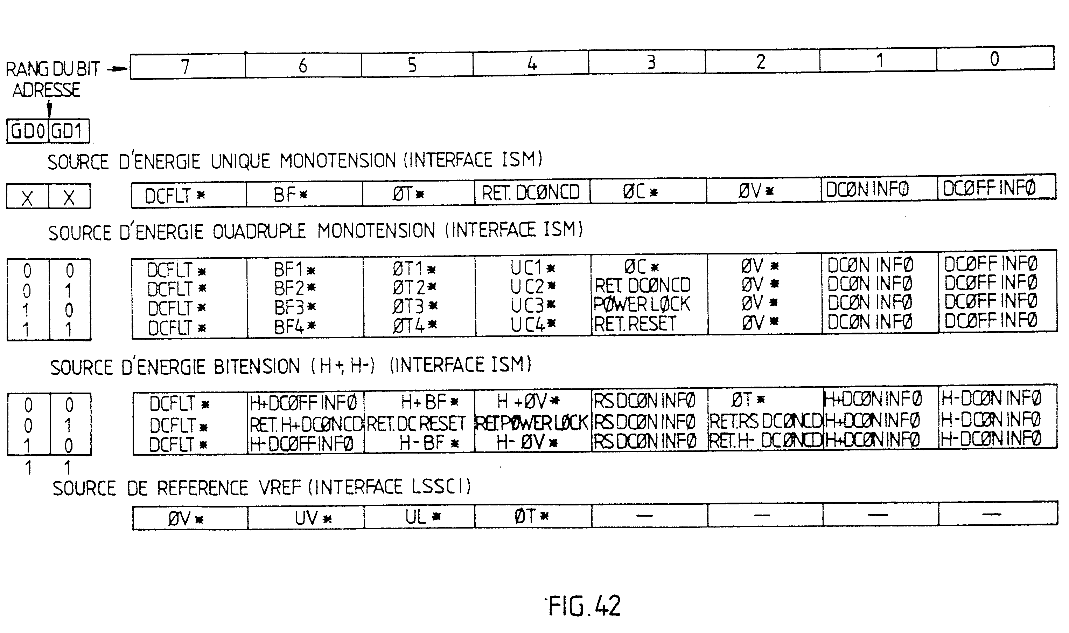

- OUT11: appelé aussi RESET-INHIBIT ou INRZ que est un signal d'interdiction de la remise à zéro des circuits de mémorisation du module intermédiaire AM908 et de la ou des sources contrôlées. Ce signal est utilisé pour sauvegarder des informations. Son utilisation sera vue ultérieurement.
- OUT12 et OUT13: appelés aussi GD0 et GD1 ou ADRE2, ADRE1. Ces signaux sont des signaux d'adressage. Ces signaux permettent au moniteur (10) de définir 4 adresses. Leur utilisation est la suivante. Il a été vu que le module intermédiaire AM908 permet la commande et le contrôle de 4 sources. Dans la réalisation préférée de l'invention, il a été prévu, bien que cela ne soit pas limitatif, un octet d'état par source commandée. Cet octet d'état sera défini ultérieurement à l'occasion de la description de la description de la figure 42. Pour accéder au contenu de ces octets qui sont adressables, le moniteur (10) utilise les lignes GD0 et GD1,

— OUT14 appelé aussi DCRESET ou RZCP qui est un signal de remise à zéro général des circuits de mémorisation du module intermédiaire AM908 et de la ou des sources contrôlees. C'est l'action de ce signal qui est neutralisée par le signal OUT11 (RESET INHIBIT),
— OUT15 appelé aussi POWER-LOCK ou INVA. Ce signal est destiné à interdire l'établissement de la ou des tensions délivrées par la ou les sources contrôlées. Dans ce régime de fonctionnement, la ou les sources contrôles ont un régime de fonctionnement fictif au moniteur (10) de commander et de contrôler les sources dans un mode simulé ou il n'y a pas d'énergie délivrée. Ceci permet, par exemple, d'effectuer des opérations de maintenance ou de dépannage sans risquer une électrocution de l'operateur ou des détériorations de circuits,
— OUT16 appelé aussi DCONCD1 ou CDMA2. Ce signal est un signal de commande de mise sous tension d'une ou plusieurs sources,
— OUT17 appelé aussi DCONCD2 ou CDMA1. Ce signal comme le précédent est un signal de commande de mise sous tension d'une ou plusieurs sources. L'existence de deux signaux de commande de mise sous tension est justifiée par le fait que dans le cas où le module intermédiaire AM908 contrôle des sources appartenant à deux catégories nécessitant un ordre chronologique de mise sous tension, il est nécessaire d'avoir deux signaux de commande distincts. Bien entendu, ce nombre de signaux de commande n'est aucunement limitatif et peut être accru sans difficulté; il a été limité à 2 dans la réalisation préférée de l'invention car il satisfaisait au besoin.

Les signaux ISM-OUT de compte rendu et d'acquittement sont:

— DIN (10 à 16) appelé aussi STATUS (#7, # 6, # 5, # 4, # 3, # 2, # 1). Ces signaux sont des signaux indicateurs d'état émis par le module intermédiaire AM908. Ces signaux d'état sont caractéristiques du fonctionnement d'une source contrôlée par le module intermédiaire AM908. Comme il a été expliqué précédemment dans la réalisation préférée de l'invention, un module intermédiaire AM908 peut contrôler jusqu'à 4 sources. Par conséquent, chaque module intermédiaire AM908 possède 4 registres dans lesquels sont stockés les bits d'état des sources. Ce sont ces 4 registres qui sont adressables par les lignes GD0 et GD1 qui ont été vues précédemment. Au moyen de ces lignes GD0 et GD1 le moniteur peut appeler le contenu de l'un des registres. C'est ce contenu qui est placé par le module intermédiaire AM908 sur les lignes DIN (10 à 16). Ces bits d'état sont définis sur le tableau de la figure 42. Ce tableau donne la définition des bits d'état dans les différentes configuration de sources contrôlées par le module intermédiaire AM908,
— DIN17 appelé DEFC. Ce signal signale l'apparition d'un défaut à l'intérieur de la ou des sources contrôlées.

Interface de type LSSCI (figure 39)

L'interface LSSCI est constitué par une zone frontière située d'une part entre l'un des connecteurs Y03 ou Y06 d'une module de l'interface aval AM903 et l'ensemble des circuits alimentés par les sources. En fait, dans le mode de réalisation décrit, cette liaison LSSCI n'existe pas systématiquement sur tous les connecteurs Y03 et Y06 des modules d'interface aval AM903 du système d'alimentation. Seules, les liaisons nécessaires au bon fonctionnement des circuits alimentés sont présentes. Le moniteur (10) connaît les liaisons LSSCI utilisées par consultation des tables du système qui contiennent les adresses des LSSCI réellement en service. L'interface LSSCI comporte deux types de signaux: d'une part, les signaux LSSCI-OUT qui sont les signaux de commande et de contrôle générés à partir du moniteur (10), d'autre part les signaux LSSCI-IN de compte rendu et d'acquittement retournés par les circuits alimentés en direction du moniteur (10).

Les signaux LSSCI-OUT de commande et de contrôle sont:

— OUT31 appelé aussi RESET-INHIBITION ou INRZ. Ce signal est un signal d'interdiction de remise à zéro des circuits de mémorisation d'état et de défaut des circuits alimentés. Ce signal est utilisé pour sauvegarder les informations. Son utilisation sera vue ultérieurement,
— OUT32 appelé aussi DCONCD ou CMDA. Ce signal est un signal de commande. Dans le mode de réalisation présentement décrit, ce signal est destiné à commander la mise sous tension d'une tension de référence VREF située à l'intérieur des circuits alimentés. Cette source de référence VREF peut être, par exemple, la source de référence de circuits logiques du type CML (abréviation de Current Mode Logic),
— OUT33-1, OUT 33-2, OUT33-3 appelés aussi CHLCK-OUT (01 à 03) ou CLCK. Ces trois signaux sont des signaux de commande destinés à effectuer des blocages électriques à l'intérieur des circuits alimentés. Ces signaux sont utilisés par le moniteur (10) pour intervenir dans certaines circonstances ou, par exemple, les circuits alimentés ne fonctionnent pas normalement,

- OUT35 appelé aussi WARNING ou ETWA. Ce signal est un signal d'alarme émis par le moniteur (10) pour prévenir les circuits alimentés qu'il va effectuer, par exemple, une opération de mise hors tension au bout d'un délai déterminé après l'apparition du signal WARNING (tentative de sauvegarde d'un contexte),
- OUT36 appelé aussi PURS (abréviation de POWER UNIT RESET). Ce signal est un signal de remise à zéro des circuits de mémorisation concernant les circuits directement par le moniteur,
- OUT37 appelé aussi DCRESET ou CDRZ. Ce signal est un signal de remise à zéro de l'ensemble des circuits de mémorisation y compris ceux appartenant aux circuits alimentés.

Les signaux LSSCI-IN de compte rendu et de contrôle sont les signaux DIN (34 à 37) appelés aussi STAT* (04, 03, 02, 01). Ces signaux sont des signaux indicateurs d'état émis par les circuits alimentés. Dans le mode de réalisation décrit de l'invention, ces signaux correspondent à des états de fonctionnement de l'alimentation de référence VREF. Ces état sont définis sur le tableau de la figure 42.

La figure 42 contient, pour le mode de réalisation préféré de l'invention, les tableaux définissant les configurations des bits d'octets d'états.

Le tableau du haut désigné par l'appellation SOURCE D'ENERGIE UNIQUE MONOTENSION contient des bits de l'octet d'état transmis sur un interface ISM dans le cas où le module intermédiaire AM908 ne contrôle qu'une source d'énergie. Ces bits sont les suivants:

- bit de rang 0 DCOFINFO: ce bit quand il est haut signifie que la tension de sortie de la source contrôlée a atteint un niveau suffissament bas pour être considérée comme nulle,
- bit de rang 1: DCONINFO: ce bit quand il est haut signifie que la tension de sortie de la source contrôlée peut être considérée comme ayant atteint sa valeur nominale,
- bit de rang 2: OV*: ce bit indique quand il est bas qu'une surtension a été détectée dans la source contrôlée,
- bit de rang 3: OC*: ce bit indique quand il est bas qu'une surintensité a été détectée dans la source contrôlée,
- bit de rang 4: RET.DCONCD: ce bit quand il est haut indique que la source contrôlée a bien reçue la commande de mise sous tension DCONCD,
- bit de rang 5: OT*: ce bit quand il est bas indique soit une absence de ventilation soit un échauffement excessif à l'intérieur de la source contrôlée,
- bit de rang 6: BF*: ce bit quand il est bas indique qu'au moins un fusible est défectueux dans la source contrôlée,
- bit de rang 7: DCFLT*: ce bit quand il est bas indique qu'un défaut MAJEUR est survenu à l'intérieur de la source contrôlée.

Le tableau situé au-dessous du tableau qui vient d'être décrit et désigné par l'appellation »SOURCE D'ENERGIE QUADRUPLE MONOTENSION« définit les bits des octets d'état transmis sur l'interface ISM dans le cas où le module intermédiaire AM908 contrôle une quadruple source d'énergie délivrant une tension unique. Ce tableau contient 4 lignes. Ces lignes sont adressables au moyen des signaux d'adresse GD0 et GD1 comme il est indiqué sur les 2 colonnes situées à l'extrême gauche de la figure. Les signaux représentés par les bits d'état sont similaires à ceux précédemment décrits. Les signaux non accompagnés d'indices comme DCOFFINFO, DCONINFO, OV*, OC*, DCFLT*, RET.DCONCD, POWER-LOCK et RET.RESET concernent l'ensemble global de l'alimentation constituée par les 4 sources. Les signaux accompagnés d'indices comme OT1*, OT2*, OT3*, OT4*, BF1*, BF2*, BF3*, BF4* concernent individuellement la source correspondant à l'indice associé au sigle. Le signal POWER-LOCK qui est représenté par le bit 3 du troisième mot (GD0 = 1, GD1 = 0) quand il est haut signifie que l'ensemble des sources fonctionne fictivement c'est-à-dire que toutes les fonctions sont remplies mais que la tension de sortie n'est pas établie. Le signal RET.RESET qui est représenté par le bit 3 du quatrième mot (GD0 = 1, GD1 = 1) quand il est haut signifie que le signal RESET de remise à zéro des circuits à mémoire des sources a bien été reçu par ces dites sources.

Le tableau suivant intitulé »SOURCE D'ENERGIE BITENSION (H+, H—)« définit les bits des octets d'état transmis sur un interface ISM quand celui-ci comporte une source d'énergie délivrant deux tensions. Dans ce cas, il y a transmission de trois octets.

Le premier octet (adresse GD0 = 0, GD1 = 0) comprend les bits suivants:

- le bit 0 désigné par H—DCONINFO quand il est haut signifie que la tension de sortie de la source de tension négative a atteint sa valeur de régime normal,
- le bit 1 désigné par H+DCONINFO quand il est haut signifie que la tension de sortie de la source de tension positive a atteint sa valeur de régime normal,
- le bit 2 désigné par OT* signifie quand il est bas qu'un problème à caractère thermique touche l'ensemble des deux sources H+ et H— contrôlées,
- le bit 3 désigné par RSDCONINFO signifie quand il est haut que le dispositif de régulation serie placé sur l'une des sources H+ ou H— fonctionne normalement,

— le bit 4 désigné par H + OV* quand il est bas signifie qu'un phénomène de surtension s'est produit sur la source H +,
— le bit 5 désigné par H + BF* quand il est bas signifie qu'au moins un des fusibles de la source H+ est defectueux,
— le bit 6 désigné par H + DCOFFINFO quand il est haut signifie que la tension de la source H+ a atteint son régime de repos,
— le bit 7 désigné par DCFLT* quand il est bas signifie que l'ensemble des sources présente un défaut.

Le second octet (adresse GD0 = 0, DD1 = 1) comprend les bits suivants:

— le bit 0 désigné par H — DCONINFO et le bit 1 désigné par H + DCONINFO ont la même signification que les bits 0 et 1 du premier octet,
— le bit 2 désigné par RET.RSDCOND quand il est haut signifie que la commande de mise sous tension de la régulation série a bien été reçue,
— le bit 3 désigné par RET.DCONINFO quand il est haut signifie que la commande de mise sous tension des sources a bien été reçue,
— le bit 4 désigné par RET.POWER-LOCK quand il est haut signifie que la commande POWER-LOCK a bien été reçue par les sources,
— le bit 5 désigné par RET.DCRESET quand il est haut signifie que la commande de remise à zéro des circuits à mémoire des alimentations a bien été reçue,
— le bit 6 désigné par RET.H + DCONCD quand il est haut signifie que la source H+ a bien reçu le signal de commande de mise sous tension,
— le bit 7 désigné par DCFLT* quand il est bas signifie que l'ensemble des sources présente un défaut.

Le troisième octet (adresse GD0 = 1, GD1 = 0) comprend les bits suivants:

— le bit 0 désigné par H — DCONINFO et le bit 1 désigné par H + DCONINFO ont les mêmes significations que les bits 0 et 1 des octets précédents,
— le bit 2 désigné par RET.H — DCONCD quand il est haut signifie que la source H— a bien reçu le signal de commande de mise sous tension,
— le bit 3 désigné par RS.DCONINFO quand il est haut signifie que la commande de mise sous tension des sources a bien été reçu,
— le bit 4 désigné par H — OV* quand il est bas signifie que la source H— est le siège d'un phénomène de surtension,
— le bit 5 désigné par H — BF* quand il est bas signifie qu'au moins un fusible est défaillant dans la source H —,
— le bit 6 désigné par H — DCOFFINFO quand il est haut signifie que la tension de la source H— a atteint sa valeur de régime normal,
— le bit 7 désigné par DCFLT* quand il est bas signifie que l'ensemble des sources présente un défaut.

Le tableau du bas appelé »SOURCE DE REFERENCE VREF« représente l'octet d'état transmis par la dite source de référence sur l'interface LSSCI. Cet octet comporte les bits d'état suivants:

— les bits 0 à 3 n'ont pas reçu, pour l'instant, de signification et restent disponibles pour une affectation ultérieure,
— le bit 4 désigné par OT* quand il est bas signifie qu'un problème de nature thermique affecte la source de référence,
— le bit 5 désigné par UL* quand il est bas signifie que le débit de la source de référence est inférieur à une certaine valeur limite du courant,
— le bit 6 désigné par UV* quand il est bas signifie que la tension délivrée par la source de référence est inférieure à une certaine valeur limite de tension,
— le bit 7 désigné par OV* quand il est bas signifie que la tension délivrée par la source de référence est supérieure à une certaine valeur limite de tension.

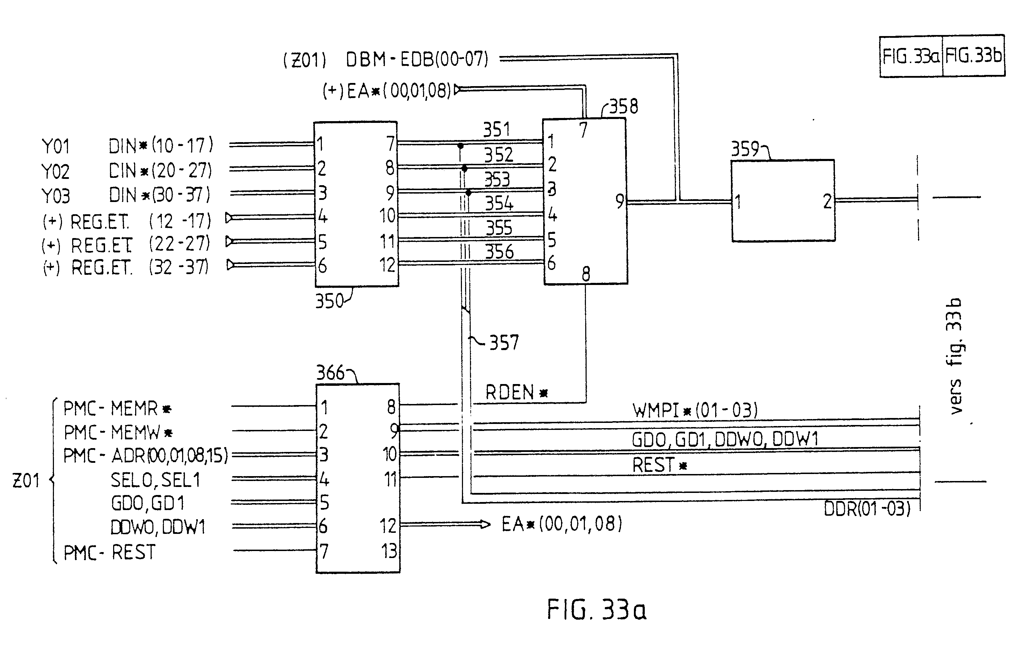

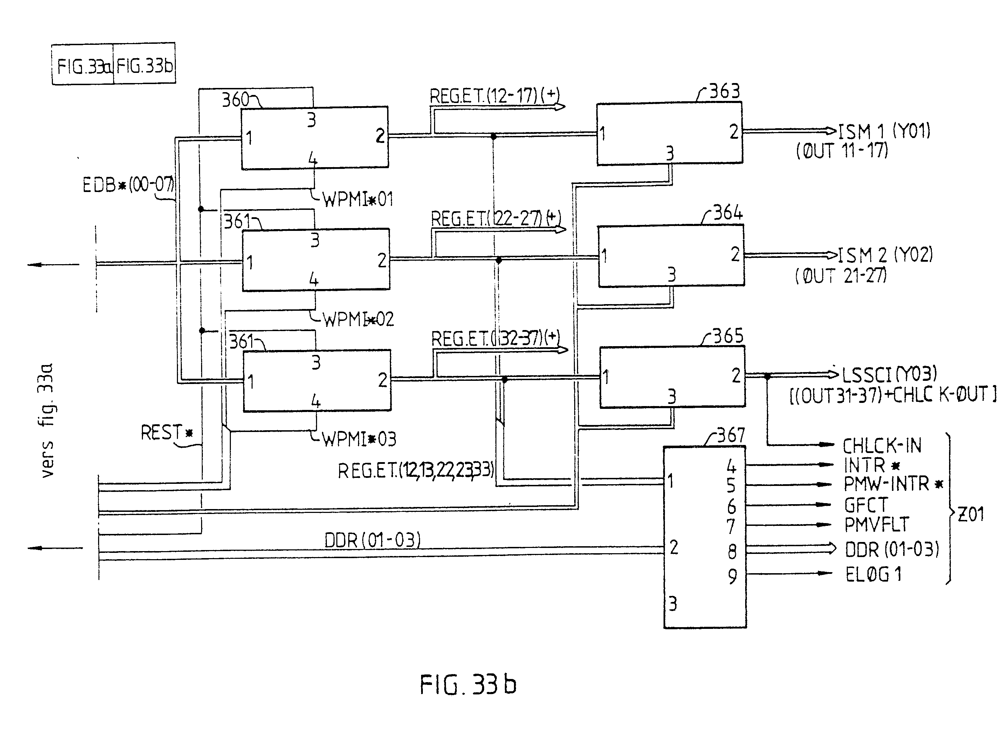

La figure 33 représente le schéma synoptique du demi-module (51-1) d'interface aval AM903. Le schéma synoptique du demi-module (51-2) d'interface aval est le même que celui de la figure 33 à la différence près que les connecteurs sont différents: le connecteur Y04 remplace le connecteur Y01, le connecteur Y05 remplace le connecteur Y02, le connecteur Y06 remplace le connecteur Y03 et le connecteur Z01 remplace le connecteur Z02.

Sur la figure 33, les signaux circulent de la gauche vers la droite à l'exception des omnibus où les signaux circulent dans les deux sens ainsi que certains signaux particuliers où le sens de circulation est indiqué. Compte tenu de cet hypothèse les signaux d'entrée dans le demi module (51-1) sont situés à gauche de la figure. Ces signaux d'entrée ont 5 origines:

- les signaux reçus à travers le connecteur Y01: DIN* (10—17) qui sont les signaux entrants par l'interface ISM1,
- les signaux reçus à travers le connecteur Y02: DIN* (20—27) qui sont les signaux entrants par l'interface ISM2,
- les signaux reçus à travers le connecteur Y03: DIN* (30—37) qui sont les signaux entrants par l'interface LSSCI,
- les signaux reçus à travers le connecteur Z01: [MEMR*, MEMW*, ADR (00, 01, 08, 15), SEL0, SEL1, GD0, GD1, DDW0, DDW1, REST] qui sont les signaux de commande et de contrôle émis par l'omnibus de pilotage 12. Ce connecteur (Z01) est également traversé par l'omnibus des données extérieures EDB (00—07),
- enfin, les signaux internes au demi module: [(+) REG.ET (12—17), (+) REG.ET (22—27), (+) REG.ET (32—37)] qui sont des signaux entrants émis à l'intérieur du demi module (51-1).

Les signaux de données arrivant sur le demi-module AM903 (51-1) sont placés aux entrées d'un bloc (350) d'interface d'entrée:

- les données DIN* (10—17) sur l'entrée 1,
- les données entrantes DIN* (20—27) sur l'entrée 2,
- les données entrantes DIN* (30—37) sur l'entrée 3,
- les données entrantes (+) REG.ET (12—17) sur l'entrée 4,
- les données entrantes (+) REG.ET (22—27) sur l'entrée 5,
- les données entrantes (+) REG.ET (32—37) sur l'entrée 6.

Ce bloc (350) d'interface d'entrée comporte des circuits de liaison et d'adaption qui seront décrits ultérieurement. Les signaux de données après avoir traversé les circuits du bloc (350) d'interface sortent de ce bloc (350) par les sorties 7, 8, 9, 10, 11, 12 et alimentent les liaisons (351), (352), (353), (354), (355) et (356). Ces six liaisons attaquent respectivement les entrées 1, 2, 3, 4, 5, 6 du bloc (358) multiplexeur. Ce bloc (358) multiplexeur est placé sous la commande et le contrôle du moniteur (10): il est sélectionné par le signal RDEN* et adressé par les signaux (+) EA* (00, 01, 08). Le signal de sélection RDEN* et les signaux d'adressage (+) EA* (00, 01, 08) sont élaborés par le bloc (366) de commande et de contrôle qui sera vu ultérieurement. Le signal de sélection RDEN* autorise le fonctionnement du multiplexeur (358) et les signaux d'adressage (+) EA* (00, 01, 08) adressent une des entrées 1, 2, 3, 4, 5 ou 6 du multiplexeur. Dans ces conditions, la voie adressée entre en communication directe avec la sortie (9) du multiplexeur (358). Cette sortie (9) alimente l'omnibus des données extérieures EDB (00—07) qui appartient à l'omnibus de pilotage (12). Cet omnibus d'une part, est raccordé au connecteur Z01 et d'autre part à l'entrée 1 du bloc (359) amplificateur inverseur. Le bloc (359) amplificateur inverseur amplifie en les inversant les signaux placés à l'entrée 1 et place les signaux amplifiés ou inversés sur la sortie 2.

La sortie 2 du bloc (359) amplificateur inverseur alimente l'omnibus EDB* (02—07). Cet omnibus EDB* (02—97) alimente les entrées 1 de 3 REGISTRES D'ETAT (360), (361) et (362). Ces trois registres sont commandés par deux types de signaux:

- le signal REST* placé sur l'entrée 3 (abréviation de RESTAURATION) qui est un signal de remise à zéro générale du contenu des registres
- un signal WPMI*OX placé sur l'entrée 3 (abréviation de WRITE POWER MONITOR INPUT) qui est un signal d'adressage. Le signal WPMI*01 adresse le registre d'état (360) le signal WPMI*02 adresse le registre d'état (361) et le signal WPMI*03 adresse le registre d'état (362). Un seul signal WPMI*OX est présent à la fois. Ce signal est élaboré par le bloc (366) de commande et de contrôle qui sera vu ultérieurement. Quand un signal d'adressage WPMI*OX est présent, il autorise le transfert du contenu de l'omnibus EDB* (02—07) dans le registre adressé.

La sortie 2 de chaque registre d'état alimente une liaison:

- le registre d'état (360) alimente la liaison REG.ET (12—17)
- le registre d'état (361) alimente la liaison REG.ET (22—27)
- le registre d'état (362) alimente la liaison REG.ET (32—37).

La liaison REG.ET (12—17) alimente plusieurs blocs:

- d'une part, l'entrée (4) du bloc (350) d'interface d'entrée
- d'autre part, l'entrée (1) du bloc (363) d'interface de sortie
- enfin, par les lignes REG.ET12 et REG.ET13 l'entrée 1 du bloc (367) de transmission des requêtes dont la description sera vue ultérieurement.

De la même façon, la laison REG.ET (22—27) alimente:

- d'une part, l'entrée 5 du bloc (350) d'interface d'entrée
- d'autre part, l'entrée 1 du bloc (364) d'interface de sortie
- enfin, par la ligne REG.ET23 l'entrée 1 du bloc (367) de transmission des requêtes dont la description sera vue ultérieurement.

De la même façon, la liaison REG.ET (32—37) alimente:

- d'une part, l'entrée 6 du bloc (350) d'interface d'entrée
- d'autre part, l'entrée 1 du bloc (364) d'interface de sortie
- enfin, par la ligne REG.ET33 l'entrée 1 du bloc (367).

Le bloc (363) d'interface de sortie est par ailleurs alimenté sur son entrée (3) par les signaux de commande et d'adressage GD0, GD1, DDW0 et DDW1 transmis directement par le moniteur (10) à travers le bloc (366) de commande et de contrôle. Ces signaux de commande et d'adressage GD0, GD1, DDW0 et DDW1 sont destinés aux modules intermédaires AM908 ainsi qu'aux circuits alimentés.

Le bloc (364) d'interface de sortie ainsi que le bloc (365) d'interface de sortie sont également alimentés par leur entrée (3) par les mêmes signaux de commande et d'adressage GD0, GD1, DDW0 et DDW1.

Le bloc (363) d'interface de sortie comporte des circuits d'adaptation qui, après traitement des signaux placés aux entrées 1 et 3, placent les signaux de sortie sur la sortie 2. La sortie 2 du bloc (363) d'interface de sortie est raccordée au connecteur Y01 du module d'interface aval AM903. Ce connecteur Y01 alimente à son tour l'interface ISM1.

Le bloc (364) d'interface de sortie remplit les mêmes fonctions que le bloc précédent mais au profit du connecteur Y02 et donc au profit de l'interface ISM2.

Le bloc (365) d'interface de sortie est destiné, de la même façon, à alimenter le connecteur Y03 qui alimente lui-même l'interface LSSCI.

Le bloc (366) de commande et de contrôle reçoit depuis le moniteur (10) les signaux d'entrée suivants:

- sur son entrée 1 un signal PMC-MEMR* qui est bas quand le moniteur (10) demande un cycle écriture
- sur son entrée 2 un signal PMC-MEN* qui est bas quand le moniteur (10) demande un cycle lecture
- sur son entrées 3 les lignes d'adressage PMC-ADR00, PMC-ADR01, PMC-ADR08 et PMC-ADR15. Ces signaux d'adressage servent au moniteur (10) à adresser le module d'interface aval AM903 ainsi que certains circuits internes à ce module AM903
- sur son entrée 4 les lignes de sélection SEL0 et SEL1. Ces lignes de sélection servent au moniteur (10) à sélectionner des circuits à l'intérieur du module d'interface aval AM903
- sur son entrée 5 les signaux d'adressage de données GD0 et GD1 qui servent au moniteur (10) à adresser des mémoires tampons d'états situées à l'intérieur du module intermédiaire AM908
- sur son entrée 6 les signaux de commande DDW0 et DDW1 qui sont des signaux de commande qui permettent au moniteur (10) de transmettre des ordres à l'intérieur du module intermédiaire AM908
- sur son entrée 7 le signal de remise à zéro REST qui permet au moniteur (10) de remettre à zéro les circuits de mémorisation du module d'interface aval AM903 ainsi que les circuits de mémorisation placés à l'extrémité des interfaces ISM1, ISM2 et LSSCI.

A partir de ces signaux le bloc (366) de commande et de contrôle élabore des signaux de sortie:

- sur son entrée 8: le signal d'échantillonnage RDEN* qui signifie quand il est bas, que le moniteur (10) a sélectionné le module d'interface aval AM903 et qu'il demande une lecture c'est-à-dire le transfert de l'une des entrées 1 à 6 du multiplexeur (368) vers l'omnibus de sortie de données DBM-EDB (00—07). Ce signal RDEN* est raccordé à l'entrée (8) du multiplexeur (368)
- sur son entrée 9 trois signaux WMPI* (01 à 03) (abréviation de WRITE POWER MONITOR TO INTERFACE) destinés à sélectionner un des trois registres (360) ou (361) ou (362): un seul des signaux WMPI* (01 à 03) est bas à la fois:
  - quand le signal WMPI*01 est bas cela signifie que le moniteur (10) demande le transfert du contenu de la liaison EDB* (02—07) dans le registre (360). Ce signal est raccordé à l'entrée (4) du registre (360)
  - quand le signal WMPI*02 est bas cela signifie que le moniteur (10) demande le transfert du contenu de la liaison EDB* (02—07) dans le registre (361). Ce signal est raccordé à l'entrée (4) du registre (361)

  - quand le signal WMPI*03 est bas cela signifie que le moniteur (10) demande le transfert du contenu de la laison EDB* (02—07) dans le registre (362). Ce signal est raccordé à l'entrée (4) du registre (362)
- sur sa sortie (10) les signaux GD0, GD1, DDW0 et DDW1. Les signaux GD0 et GD1 sont des signaux d'adressage permettant au moniteur (10) d'adresser les registres de bits d'état situés dans le module intermédiaire AM908 soit dans les circuits alimentés sous contrôle de l'interface LSSCI. Les signaux DDW0 et DDW1 sont les ordres émis par le moniteur (10). L'ordre DDW0 est aussi appelé RESET-INHIBIT puisque son rôle est d'interdire la fonction de remise à zéro. L'ordre DDW1 est aussi appelé POWER-LOCK puisque son rôle est d'interdire l'établissement de la tension de sortie des sources et par conséquent de permettre un fonctionnement fictif des sources. Ces signaux GD0, GD1, DDW0 et DDW1 sont raccordés sur les entrées 3 des blocs d'interface de sortie (363), (364) et (365)
- sur sa sortie (11) le signal REST* qui est un signal qui, quand il est bas, commande la remise à zéro des circuits à mémoire du module d'interface aval AM903, des circuits à mémoire du module intermédiaire AM908 et des circuits à mémoire raccordés à l'interface LSSCI
- sur sa sortie (12) les signaux d'adressage EA* (00, 01, 08) qui sont les signaux inversés des signaux d'adressage PMC-EA (00, 01, 08) ces signaux servent à adresser le multiplexer (358) auquel ils sont raccordés sur l'entrée 7.

Le bloc (367) de transmission des requêtes est attaqué:

- sur son entrée 1 par les signaux:
  - REG.ET.12 et REG.ET.13 issus du registre (360)
  - REG.ET.22 et 23 issus du registre (361)
  - REG.ET.33 issu du registre (362)
- sur son entrée 2 par les signaux:
  - DDR01 issu de la liaison (351)
  - DDR02 issu de la liaison (352)
  - DDR03 issu de la liaison (353).

Les signaux REG.ET.13, REG.ET.23 et REG.ET.33 sont des signaux permettant d'invalider les demandes d'interruption émises respectivement sur les interfaces ISM1, ISM2 ou LSSCI.

Le signal REG.ET.12 est un signal permettant d'effectuer des opérations d'auto-test des circuit d'interruption concernant les sources contrôlées par ISM1 et ISM2 (pseudo défaut).

Le signal REG.ET.22 est un signal permettant d'effectuer les opérations d'auto-tests des circuits d'interruption concernant les circuits alimentés (interface LSSCI) (pseudo défaut).

Le signal DDR01 correspond au signal d'entrée DIN17 inversé. Ce signal quand il est bas signifie que la ou les sources pilotées par l'interface ISM1 signalent qu'elles ont détecté une défaillance. Le signal DDR01 effectue la même fonction pour la ou les sources pilotées par l'interface ISM2 et le signal DDR02 le fait pour la source de référence VREF pilotée par l'interface LSSCI.

A partir des signaux placés sur ses entrées (1) et (2) le bloc (367) de transmissions de requêtes élabore un certain nombre de signaux qu'il place sur ses sorties:

- sur la sortie (4) le signal INTR* (abréviation de INTERRUPT REQUEST) qui signifie, quand il est bas, qu'au moins un des deux interfaces ISM1 ou ISM2 signale qu'un défaut de fonctionnement à été signalé par le module intermédiaire AM908 et que cette signalisation a été autorisée par le ou les registres REG.ET (13 ou 23). Ce signal est placé sur l'omnibus de pilotage (12) à travers le connecteur Z01
- sur la sortie (5) le signal PMV-INTR* (abréviation de POWER MONITOR VREF — INTERRUPT REQUEST) qui, quand il est bas, signale qu'un défaut de fonctionnement a été signalé sur l'interface LSSCI et que cette signalisation a été autorisée par le registre REG.ET.22
- sur la sortie (6) le signal GFLT (abréviation de GENERATOR FAULT) qui est le signal inversé de la sortie 4 INTR*. Ce signal est placé sur l'omnibus de pilotage (12) à travers le connecteur 01
- sur la sortie (7) le signal PMVFLT (abréviation de POWER MONITOR VREF-FAULT) qui est le signal inversé de la sortie 5 à travers le connecteur Z01
- sur la sortie (8) les signaux DDR (01 à 03) qui sont respectivement les signaux d'entrée DIN (17, 27, 37). Ces signaux sont les signaux indiquant qu'un défaut de fonctionnement a surgi: DDR01 concerne l'interface ISM1, DDR02 l'interface ISM2 et DDR03 l'interface LSSCI
- sur la sortie (9) un signal ELOG1 (abréviation de ENABLE LOGIC 1) qui est un signal produit au sein même du module (367) de transmission des requêtes. Ce signal est à un niveau haut seulement quand le demi module d'interface aval AM903 est enfiché dans le ratelier. Ce signal ELOG1, qui est placé à travers le connecteur Z01 sur l'omnibus de pilotage (12), signifie quand il est haut que le module d'interface aval AM903 est bien présent dans le ratelier.

Il ressort de ce qui précède que le demi-module d'interface aval AM903 possède les liaisons suivantes:

- avec le moniteur (10) à travers l'omnibus de pilotage (12) (connecteur Z01)
  - l'omnibus de données extérieures DBM-EDB (00—07)
  - les signaux de commande et de contrôle PMCMEMR*, PMCMEMW*, PMCADR (00, 01, 08, 15), SELO, SEL1, GD0, GD1, DDW0, DDW1, REST
  - les signaux de requête ou de compte rendu INTR*, PMV-INTR*, GFLT, PMVFLT, DDR (01—03), ELOG1
- avec l'interface ISM1 à travers le connecteur Y01
  - les signaux de données entrantes DIN* (10—17)
  - les signaux de données sortantes OUT (11—17)
- avec l'interface ISM2 à travers le connecteur Y02
  - les signaux de données entrantes DIN* (20—27)
  - les signaux de données sortantes OUT (21—27)
- avec l'interface LSSCI à travers le connecteur Y03
  - les signaux de données entrantes DIN* (30—37)
  - les signaux de données sortantes OUT (31—37).

Quand le moniteur (10) veut lire les données placées aux entrées 1, 2, 3, 4, 5 et 6 du bloc d'interface d'entrée (350) il effectue les opérations suivantes:

- il sélectionne le demi module d'interface aval AM903
- il adresse une des voies du multiplexeur (358)
- il demande un cycle de lecture.

Ces opérations ont pour résultat de placer le contenu de l'entrée sélectionnée sur l'omnibus des données extérieures DBM-EDB (00—07). Ainsi, le moniteur (10) peut prendre connaissance volonté du contenu de l'entrée sélectionnée c'est-à-dire soit le contenu DIN* (10—17) soit le contenu de DIN* (20—27) soit le contenu de DIN* (30—37) soit le contenu du registre REG.ET (12—17) soit le contenu du registre REG.ET (22—27) soit le contenu du registre REG.ET (32—37).

A l'inverse quand le moniteur (10) veut charger le contenu de l'un des registres, REG.ET (360), (361) et (362) il opère de la façon suivante:

- il sélectionne le demi module d'interface aval AM903
- il adresse le registre REG.ET dans lequel il veut introduire des données
- il demande un cycle d'écriture.

De la sorte, il est possible au moniteur (10) d'introduire à volenté des données dans les registres REG.ET (360), (361) et (362). Ces registres alimentent respectivement les interfaces ISM1, ISM2 et LSSCI par l'intermédiaire des circuits d'interface de sortie (364), (365) et (366).

Par ailleurs, le bloc (367) d'élaboration des requêtes informe le moniteur (10) de l'apparition de défauts sur les interfaces ISM1, ISM2 et LSSCI sauf si le moniteur (10) le lui interdit par des masques.

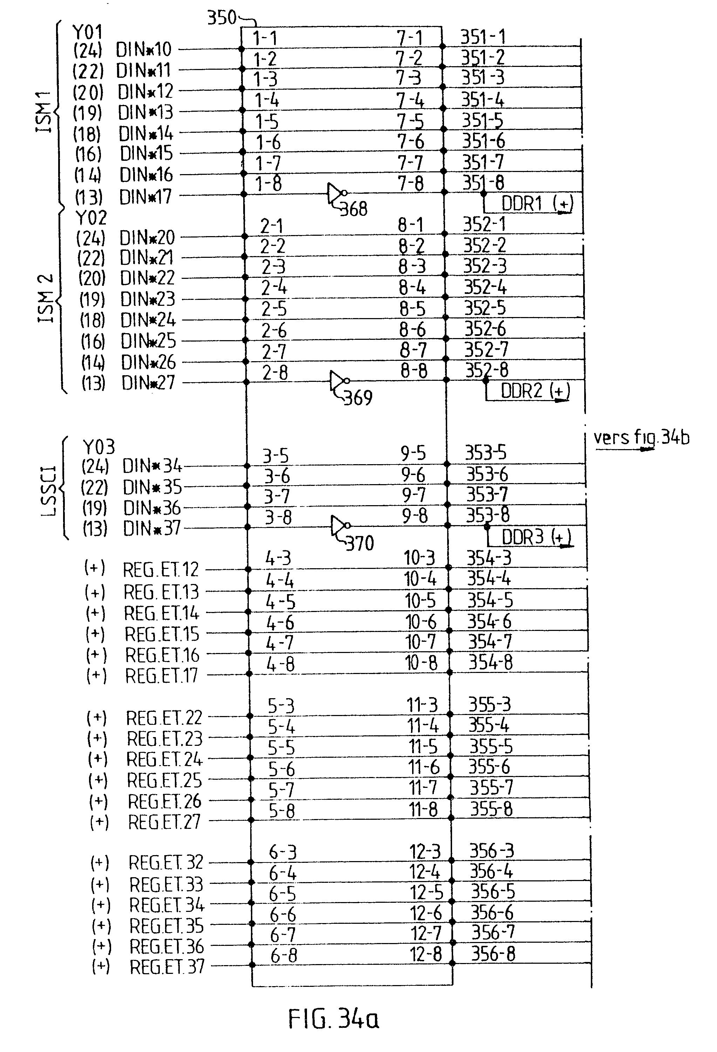

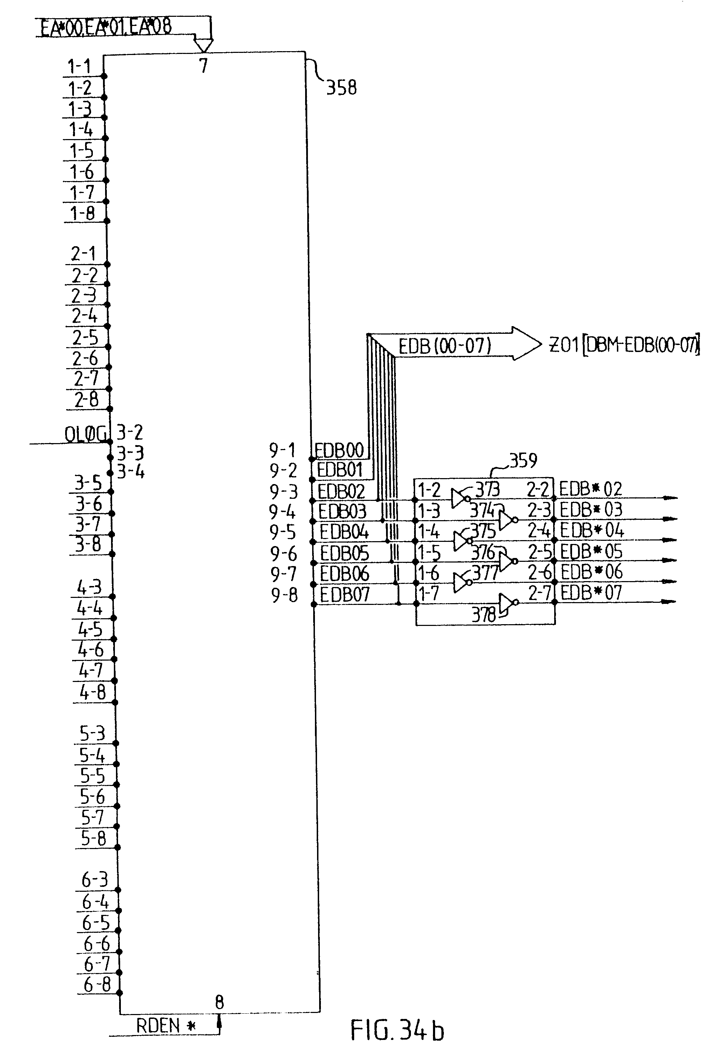

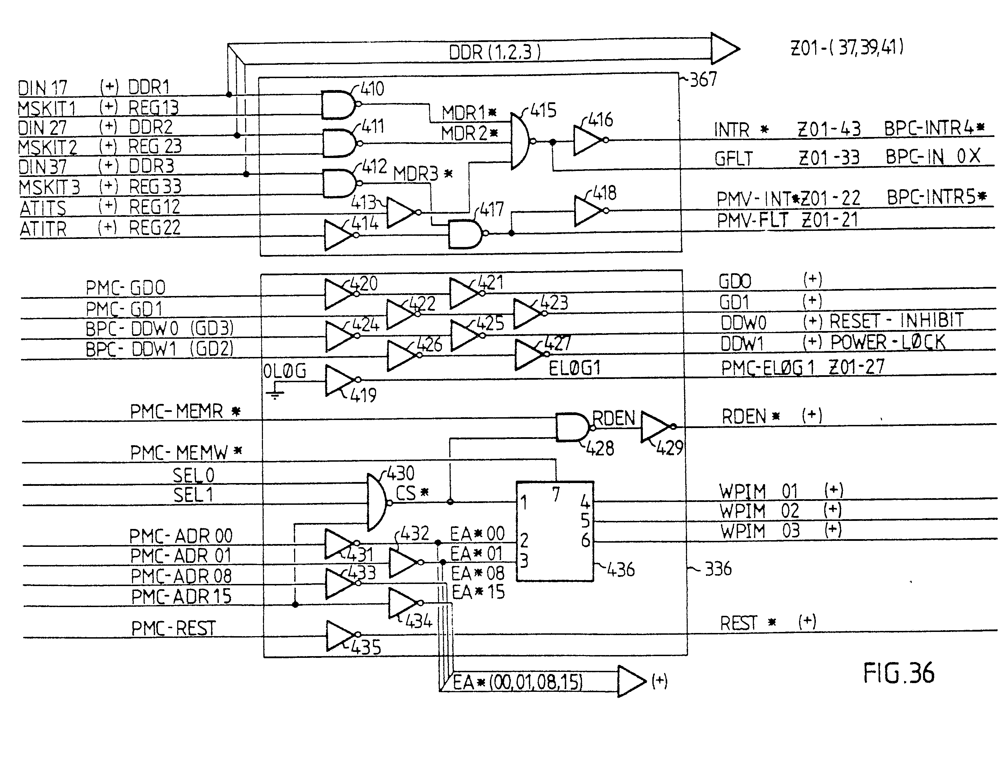

La figure 34 est une représentation détaillée des circuits situés sur la moitié gauche de la figure 33 à l'exclusion du bloc (366) de commande et d'adressage qui est décrit dans la figure 36.

Le bloc (350) d'interface d'entrée reçoit sur ces entrées (1-1 à 1—8), (2-1 à 2—8), (3—5 à 3—8), (4-3 à 4—8), (5-3 à 5—8), (6-3 à 6—8) les signaux destinés à être transmis au moniteur (10):

- les signaux DIN* (10—17) qui sont les signaux d'entrée du connecteur Y01. Ces signaux sont respectivement branchés sur les entrées (1-1 à 1—8). Ces signaux sont à leur tour respectivement retransmis directement aux sorties (7-1 à 7—8) du bloc (350) d'interface d'entrée à l'exception du signal DIN*17 qui est inversé dans l'amplificateur inverseur (368). Les sorties (7-1 à 7—8) du bloc (350) d'interface d'entrée sont reliées respectivement par les liaisons (351-1 à 351-8) aux entrées (1-1 à 1—8) du bloc (358) multiplexeur. Par ailleurs la liaison (351-8) comporte une dérivation désignée par DDR1 (+) qui est raccordée au bloc (367) comme il est montré sur la figure 36
- les signaux DIN* (20—27) qui sont les signaux d'entrée du connecteur Y02. Ces signaux sont respectivement branchés sur les entrées (2-1) à (2—8). Ces signaux sont à leur tour respectivement retransmis respectivement aux sorties (8-1 à 8-8) du bloc (350) d'interface d'entrée à l'exception du signal DIN*27 qui est inversé dans l'amplificateur inverseur (369). Les sorties (8-1 à 8-8) du bloc (350) d'interface d'entrée sont reliées respectivement par les liaisons (352-1 à 352-8) aux entrées (2-1 à 2-8) du bloc (358) multiplexeur. Par ailleurs la liaison (352-8) comporte une dérivation désignée par DDR2 (+) qui est raccordée au bloc (367) comme il est montré sur la figure 36
- les signaux DIN* (34—37) qui sont les signaux d'entrée du connecteur Y03. Ces signaux sont respectivement branchés sur les entrées (3—5 à 3—8). Ces signaux sont à leur tour respectivement retransmis directement aux sorties (9-5 à 9-8) du bloc (350) d'interface d'entrée à l'exception du signal DIN*37 qui est inversé dans l'amplificateur inverseur (370). Les sorties (9-5 à 9-8) du bloc (350) d'interface d'entrée sont reliées respectivement par les liaisons (353-5 à 353-8) aux entrées (3-5 à 3-8) du bloc (358) multiplexeur. Par ailleurs la liaison (353-8) comporte une dérivation désignée par DDR3 ( + ) qui est raccordée au bloc (367) comme il est montré sur la figure 36

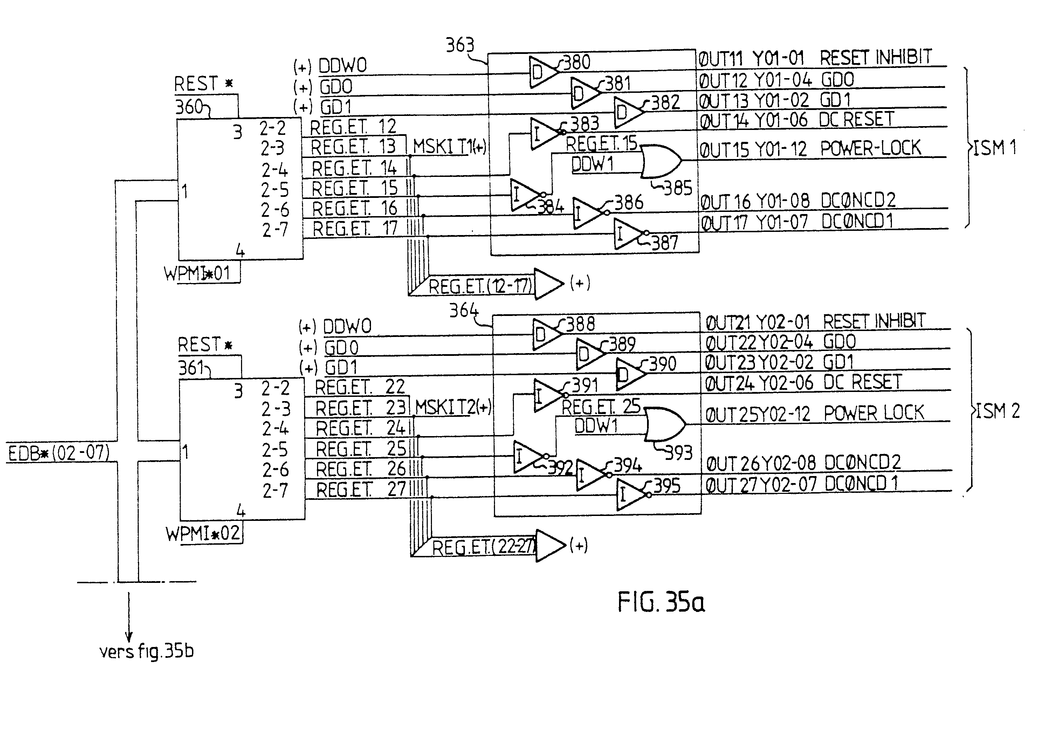

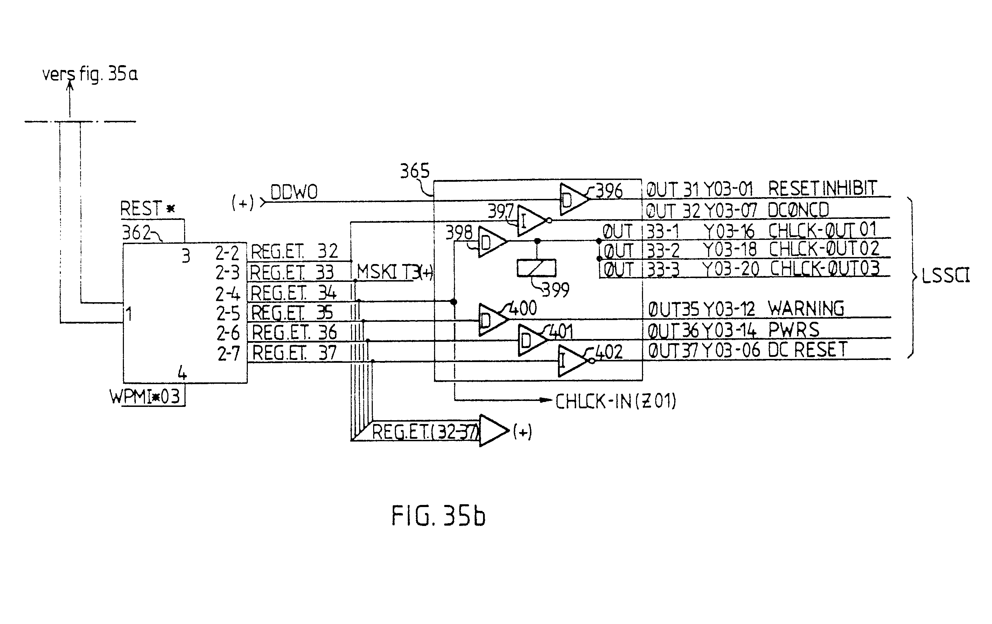

- Les signaux ( + ) REG.ET (12 à 17) qui sont les signaux de sortie du REGISTRE (360) d'ETAT qui se trouvent décrits sur la figure 35. Ces signaux sont respectivement branchés sur les entrées (4-3 à 4—8). Ces signaux sont à leur tour respectivement retransmis directement aux sorties (10-3 à 10-8) du bloc (350) d'interface d'entrée. Les sorties (10-3 à 10-8) du bloc (350) d'interface d'entrée sont reliées respectivement par les liaisons (354-3 à 354-8) aux entrées (4-3 à 4—8) du bloc (358) multiplexeur
- Les signaux (+) REG.ET (22 à 27) qui sont les signaux de sortie du REGISTRE (361) d'ETAT qui se trouvent décrits sur la figure 35. Ces signaux sont respectivement branchés sur les entrées (5-3 à 5—8). Ces signaux sont à leur tour respectivement retransmis directement aux sorties (11-3 à 11-8) du bloc (350) d'interface d'entrée. Les sorties (11-3 à 11-8) du bloc (350) d'interface d'entrée sont reliées respectivement par les liaisons (355-3 à 355-8) aux entrées (5-3 à 5—8) du bloc (358) multiplexeur
- Les signaux (+) REG.ET (32 à 37) qui sont les signaux de sortie du REGISTRE (362) d'ETAT qui se trouvent décrits sur la figure 35. Ces signaux sont respectivement branchés sur les entrées (6-3 à 6—8). Ces signaux sont à leur tour respectivement retransmis directement aux sorties (12-3 à 12-8) du bloc (350) d'interface d'entrée. Les sorties (12-3 à 12-8) du bloc (350) d'interface d'entrée sont reliées respectivement par les liaisons (356-3 à 356-8) aux entrées (6-3 à 6—8) du bloc (358) multiplexeur

Le multiplexeur (358) comporte, outre les entrées de données 1, 2, 3, 4, 5 et 6 qui viennent d'être décrites, deux autres entrées: une entrée 7 d'adressage et une entrée 8 d'échantillonnage.

L'entrée (7) d'adressage reçoit trois signaux d'adresse: EA*00, EA*01, EA*08. Ces signaux sont produits par le module (366) de commande et de contrôle qui est décrit sur la figure 36. Ces signaux permettent au moniteur (10) de sélectionner une des entrées 1 ou 2 ou 3 ou 4 ou 5 ou 6.

L'entrée (8) d'échantillonnage reçoit un signal RDEN* qui, quand il est bas, permet aux entrées échantillonnées par les signaux d'adresse EA* (00, 01, 08) d'être transmis fil à fil aux sorties (9-1 à 9-8) du multiplexeur (358). Ce signal RDEN* est bas quand:

- le moniteur (10) a demandé un cycle LECTURE (PMC-MEMR*)
- le moniteur (10) a sélectionné le demi module AM903 dans lequel il veut effectuer cette opération de lecture.

Quand ces conditions sont remplies, les sorties (9-1 à 9-8) du multiplexeur (358) reçoivent les signaux se trouvant sur l'entrée sélectionnée. Ces signaux sont appliqués respectivement sur les lignes EDB (00—07) (abréviation de EXTERNAL DATA BUS). Ces lignes EDB (00—07) sont d'une part raccordées à l'omnibus DBM-EDB (00—07). Cet omnibus est l'omnibus de données de l'omnibus de pilotage (12). D'autre part, les lignes EDB (00—07) sont raccordées respectivement aus entrées (1—2 à 1—7) du bloc (359) amplificateur inverseur. Dans ce bloc (359) amplificateur inverseur existe un amplificateur inverseur par lignes: ces amplificateurs inverseurs sont respectivement les amplificateurs inverseurs (373), (374), (375), (376), (377). Chacun de ces amplificateurs inverseurs alimentent une des sorties (2-2) à (2—7): l'indice de la sortie correspondant à l'indice de l'entrée. Ces sorties (2-2) à (2—7) alimentent respectivement les lignes référencées par EDB*02 à EDB*08. Ces lignes constituent un omnibus qui est raccordé aux entrées 1 des REGISTRES D'ETAT (360), (361) et (362) comme cela est représenté sur la figure 35.

La figure 35 est une représentation détaillée des circuits situés sur la moitié droite de la figure 33 à l'exclusion du bloc (367) d'élaboration des requêtes qui se trouve décrit sur la figure 36.

Les signaux de données arrivent sur la gauche de la figure sur l'omnibus de données EDB* (02—07). Cet omnibus alimente les entrées 1 des 3 REGISTRES D'ETAT (360), (361) et (362). Sur chacun de ces registres d'état (360), (361) et (362) se trouvent deux autres entrées:

- une entrée (3) de remise à zéro. Sur cette entrée (3) arrive un signal REST*. Ce signal, quand il est bas, effectue la remise à zéro de tous les circuits à mémoire contenus dans le registre concerné.
- une entrée (4) sélection. Le registre d'état (360) y reçoit le signal de sélection WPMI*01, le registre d'état (360) y reçoit le signal de sélection WPMI*02 et le registre (361) y reçoit le signal de sélection WPMI*03. Ces signaux WPMI* (01 à 03) sont élaborés dans le bloc (366) de commande et d'adresage qui est décrit dans la figure 36. Quand le moniteur (10) veut transférer les données contenues sur l'omnibus EDB* (02—07) dans un des registres d'états (360) ou (361) ou (362) il porte à un niveau bas le signal de sélection WPMI*OX correspondant à ce registre. Par ce moyen, le moniteur (10) peut modifier à volonté le contenu de chacun des registres d'états (360), (361) et (362) à partir des données qu'il aura préalablement placées sur l'omnibus EDB* (02—07).

Les signaux de sortie REG.ET (12 à 17) du registre d'état (360) servent à trois fins:

- d'une part ils sont retournés vers les entrées 5 (3 à 8) du bloc (350) d'interface d'entrée comme il a été expliqué précédemment à l'occasion de la description de la figure 34. Ce retour des signaux REG.ET (12 à 17) permet au moniteur (10) de pouvoir connaître à volonté l'état de ces signaux. Ceci est utile aussi bien pour la gestion des commandes envoyées aux sources à travers le module intermédiaire AM908 que pour effectuer des opérations d'auto-test
- d'autre part, ils sont associés aus signaux de commande DDW0 et DDW1 ainsi qu'aux signaux d'adressage GD0 et GD1 pour constituer, à travers le bloc (363) d'interface de sortie, les signaux de commande et d'adressage OUT (11 à 17) de l'interface ISM1.

Par ailleurs, le signal RET.ET.13 désigné aussi par l'appellation MSKIT1 (+) (abréviation de MASQUE INTERRUPTION 1) est envoyé vers le bloc (367) d'élaboration des requêtes comme il est représenté sur la figure 36. Ce signal comme son nom l'indique permet au moniteur (10) d'interdire l'émission de toute interruption ayant son origine dans l'interface ISM1.

Les signaux de commande et d'adressage OUT (11 à 17) de l'interface ISM1 sont produits de la façon suivante:

- OUT11 est obtenu par l'amplification à travers l'amplificateur direct (880) du signal de commande (+) DDW0. Le signal (+) DDW0 est produit par le module (367) d'élaboration des requêtes comme il est représenté sur la figure 36. Le signal OUT11 est également appelé RESET INHIBIT pour évoquer la fonction qu'il stimule dans le module intermédiaire AM908. Ce signal est appliqué sur la borne 01 du connecteur Y01
- OUT12 est obtenu par l'amplification à travers l'amplificateur direct (381) du signal d'adressage (+) GD0. Le signal (+) GD0 est produit par le module (367) d'élaboration des requêtes comme il est représenté sur la figure 36 (abréviation de GATE DATA 0). Ce signal est appliqué sur la borne 04 du connecteur Y01
- OUT13 est obtenu par l'amplification à travers l'amplificateur direct (382) du signal d'adressage (+) GD1). Le signal (+) GD1 est produit par le module (367) d'élaboration des requêtes comme il est représenté sur la figure 36 (abréviation de GATE DATA 1). Ce signal est appliqué sur la borne 02 du connecteur Y01
- OUT14 est obtenu par l'amplification avec inversion à travers l'amplificateur inverseur (383) du signal REG.ET.14. Le signal OUT14 est également désigné par l'appellation DC. RESET pour rappeler la fonction qu'il stimule dans le module intermédiaire AM908. Ce signal est appliqué sur la borne 06 du connecteur Y01
- OUT15 désigné aussi par l'appellation POWER-LOCK pour rappeler la fonction qu'il stimule dans le module intermédiaire AM908 est obtenu par la conjonction logique à travers le mélangeur (385) de deux signaux:
  - le signal REG.ET*15 lui-même étant produit par l'inversion à travers l'amplificateur inverseur (384) du signal REG.ET.15
  - le signal de commande (+) DDW1 qui est produit par le module (367)
- OUT16 est obtenu par l'amplification avec inversion à travers l'amplificateur inverseur (386) du signal REG.ET.16. Le signal OUT16 est également désigné par l'appellation DCOND2 (abréviation de DIRECT CURRENT ON COMMAND 2) pour rappeler la fonction qu'il stimule à l'intérieur du module intermédiaire AM908. A ce propos, il faut rappeler qu'un module intermédiaire AM908 peut exercer ses fonctions sur des sources multiples. Ces sources multiples peuvent avoir à être mise sous tension à des instants différents. Il existe deux commandes séparées DCONCD1 et DCONCD2 dans les interfaces ISM1 et ISM2 afin de pouvoir commander séparément deux sources ou groupe de source comme par exemple un groupe de sources positives et un groupe de sources négatives. Bien entendu, ce nombre de commande n'est pas limitatif mais dans le mode de réalisation préféré de l'invention il a été retenu parcequ'il convenant à la solution du problème posé. Ce signal est appliqué sur la borne 08 du connecteur Y01
- OUT17 est obtenu par l'amplification avec inversion à travers l'amplificateur inverseur (387) du signal REG.ET.17. Le signal OUT17 est également désigné par l'appellation DCONCD1 (abréviation de DIRECT CURRENT ON COMMAND1) pour rappeler les fonctions qu'il stimule à l'intérieur du module intermédiaire AM908. Ce signal est celui qui a été annoncé ci-dessus à propos du signal OUT17. Ce signal est appliqué sur la borne 07 du connecteur Y01.

Les signaux de sortie REG.ET (22 à 27) du registre d'état (361) servent également à trois fins:

- d'une part, ils sont retournés vers les entrées 5-(3 à 8) du bloc (350) d'interface d'entrée
- d'autre part, ils sont associés aux signaux de commande DDW0 et DDW1 ainsi qu'aux signaux d'adressage GD0 et GD1 pour constituer à travers le bloc (364) d'interface de sortie les signaux de commande et d'adressage OUT (21 à 27) de l'interface ISM2
- enfin le signal RET.ET.23 désigné aussi par l'appellation MSKIT2 (+) (abréviation de MASQUE INTERRUPTION 2) est envoyé vers le bloc (367) d'élaboration des requêtes comme il est représenté sur la figure 36. Ce signal comme son nom l'indique permet au moniteur (10) d'interdire l'émission de toute interruption ayant son origine dans l'interface ISM2.

Les signaux de commande et d'adressage OUT (21 à 27) de l'interface ISM2 sont analogues à ceux de l'interface ISM1 et sont produits d'une façon similaire:

- OUT21 est obtenu par l'amplification à travers l'amplificateur direct (388) du signal de commande (+) DDW0. Ce signal est également désigné par l'appellation RESET INHIBIT. Ce signal est appliqué sur la borne 01 du connecteur Y02
- OUT22 est obtenu par l'amplification à travers l'amplificateur direct (389) du signal d'adressage (+) GD0. Ce signal est appliqué sur la borne 04 du connecteur Y02
- OUT28 est obtenu par l'amplification à travers l'amplificateur direct (390) du signal d'adressage (+) GD1. Ce signal est appliqué sur la borne 02 du connecteur Y02
- OUT24 est obtenu par l'amplification avec inversion à travers l'amplificateur inverseur (391) du signal REG.ET14. Le signal OUT24 est également désigné par l'appellation DC.RESET. Ce signal est appliqué sur la borne 06 du connecteur Y02
- OUT25 désigné aussi par l'appellation POWER-LOCK est obtenu par la conjonction logique à travers le mélangeur (393) de deux signaux:
  - le signal REG.ET*25 lui-même étant produit par l'inversion à travers l'amplificateur inverseur (392) du signal REG.ET.25
  - le signal de commande (+) DDW1.
  
  le signal OUT25 est appliqué sur la borne 12 du connecteur Y02
- OUT26 est obtenu par l'amplification avec inversion à travers l'amplificateur inverseur (394) du signal REG.ET.26. Le signal OUT26 est également désigné par l'appellation DCONCD2. Ce signal est appliqué sur la borne 08 du connecteur Y02
- OUT27 est obtenu par l'amplification avec inversion à travers l'amplificateur inverseur (395) du signal REG.ET.27. Ce signal est appliqué sur la borne 07 du connecteur Y02.

Les signaux REG.ET (32 à 37) servent à 3 fins:

- d'une part ils sont retournés vers les entrées 6 (3 à 8) du bloc (350) d'interface d'entrée comme il a été expliqué précédemment à l'occasion de la description de la figure 34. Ce retour des signaux REG.ET (32 à 37) permet au moniteur (10) de pouvoir connaître à volonté l'état de ces signaux
- d'autre part, ils sont associés aux signaux de commande DDW0 et DDW1 ainsi qu'aux signaux d'adressage GD0 et GD1 pour constituer, à travers le bloc (365) d'interface de sortie, les signaux de commande et d'adressage OUT (31 à 37) de l'interface LSSCI
- Par ailleurs, le signal REG.ET33 désigné aussi par l'appellation MSKIT3 (+) est envoyé vers le bloc (367) d'élaboratiton des requêtes comme il est représente sur la figure 36.

Comme il a déjà été expliqué, l'interface LSSCI est différente des interfaces ISM1 et ISM2. Dans le mode de réalisation préféré de l'invention cet interface est destiné à communiquer avec les circuits alimentés par les sources du sous-système d'alimentation. Cette communication est rendue nécessaire pour plusieurs raisons:

- les circuits alimentés contiennent des sources privées qui ne sont pas comprises dans les sources pilotées directement par le moniteur. C'est le cas en particulier des sources de tension de référence (désignées par l'appellation VREF) utilisées dans les circuits logiques à mode de courant CML (Current Mode Logic). Les paramètres de fonctionnement de cette ou ces sources sont contenus dans des registres d'état spécifiques. Le moniteur grâce à l'interface LSSCI peut connaître les bits d'état caractérisant le fonctionnement de ces sources
- le moniteur (10) a besoin de faire connaître aux circuits alimentés l'apparition de certains évènements caractéristiques. En particulier, le moniteur (10) doit informer les circuits alimentés du régime de fonctionnement du sous-système d'alimentation; ces informations sont par exemple:
  - la ou les tensions ont atteint leur régime de fonctionnement normal
  - la ou les tensions sont en régime de fonctionnement transitoire
  - la ou les tensions sont en défaut
  - l'opérateur ou le technicien de maintenance demandent une remise à zéro des circuits alimentés.

Pour remplir ces fonctions, l'interface LSSCI comporte des lignes de commande qui sont:

- OUT32 désigné aussi par l'appellation DCONCD. Ce signal, quand il est haut, signifie que la ou les tensions de sortie des sources ont atteint leur régime de fonctionnement normal. Dans ces conditions, les circuits sont alimentés et donc sont susceptibles de fonctionner normalement

- OUT37 désigné aussi par l'appellation DC.RESET. Ce signal quand il est haut signifie que les registres d'état de la source de référence VREF doivent être remis à zéro
- OUT31 désigné aussi par l'appellation RESET-INHIBIT. Ce signal quand il est haut signifie que le signal précédent DC-RESET ne doit pas être pris en compte. Ce signal RESET-INHIBIT est rendu nécessaire dans certaines circonstances où les bits d'état doivent être conservés comme dans certaines opérations de maintenance
- OUT35 désigné aussi par l'appellation WARNING. Le front de montée de ce signal indique le début d'un intervalle de temps déterminé au bout duquel la ou les sources seront mises hors tension ou tout au moins auront un fonctionnement anormal
- OUT33-1, OUT33-2, OUT33-3 désignés aussi par les appellations CHLCK OUT01, CHLCK OUT02, CHLCK OUT03. (abréviation de CHANNEL LOCK OUT). Ces signaux quand ils sont hauts signifient qu'il faut interdire l'accès aux entrées et aux sorties des circuits alimentés. Ce signal comporte 3 lignes uniquement pour permettre de répercuter directement cette interdiction en 3 endroits des circuits alimentés. Ce nombre n'est en aucun limitatif et tout autre nombre pourrait être choisi sans rien changer à l'enseignement de l'invention. Cette interdiction est utile pendant certaines périodes particulières comme par exemple les mises en ou hors tension de sources
- OUT36 désigné aussi par l'appellation PWRS (abréviation de POWER RESET). Ce signal quand il est haut signifie que le Moniteur (10) demande la remise à zéro des circuits à mémoire contenus dans les circuits alimentés.

Ces signaux de commande d l'interface LSSC1 sont obtenus dans le bloc (365) d'interface de sortie à partir des signaux REG.ET (32 à 37) et du signal de commande DDW0:

- OUT31 ou RESET INHIBIT est obtenu par l'amplification à travers l'amplificateur (396) du signal DDW0. Ce signal est appliqué sur la borne 01 du connecteur Y03
- OUT32 ou DCONCD est obtenu par l'amplification avec inversion à travers l'amplificateur inverseur (397) du REG.ET.32
- OUT33-1, OUT33-2, OUT33-3 ou CHLCK-OUT01, CHLCK-OUT02, CHLCK-OUT03 sont obtenus par l'amplification à travers l'amplificateur (398) du signal REG.ET.34. Par ailleurs, dès que ces signaux deviennent hauts, un contacteur (399) à automaintien maintient les signaux hauts aussi longtemps que le système d'alimentation est en »MARCHE«. De cette façon l'interdiction d'accès est maintenue même si le signal REG.ET.34 devient bas. La seule manière de faire tomber ces signaux d'interdiction d'accès est de placer le système d'alimentation en position »ARRET«. Ces signaux CHLCK OUT (01, 02, 03) sont appliqués respectivement sur les bornes 16, 18 et 28 du connecteur Y03
- OUT35 désigné aussi par l'appellation WARNING est obtenu par l'amplification à travers l'amplificateur (400) du signal REG.ET.35: ce signal est appliqué sur la borne 12 du connecteur Y03
- OUT36 désigné aussi par l'appellation PWRS est obtenu par l'amplification à travers l'amplificateur (401) du signal REG.ET.36. Ce signal est appliqué sur la borne 14 du connecteur Y03
- OUT37 désigné aussi par l'appellation DCRESET est obtenu par l'amplification avec inversion à travers l'amplificateur inverseur (402) du signal REG.ET.37. Ce signal est appliqué sur la borne 06 du connecteur Y03.

La figure 36 représente le bloc (366) de commande et d'adressage et le bloc (367) d'élaboration des requêtes contenus dans les demi modules (51-1) d'interface aval AM903.

Le bloc (366) de commande et d'adressage reçoit sur sa gauche des signaux en provenance du moniteur (10). Ces signaux sont véhiculés à travers l'omnibus de pilotage (12) et arrivent sur le connecteur Z01 au niveau des demi-modules (51-1) d'interface aval AM903. Ces signaux de trois types:

- les signaux d'adressage PMC-ADR (00, 01, 08, 15), GD0, GD1
- les signaux de sélection SEL0, SEL1
- les signaux de commande: PMC-MEMR, PMC-MEMW, PMC-REST, DDW0, DDW1
- les signaux d'adressage PMC-ADR (00, 01, 08, 15) servent au Moniteur (10) à adresser:
  - en lecture une des 6 voies du multiplexeur (355) représenté sur la figure 34. Pour cela, les signaux d'adressage PMC-ADR (00, 01; 08; 15) sont respectivement amplifiés et inversés dans les amplificateurs inverseurs (431), (432), (433) et (434) pour fournir les signaux EA* (00, 01, 08, 15). Ces signaux EA* (00, 01, 08, 15) sont appliqués à la borne 7 d'adressage du multiplexeur (358) comme il est représenté sur la figure 34.
  - en écriture, un des dits registres d'état (360) ou (361) ou (362) représentés sur la figure 35. Pour cela, les signaux d'adressage amplifiés et inversés EA* (00, 01) sont respectivement appliqués aux bornes 2 et 3 du décodeur (436). Ce décodeur (436) en phase écriture définie par le signal PMC-MEMW, fournit sur ses sorties (4), (5), (6) des signaux désignés respectivement par WPMI*01, WPMI*02, WPMI*03 (abréviation de WRITE POWER MONITOR INTERFACE). Le signal WPMI*01 est appliqué à l'entrée (4) du registre d'état (360), WPMI*02 est appliqué à l'entrée (4) du registre d'état (361) et WPMI*03 et appliqué à l'entrée (4) du registre d'état (362), comme il est représenté sur la figur 35. Un seul de ces signaux est bas à la fois. Le signal bas correspond à l'adresse définie sur les entrées 2 et 3 du décodeur (436).

- les signaux d'adressage GD0 et GD1 sont directement émis par le moniteur (10). A l'intérieur du bloc (367) GD0 est amplifiée à travers les deux amplificateurs inverseurs (420) et (421) et GD1 est amplifiée par les 2 amplificateurs inverseurs (422) et (423). Ces deux signaux amplifiés GD0 et GD1 sont envoyés vers les modules intermédiaires AM908 comme il est montré sur la figure 35. Ces deux signaux d'adressage GD0 et GD1 permettent au moniteur (10) d'adresser un des 4 octets d'état des sources contenus dans chaque module AM908.
- les signaux de sélection SEL0 et SEL1 sont émis directement par le moniteur (10). Ces signaux de sélection SEL0 et SEL1 sont appliqués à l'entrée du conditionneur (430) à sortie inversée. La 3ème entrée de ce conditionneur (430) à sortie inversée est alimentée par le signal d'adressage PMC-ADR15. Quand les conditions, placées à l'entrée du conditionneur (430) à sortie inversé, sont réalisée la sortie de ce dit conditionneur (430) se trouve à un niveau bas pour fournir un signal de sélection du demi module AM903 CS*. Ce signal de sélection CS* du demi module AM903 est transmis:
  - à une des 2 entrées du conditionneur (428) à sortie inversée. La 2ème entrée de ce conditionneur (428) à sortie inversée est alimentée par la demande de cycle lecture PMC-MEMR émise par le moniteur (10). Quand ces 2 conditions d'entrée sont remplies, la sortie du conditionneur (428) à sortie inversée devient basse et fournit le signal RDEN (abréviation de READ ENABLE) d'autorisation de lecture. Ce signal RDEN d'autorisation de lecture est amplifié et inversé à travers l'amplificateur-inverseur (429) pour fournir le signal RDEN*. Ce signal RDEN* est appliqué à l'entrée (8) du multiplexeur (358) comme il est représenté sur la figure (34). C'est ce signal RDEN* qui autorise le transfert des signaux à travers le multiplexeur (358)
  - à l'entrée (1) du décodeur (436). Quand le signal CS* est présent et quand le signal PMC-MEMW demande un cycle d'écriture sont présents le décodeur (436) peut effectuer la décodification des signaux d'adresses EA* (00—01)
- les signaux de commande PMC-MEMR, PMC-MEMW, PMC-RES, DDW0 et DDW1 permettent au moniteur (10) de commander les opérations suivantes:
  - PMC-MEMR est le signal de commande de cycle lecture émis par le moniteur (10). Comme il a été expliqué précédemment ce signal PMC-MEMR vient en condition sur le conditionneur (428) à sortie inversée afin de produire le signal de validation RDEN
  - PMC-MEMW est le signal de commande de cycle écriture émis par le moniteur (10). Ce signal est appliqué sur l'entrée 7 du décodeur (436) afin de permettre le fonctionnement de ce dit décodeur (436)
  - PMC-REST est le signal de remise à zéro générale émis par le moniteur (10). Ce signal est amplifié et inversé à travers l'amplificateur inverseur (435) afin de fournir le signal REST* à tout le demi module d'interface aval AM903
  - DDW0 désigné aussi l'appellation RESET-INHIBIT est le signal qui permet au moniteur (10) d'interdire la remise à zéro des octets d'état caractérisant le fonctionnement des sources pilotées par le demi module d'interface aval AM903. Ce signal DDW0 est amplifié à travers les 2 amplificateurs inverseurs (424) et (425) pour être envoyé dans les modules intermédiaires AM908
  - DDW1 désigné aussi par l'appellation POWER-LOCK est le signal qui permet au moniteur (10) de commander un fonctionnement fictif de la ou les sources pilotées c'est-à-dire que la tension de sortie de ces dites sources pilotées ne s'établit pas, bien que toutes les autres fonctions des sources soient assumées. Ce signal DDW1 est amplifié à travers les 2 amplificateurs inverseurs (426) et (427) pour être envoyé dans les modules intermédiaires AM908. Enfin le module de commande et d'adressage (366) contient un signal OLOG (abréviation de ZERO LOGIQUE). Ce signal est amplifié et inversé dans l'amplificateur inverseur (419) pour fournir le signal ELOG1 (abréviation de ENABLE LOGIC). Ce signal ELOG1 est envoyé au moniteur (10). Ce signal permet de signaler au moniteur (10) que le module d'interface aval AM903 est bien enfiché dans le ratelier. En l'absence du module d'interface aval AM903 la ligne est flottante et le moniteur (10) reconnaît cet absence.

Le bloc (367) d'élaboration des requêtes reçoit sur sa gauche et de haut en bas les signaux d'entrée suivants:

- Le signal DDR1 désigné aussi par l'appellation DIN17. Ce signal est celui produit par la sortie (7—8) du bloc (350) d'interface d'entrée comme il est représenté sur la figure 34. Ce signal DDR1 quand il est haut signifie que la ou les sources desservies par l'interface ISM1 signalent l'apparition d'un incident justifiant une interruption
- Le signal REG.ET13 désigné aussi par l'appellation MSKIT1 (abréviation de MASK INTERRUPTION 1) est le signal de sortie de la borne (2—7) du registre d'état (360) de la figure 35. Ce signal quand il est haut signifie que le signal DDR1 décrit ci-dessus peut être acheminé vers le moniteur (10)
- Le signal DDR2 désigné aussi par l'appellation DIN27. Ce signal est celui produit par la sortie (8-8) du bloc (350) d'interface d'entrée. Ce signal DDR2 quand il est haut signifie que laz ou les sources desservies par l'interface ISM2 signalent l'apparition d'un incident justifiant une interruption

- Le signal REG.ET.23 désigné aussi par l'appellation MSKIT2 (abréviation de MASK INTERRUPTION 2) est le signal de sortie de la borne (2—7) du registre d'état (361). Ce signal quand il est haut signifie que le signal DDR2 décrit ci-dessus peut être acheminé vers le moniteur (10). Il est à remarquer que l'interface LSSCI appelé aussi interface LSSCI/VREF dispose d'un circuit d'interruption séparé des circuits d'interruption des interfaces ISM1 et ISM2. Cette disposition est nécessité par le fait que les interruptions n'ont pas le même niveau de priorité et que par conséquent il est indispensable de séparer les requêtes
- le signal REG.ET.12 désigné aussi par l'appellation AUTO TEST IT SOURCE D.C. est le signal de sortie de la borne 2.2 du registre d'état (360). Ce signal quand il est haut excite le circuit de demande d'interruption de l'interface ISM1 et ISM2. Il permet au Moniteur (10) d'effectuer un contrôle des circuits d'interruption des interfaces ISM1 et ISM2 en créant une pseudo interruption et en vérifiant que cette demande d'interruption aboutit normalement
- Le signal REG.ET.22 désigné par l'appellation AUTOTEST IT VREF est le signal de sortie de la borne (22) de registre d'état (361). Ce signal joue le même rôle que le précédent mais pour l'interface LSSCI/VREF.

Par ailleurs, il est à noter que les signaux (+) DDR1 ou DIN17, (+) DDR2 ou DIN27, (+) DDR3 ou DIN37 sont envoyés directement vers le MONITEUR (10) à travers l'omnibus de pîlotage (12). Ce sont ces signaux DDR1, DDR2 et DDR3 qui permettront au Moniteur (10) de connaître l'origine des demandes d'interruption qu'il recevra depuis les modules d'interface aval AM903.

Les signaux d'entrée du bloc (367) d'élaboration des requêtes sont raccordés à l'intérieur de ce bloc de traitement de la façon suivante:

- le signal de demande d'interruption DDR1 et le signal de masquage de cette interruption MSKIT1 sont respectivement placés aux 2 entrées du conditionneur (410) à sortie inversée. Le signal de ce conditionneur (410) à sortie inversée désigné par l'appellation MDR1* est appliqué à la première des 3 entrées du conditionneur (415) à sortie inversée. Le signal de sortie de ce conditonneur (415) à sortie inversée désigné par l'appellation GFLT (abréviation de GENERATOR FAULT) est d'une part envoyée directement au moniteur (10) à travers l'omnibus de pilotage (12) d'autre part envoyé à l'entrée de l'amplificateur (416) à sortie inversée. Le signal de sortie de cet amplificateur (416) à sortie inversée désigné par l'appellation INTR* (abréviation de INTERRUPT REQUEST) est envoyé directement au moniteur (10) à travers l'omnibus de pilotage (12)
- le signal de demande d'interruption DDR2 et le signal de masquage de cette interruption MSKIT2 sont respectivement placés aux 2 entrées du conditionneur (411) à sortie inversée. Le signal de sortie de ce conditionneur (411) à sortie inversée désigné par l'appellation MDR2* est appliqué à la deuxième des 3 entrées du conditionneur (415) à sortie inversée. Le signal de sortie de ce conditionneur (415) à sortie inversée désigné par l'appellation GFLT suit le même parcours qu'il a été décrit ci-dessus
- le signal de demande d'interruption DDR3 et le signal de masquage de cette interruption MSKIT3 sont respectivement placés aux 2 entrées du mélangeur (412) à sortie inversée. Le signal de sortie de ce conditionneur (412) à sortie inversée désigné par l'appellation MDR3* est appliqué à la première des 2 entrées du conditionneur (417) à sortie inversée. Le signal de sortie de ce conditonneur (417) à sortie inversée désigné par l'appellation PMV-FLT (abréviation de POWER MONITOR REFERENCE VOLTAGE-FAULT) est d'une part envoyé directement au moniteur (10) à travers l'omnibus de pilotage (12) d'autre part placé à l'entrée de l'amplificateur (418) inverseur. Le signal de sortie de cet amplificateur (418) inverseur désigné par l'appellation PMV-INT* (abréviation de POWER MONITOR REFERENCE VOLTAGE — INTERRUPT REQUEST) est envoyé directement au moniteur (10) à travers l'omnibus de pilotage (12)
- le signal AUTO TEST IT SOURCE DC est appliqué à l'entrée de l'amplificateur (413) inverseur. Le signal de sortie de cet amplificateur (413) inverseur est appliqué à la 3ème entrée du conditionneur (415) à sortie inversée. Le signal de sortie de ce mélangeur (415) à sortie inversée désigné par l'appellation GFLT suit le même parcours que celui décrit à l'occasion de la demande d'interruption de l'interface ISM1 ou ISM2. Il apparaît clairement ici que ce signal AUTO TEST IT SOURCE DC permet au moniteur (10) de provoquer une pseudo demande d'interruption d'interface ISM1 ou ISM2
- le signal AUTO TEST IT VREF est appliqué à l'entrée de l'amplificateur (414) inverseur. Le signal de sortie de cet amplificateur (414) inverseur est appliqué à la 2ème entrée du conditionneur (417) à sortie inversée. Le signal de sortie de ce conditionneur (417) à sortie inversée désigné par l'appellation PMV-FLT suit le même parcours que celui décrit à l'occasion du signal de demande d'interruption émis par l'interface LSSCI.

Le fonctionnement du bloc (367) d'élaboration des requêtes découle de ce qui vient d'être décrit :

- quand l'interface ISM1 émet une demande d'interruption cette requête se traduit par la montée du signal DDR1. Si le moniteur (10) autorise la transmission de cette requête il porte à un niveau haut le signal de masquage MSKIT1. Les 2 signaux DDR1 et MSKIT1 étant hauts, la sortie du conditionneur (410) à sortie inversée MDR1* devient basse ce qui est la manifestation que la demande d'interruption a été acceptée. Ce signal MDR1* attaque la première entrée du conditionneur (415) à sortie inversée. Le signal MDR1* étant bas, la sortie du conditionneur (415) sera haute et le signal de défaut GFLT est haut. Ce signal GFLT en position haute est envoyé d'une part directement sur l'omnibus (12) de pilotage et d'autre part sur l'entrée de l'amplificateur (416) inverseur qui par conséquent produit sur sa sortie un signal INTR* en position basse. Ce signal INTR* est à son tour placé sur l'omnibus (12) de pilotage. Il sera vu plus loin comment le moniteur (10) alerté par le signal INTR* de l'existence d'au moins une demande d'interruption, viendra reconnaître par les signaux GFLT hauts les modules d'interface aval AM903 ayant émis ces demandes
- un mécanisme identique est mis en jeu à l'occasion d'une demande d'interruption DDR2 émise par un interface ISM2 à la différence près que le masquage de l'interruption est effectué par le signal MSKIT2 appliqué au conditionneur (411) à sortie inversée
- quand l'interface LSSC1 émet une demande d'interruption, elle le fait en portant le signal DDR3 à une valeur haute. Si le signal de masquage MSKIT3 est haut, la sortie MDR3* du conditionneur (412) à sortie inversée sera basse ce qui signifie que la demande d'interruption DDR3 a été acceptée. Ce signal MDR3* en position basse est appliqué à la première entrée du conditionneur (417) à sortie inversée qui produit à sa sortie un signal PMV-FLT haut. Ce signal PMV-FLT est envoyé d'une part directement sur l'omnibus (12) de pilotage et d'autre part sur l'entrée de l'amplificateur (418) inverseur qui produit à sa sortie un signal PMV-INT* bas
- quand le moniteur (10) veut tester le fonctionnement du circuit d'interruption des interfaces ISM1 et ISM2 il positionne à un niveau haut la cellule REG.ET.12 du registre d'état (360). Le signal REG.ET.12 traverse l'amplificateur (413) inverseur. Le signal de sortie de cet amplificateur (413) inverseur alimente la troisième entrée du conditionneur (415) à sortie inversée qui fournit à sa sortie un signal GFLT haut. La situation rencontrée au cours d'une demande d'interruption par ISM acceptée est reproduite artificiellement par le moniteur (10) qui peut ainsi tester les circuits situés en aval
- quand le moniteur (10) veut tester le fonctionnement du circuit d'interruption de l'interface LSSCI il le fait en positionnant à un la cellule REG.ET.22 du registre d'état (361). Le signal REG.ET.22 attaque l'entrée de l'amplificateur (414) inverseur qui fournit à sa sortie un signal bas. Ce signal bas attaque la deuxième entrée du conditionneur (417) à sortie inversée qui fournit à sa sortie un signal PMV-FLT haut. Les conditions d'émission de demande d'interruption par l'interface LSSCI sont bien reproduites.

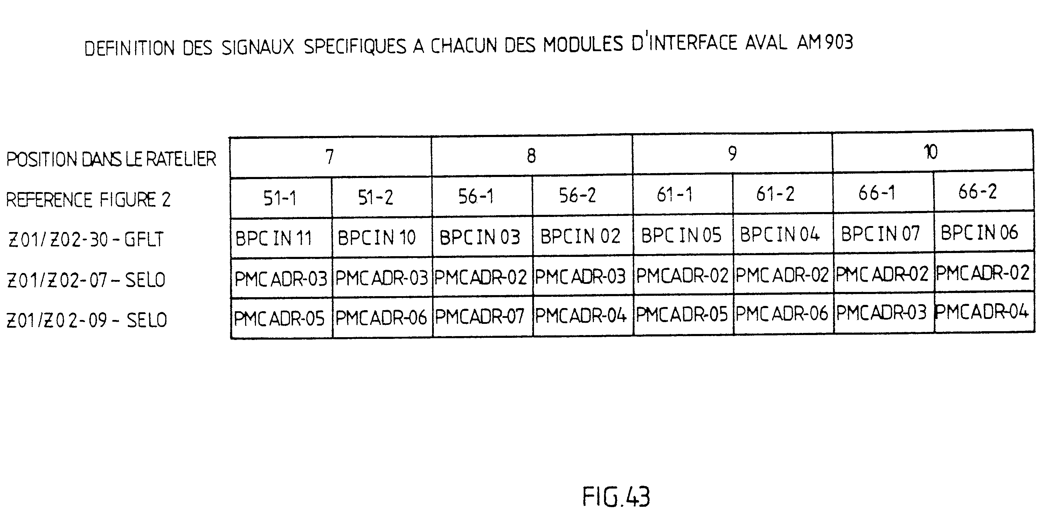

Comme il l'a été dit, les figures 33, 34, 35 et 36 concernent le demi module (55-1) d'interface aval AM903. En fait, le système d'alimentation, dans son mode de réalisation préféré ici décrit, comporte 8 demi modules d'interface aval AM903. Ces huit demi module d'interface aval AM903 sont désignés sur la figure 2 par les références: 55-1, 55-2, 56-1, 56-2, 61-1, 61-2, 66-1 et 66-2. Chacun de ces demi modules d'interface aval AM903 pilote un interface ISM1, un interface ISM2 et un interface LSSCI. Sur la figure 43 sont représentés les moyens d'identification et d'adressage propres à chaque demi module d'interface aval AM903.

La première ligne du tableau de la figure 43 donne l'emplacement des plaques fonctionnelles supportant les modules d'interface aval AM903 dans le ratelier: l'emplacement 7 pour le module 51, l'emplacement 8 pour le module 56, l'emplacement 9 pour le module 61 et l'emplacement 10 pour le module 66.

La deuxième ligne du tableau de la figure 43 donne la désignation donnée à chaque demi module d'interface aval AM903 dans la figure 2: le demi module (51-1) et le demi module (51-2) qui constituent le module (51) d'interface aval AM903 sont portés par la plaque logée à l'emplacement 7, le module (56) se trouve à l'emplacement 8, le module (61) se trouve à l'emplacement 9 et le module (66) se trouve à l'emplacement 10.

La troisième ligne du tableau de la figure 43 donne la désignation de la liaison portant le signal de défaut GFLT correspondant à chaque demi module:
le signal de défaut GFLT du demi module (51-1) est appelé BPCIN-11,
le signal de défaut GFLT du demi module (51-2) est appelé BPCIN-10,
le signal de défaut GFLT du demi module (56-1) est appelé BPCIN-03,
le signal de défaut GFLT du demi module (56-1) est appelé BPCIN-02,
le signal de défaut GFLT du demi module (61-1) est appelé BPCIN-05,
le signal de défaut GFLT du demi module (61-2) est appelé BPCIN-04,
le signal de défaut GFLT du demi module (66-1) est appelé BPCIN-07,
le signal de défaut GFLT du demi module (66-2) est appelé BPCIN-06.

Ces signaux BPCIN (02, 03, 04, 05, 06, 07, 11 et 12) sont ceux représentés sur la figure 14.

Les quatrième et cinquième lignes du tableau de la figure 43 donnent les signaux d'adressage SEL0 et SEL1 des demi modules d'interfaces aval AM903:

le demi module (55-1) est adressé par les lignes PMC-ADR03 et PMC-ADR05,
le demi module (55-2) par les lignes PMC-ADR03 et PMC-ADR06,
le demi module (56-1) par les lignes PMC-ADR02 et PMC-ADR07,
le demi module (56-2) par les lignes PMC-ADR03 et PMC-ADR04,
le demi module (61-1) par les lignes PMC-ADR05 et PMC-ADR02,
le demi module (61-2) par les lignes PMC-ADR02 et PMC-ADR06,
le demi module (66-1) par les lignes PMC-ADR02 et PMC-ADR03,
le demi module (66-2) par les lignes PMC-ADR02 et PMC-ADR04.

Ces lignes PMC-ADR (02, 03, 04, 05, 06, 07) seront décrites lors de la description du module (75) de pilotage AM902B.

LE MODULE DE PILOTAGE AM902

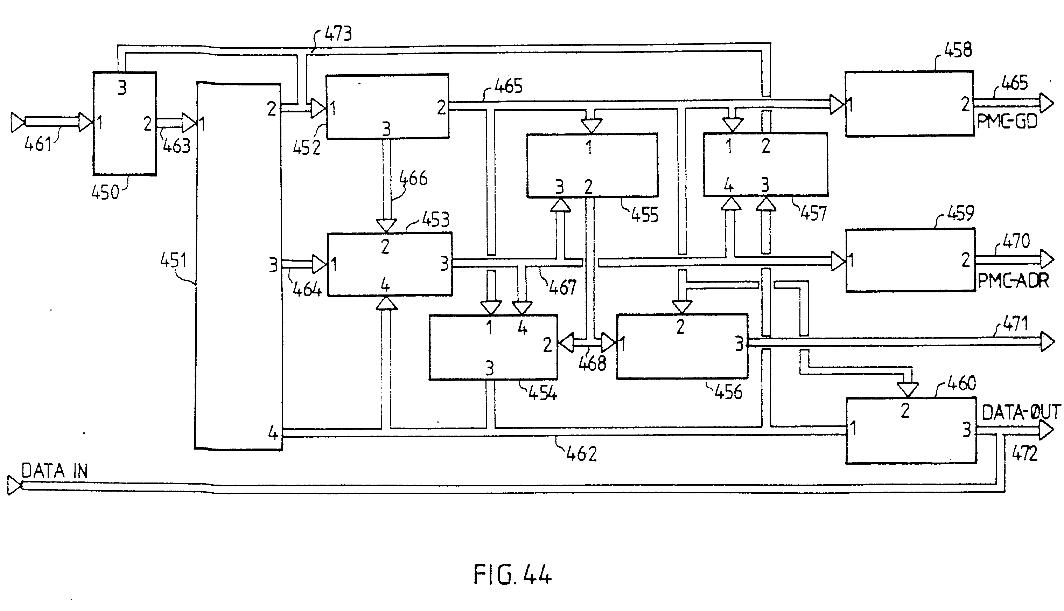

La figure 44 est une représentation schématique du MODULE (75) de pilotage AM902B. Sur cette figure les signaux circulent depuis la gauche vers la droite sauf dans les omnibus où les signaux peuvent circuler dans les deux sens ainsi que les lignes où un sens différent est indiqué: ce MODULE (75) de pilotage AM902B est le cœur du dispositif de pilotage du système d'alimentation car c'est lui qui contient le microprocesseur et la plus grande partie des dispositifs de mémorisation nécessaires au fonctionnement du Moniteur (10) de pilotage du système d'alimentation.

Sur la gauche de la figure 44 figurent deux câbles d'entrée de signaux:

- le câble (461) qui véhicule les signaux de commande de cycle de fonctionnement du microprocesseur (451). Ces signaux de commande de cycle sont des signaux émis par le reste du système d'alimentation en vue de demander des services particuliers au microprocesseur (451),
- l'omnibus (472) qui véhicule les signaux d'entrée ou de sortie du microprocesseur (451). Dans le fonctionnement du microprocesseur (451) en mode lecture les signaux à introduire dans le MODULE (75) de pilotage AM902B sont placés par le système d'alimentation sur cet omnibus (472) et le microprocesseur vient lire le contenu de l'omnibus (472) DBM-EDB (00—07).

Le CABLE (461) DE COMMANDE EXTERNE arrive sur l'entrée 1 du BLOC (450) DE COMMANDE DE CYCLES. Ce BLOC (450) DE COMMANDE DE CYCLES est également raccordé sur son entrée/sortie 3 au CABLE (473) DE COMMANDE INTERNE.

Le BLOC (450) DE COMMANDE DE CYCLE élabore les signaux reçus sur ses entrées (1) et (3) et fournit des signaux de commande de cycles à la fois sur sa sortie 2 en direction du MICROPROCESSEUR (451) et sur son entrée/sortie 3 vers les circuits situés en aval du MICROPROCESSEUR (451).

La sortie 2 du bloc (450) DE COMMANDE DE CYCLE est reliée par la liaison (463) à l'entrée 1 du MICROPROCESSEUR (451).

Cette entrée (1) du microprocesseur (451) reçoit les requêtes extérieures. Pendant son fonctionnement le microprocesseur (451) communique avec le système d'alimentation au moyen des sorties 2 et 9 et de l'entrée sortie 4:

- la sortie 2 émet des signaux de commandes et des signaux de synchronisation,
- la sortie 3 émet des adresses de poids forts qui sont transmises par le câble (464),
- l'entrée/sortie 4 est l'entrée/sortie des données échangées par le microprocesseur (451) avec le reste du système d'alimentation. Cette entrée/sortie 4 est raccordée à l'OMNIBUS (462) INTERNE DES DONNEES IDB (00—07).

Le câble (473) de commande interne est relié:

- d'une part à l'entrée (3) du bloc (450) de commande de cycles comme il a été vu précédemment,
- d'autre part à l'entrée 1 du bloc (452) D'ELABORATION DES ORDRES,
- enfin à l'entrée 2 du BLOC (457) DE BASE DE TEMPS.

Le câble (464) est relié à l'entrée 1 du BLOC (453) D'AIGUILLAGE ADRESSES/DONNEES.

L'OMNIBUS (462) INTERNE DES DONNEES est relié:

- à l'entrée 4 du BLOC (453) d'aiguillage adresses/données,
- à l'entrée 3 du BLOC (454) DES MEMOIRES,
- à l'entrée 3 du BLOC (457) de base de temps,
- à l'entrée 1 du BLOC (460) DE COMMUNICATION DE SENS DE TRANSFERT DES DONNEES.

Le bloc (452) d'élaboration des ordres effectue des opérations sur les signaux qu'il reçoit sur son entrée 1 et place des ordres sur ses sorties 2 et 3:

- la sortie 2 alimente le CABLE (465) DES COMMANDES INTERNES,
- la sortie 3 alimente le CABLE (466) D'AIGUILLAGE ADRESSE/DONNEES.

Le câble (465) des commandes internes est raccordé à:

- l'entrée 1 du BLOC (454) des mémoires,
- l'entrée 1 du BLOC (455) de sélection,
- l'entrée 2 du BLOC (456) TAMPON DES COMMANDES EXTERNES DE 2° NIVEAU,
- l'entrée 1 du BLOC (458) TAMPON DES COMMANDES EXTERNES DE 1° niveau,
- l'entrée 2 du BLOC (460) DE COMMUTATION DU SENS DE TRANSFERT DES DONNEES.

Les commandes externes de ler niveau sont les commandes transmises par le canal des registres du module d'interface aval AM903 comme par exemple: DCRESET (OUT14), POWER LOCK (OUT15), DCONCD2 (OUT16), DCONCD1 (OUT17) dans l'interface ISM1 (figure 33).

Les commandes externes de 2ème niveau sont les commandes transmises sans passer par les registres du module d'interface aval AM903 comme par exemple: RESET-INHIBIT (OUT11), GD0 (OUT12), GD1 (OUT13) dans l'interface ISM1 (figure 33).

Le câble (466) d'aiguillage adresse/données est raccordé à l'entrée 2 du bloc (453) d'aiguillage adresse/données.

Le bloc (453) d'aiguillage adresse/données est nécessité dans le mode de réalisation préféré de l'invention, par le fait que le microprocesseur (451) est un microprocesseur 8 bits, type 8085. Dans ce type de microprocesseur l'adressage est obtenu par la concaténation de deux octets:
L'octet de poids faible est obtenu par prélèvement de l'octet placé par le microprocesseur (451) sur l'omnibus (462) interne de données IDB (00—07) et l'octet de poids fort est obtenu par prélèvement de l'octet placé par le microprocesseur (451) sur le câble (464) d'ADRESSE INTERNE IA (08—15).
L'ordre de concaténation est donné par le bloc (452) d'élaboration d'ordres à travers le câble (466) d'aiguillage adresse/données. Le résultat de la concaténation qui représente une adresse complète est placé sur le bloc (453) d'aiguillage adresse données sur sa sortie 3. Cette sortie 3 du bloc (453) d'aiguillage adresse/données alimente le CABLE (467) INTERNE D'ADRESSAGE IA (00—07). Ce câble (467) interne d'adressage est raccordé:

- à la borne 3 du bloc (455) de sélection,
- à la borne 4 du bloc (454) des mémoires,
- à la borne 4 du bloc (457) de base de temps,
- à la borne 1 du bloc (459) tampon des adresses.

Le bloc (455) de sélection reçoit sur sa borne (1) les ordres émis par le microprocesseur (451) et sur sa borne (3) des signaux d'adressage. A partir des ordres reçus et des adresses reçues le bloc (455) de sélection créé des signaux de sélection qu'il place sur sa sortie 2 sur laquelle est raccordé le CABLE (468) DE SELECTION. Le câble (468) de sélection est relié:

- à la borne 1 du bloc (454) des mémoires,
- à la borne 1 du bloc (456) TAMPON DES COMMANDES EXTERNES DE 2e NIVEAU.

Le bloc (456) tampon des commandes externes de 2e niveau reçoit:

- sur sa borne 1 des signaux de sélection véhiculés par le câble (48) de sélection,
- sur sa borne 2 les ordres véhiculés par le câble (465) des commandes externes.

A partir des ordres et des signaux de sélection reçus le bloc (456) tampon des commandes externes de 2e niveau place sur sa sortie (3) un ou des signaux de commande qui sont véhiculés par le câble (471) des commandes externes de 2e niveau. Ce câble (471) des commandes externes de 2e niveau est raccordé à l'un des connecteurs (Z01) ou (Z02) du module (75) de pilotage AM902B.

Le bloc (457) de base de temps reçoit:

- sur sa borne 1 des ordres et des signaux de synchronisme véhiculés par le câble (465) des commandes internes,
- sur sa borne 4 des signaux d'adressage transportés par le câble (467) d'adressage interne,
- sur sa borne 3 des signaux de données véhiculés par l'omnibus (462) interne de données.

L'ensemble de ces signaux reçus permet au bloc (457) de base de temps de produire en temps utile des signaux de contrôle de cycles qui sont appliqués sur sa borne 2 et véhiculés par le câble (473) interne de contrôle de cycles. Sur sa borne 2 le bloc (457) de base de temps reçoit un ou des signaux d'horloge qui lui servent à mesurer des intervalles de temps.

Le bloc (457) de base de temps comporte un certain nombre de décompteurs. Sur ordre du microprocesseur (451) ces décompteurs sont chargés à partir de valeurs initiales contenues sur l'omnibus (462) internes des données. Ensuite, à partir des signaux d'horloge reçus les décompteurs sont actionnés: leur contenu est diminué d'une unité à chaque signal d'horloge. Quand un de ces contenus est nul, le bloc (457) de base de temps engendre un signal d'interruption de cycle qui est transmis au microprocesseur (451) à travers le câble (473) interne de contrôle de cycle.

Le bloc (458) tampon des commandes externes de Ier niveau reçoit sur sa borne (1) les commandes émises par le microprocesseur (451) et destinées aux modules d'interface (74) d'exploitation AM904 et aux modules (55), (56), (61), (66) d'interface aval AM903. Ces commandes sont amplifiées et mises en forme à l'intérieur du bloc (458) tampon des commandes externes de Ier niveau et transmises à travers la borne (2) sur l'omnibus (469) des commandes et des contrôles qui appartient à l'omnibus de pilotage (12).

Le bloc (459) tampon des adresses reçoit sur sa borne (1) les lignes du câble interne d'adressage. Les signaux véhiculés par ce câble interne d'adressage sont utilisés et mis en forme puis transmis par la borne (2) au câble (470) des adresses externes. Ce câble (470) des adresses externes appartient à l'omnibus de pilotage (12).

Le bloc (460) de commutation du sens de transfert des données est raccordé:

- sur sa borne 1 à l'omnibus (462) interne des données,
- sur sa borne 2 au câble (465) des commandes internes,
- sur sa borne 3 à l'omnibus (472) externe des données.

Le microprocesseur (451) fait connaître au bloc (460) de commutation du sens de transfert des données par l'intermédiaire du câble (465) des commandes internes, la nature de l'opération en cours si cette opération entraine un échange de données avec l'extérieur du module (75) de pilotage AM902B. Si cette dite opération en cours est une opération de lecture, le bloc (460) de commutation de sens de transfert de données commande le transfert depuis sa borne 3 vers sa borne 1. Dans le cas inverse, où ladite opération en cours est une opération d'écriture, le bloc (460) de commutation de sens de transfert des données commande le transfert depuis sa borne 1 vers sa borne 3.

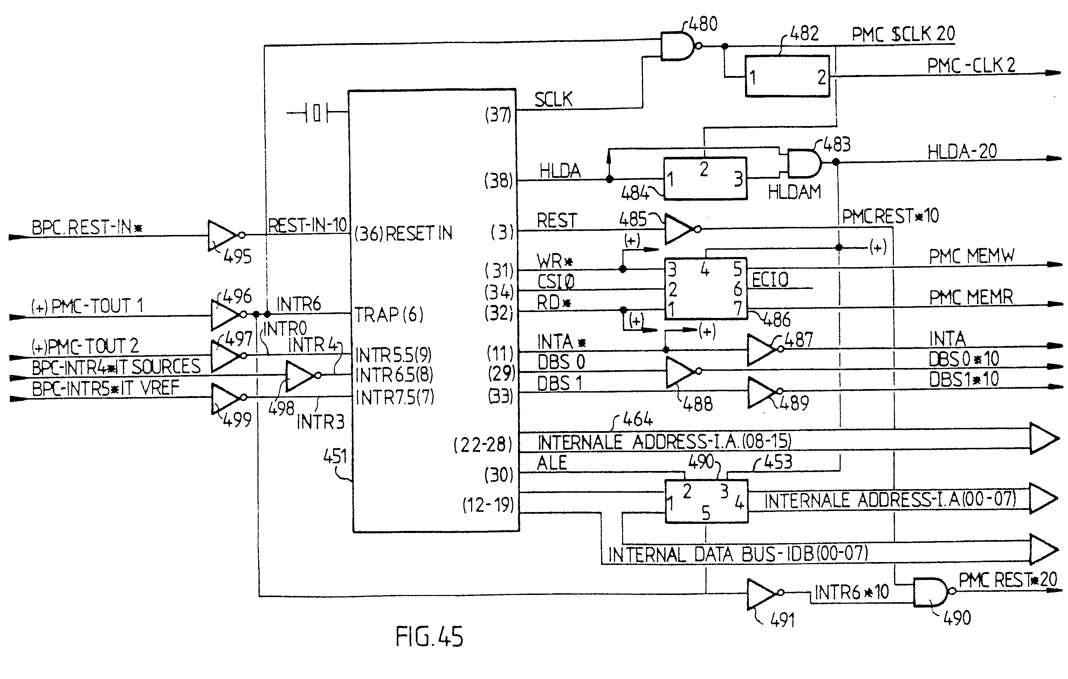

La figure 45 est une représentation détaillée de la partie gauche de la figure 44. Les éléments de la figure 44 qui sont représentés sont: le microprocesseur (451), le bloc (450) de commande de cycle, le bloc (452) d'élaboration des ordres, le bloc (453) d'aiguillage adresses/données, le câble (461) de commande externe de cycle, le câble (463), l'omnibus (462) interne des données, le câble (473) de commande interne de cycle, l'omnibus (464) des adresses de poids forts, le câble (465) des commandes internes, le câble (466) d'aiguillage adresses/données. Il va être vu maintenant comment ces blocs, câbles et omnibus sont représentés sur cette figure 45.

Le microprocesseur (451) est représenté par le bloc rectangulaire référencé (451) et situé sur la gauche de la figure 45. Le microprocesseur retenu dans le mode de réalisation préféré de l'invention est un microprocesseur INTEL de type 8085. Dans ce rectangle (451) figurent:

- des nombres entre parenthèse. Chacun de ces nombres correspond à un numéro de broche du boitier contenant le microprocesseur 8085,
- des appellations qui sont les appellations données par le constructeur du microprocesseur 8085, aux signaux correspondant aux broches auxquelles sont rattachées ces dites les appellations.

Le bloc (450) de commande de cycles est constitué par les amplificateurs inverseurs (495), (496), (497), (498) et (499).

Le bloc (452) d'élaboration des ordres est constitué par la porte logique ET à sortie inversée (480), l'amplificateur inverseur (481), le diviseur par deux (482), la porte logique ET (483), la bascule (484), l'amplificateur inverseur (485), le registre à 3 étages (486), les amplificateurs inverseurs (487), (488), (489), (491), et la porte logique ET (490) à sortie inversée.

Le bloc (453) d'aiguillage adresses/données est représenté par le commutateur (453).

Le câble (461) de commande externe de cycle est représenté par 3 lignes désignées respectivement par:

- BPC REST IN* qui est un signal de remise à zéro. Ce signal de remise à zéro BPC REST IN* est obtenu à partir du signal d'INITIALISATION décrit à l'occasion du module d'interface d'exploitation (74) AM904. Ce signal est produit au moyen du bouton poussoir (163-8) comme il est indiqué sur la figure 26,
- BPC.INTR4* ou IT SOURCES qui n'est autre que le signal résultant de l'apparition d'un signal de défaut majeur GFLT* sur au moins une des sources. Ce signal étant accompagné d'un astérisque est donc bas quand il est actif c'est-à-dire qu'il existe un défaut majeur sur au moins une source,
- BPC.INTR3* ou IT VREF qui est le signal qui signale l'apparition d'un défaut sur au moins une des sources de référence VREF. Ce signal est lui aussi accompagné d'un astérisque et sera actif lorsqu'il sera bas.

La câble (463) véhicule les signaux référencés par: REST IN 10, INTR6, INTR0, INTR4, INTR3:

- REST IN 10* est le signal de remise à zéro générale. Il entre sur la borne (36) du microprocesseur INTEL 8085 (451),
- INTR6 est le signal de demande de suspension de cycle (TRAP) occasionné par le passage à zéro PMC-TOUT1 du décompteur 1 de la base de temps (457). Ce signal arrive sur la borne (6) TRAP du microprocesseur INTEL 8085 (451),
- INTR0 est le signal de demande d'interruption de programme occasionné par le passage à zéro PMC-TOUT1 du décompteur 2 de la base de temps (457). Ce signal arrive sur la borne (9) INTR5.5. du microprocesseur INTEL 8085 (451),
- INTR4 est le signal de demande d'interruption de programme occasionné par l'apparition d'un défaut majeur GFLT sur au moins une des sources ou un défaut PMVINT des ressources communes. Ce signal arrive sur la borne (8) INTR6.5 du microprocesseur INTEL 8085 (451),
- INTR3 est le signal de demande d'interruption de programme occasionné par l'apparition d'un défaut sur la tension de référence VREF. Ce signal arrive sur la borne (7) INTR7.5 du microprocesseur INTEL 8085 (451).

L'omnibus (462) interne des données est représenté par l'omnibus à 8 lignes (462) référencé INTERNAL DATA BUS IDB (00—07).

Le câble (473) de commande interne de cycle est représenté par les lignes:

- (+) PMC TOUT 1 qui est un signal expédié par le bloc (457) base de temps quand le contenu d'un premier décompteur passe par 0,
- (+) PMC TOUT 2 qui est un signal expédié par le bloc (457) base de temps quand le contenu du deuxième décompteur passe par 0.

L'omnibus (464) des adresses de poids forts est représenté par l'omnibus à 8 fils référencé INTERNAL ADDRESS IA (08—15).

Le câble (465) des commandes internes est représenté par les lignes:

- PMC-CLK20 qui est un signal d'horloge destiné à synchroniser les circuits situés en aval. Ce signal d'horloge PMC-SCLK20 est issu de la porte (480) logique ET à sortie inversée. Ce signal est donc inhibé en présence du signal d'interruption INTR6,
- PMC-CLK2 qui est un signal d'horloge de fréquence moitié par rapport au signal d'horloge précédent PMC-CLK20. Ce signal est obtenu par la division par deux au moyen du diviseur (482) de la fréquence du signal d'horloge CLK. A noter que ce signal CLK est lui-même d'une fréquence moitié de celle du quartz qui pilote les cycles du microprocesseur INTEL 8085 (451),
- HLDA-20 est un signal qui mémorise pendant un cycle du microprocesseur INTEL 8085 le signal d'aiguillage adresses/données HLDA (abréviation de HOLD ACKNOWLEDGE). Le signal HLDA est mémorisé dans la bascule (484) qui produit le signal de sortie HLDAM (abréviation de HLDA MEMORISE). Les signaux HLDA et HLDAM sont placés aux 2 entrées de la porte (483) logique ET. Le signal de sortie de cette porte (483) logique ET est le signal HLDA-20.
- PMC-REST*20 est un signal de remise à zéro générale c'est-à-dire des circuits pilotés par le moniteur (10). Ce signal PMC-REST*20 est produit par la sortie d'une porte (490) logique à sortie inversée à deux entrées. Une des portes est alimentée par le signal PMC-REST*10 et l'autre entrée est alimentée par le signal INTR6*. Le signal PMC-REST*10 est obtenu par inversion à travers l'inverseur (485) du signal de remise à zéro REST émis par le microprocesseur INTEL 8085. Le signal INTR6-10 est obtenu par l'inversion à travers l'inverseur (491) du signal INTR6 qui a déjà été vu et qui est le signal TRAP. Le signal INTR6-10 est haut quand un TRAP est demandé, la porte (490) logique ET à sortie inversée livre donc, dans ce cas, le passage au signal de remise à zéro PMC-REST*10 et il y a émission du signal PMC-REST*20.
- PMC-MEMW est un signal qui indique que le microprocesseur INTEL 8085 demande un cycle écriture. Ce signal est obtenu par l'amplification dans l'amplificateur (486) de signal d'omnibus du signal WR* émis par le microprocesseur INTEL 8085. L'entrée de l'amplificateur (486) de signal d'omnibus est échantillonnée par le signal HLDA-20.
- EC IO n'est pas utilisé dans la présente application du microprocesseur INTEL 8085.
- PMC-MEMR est un signal qui indique que le microprocesseur INTEL 8085 demande un cycle de lecture. Ce signal est obtenu par l'amplification dans l'amplificateur (486) de signal d'omnibus du signal RD* émis par le microprocesseur INTEL 8085. L'entrée de l'amplificateur (486) de signal d'omnibus est échantillonné par le signal HLDA-20.
- INTA (abréviation de INTERRUPT AKNOWLEDGE) est un signal d'acquittement de demande d'interruption. Ce signal est obtenu par inversion dans l'amplificateur (487) inverseur de signal INTA* émis par le microprocesseur INTEL 8085.
- DBS0*10 et DBS1*10 sont des signaux qui définissent l'état de l'omnibus interne de données EDB (00—07).

| | DBS0*10 | DBS1*10 |
|---|---|---|
| HALTE | 0 | 0 |
| ECRITURE | 0 | 1 |
| LECTURE | 1 | 0 |
| APPEL (FETCH) | 1 | 1 |

Ces signaux DBS0*10 et DBS1*10 sont respectivement obtenus par l'inversion dans l'inverseur (488) du signal DBS0 et l'inversion dans l'inverseur (489) du signal DBS1. Ces signaux DBS0 et DBS1 sont produits par le microprocesseur INTEL 8085.

Le câble (466) d'aiguillage des données est représenté par la ligne référencée HLDA-20.

Le fonctionnement des circuits de la figure 45 est facilement compris à partir de la nombreuse littérature qui a été écrite à propos du microprocesseur INTEL 8085. Une bibliographie sommaire est fournie in fine de la présente description.

Il ressort de ce qui vient d'être dit que, puisque la commande ECI0 et donc la commande CSI0 ne sont pas utilisées, le module (74) d'interface d'exploitation AM904 et les modules (51, 56, 61, 66) d'interface aval AM903 sont considérés par le microprocesseur (451) INTEL 8085 comme des emplacements mémoires et non comme des organes périphériques. Par conséquent les échanges entre le microprocesseur (451) INTEL 8085 et le module (74) d'interface d'exploitation AM904 et les modules (51, 56, 61, 66) d'interface aval AM903 se feront par des opérations d'écriture ou de lecture adressées à des emplacements de mémoire fictifs. Ces emplacements de mémoire fictifs seront en fait occupés par les registres du module (74) d'interface d'exploitation AM904 et des modules (51, 56, 61, 66) d'interface aval AM903.

En fonctionnement normal le microprocesseur (451) INTEL 8085 exécute un programme qu'il vient chercher en mémoire. Pour aller chercher les instructions en mémoire le microprocesseur (451) INTEL 8085 dispose:

- du signal de synchronisation PMC-CLK2,
- du signal de maintien de l'adresse HLDA-20,
- du signal de commande de lecture PMC-MEMR,
- de l'omnibus interne d'adresse IA (00—15),
- de l'omnibus interne des données IDB (00—07).

L'exécution des instructions met en jeu des données à écrire ou à lire contenues en des adresses définies. Pour cela, le microprocesseur (451) INTEL 8085 dispose:

- du signal de synchronisation PMC-CLK2,
- du signal de maintien de l'adresse HLDA-20,
- du signal de commande d'écriture PMCMEMW ou du signal de commande de lecture PMCMEMR suivant le type d'opération demandé,
- de l'omnibus interne d'adresse IA (00—15),
- de l'omnibus interne de données IDB (00—07).

En particulier il apparaît ici que lorsque le microprocesseur (451) INTEL 8085 veut envoyer une commande soit vers le module (74) d'interface d'exploitation AM904 soit vers les modules (51, 56, 61, 66) d'interface aval il le fait en demandant un cycle écriture. Ce cycle écriture se traduira dans le ou les modules d'interface adressés par le positionnement d'un registre. C'est ce registre positionné qui enverra la commande désirée.

Ce déroulement de l'exécution du programme en cours peut être interrompu:

- soit par la coupure de la tension d'alimentation du microprocesseur (451),
- soit par la remise à zéro générale réclamée depuis le panneau de service (11). Cette demande arrive au microprocesseur (451) par le signal BPC-REST.IN*. Ce signal est inversé dans l'inverseur (495) pour donner le signal REST.IN 10. Ce signal REST.IN 10 appliqué à la borne (36) du microprocesseur (451) INTEL 8085 provoque la production du signal de sortie REST sur la borne (3) du microprocesseur (451). Ce signal REST est inversé à travers l'inverseur (485) et donne le signal PMC REST*10. CE signal PMC REST*10 est appliqué à l'une des deux entrées de la porte (490) logique ET à sortie inversée qui produit à sa sortie le signal de remise à zéro générale PMC REST*20. C'est ce signal PMC REST*20 qu propagé à travers tout le système d'alimentation va produire la remise à zéro des registres du dit système d'alimentation,

- soit par l'apparition de l'une des demandes d'interruption (+) PMC TOUT1, (+) PMC TOUT2, IT SOURCES, IT VREF.

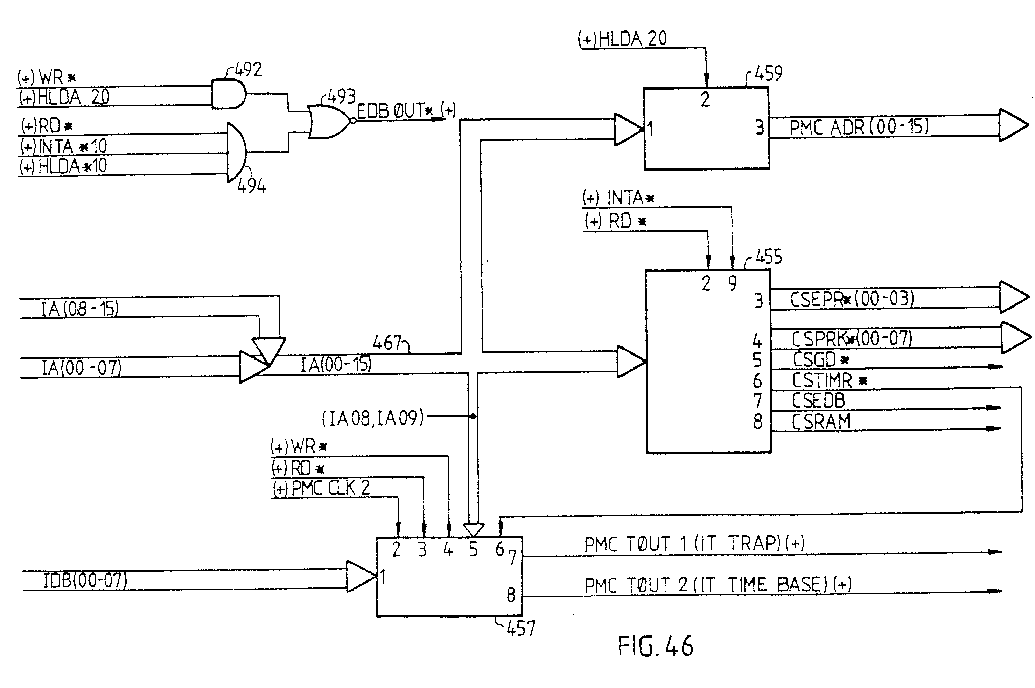

La demande d'interruption (+) PMC TOUT1 est produite à l'intérieur même du module (75) de pilotage AM902B. La production de ce signal (+) PMC TOUT1 sera vu ci-dessus à l'occasion de la description de la figure 46. Ce signal (+) PMC TOUT1 est inversé dans l'inverseur (496) pour fournir le signal désigné par l'appelation INTR6*. Le signal INTR6* est actif quand il est bas c'est-à-dire qu'il exprime une demande d'interruption quand son niveau est bas. Ce signal INTR6 est transmis dans 3 directions:

- d'une part il est appliqué à l'une des 2 entrées de la porte (480) logique ET à sortie inversée. Le signal de synchronisation SCLK est appliqué sur l'autre entrée de la porte (480) logique ET à sortie inversée. Quand le signal INTR6 est présent c'est-à-dire quand son niveau est bas, la porte (480) logique ET est fermée et il ne peut plus y avoir production du signal d'horloge PMC SCLK-20: les signaux d'horloge sont bloqués,
- d'autre part il est appliqué sur l'entrée (6) baptisée TRAP du microprocesseur (451) INTEL 8085. Comme son nom l'indique cette entrée (6) TRAP est une entrée de blocage du fonctionnement du microprocesseur (451) INTEL 8085. Il apparaît donc ici que cette demande d'interruption (+) PMC TOUT1 est en fait une demande de TRAP,
- enfin le signal INTR6 est transmis d'une part à l'entrée (5) du bloc (453) d'aiguillage adresses/données qu'il remet à zéro et d'autre part à l'entrée de l'inverseur (491). Le signal de sortie de cet inverseur INTR6-10 (491) est transmis à l'une des entrées de la porte (490) logique ET à sortie inversée qui est ainsi prête à transmettre le signal de remise à zéro PMC REST*10 comme il a été expliqué plus haut.

Le signal de demande d'interruption (+) PMC TOUT2 est également produit à l'intérieur même du module (75) de pilotage AM902B. La production de ce signal (+) PMC TOUT2 sera également vue lors des explications fournies à l'occasion de la figure 46. Ce signal (+) PMC TOUT2 est inversé dans l'inverseur (497) pour fournir un signal d'interruption désigné par INTR0. Ce signal INTR0 est appliqué sur la borne (9) INTR5.5 du microprocesseur (491) INTEL 8085. Ce signal INTR0 provoque donc, lors de son apparition, la mise en route du processus d'interruption de type 5.5 dans le microprocesseur (451) INTEL 8085.

Le signal de demande d'interruption IT SOURCES est produit dans une ligne qui regroupe tous les signaux de défauts GFLT produits dans les modules d'interface aval AM903 et le signal MCRINT* produit par le module (74) d'interface d'exploitation AM904. Cette ligne de regroupement des signaux de défaut se trouve située dans le câblage arrière du ratelier (BACK PANNEL CONTROL) qui sera décrit ultérieurement. Quand au moins un des signaux GFLT ou MCRINTR* est présent cela se traduit par l'apparition du signal IT SOURCES appelé aussi BPCINTR4*. Ce signal IT SOURCES est appliqué à l'entrée de l'inverseur (498) qui fournit à sa sortie le signal INTR4. Ce signal INTR4 est appliqué à la borne (8) du microprocesseur (451) INTEL 8085. Cette borne (8) correspond au lancement de l'interruption de niveau 6.5 dans le microprocesseur (451) INTEL 8085.

Le signal de demande d'interruption IT VREF est produit par une ligne qui regroupe tous les signaux PMVINT* produits dans les modules d'interface aval AM903. Cette ligne de regroupement des signaux de demande d'interruption émis par les sources de référence VREF fait partie du câblage arrière du ratelier qui sera décrit ultérieurement. Quand au moins un des signaux PMVINT* est présent, ce signal est appliqué à l'entrée de l'inverseur (499) dont la sortie produit le signal INTR3. Ce signal INTR3 est appliqué à l'entrée (7) INTR7.5 du microprocesseur (451) INTEL 8085. L'arrière du signal INTR3 déclenche le lancement de l'interruption de niveau 7.5 dans le microprocesseur (451) INTEL 8085.

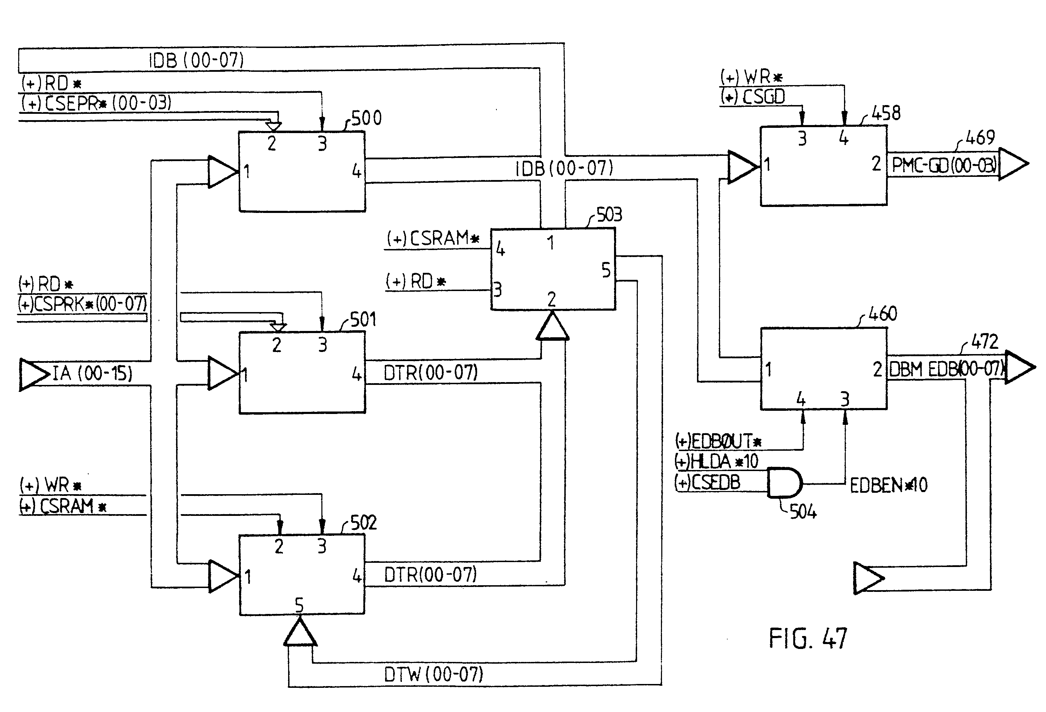

La figure 46 précise le fonctionnement du bloc (459) tampon des adresses, du bloc (455) de sélection et du bloc (457) de base de temps. En plus cette figure contient la description du circuit de production du signal EDBOUT* qui sert à la commande du bloc (460) tampon de données qui se trouve décrit sur la figure 47.

Les circuits permettant de produire le signal EDBOUT sont situés en haut et à gauche de la figure 46.

Pendant une opération d'écriture les signaux (+) WR* et (+) HLDA20 sont hauts et le signal de sortie de la porte (492) logique ET est haut. Ce signal haut attaque l'entrée supérieure du mélangeur (493) à sortie inversée dont la sortie est basse délivrant le signal EDBOUT*.

Pendant une opération de lecture les signaux (+) RD*, INTA*10 et HLDA*10 sont hauts et le signal de sortie de la porte (494) logique ET est haut. Ce signal haut attaque l'entrée inférieure du mélangeur (493) à sortie inversée dont la sortie est basse délivrant le signal EDBOUT*.

Le signal EDBOUT* comme son nom l'indique est un signal qui signale que le microprocesseur effectue une opération mettant en jeu des sorties de données. Ce signal EDBOUT* sert à commander le sens de transfert des amplificateurs traditionnels.

L'amplificateur (459) de l'omnibus d'adresse se trouve en haut et à droite de la figure 46. Cet amplificateur (459) à 16 voies reçoit sur son entrée 1 les 16 lignes de l'omnibus (467) interne des adresses IA (00—15). Les 16 signaux IA (00—15) placés à l'entrée de l'amplificateur (459) sont validés par le signal de validation (+) HLDA 20. Quand ce signal de validation est haut, la valeur des signaux d'adresse interne IA (00—15) est transférée à la sortie 3 de l'amplificateur (459). Cette sortie 3 alimente l'omnibus externe des adresses PMC ADR (00—15).

Le bloc (455) de sélection est placé au centre et à droite de la figure (46). Ce bloc (455) de sélection reçoit sur son entrée (1) les 16 lignes de l'omnibus (467) interne d'adressage IA (00—15), sur son entrée (2) le signal de commande de lecture RD* et sur son entrée (9) le signal d'acquittement d'interruption (+) INTA. Par combinaison des signaux reçus sur ses entrées (1), (2) et (9), le bloc (455) de sélection produit les signaux de sélection: CSEPR* (00—15), CSPR* (00—07), CSGD*, CSTIMR*, CSEDB, CSRAM:

— les 4 signaux CSEPR* (00—03) sont les signaux qui sevent à sélectionner une des 4 mémoires mortes effaçables »EPROM« du bloc (500) représenté sur la figure 47,
— les 8 signaux CSPRK* (00—07) sont les signaux qui servent à sélectionner une des 8 mémoires mortes PROM du bloc (501) représenté sur la figure 47,
— le signal CSGD* sert à sélectionner le bloc (458) tampon des commandes de niveau 1,
— le signal CSTIMR* sert à sélectionner le bloc (457) de base de temps qu'il pénètre par l'entrée 6,
— le signal CSEDB sert à sélectionner le bloc (461) tampon des données qui est représenté sur la figure 47,
— le signal CSRAM sert à sélectionner le bloc (502) des mémoires à lecture/écriture adressables RAM.

Enfin en bas et à droite de la figure 46 se trouve le bloc (457) de base de temps. Dans le mode de réalisation préféré de l'invention ce bloc (457) constitué d'un circuit intégré du type INTEL 8253. Ce bloc (457) de base de temps reçoit:

— sur son entrée (1) les 8 fils de l'omnibus interne de données IDB (00—07),
— sur son entrée (2) le signal de synchronisation (+) PMC CLK2,
— sur son entrée (3) le signal de commande de lecture (+) RD*,
— sur son entrée (4) le signal de commande d'écriture (+) WR*,
— sur son entrée (5) les lignes d'adresse interne IA08 et IA09,
— sur son entrée (6) le signal de sélection CSTIMR.

Le bloc (457) de base de temps délivre 2 signaux de sortie:

— sur sa sortie (7) le signal PMC TOUT1 (IT TRAP),
— sur sa sortie (8) le signal PMC TOUT2 (IT TIME BASE).

Le bloc (457) de base de temps comporte deux circuits indépendants de décomptage. A l'origine chacun des circuits de décomptage est chargé par le microprocesseur (451) avec une valeur initiale: le circuit de décomptage N° 1 avec un COMPTE N° 1 et le circuit de décomptage N° 2 avec le COMPTE N° 2. Pour cela le microprocesseur (451) demande deux cycles écriture. Au premier cycle le microprocesseur (451) adresse le décompteur N° 1 au moyen du signal de sélection CSTIMR et des adresses IA (08, 09). Ensuite il place la valeur du compte N° 1 sur l'omnibus interne de données IDB (00—07). L'arrivé du signal de synchronisation (+) PMC CLK2 transfère le contenu de l'omnibus interne de données IDB (00—07) dans le circuit de décomptage. Au deuxième cycle le microprocesseur (451) charge par des moyens similaires, le circuit de décomptage N° 2 avec le COMPTE N° 1. Ensuite à chaque apparition du signal d'horloge PMC CLK2 le contenu de chacun des 2 décompteurs est décrémenté d'une unité. Quand le contenu du circuit de décomptage N° 1 passe par zéro le bloc (457) de base de temps émet un signal de sortie PMC TOUT1. Quand le contenu du circuit de décomptage N° 2 passe par zéro le bloc (457) de base de temps émet un signal PMC TOUT2.

Le dispositif (457) de base de temps permet au microprocesseur (451) de programmer deux signaux de chronométrie PMC TOUT1 et PMC TOUT2. Dans le mode de réalisation préféré de l'invention le signal de chronométrie PMC TOUT2 se produit toutes les 4 millisecondes et le signal de chronomètre PMC TOUT1 se produit toutes les 60 millisecondes.

Le signal de chronométrie PMC TOUT2 appelé aussi INTERRUPTION DE BASE DE TEMPS IT TIME BASE vient lancer un programme gestionnaire appelé aussi DISPATCHER. Le fonctionnement de ce programme gestionnaire sera vu ultérieurement. Toutefois il faut préciser que un des premiers travaux de ce programme gestionnaire est de revenir initialiser le circuit de décomptage N° 1 qui se voit donc rechargé avec le COMPTE N° 1 et le circuit de décomptage N° 2 qui se voit donc rechargé avec le compte N° 2.

Le signal de chronométrie PMC TOUT1 appelé aussi IT TRAP ou encore WATCH DOG se produit donc quand le dispatcher n'ayant pas pu recharger le compte N° 1 le contenu du circuit de décomptage N° 1 a atteint la valeur zéro. En d'autres termes ce signal de chronomètre PMC TOUT1 indique que le délai représenté par le COMPTE N° 1 s'est écoulé sans que le dispatcher ait pu prendre le contrôle du microprocesseur (451). Ce signal PMC TOUT1 déchlanche une opération de suspension de cycle (TRAP) dans le microprocesseur (451): le fonctionnement du système d'alimentation est bloqué et toutes les interfaces sont verrouillés (RAZ de tous les registres).

La figure 47 précise le fonctionnement du bloc (454) de mémoire, du commutateur (460) de transfert des données, du bloc (458) des commandes externes de ler niveau et du bloc (460) tampon des données.

Le bloc (454) de mémoire est composé de 3 groupes de mémoires: le groupe (500) des mémoires mortes effaçables EPROM, le groupe (501) des mémoires mortes (501) PROM, le groupe (502) des mémoires vives RAM ainsi que d'un bloc (503) de commutation d'omnibus.

Le groupe (500) des mémoires mortes effaçables EPROM est représenté en haut et à gauche de la figure 47. Ce groupe (500) des mémoires mortes effaçables EPROM est composé de 4 mémoires EPROM désignées par les appelations: EPROM00, EPROM01, EPROM02, EPROM03. Le groupe (500) des mémoires mortes effaçables EPROM est raccordé de la façon suivante au reste du module (75) de pilotage AM902B

- sur son entrée 1 il reçoit les 11 fils de l'omnibus interne d'adresse IA (00—10),
- sur son entrée 2 il reçoit les 4 fils de sélection (+) CSEPR* (00—03),
- sur son entrée 3 il reçoit le signal de commande lecture RD*,
- sa sortie 4 est raccordé aux 8 fils de l'omnibus interne des données IDB (00—07).

Le groupe (501) des mémoires mortes PROM est représenté à gauche et au milieu de la figure 47. Ce groupe (501) des mémoires mortes PROM est composé de 8 mémoires PROM désignées par les appelations: PROM00, PROM01, PROM02, PROM03, PROM04, PROM05, PROM06 et PROM07. Le groupe (501) des mémoires mortes PROM est raccordé de la façon suivante au reste du module (75) de pilotage AM902B

- sur son entrée 1 il reçoit les 10 fils de l'omnibus interne d'adresse IA (00—09),
- sur son entrée 2 il reçoit les 8 lignes de sélection (+) CSPRK (00—07),
- sur son entrée 3 il reçoit le signal de commande de lecture RD*,
- sur son entrée 4 il est raccordé aux 8 fils de l'omnibus des données lues en mémoire DTR (00—07).

Le groupe (502) de mémoires vives RAM est représenté en bas et à gauche de la figure 47. Ce groupe (502) est raccordé d la façon suivante au reste du module (75) de pilotage AM902B:

- sur son entrée 1 il est raccordé aux 10 lignes de l'omnibus interne d'adressage IA (00—09),
- sur son entrée 2 il est raccordé à la ligne de sélection (+) CSRAM*,
- sur son entrée 3 il est raccordé à là ligne de commande Lecture/Ecriture WR*,
- sur sa sortie 4 il est raccordé aux 8 fils de l'omnibus des données lues en mémoire DTR (00—07),
- sur sa sortie 5 il est raccordé aux 8 fils de l'omnibus des données a écrire en mémoire DTW (00—07).

Le bloc (503) de commutation d'omnibus est représenté au centre de la figure 47. Ce bloc (503) de commutation d'omnibus est destiné à permettre le raccordement de l'omnibus des données lues en mémoire DTR (00—07) et de l'omnibus des données à écrire en mémoire DTW (00—07) avec l'omnibus interne des données IDB (00—07). Ce groupe (503) de commutation d'omnibus est raccordé de la façon suivante au reste du module (75) de pilotage AM902B:

- sur son entrée/sortie 1 il reçoit les 8 lignes de l'omnibus interne des données IDB (00—07),
- sur son entrée 2 il reçoit les 8 lignes de l'omnibus des données lues en mémoire DTR (00—07),
- sur son entrée 3 il reçoit le signal de commande de lecture (+) RD*,
- sur son entrée 4 il reçoit le signal (+) CSRAM* de sélection de la mémoire à lecture écriture adressable RAM,
- sur son entrée 5 il reçoit les 8 lignes de l'omnibus des données à écrire en mémoire DTW (00—07).

Le bloc (458) tampon des commandes de niveau 2 est représenté en haut et à droite de la figure 47. Ce bloc est destiné à mémoriser et à amplifier les commandes émises par le microprocesseur (451) directement au module intermédiaires AM908 ainsi que des interfaces LSSCI. Ce bloc (458) tampon des commandes de niveau 2 est raccordé de la façon suivante au reste du module (75) de pilotage AM902B:

- sur son entrée 1 il reçoit les 8 fils de l'omnibus IDB (00—07),
- sur son entrée 2 il est raccordé aux 4 fils de commande PMC-GD (00—03). Comme il a été vu lors de la description du module d'interface aval AM903. Ces fils de commande sont également appelés: GD00 = ADRE2, GD01 = ADRE1, GD02 = DDW0 = RESET INHIBIT, GD03 = DOW1 = POWERLOCK,
- sur son entrée 3 il reçoit le signal de sélection (+) CSGD,
- sur son entrée 4 il reçoit le signal de commande écriture (+) WR*.

Le bloc (460) de commutation de sens de transfert des données est représenté au centre et à droite de la figure 47. Ce bloc est destiné à permettre les échanges de données dans 2 sens ENTREE et SORTIE entre les 2 omnibus IDB (00—07) et DBM EDB (00—07). Ce bloc (460) de commutation de sens de transfert des données est raccordé de la façon suivante au reste du module (75) de pilotage AM902B:

— sur son entrée 1 il est raccordé aux 8 lignes de l'omnibus interne des données IDB (00—07),
— sur son entrée 2 il est raccordé aux 8 lignes de l'omnibus (472) externe des données DBM EDB (00—07),
— sur son entrée 3 il reçoit le signal de commande EDBEN*10 qui est le signal qui commande l'entrée des données vers le microprocesseur (451). Ce signal de commande d'entrée de données est produit dans la porte (504) logique ET qui reçoit sur l'une de ses entrées le signal (+) HLDA*10 et sur l'autre entrée le signal de sélection (+) CSEDB,
— sur son entrée 4 le signal (+) EDBOUT* qui est le signal qui commande la sortie des données depuis le microprocesseur (451).

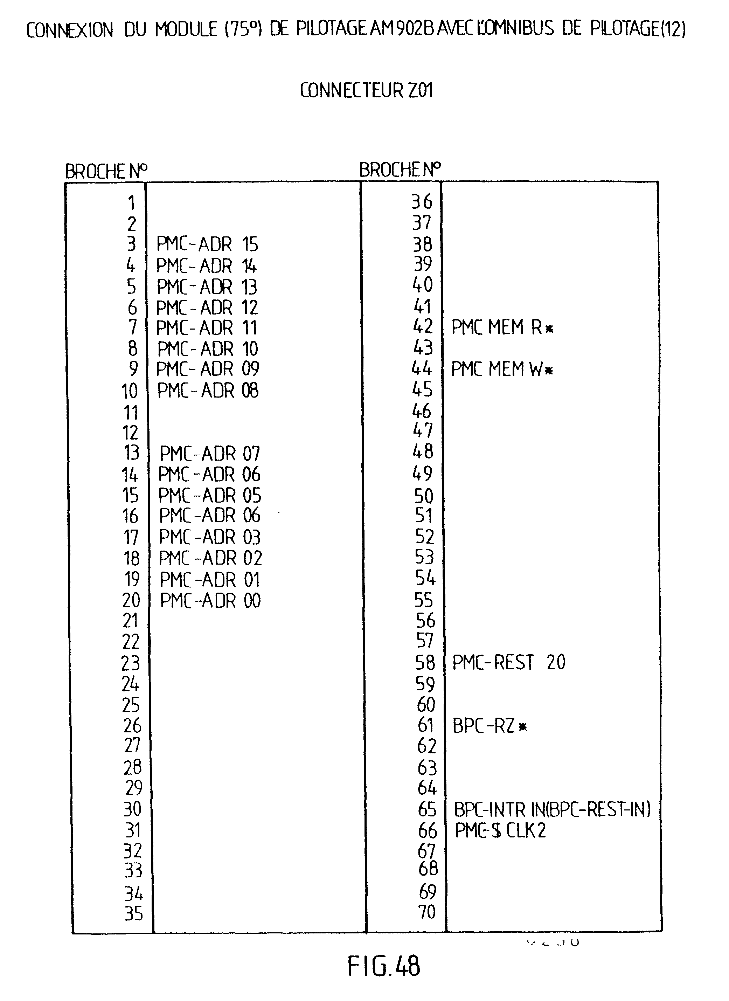

La figure 48 représente le branchement sur les broches du connecteur Z01 des signaux d'entrée et de sortie du module (75) de pilotage AM902B.

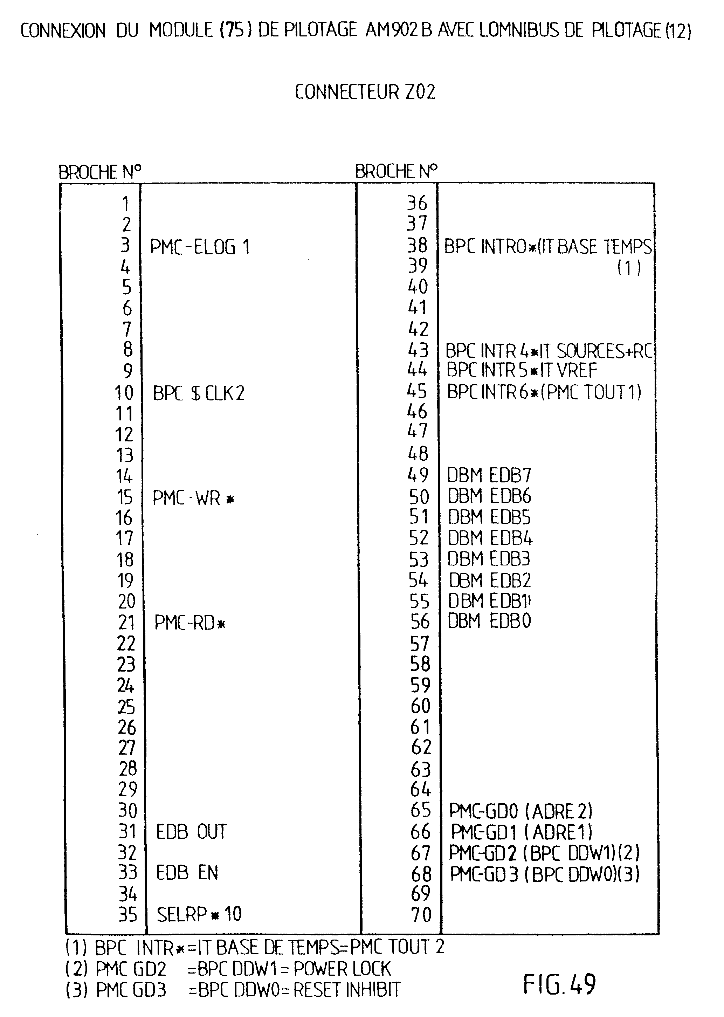

La figure 49 représente le branchement sur les broches du connecteur Z02 des signaux d'entrée et de sortie du module (75) de pilotage AM902B.

Les figures 45, 46 et 47 permettent de comprendre le fonctionnement du module (75) de pilotage AM902B.

Le microprocesseur (451) type 8085 utilisé pour cette application dispose des moyens de commande et de synchronisation (AMC-CLK2, HLDA-20, PMC MEMW, PMC MEMR, INTA, DBS0*10, DBS1*10), des moyens d'adressage (IA (00—05)), des moyens de transfert de données (IDB (00—07)), des moyens de remise à zéro (PMC REST*20, RESTIN-10). Il dispose par ailleurs des moyens d'interruption INTR6, INTR0, INTR4, INTR3.

Ces différents moyens permettent au microprocesseur (451) type 8085 d'aller chercher des instructions ou des données en mémoire ou encore d'aller stocker des données en mémoire. Il faut rappeler ici que les modules raccordés au module (75) de pilotage AM902B sont considérés par le microprocesseur (451) type 8085 comme des emplacements mémoire particuliers. C'est ainsi que pour lire les registres d'état des interfaces, le microprocesseur (451) adressera les dits registres d'état et y effectuera un cycle lecture. Réciproquement pour charger des registres ou envoyer des ordres vers les sources le microprocesseur (451) adressera ces registres ou sources et y effectuera un cycle écriture. Toutes les adresses concernant ces registres ou sources sont contenues dans le module (76) de configuration AM927 qui va être maintenant décrit.

## LE MODULE DE CONFIGURATION AM927

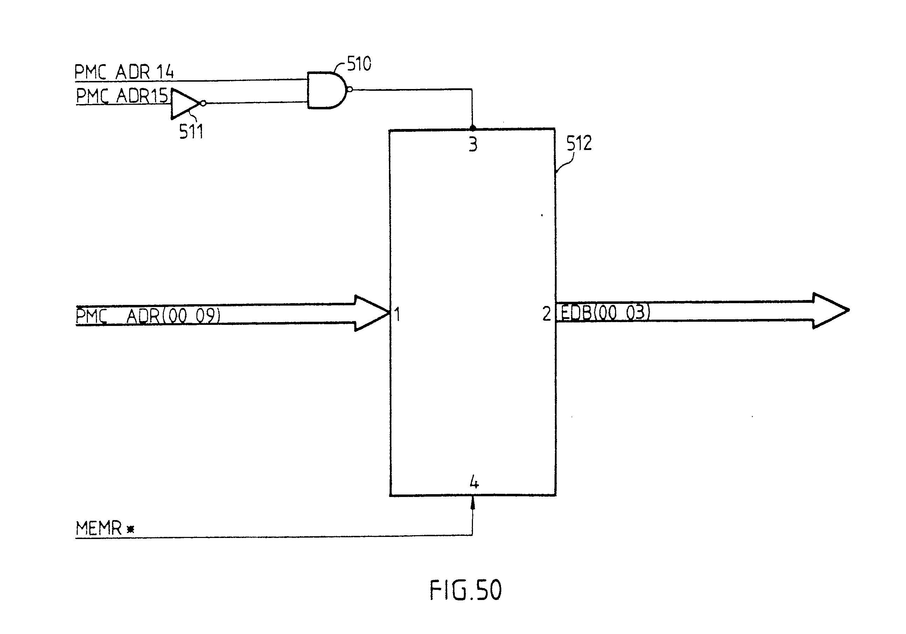

La figure 50 est une représentation schématique du MODULE (76) DE CONFIGURATION AM927. Ce module comporte une partie essentielle qui est une mémoire (512) morte PROM. Cette mémoire contient toutes les données permettant au moniteur (10) de retrouver la configuration du système d'alimentation. Il faut entendre par configuration du système la façon dont le système est organisé: le nombre des modules d'interface aval AM903 avec leur adresse respective, le nombre de modules intermédiaires AM908 avec leur adresse respective, la composition des sources associées à chaque module intermédiaire AM908, la composition des interfaces LSSCI, la composition des sous-systèmes d'alimentation. Tous ces renseignements sont contenus sous forme de tables que le moniteur (10) vient consulter au fur et à mesure de ses besoins.

La porte (510) logique ET à sortie inversée reçoit sur une de ses 2 entrées le signal (513) d'adressage PMC ADR14 et sur l'autre entrée le signal (515) d'adressage ADR15*. Le signal (515) d'adressage ADR15* est obtenu par inversion du signal (514) d'adressage PMCADR15 à travers l'inverseur (511). La sortie de la porte (510) logique ET à sortie inversée produit un signal de sélection qui est appliqué à l'entrée 4 de la mémoire (512) de configuration.

Le signal (516) PMC MEMR* est un signal émis par le module (75) de pilotage AM902 pour indiquer que le microprocesseur (451) demande un cycle de lecture. Ce signal (516) PMC MEMR* est appliqué à l'entrée 3 de la mémoire (512) PROM de configuration.

Les signaux d'adressage PMC ADR (00—09) arrivent sur l'entrée 1 de la mémoire (512) PROM de configuration. Ces signaux PMC ADR (00—09) servent à désigner des adresses à l'intérieur de la mémoire (512) PROM de configuration.

La sortie 2 de la mémoire (512) PROM de configuration alimente les 4 fils DBM-EDB (00—03) de l'omnibus externe des données DBM-EDB (00—07).

Quand le microprocesseur (451) veut consulter cette mémoire il effectue les opérations suivantes:

- il sélectionne la mémoire (512) PROM de configuration au moyen des 2 lignes d'adressage PMC ADR14 et PMC ADR15,
- il adresse l'emplacement de la mémoire (512) PROM de configuration qu'il désire lire au moyen des lignes d'adressage PMC ADR (00—09),
- il demande un cycle de lecture grâce au signal (516) MEMR*.

Dans ces conditions la mémoire (512) PROM de configuration place le contenu de l'emplacement adressé sur les fils DBM-EDB (00—03) de l'omnibus externe des données. Dans le mode de réalisation préféré de l'invention la mémoire (512) PROM de configuration est une mémoire dont chaque emplacement contient 4 bits. Il faut donc 2 opérations de lecture pour que le microprocesseur (451) obtienne l'octet qui porte l'information recherchée. Cette disposition a été prise pour des raisons d'économie mais pour autant n'est pas limitative et la mémoire (512) PROM de configuration pourrait être une mémoire contenant des emplacements de 8 bits.

L'OMNIBUS DE PILOTAGE

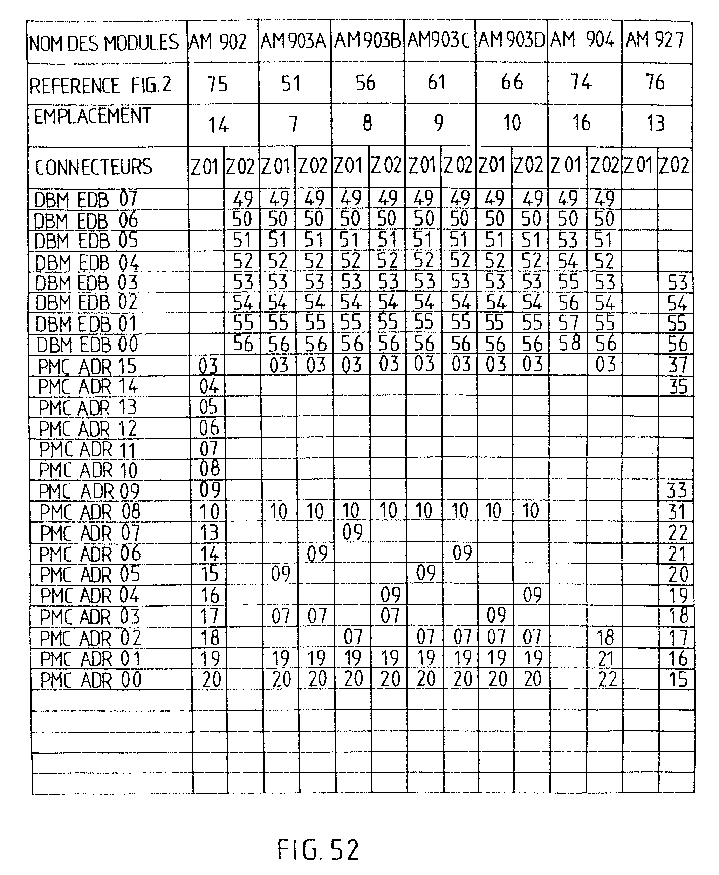

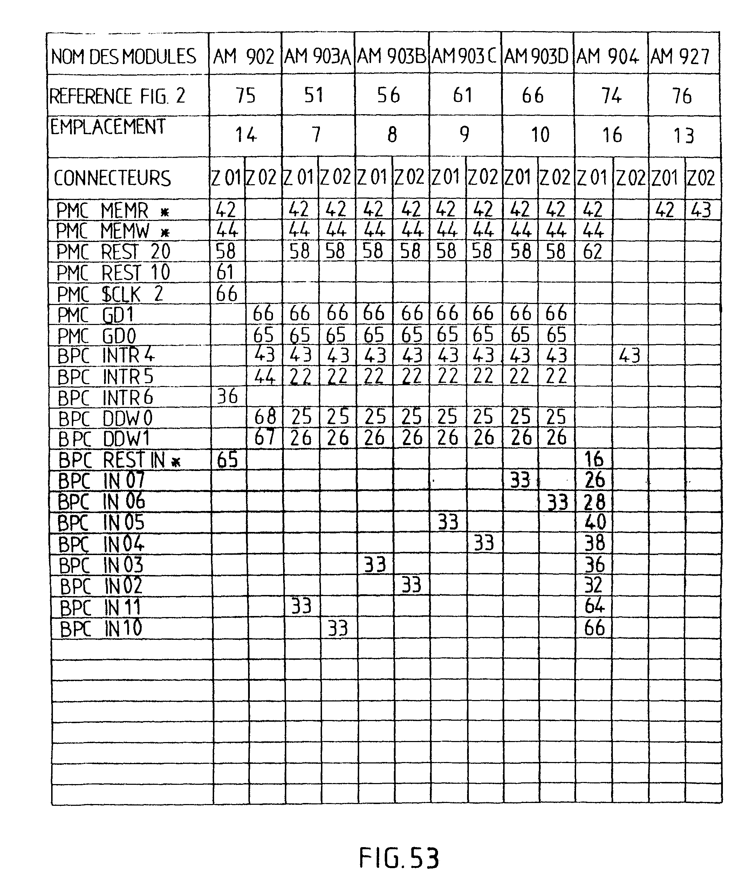

Les figures 52 et 53 définissent le câblage effectué au niveau des connecteurs Z01 et Z02 de l'omnibus de pilotage (BACK PANNEL) du système d'alimentation. Chacune des figures 52 et 53 contient un tableau. Cacun de ces tableaux comprend à sa partie supérieure 4 lignes d'en tête:

- la ligne »NOM DES MODULES« définit le type de module concerné par chaque colonne
- la ligne »REFERENCE FIGURE 2« définit la référence attribué dans la figure 2 à chacun des modules concerné par les colonnes
- la ligne »EMPLACEMENT RATELIER« définit pour chaque module la position occupée par le dit module dans le ratelier
- la ligne »CONNECTEURS« définit pour chaque module le connecteur concerné par chaque demi colonne.

Au dessous de ces 4 lignes d'en tête sont représentés un certain nombre de lignes de définition de connexions.

Chaque ligne de définition de connexion correspond à une ligne de l'omnibus de pilotage (12).

C'est ainsi que sur la figure 52 sont représentés les deux omnibus:

- DBM. EDB (00—07) qui est l'omnibus des données extérieures
- PMC.ADR (00—15) qui est l'omnibus d'adressage.

Sur la figure 53 sont représentées les lignes:

- PMC-MEMR* qui est la ligne de commande de cycle lecture
- PMC-MEMW* qui est la ligne de commande de cycle écriture
- PMC REST20 qui est une commande de remise à l'état initial
- PMC REST10 qui est une commande de remise à l'état initial
- PMC SCLK2 qui est un signal de synchronisation
- PMC GD0 qui est une ligne d'adressage
- PMC GD1 qui est une ligne d'adressage
- BPC INTR4* qui est une ligne d'interruption
- BPC INTR5* qui est une ligne d'interruption
- BPC INTR6* qui est une ligne d'interruption
- BPC DDN0 qui est une ligne d'adressage
- BPC DDN1 qui est une ligne d'adressage
- BPC REST IN qui est une ligne de rémise à l'état initial
- BPC IN (02—07, 10, 11) qui sont des lignes de commandes.

Chaque ligne de définition de connexion comporte:

- sur sa gauche la définition de l'APPELLATION DU SIGNE PORTE PAR CETTE LIGNE.
- ensuite en allant vers la droite deux cases par module composant le système d'alimentation. La case de gauche correspond au connecteur Z01 du module correspondant et la case de droite correspond au connecteur Z02 du dit module correspondant. Le chiffre contenu dans les cases, quand il existe, correspond au numéro de la broche à laquelle la ligne est raccordée. Quand aucun chiffre ne figure dans une case, cela signifie que cette ligne n'est pas raccordée au connecteur correspondant.

Par exemple, sur la figure 53 en prenant la première ligne de définition de connexion, il apparaît que la ligne PMC-MEMR* qui est la ligne de commande de cycle de lecture:

- pur le module (75) de pilotage AM902 situé à l'emplacement 14 du ratelier est raccordée à la broche 42 du connecteur Z01 n'est pas raccordée au connecteur Z02
- pour le module (51) d'interface aval AM903 situé à l'emplacement 7 du ratelier est raccordée à la broche 42 du connecteur Z01
- raccordée à la broche 42 du connecteur Z02
- pur le module (56) d'interface aval AM903 situé à l'emplacement (8) du ratelier
  - est raccordée à la broche 42 du connecteur Z01
  - est raccordée à la broche 42 du connecteur Z02
- pour le module (51) d'interface aval AM903 situé à l'emplacement (9) du ratelier
  - est raccordée à la broche 42 du connecteur Z01
  - est raccordée à la broche 42 du connecteur Z02
- pour le module (66) d'interface aval AM903 situé à l'emplacement (10) du ratelier
  - est raccordée à la broche 42 du connecteur Z01
  - est raccordée à la broche 42 du connecteur Z02
- pour le module (74) d'interface d'exploitation AM904 situé à l'emplacement (16) du ratelier
  - est raccordée à la broche 42 du connecteur Z01
  - n'est pas raccordée au connecteur Z02
- pour le module (76) de configuration AM927 situé à l'emplacement (134) du ratelier
  - est raccordée à la broche 42 du connecteur Z01
  - est raccordée à la broche 43 du connecteur Z02.

L'examen de la figure 52, en particulier, fait apparaître la méthode d'adressage des modules d'interface aval AM903. En effet, pour des raisons de simplification de fabrication et d'économie ces modules d'interfaces aval AM903 sont, comme cela a été vu, indentiques. Pour permettre au Moniteur (10) de les identifier, leur raccordement avec le cablage arrière diffère suivant la position de ratelier où il sont implantés. Cette différentiation apparaît clairement par l'analyse des lignes de définition de connexion référencées par PMC-ADR02 à PMC-ADR07.

BIBLIOGRAPHIE


- MCS80 USER'S MANUAL (with introduction to MSC-85)
  INTEL CORPORATION 1977 (Reference T205/0878/30k CP)
- INTEL COMPONENTS DATA CATALOG
  INTEL CORPORATION 1978 (Référence C117/0278/95k CP)
- INTEL MEMORY DESIGN HAND BOOK
  INTEL CORPORATION (Référence MMC-273-0975/30k)
- THE TTL DATA BOOK FOR DESIGN ENGINEERS
  TEXAS INSTRUMENTS (Référence CC-411/71241-23-C41)
- SUPPLEMENT TO THE TTL DATA BOOK FOR DESIGN ENGINEERS
  TEXAS INSTRUMENTS (Référence CC-416/50014-54-CSS)


**Revendications**

1. Système d'alimentation en énergie électrique d'une pluralité d'unités utilisatrices (fig 1: 1 à 11), ledit système comprenant une pluralité de dispositifs commandables (fig. 2: 95 à 137) appelés »sources d'alimentation« destinés à répartir vers lesdites unités utilisatrices (1 à 11) l'énergie électrique provenant d'un dispositif d'alimentation primaire (fig. 1c: 14, 18), ledit système comprenant un moniteur (fig. 2c: 10) de surveillance du fonctionnement et de commande du système, dont le processeur, appelé »unité de pilotage« (75) est relié par un omnibus de pilotage (12) d'une part, par l'intermédiaire d'interface (fig. 2: 51, 56, 61, 66), dites interfaces aval, auxdites sources d'alimentation et d'autre part, par l'intermédiaire d'une interface, dite interface d'exploitation (74), aux autres éléments du système qui constituent les moyens de contrôle et de commande d'exploitation dudit système d'alimentation et comprenant ledit dispositif d'alimentation primaire et des servitudes (18), une alimentation de servitude (9) du moniteur (10) servant à alimenter le moniteur (10) indépendamment de la source d'alimentation primaire (18), et un panneau de service (11) et éventuellement une console d'exploitation (48), ladite unité de pilotage (75) étant programmé pour pouvoir déclencher la mise sous tension de toutes les sourches d'alimentations du système et des servitudes, pour détecter les états des différents éléments du système et pour transmettre ces états au panneau de service (11) caractérisé en ce que la configuration de l'ensemble des sources d'alimentation est telle que chaque source d'alimentation est constituée par un ou plusieurs modules d'alimentation élémentaires ou groupement de modules branchés en parallèle (fig. 3 à 5: 200 à 243, 268 à 279, 300 à 319, 60), en ce que chaque module d'alimentation élémentaire ou groupement de modules d'alimentation élémentaires communique avec une interface aval (51, 56, 61, 66) par l'intermédiaire d'une interface appelée module intermédiaire (52 à 65, 67, 68), une interface aval (51, 56, 61, 66) pouvant être reliée à plusieurs modules intermédiaires (52 à 65) et chaque module intermédiaire contenant des moyens de mémorisation pouvant mémoriser les paramètres qui définissent l'état de fonctionnement des modules d'alimentation élémentaires associés auxdits moyens de mémorisation, en ce que l'unité de pilotage (75) est reliée par ledit omnibus de pilotage à une unité dite de définition de la configuration (76) comportant une mémoire morte adressable dans laquelle sont définis la répartition et le type des modules d'alimentation élémentaires, reflétant ainsi ladite configuration, et en ce que l'unité de pilotage (75) accède par un bus de données (DMB-EDB) aux données de chaque moyen de mémorisation desdites interfaces intermédiaires (52 à 65) par adressage sur un bus d'adresse (PMC-ADR) des interfaces aval dont les adresses sont définies dans l'unité de définition de configuration (76).

2. Système selon la revendication 1 caractérisé en ce que l'état d'au moins un desdits autres moyens de contrôle et de commande d'exploitation (9, 11, 18, 48) du système sont accessible à l'unité de pilotage par adressage (PMC-ADR) de l'interface d'exploitation (74) dont l'adresse est également définie dans l'unité de définition de configuration (76).

3. Système d'alimentation selon l'une des revendications précédentes caractérisé en ce que chaque unité d'interface aval comporte une liaison de commande et de contrôle [fig. 2: (153) ou (154) ou (155) ou (156) ou (157) ou (158) ou (159) ou (160)] raccordée aux circuits alimentés par lesdites sources (interface LSSCI).

4. Système d'alimentation selon l'une des revendications précédentes caractérisé en ce que la console (48) d'exploitation est raccordée à l'unité (74) d'interface d'exploitation au moyen d'une liaison (43) dite liaison intersystème d'alimentation (SPCI) qui comporte deux liaisons distinctes:
une liaison (fig. 11: 187) dite entrante (SPCIN-IN) qui véhicule, entre autres signaux, tous les signaux émis depuis la console (48) d'exploitation vers l'unité (74) d'interface d'exploitation,
une liaison (193) dite sortante (SPCI-OUT) qui véhicule, entre autres signaux, tous les signaux émis depuis l'unité (74) d'interface d'exploitation vers la console (48) d'exploitation.

5. Système d'alimentation obtenu par association de système d'alimentation selon la revendication 4 caractérisé en ce que les systèmes d'alimentation sont raccordés en série constituant une chaîne partant de la console (fig. 10: 48) d'exploitation et rejoignant, à travers la liaison (187) dite sortante, l'unité (74) d'interface d'exploitation du premier système d'alimentation, continuant depuis l'unité (74) d'interface d'exploitation du premier système d'alimentation pour rejoindre, à travers la liaison (188) intersystème d'alimentation, l'unité (179) d'interface d'exploitation du deuxième système d'alimentation, continuant depuis l'unité (179) d'interface d'exploitation du deuxième système d'alimentation, à travers la liaison (189) intersystème, vers l'unité (181) d'interface d'exploitation du troisième système d'alimentation, continuant ainsi de suite jusqu'à l'unité (185) d'interface d'exploitation du dernier système d'alimentation de la chaîne, enfin bouclant la chaîne en reliant l'unité (185) d'interface d'exploitation du dernier système d'alimentation, à travers la liaison (192) dite sortante, à la console (48) d'exploitation.

6. Système d'alimentation selon la revendication 4 caractérisé en ce que la liaison (187) dite entrante comporte:
une liaison de demande de mise sous tensin véhiculant un signal (fig. 25: LOGON) mémorisé signifiant que l'opérateur à demandé depuis la console (48) une séquence de mise sous tension du système d'alimentation,
une liaison de synchronisation d'entrée véhiculant un signal de synchronisation (fig. 15: ENI) signifiant pour l'unité (74) d'interface d'exploitation que le moniteur (10) doit satisfaire la demande de mise sous tension si le signal (LOGON) correspondant est actif ou satisfaire la demande de mise hors tension si le signal (LOGOFF) correspondant est actif.

7. Système d'alimentation selon la revendication 6 caractérisé en ce que la liaison (193) dite sortante comporte:
une liaison de contrôle de la réception de la demande de mise sous tension véhiculant le signal (LOGON) mémorisé de demande de mise sous tension après traversée de l'unité (74) d'interface d'exploitation,
une liaison de contrôle de réception de la demande de mise hors tension véhiculant le signal (LOGOFF) mémorisé de demande de mise hors tension après traversée de l'unité (74) d'interface d'exploitation,
une liaison de fin de séquence véhiculant un signal de synchronisation (ENO) signifiant que le moniteur (10) à terminé l'exécution de la séquence demandée par l'opérateur.

8. Système d'alimentation selon la revendication 5 caractérisé en ce que la liaison (187) dite entrante comporte:
une liaison de demande de mise sous tension véhiculant un signal (LOGON) mémorisé signifiant que l'opérateur à demandé depuis la console (48) une séquence de mise sous tension du système d'alimentation,
une liaison de demande de mise hors tension véhiculant un signal (LOGOFF) mémorisé signifiant que l'opérateur à demandé depuis la console (48) une séquence de mise hors tension du système d'alimentation,

une liaison de synchronisation d'entrée véhiculant un signal de synchronisation (ENI) signifiant pour l'unité (74) d'interface d'exploitation que le moniteur (10) doit satisfaire la demande de mise sous tension si le signal (LOGON) correspondant est actif ou satisfaire la demande de mise hors tension (LOGOFF) correspondant est actif.

9. Système d'alimentation selon la revendication 8 caractérisé en ce que la liaison (193) dite sortante comporte:

une liaison de contrôle de la réception de la demande de mise sous tension véhiculant le signal (LOGON) mémorisé de demande de mise sous tension après traversée de l'unité (74) d'interface d'exploitation,

une liaison de contrôle de réception de la demande de mise hors tension véhiculant le signal (LOGOFF) mémorisé de demande de mise hors tension après traversée de l'unité (74) d'interface d'exploitation,

une liaison de fin de séquence véhiculant un signal de synchronisation (ENO/SEQUC) signifiant que le moniteur (10) a terminé l'exécution de la séquence demandée par l'opérateur.

10. Système d'alimentation selon la revendication 9 caractérisé en ce que les liaisons (188, 189, 190, 191) intersystèmes comportent chacune:

une liaison de contrôle de la propagation de la demande de mise sous tension véhiculant le signal (LOGON) mémorisé ayant l'unité d'interface d'exploitation du système d'alimentation précédent vers l'entrée de l'unité d'interface d'exploitation du système d'alimentation suivant,

une liaison de contrôle de la propagation de la demande de mise hors tension véhiculant le signal (LOG OFF) mémorisé ayant traversé l'unité d'interface d'exploitation du système d'alimentation précédent vers l'entrée de l'unité d'interface signal de synchronisation du système d'alimentation suivant,

une liaison de pilotage des séquences transmettant le signal (ENO) de fin de séquence du système d'alimentation précédent vers l'entrée de l'unité d'interface d'exploitation du système d'alimentation suivant où il constitue le signal de synchronisation (ENI) du début de séquence de ce dit système d'alimentation suivant ou le signal de fin de séquence (SEQC) si le système d'alimentation précédent était le dernier.

11. Système d'alimentation suivant l'une des revendications précédentes caractérisé en ce que l'unité (74) d'interface d'exploitation comporte des moyens (fig. 15: 235 et 236) de sélection et d'aiguillage de signaux d'exploitation pour, sur commande du moniteur (10) sélectionner certains desdits signaux d'exploitation (fig. 23a: BPC-IN, PIN, CONSOLE, ALIM. PRIM) émis par les moyens de contrôle et de commande d'exploitation (9, 11, 18, 48) et transmettre ces dits signaux d'exploitation sélectionnés vers le moniteur (10) à travers le bus de données de l'omnibus (12) de pilotage.

12. Système d'alimentation suivant la revendication précédente caractérisé en ce que l'unité (74) d'interface d'exploitation comporte des moyens (238, 239, 240, 241, 242) de mémorisation adressables pour mémoriser les signaux de commande et de contrôle envoyés par le moniteur (10) en direction des moyens (9, 11, 18, 48) de commande et de contrôle d'exploitation du système d'alimentation, les dits moyens (238, 239, 240, 241, 242) de mémorisation adressables ayant leurs entrées raccordées au bus de données de l'omnibus (12) de pilotage.

13. Système d'alimentation suivant la revendication précédente caractérisé en ce que d'interface d'exploitation (74) comporte des moyens (235 et 236) de rebouclage interne de signaux (CMD1, CMD2, POUT) de commande et de contrôle mémorisés dans les moyens (238, 239, 240, 241, 242) pour, sur commande du moniteur (10), sélectionner certains de ces signaux (CMD1, CMD2, POUT) de commande et de contrôle et transmettre ces dits signaux (CMD1, CMD2, POUT) de commande et contrôle sélectionnés vers le moniteur (10) à travers le bus de données de l'omnibus (12) de pilotage.

14. Système d'alimentation suivant la revendication 11 caractérisé en ce que les moyens de sélection et d'aiguillage de signaux d'exploitation du module (74) d'interface d'exploitation comporte:

un bloc (235) d'interface pour adapter et/ou raccorder les signaux (BPC-IN, PIN, CONSOLE, ALIM PRIM) de commande et de contrôle reçus des dispositifs (9, 18, 11, 48) d'exploitation avec les circuits d'entrée du bloc (236) multiplexeur,

un bloc (236) multiplexeur pour sélectionner certains des signaux placés sur ces entrées et transmettre ces dits signaux sélectionnés sur l'omnibus (12) de pilotage auquel il est raccordé par ses sorties, ce dit bloc (236) multiplexeur étant adressé par des lignes d'adressage (PMC-ADR09, PMC-ADR10, PMC-ADR15) et les critères de sélection étant définis par des lignes de sélection (PMC-ADR00—PMC-ADR02), lesquelles lignes de sélection appartiennent à l'omnibus (12) de pilotage.

15. Système d'alimentation suivant la revendication 13 caractérisé en ce que les moyens de sélection et d'aiguillage du module (74) d'interface d'exploitation comporte:

un bloc (235) d'interface pour adapter et/ou raccorder les signaux (REG) de rebouclage interne reçus des circuits mêmes du module (74) d'interface d'exploitation avec les circuits d'entrée du bloc (236) multiplexeur,

un bloc (236) multiplexeur pour sélectionner certains des signaux placés sur ses entrées et transmettre ces dits signaux sélectionnés sur l'omnibus (12) de pilotage auquel il est raccordé par ses sorties, ce dit bloc (236) multiplexeur étant adressé par des lignes d'adressage (PMC ADR09, PMC-ADR10, PMC-ADR15) et les critères de sélection étant définis par des lignes de sélection (PMC-ADR00—PMC-

ADR12), lesquelles lignes d'adressage et lesquelles lignes de sélection appartiennent à l'omnibus (12) de pilotage.

16. Système d'alimentation suivant la revendication 12 caractérisé en ce que les moyens (238, 239, 240, 241, 242) de mémorisation adressables des signaux de commande et de contrôle comportent:
une pluralité de registres (238, 239, 240, 241, 242) de mémorisation des ordres d'exploitation pour mémoriser les ordres (REG) d'exploitation à transmettre aux dispositifs (9, 18, 11, 48) d'exploitation, les entrées de ces dits registres (238, 239, 240, 241, 242) de mémorisation des ordres d'exploitation étant reliées en parallèle sur l'omnibus (12) de pilotage et le transfert du contenu de cet omnibus (12) de pilotage étant effectué sur commande du moniteur vers l'un des registres (238, 239, 240, 241, 242) de mémorisation des ordres d'exploitation préalablement adressé au moyen de lignes d'adressage (PMC-ADR (00, 02, 09, 10, 15)), le transfert du contenu de l'omnibus (12) de pilotage étant lui-même échantillonné au moyen d'une ligne de commande (PMC-MEMW), les sorties de ces dits registres (238, 239, 240, 241, 242) de mémorisation des ordres d'exploitation étant reliés aux entrées des circuits (243, 244, 245, 246, 247) de commande des dispositifs (9, 18, 11, 48) d'exploitation,
une pluralité de circuits (243, 244, 245, 247) de commande des dispositifs (9, 11, 18, 48) d'exploitation pour adapter les ordres reçus des registres (238, 239, 240, 241, 242) de mémorisation des ordres d'exploitation avec les lignes (CMD1, CMD2, POUT) de commande des dispositifs d'exploitation.

17. Système d'alimentation suivant l'une des revendications précédentes caractérisé en ce que le module (74) d'interface d'exploitation comporte:
des moyens (248) d'élaboration des demandes de changement de régime de fonctionnement du système d'alimentation pour générer, à partir des requêtes (PREGOV, PREGUV, LOGON, LOGOFF, ENI, COOLF1, COOLF2, COOLF3, COMREL) émises par les dispositifs (9, 11, 18, 48) d'exploitation, des signaux (MCRINT*, INTR1, INTR2, INTR5, INTR) d'interruption transmis sur les lignes de demande d'interruption de l'omnibus (12) de pilotage vers le moniteur (10).

18. Système d'alimentation suivant l'une des revendications précédentes caractérisé en ce que chaque unité d'interface aval (51-1, 52-2, 56-1, 56-2, 61-1, 61-2, 66-1, 66-2) comporte des moyens (350 et 358) de sélection et d'aiguillage de signaux d'interface aval pour sur commande du moniteur (10), sélectionner certains signaux d'interface aval parmi ceux (DIN, REG ET) émis par les modules intermédiaires (52 à 65, 67, 68) et transmettre ces dits signaux sélectionnés vers le moniteur (10) à travers l'omnibus (12) de pilotage.

19. Système d'alimentation suivant l'une des revendication 3 à 18 caractérisé en ce que chaque unité d'interface aval (51-1, 51-2, 56-1, 56-2, 61-1, 61-2, 66-1, 66-2) comporte des moyens (360, 361, 363, 364) adressables de mémorisation des signaux (ISM1, ISM2) de contrôle et de commande des sources pour mémoriser les signaux de commande et de contrôle envoyés par le moniteur (10) vers les sources, lesdits moyens (360, 361, 363, 364) ayant leurs entrées raccordées à l'omnibus (12) de pilotage.

20. Système d'alimentation suivant l'une des revendications 3 à 19 caractérisé en ce que chaque unité d'interface aval (51-1, 51-2, 56-1, 56-2, 61-1, 61-2, 66-1, 66-2) comporte des moyens (362, 365) adressables de mémorisation des signaux (LSSCI) de contrôle et de commande des dispositifs alimentés par les sources pour mémoriser les signaux de commande et de contrôle envoyés par le moniteur (10) vers les dispositifs alimentés par les sources, lesdits moyens (362, 365) ayant leurs entrées raccordées à l'omnibus (12) de pilotage.

21. Système d'alimentation selon la revendication 19 ou 20 caractérisé en ce que les moyens de sélection et d'aiguillage de chaque unité d'interface aval (51-1, 51-2, 56-1, 56-2, 61-1, 61-2, 66-1, 66-2) comporte:
un bloc (350) d'interface d'entrée pour adapter et/ou raccorder les signaux (D IN) reçus des modules intermédiaires (AM908), ((52, 53) ou (54, 55) ou (57, 58) ou (59, 60) ou (62, 63) ou (64, 65) ou (67) ou (68)) de commande et de contrôle des sources avec les entrées du bloc (358) multiplexeur,
un bloc (358) multiplexeur pour sélectionner certains des signaux placés sur ses entrées et transmettre ces dits signaux sélectionnés sur l'omnibus (12) de pilotage auquel il est raccordé, ce dit bloc (358) multiplexeur étant adressé et les critères de sélection des signaux étant définis par le moniteur (10) au moyen de lignes d'adressage (PMC-ADR (00, 01, 08, 15)).

22. Système d'alimentation selon l'une des revendications 18 à 21 caractérisé en ce que les moyens de sélection et d'aiguillage de chaque unité d'interface aval (51-1, 51-2, 56-1, 56-2, 61-1, 61-2, 66-1, 66-2) comporte:
un bloc (350) d'interface d'entrée pour adapter et/ou raccorder les signaux (REG.ET) de rebouclage reçus des registres (360, 361, 362) de mémorisation des ordres avec les entrées du bloc (358) multiplexeur,
un bloc (358) multiplexeur pour sélectionner certains des signaux placés sur ses entrées et transmettre ces dits signaux sélectionnés sur l'omnibus (12) de pilotage auquel il est raccordé, ce dit bloc (358) multipleur étant définis par le moniteur (10) au moyen de ligne d'adressage (PMC-ADR (00, 01, 08, 15)).

23. Système d'alimentation suivant l'une des revendications 19 à 22, caractérisé en ce que les moyens adressables de mémorisation des signaux (ISM1, ISM2) de contrôle et commande des sources comportent:
une pluralité de registres (360, 361) de mémorisation des ordres de service pour mémoriser les ordres (REG.ET) à transmettre aux sources, les entrées de ces dits registres (360, 361, 362) d'ordre étant reliées en parallèle sur l'omnibus (12) transfert du contenu de cet omnibus (12) de pilotage étant effectué sur commande au moniteur (10) vers l'un des registres (360, 361) de mémorisation des ordres préalablement adressé au moyen de lignes d'adressage (PMC-ADR (00, 01, 08, 15)), le transfert du contenu de l'omnibus (12) de pilotage étant lui-même échantillonné au moyen d'une ligne de commande (PMC-MEMW), les sorties de ces dits registres (360, 361, 362) de mémorisation des ordres étant reliées aux entrées des circuits (363, 364) de commande,
une pluralité des circuits (363, 364, 365) de commande pour adapter les ordres reçus des registres (360, 361, 362) de mémorisation des ordres avec les lignes de commande des sources (ISM1, ISM2).

24. Système d'alimentation suivant l'une des revendications 20 à 23 caractérisé en ce que les moyens adressables de mémorisation des signaux (LSSC1) de contrôle et de commande des dispositifs alimentés par les sources comportent:
une pluralité de registres (362) de mémorisation des ordres de service pour mémoriser les ordres (RET.ET) à transmettre aux dispositifs alimentés par les sources, les entrées de ces dit registre (360, 361, 362) d'ordres étant reliées en parallèle sur l'omnibus (12) de pilotage et le transfert du contenu de cet omnibus (12) de pilotage étant effectué sur commande du moniteur (10) vers l'un des registres (362) de mémorisation des ordres préalablement adressé au moyen de lignes d'adressage (PMC-ADR (00, 01, 08, 15)), le transfert de contenu de l'omnibus (12) de pilotage étant lui même échantillonné au moyen d'une ligne de commande (PMC-MEMW), les sorties de ces dits registres (360, 361, 362) de mémorisation des ordres étant reliées aux entrées des circuits (363, 364) de commande,
une pluralité de circuits (365) de commande pour adapter les ordres reçus des registres (360, 361, 362) de mémorisation des ordres avec les lignes de commande des dispositifs alimentés par les sources (LSSC1).

25. Système d'alimentation suivant l'une des revendications précédentes caractérisé en ce que chaque unité d'interface aval (51-1, 51-2, 56-1, 56-2, 61-1, 61-2) comporte des moyens (367) d'élaboration des demandes d'arrêt sur incident pour générer, à partir des signaux (GFLT, PMVFLT) d'incident émis par les sources ou les dispositifs alimentés par les sources, des signaux (INTR*, PMW INTR, GLFT, PMVFLT, DDR (01—03)) d'interruption transmis à travers les lignes de demande d'interruption de l'omnibus (12) de pilotage vers le moniteur (10).

26. Système d'alimentation suivant l'une des revendications précédentes caractérisé en ce que l'unité (75) de pilotage comporte:
un microprocesseur (451) avec son circuit d'horloge; ce microprocesseur (451) comportant une entrée (451-1) de requêtes (INTERRUPTIONS) relieée à un bloc (450) d'élaboration des requêtes et trois sorties (451-2, 451-3, 451-4); une première sortie (451-2) de signaux de commande et de contrôle reliée à un omnibus (473) interne de commande et de contrôle, une seconde sortie (451-3) reliée à,
un omnibus (464) interne d'adressage, une troisième sortie (451-4) reliée à un omnibus (462) interne de données,
un omnibus (473) interne de commande et de contrôle pour véhiculer les signaux de commande et de contrôle interne (HLDA, REST, WR*, CSIO, RD*, INTA*, DBS0, DBS1, ALE) ainsi que les signaux d'horloge (SCLK),
un omnibus (464) interne d'adressage pour véhiculer les signaux d'adressage interne (TA (08—15)),
un omnibus (462) interne de données pour véhiculer les signaux de données internes (IDB (00—07),
un bloc (450) d'élaboration des requêtes pour recevoir les requêtes (PMC-TOUT1, PMC-TOUT2) internes et les requêtes (BPC-REST-IN, BPC-INTR4*, BPC-INTR5*) externes et les transformer en demande d'interruption (REST-IN-10, INTR4, INTR5, INTR0, INTR6); ce bloc (450) d'élaboration des requêtes reçoit les requêtes internes sur son entrée (450-1) et les requêtes externes sur son entrée-sortie (450-3) et il émet les signaux d'interruption sur sa sortie (450-2) et sur son entrée-sortie (450-3),
un bloc (452) d'élaboration des signaux de commande et de contrôle interne pour élaborer à partir desdits signaux de commande et de contrôle interne des signaux destinés aux organes périphériques (453, 454, 455, 456, 460) placés sur la commande du microprocesseur (451), ce bloc (452) d'élaboration des signaux de commande et de contrôle comporte une entrée (452-1) sur laquelle il reçoit les signaux de commande et de contrôle interne et deux sorties (452-2) et (452-3) sur lesquelles il place les signaux d'ordre en direction desdits organes périphériques,
un bloc (453) d'aiguillage adresse-données pour permettre l'utilisation temporaire de l'omnibus (469) interne de données pour transmettre les poids faibles de l'adresse que veut appeler le microprocesseur (451): ce bloc (453) d'aiguillage adresse-données reçoit depuis la sortie (452-3) du bloc d'élaboration d'ordre,
un omnibus (465) des ordres internes pour véhiculer les ordres internes à l'unité (75) de pilotage, cet omnibus (465) des ordres internes est alimenté par la sortie (452-2) du bloc (452) d'élaboration des ordres,
un omnibus (467) des adresses internes à l'unité (75) de pilotage, cet omnibus (465) est alimenté par la sortie (453-3) du bloc (453) d'aiguillage adresse données,
un présélecteur (455) de bloc pour effectuer sur commande du microprocesseur (451) la préselection d'un bloc auquel le microprocesseur demande un service; ce présélecteur a son entrée (455-3) raccordée à l'omnibus (465) des adresses internes, son entrée (455-1) raccordée à l'omnibus (465) des ordres internes et sa sortie (455-2) raccordée à l'omnibus (468) de préselection de bloc,

un omnibus (465) de présélection de bloc pour transporter les signaux de présélection de bloc,
un bloc (454) de mémorisation pour mémoriser les données et certains paramètres de fonctionnement du système d'alimentation; ce bloc (454) de mémorisation a son entrée (454-1) raccordée à l'omnibus (465) des ordres internes, son entrée (454-2) raccordée à l'omnibus (468) de présélection de blocs, son entrée (454-4) raccordée à l'omnibus (467) des adresses internes et sa sortie (454-3) raccordée à l'omnibus (462) interne des données,
un bloc (456) de commandes de second niveau pour élaborer les commandes à transmettre aux circuits alimentés par les sources du système d'alimentation; ce bloc (456) de comande de second niveau a son entrée (456-1) raccordée à l'omnibus (468) de présélection de blocs, son entrée (456-2) raccordée à l'omnibus (465) des ordres internes et sa sortie (456-3) raccordée aux lignes (471) de transmission des ordres aux circuits alimentés par les sources,
un bloc (458) de commandes de premier niveau pour élaborer les commandes à transmettre aux sources; ce bloc (458) de commandes de premier niveau a son entrée (458-1) reliée à l'omnibus (465) des ordres internes et sa sortie (465-2) raccordée aux lignes (465) de transmissions des ordres aux sources,
un registre (459) tampon des adresses externes pour mémoriser les signaux d'adresse envoyés par le microprocesseur (451) vers les organes périphériques; ce registre (459) tampon des adresses à son entrée (459-1) raccordée à l'omnibus (467) des adresses internes et sa sortie (459-2) raccordée à l'omnibus (459) des adresses externes,
un dispositif (460) de contrôle du sens de transfert des données pour aiguiller les données soit depuis les organes extérieurs vers le microprocesseur (451) pour les données entrantes soit depuis le microprocesseur (451) vers les organes extérieurs pour les données sortantes; ce dispositif (460) de contrôle du sens de transfert de données à son entrée-sortie (460-1) raccordée à l'omnibus (462) interne de données, son entrée-sortie (460-3) raccordée à l'omnibus (472) externe de données et son entrée (460-2) raccordée à l'omnibus (465) des ordres internes.

27. Système d'alimentation suivant la revendication 26 caractérisé en ce qu'il comporte un bloc (457) de base de temps comprenant plusieurs circuits décompteurs dont le contenu initial est chargé par le microprocesseur (451) et dont le décomptage est commandé par un signal d'horloge émis par le microprocesseur (451); au passage zéro chaque décompteur émet un signal de requête (PMCTOT1, PMCTOUT2) pour signaler au microprocesseur (451) que son contenu est nul; le bloc (457) de base de temps a son entrée (457-1) relié à l'omnibus (465) des ordres internes, son entrée-sortie (457-2) reliée à l'omnibus (467) des adresses internes et son entrée (457-3) reliée à l'omnibus (462) interne des données.

**Patentansprüche**

1. System zur Versorgung einer Mehrzahl von Nutzungseinheiten (Fig. 1: 1 bis 11) mit elektrischer Energie, wobei das System eine Mehrzahl von steuerbaren Vorrichtungen (Fig. 2: 95 bis 137) enthält, die als »Versorgungsquellen« bezeichnet werden und dazu bestimmt sind, die aus einer primären Versorgungsvorrichtung (Fig. 1c: 14, 18) stammende elektrische Energie auf die genannten Nutzungseinheiten (1 bis 11) zu verteilen, wobei das System einen Monitor (Fig. 2c: 10) zur Überwachung der Funktion und zur Steuerung des Systems enthält, wovon der als »Piloteinheit« bezeichnete Prozessor (75) über eine Steuer-Busleitung (12) einerseits über sogenannte stromabwärts liegende Schnittstellen (Fig. 2: 51, 56, 61, 66) mit den genannten Versorgungsquellen und andererseits über eine sogenannte Anwendungs-Schnittstelle (74) mit den weiteren Elementen des Systems verbunden ist, welche die Kontroll- und Steuermittel für die Anwendung des Versorgungssystems bilden und die genannten primäre Versorgungsvorrichtung (18) sowie Grundlastverbraucher umfassen, wobei eine Grundlastversorgung (9) für den Monitor (10) zur Versorgung des Monitors (10) unabhängig von der primären Versorgungsquellen (18) dient, und eine Betriebstafel (11) sowie gegebenenfalls ein Steuerpult (48) enthält, wobei die Piloteinheit (75) derart programmiert ist, daß sie das Anlegen von Spannung an alle Versorgungsquellen des Systems und alle Grundlastverbraucher auslösen kann, um die Zustände der verschiedenen Elemente des Systems zu erfassen und diese Zustände zu der Betriebstafel (11) zu übertragen, dadurch gekennzeichnet, daß die Konfiguration der Gesamteinheit von Versorgungsquellen derart ist, daß jede Versorgungsquelle aus einem oder mehreren elementaren Versorgungsmodulen oder Modulgruppen (Fig. 3 bis 5: 200 bis 243, 268 bis 279, 300 bis 319, 60) gebildet ist, die parallelgeschaltet sind, daß jeder elementare Versorgungsmodul bzw. jede Gruppe von elementaren Versorgungsmodulen mit einer stromabwärts liegenden Schnittstelle (51, 56, 61, 66) über eine Schnittstelle verbunden ist, die als Zwischenmodul (52 bis 65, 67, 68) bezeichnet wird, wobei eine stromabwärts liegende Schnittstelle (51, 56, 61, 66) mit mehreren Zwischenmodulen (52 bis 65) verbunden sein kann und jeder Zwischenmodul Speichermittel enthält, welche diejenigen Parameter speichern können, die den Betriebszustand der elementaren Versorgungsmodulen definieren, die den genannten Speichermitteln zugeordnet sind, daß die Piloteinheit (75) über die Steuer-Busleitung mit einer Einheit (75) verbunden ist, die als Einheit zur Definition der Konfiguration bezeichnet wird und einen adressierbaren Festwertspeicher enthält, in dem die Verteilung sowie die Art der elementaren Versorgungsmodulen definiert sind, so daß er die genannte Konfiguration wiederspiegelt, und daß die Piloteinheit (75) über einen Datenbus (DMB-EDB) Zugriff zu den Daten aller Speichermittel der genannten Zwischenschnittstellen (52 bis 65) erlangt, indem er über einen Adreßbus (PMC-ADR) stromabwärts liegende Schnittstellen adressiert, deren Adressen in der Konfigurations-Definitionseinheit (76) definiert sind.

2. System nach Anspruch 1, dadurch gekennzeichnet, daß der Zustand von wenigstens einer der genannten weiteren Anwendungs-Kontroll- und Steuermittel (9, 11, 18, 48) des Systems für die Piloteinheit zugänglich ist durch Adressierung (PMC-ADR) der Anwendungsschnittstelle (74), deren Adresse ebenfalls in der Konfigurations-Definitionseinheit (76) definiert ist.

3. Versorgungssystem nach einem der vorstehenden Ansprüche, dadurch gekennzeichnet, daß jede stromabwärts liegende Schnittstelleneinheit eine Steuer- und Kontrollverbindung [Fig. 2: (153) oder (154) oder (155) oder (156) oder (157) oder (158) oder (159) oder (160)] enthält, welche an die Schaltungen angeschlossen ist, die von den genannten Quellen versorgt werden (Schnittstelle LSSCI).

4. Versorgungssystem nach einem der vorstehenden Ansprüche, dadurch gekennzeichnet, daß das Steuerpult (48) an die Anwendungs-Schnittstelleneinheit (74) angeschlossen ist über eine Verbindung (43), die als Systemversorgungs-Zwischenleitung (SPCI) bezeichnet wird und zwei getrennte Verbindungen enthält:
eine sogenannte hineinlaufende Verbindung (Fig. 11: 187) (SPCI-IN), die neben weiteren Signalen alle Signale führt, die von dem Steuerpult (48) zu der Anwendungs-Schnittstelleneinheit (74) geschickt werden,
eine sogenannte herauslaufende Verbindung (193) (SPCI-OUT), die neben weiteren Signalen alle Signale führt, die von der Anwendungs-Schnittstelleneinheit (74) zu dem Steuerpult (48) geschickt werden.

5. Versorgungssystem, das durch die gegenseitige Zuordnung von Versorgungssystemen nach Anspruch 4 erhalten ist, dadurch gekennzeichnet, daß die Versorgungssysteme in Reihe geschaltet sind und eine Kette bilden, die von dem Steuerpult (Fig. 1c: 48) ausgeht und über die sogenannte herauslaufende Verbindung (187) bis zu der Anwendungs-Schnittstelleneinheit (74) des ersten Versorgungssystems führt und von der Anwendungs-Schnittstelleneinheit (74) des ersten Versorgungssystems ausgehend weiterläuft, um über die Systemversorgungs-Zwischenleitung (188) die Anwendungs-Schnittstelleneinheit (179) des zweiten Versorgungssystems zu erreichen und von der Anwendungs-Schnittstelleneinheit (179) des zweiten Versorgungssystems über die Systemversorgungs-Zwischenleitung (189) zur Anwendungs-Schnittstelleneinheit (181) des dritten Versorgungssystems zu gelangen, usw. bis zur Anwendungs-Schnittstelleneinheit (185) des letzten Versorgungssystems der Kette, wobei schließlich die Kette geschlossen wird, indem die Anwendungs-Schnittstelleneinheit (185) des letzten Versorgungssystems über die sogenannte herauslaufende Verbindung (192) mit dem Steuerpult (148) verbunden wird.

6. Versorgungssystem nach Anspruch 4, dadurch gekennzeichnet, daß die sogenannte hineinlaufende Verbindung (187) enthält:
eine Verbindung für Aufforderungen zum Anlegen von Spannung, wobei diese Verbindung ein gespeichertes Signal (Fig. 25: LOGON) führt, welches bedeutet, daß der Bediener über das Steuerpult (48) eine Sequenz zum Anlegen von Spannung an das Versorgungssystem abgerufen hat,
eine Eingangs-Synchronisationsverbindung, die ein Synchronisationssignal (Fig. 15: ENI) führt, welches der Anwendungs-Schnittstelleneinheit (74) mitteilt, daß der Monitor (10) der Aufforderung zum Anlegen von Spannung nachkommen soll, wenn das entsprechende Signal (LOGON) aktiv ist, bzw. der Aufforderung zum Wegnehmen der Spannung nachkommen soll, wenn das entsprechende Signal (LOGOFF) aktiv ist.

7. Versorgungssystem nach Anspruch 6, dadurch gekennzeichnet, daß die sogenannte herauslaufende Verbindung (193) enthält:
eine Verbindung für die Kontrolle des Empfangs der Aufforderung zum Anlegen von Spannung, wobei diese Verbindung das gespeicherte Signal (LOGON) für die Aufforderung zum Anlegen von Spannung führt, nachdem es die Anwendungs-Schnittstelleneinheit (74) durchlaufen hat,
eine Verbindung zur Kontrolle des Empfangs der Aufforderung zum Wegnehmen der Spannung, wobei diese Verbindung das gespeicherte Signal (LOGOFF) für die Aufforderung zum Wegnehmen der Spannung führt, nachdem dieses die Anwendungs-Schnittstelleneinheit (74) durchlaufen hat,
eine Sequenzende-Verbindung, welche ein Synchronisationssignal (ENO) führt, welches bedeutet, daß der Monitor (10) die Ausführung der vom Bediener abgerufenen Sequenz beendet hat.

8. Versorgungssystem nach Anspruch 5, dadurch gekennzeichnet, daß die sogenannte hineinlaufende Verbindung (187) enthält:
eine Verbindung zur Aufforderung des Anlegens von Spannung, wobei diese Verbindung ein gespeichertes Signal (LOGON) führt, welches bedeutet, daß der Bediener über das Steuerpult (48) eine Sequenz zum Anlegen von Spannung an das Versorgungssystem abruft,
eine Verbindung für die Aufforderung zum Wegnehmen der Spannung, wobei diese Verbindung ein gespeichertes Signal (LOGOFF) führt, welches bedeutet, daß der Bediener über das Steuerpult (48) eine Sequenz zum Wegnehmen der Spannung von dem Versorgungssystem abruft,
eine Eingangs-Synchronisationsverbindung, welche ein Synchronisationssignal (ENI) führt, das der Anwendungs-Schnittstelleneinheit (74) anzeigt, daß der Monitor (10) der Aufforderung zum Anlegen von Spannung nachkommen soll, wenn das entsprechende Signal (LOGON) aktiv ist, bzw. der Aufforderung zum Wegnehmen der Spannung nachkommen soll, wenn das entsprechende Signal (LOGOFF) aktiv ist.

9. Versorgungssystem nach Anspruch 8, dadurch gekennzeichnet, daß die sogenannte herauslaufende Verbindung (193) umfaßt:
eine Verbindung für die Kontrolle des Empfangs der Aufforderung zum Anlegen der Spannung, wobei diese Verbindung das gespeicherte Signal (LOGON) für die Aufforderung zum Anlegen von Spannung führt, nachdem dieses die Anwendungs-Schnittstelleneinheit (74) durchlaufen hat,
eine Verbindung zur Kontrolle des Empfangs der Aufforderung zum Wegnehmen der Spannung, wobei diese Verbindung das gespeicherte Signal (LOGOFF) für die Aufforderung zum Wegnehmen der Spannung führt, nachdem dieses die Anwendungs-Schnittstelleneinheit (74) durchlaufen hat,
eine Sequenzende-Verbindung, welche ein Synchronisationssignal (ENO/SEQC) führt, welches bedeutet, daß der Monitor (10) die Ausführung der vom Bediener abgerufenen Sequenz beendet hat.

10. Versorgungssystem nach Anspruch 9, dadurch gekennzeichnet, daß die System-Zwischenverbindungen (188, 189, 190, 191) jeweils enthalten:
eine Verbindung zur Kontrolle der Ausbreitung der Aufforderung zum Anlegen von Spannung, wobei diese Verbindung das gespeicherte Signal (LOGON) führt, welches die Anwendungs-Schnittstelleneinheit des vorausgehenden Versorgungssystems durchlaufen hat, zum Eingang der Anwendungs-Schnittstelleneinheit des darauffolgenden Versorgungssystems,
eine Verbindung zur Kontrolle der Ausbreitung der Aufforderung zum Wegnehmen der Spannung, wobei diese Verbindung das gespeicherte Signal (LOGOFF) führt, welches die Anwendungs-Schnittstelleneinheit des vorausgehenden Versorgungssystems durchlaufen hat, zum Eingang der Anwendungs-Schnittstelleneinheit des darauffolgenden Versorgungssystems,
eine Sequenzsteuerverbindung, welche das Sequenzende-Signal (ENO) des vorausgehenden Versorgungssystems zum Eingang der Anwendungs-Schnittstelleneinheit des darauffolgenden Versorgungssystems überträgt, wo es das Synchronisationssignal (ENI) für den Sequenzanfang dieses darauffolgenden Versorgungssystems oder das Sequenzende-Signal (SEQC) bildet, wenn das vorausgehende Versorgungssystem das letzte war.

11. Versorgungssystem nach einem der vorstehenden Ansprüche, dadurch gekennzeichnet, daß die Anwendungs-Schnittstelleneinheit (74) Mittel (Fig. 15: 235 und 236) zur Selektion und Umlenkung von Anwendungssignalen umfaßt, um unter Steuerung des Monitors (10) bestimmte Signale unter den genannten Anwendungssignalen (Fig. 23a: BPC-IN, PIN, CONSOLE, ALIM. PRIM) auszuwählen, die von den Anwendungs-Kontroll- und Steuermitteln (9, 11, 18, 48) abgegeben werden, um diese genannten ausgewählten Anwendungssignale über den Datenbus der Steuer-Busleitung (12) zu dem Monitor (10) zu übertragen.

12. Versorgungssystem nach dem vorstehenden Anspruch, dadurch gekennzeichnet, daß die Anwendungs-Schnittstelleneinheit (74) Speichermittel (238, 239, 240, 241, 242) umfaßt, die adressierbar sind und zur Speicherung der Steuer- und Kontrollsignale dienen, die von dem Monitor (10) zu den Anwendungs-Steuer- und Kontrollmitteln (9, 11, 18, 48) des Versorgungssystems geschickt werden, wobei die genannten adressierbaren Speichermittel (238, 239, 240, 241, 242) an ihren Eingängen mit dem Datenbus der Steuer-Busleitung (12) verbunden sind.

13. Versorgungssystem nach dem vorstehenden Anspruch, dadurch gekennzeichnet, daß die Anwendungs-Schnittstelleneinheit (74) Mittel (235 und 236) zur internen Rückschleifung von Steuer- und Kontrollsignalen (CMD1, CMD2, POUT) enthält, die in den Mitteln (238, 239, 240, 241, 242) gespeichert sind, um unter Steuerung des Monitors (10) unter diesen Steuer- und Kontrollsignalen (CMD1, CMD2, POUT) bestimmte auszuwählen und diese ausgewählten Steuer- und Kontrollsignale (CMD1, CMD1, POUT) über den Datenbus der Steuer-Busleitung (12) zu dem Monitor (10) zu übertragen.

14. Versorgungssystem nach Anspruch 11, dadurch gekennzeichnet, daß die Mittel zur Selektion und Umlenkung der Anwendungssignale der Anwendungs-Schnittstelleneinheit (74) umfassen:
einen Schnittstellenblock (235) zum Anpassen und/oder Anschließen der Steuer- und Kontrollsignale (BPC-IN, PIN, CONSOLE, ALIM PRIM), die von den Anwendungsvorrichtungen (9, 18, 11, 48) empfangen werden, an die Eingangsschaltungen des Multiplexerblocks (236),
einen Multiplexerblock (236) zum Auswählen bestimmter Signale, die an diese Eingänge angelegt werden, und Übertragen dieser ausgewählten Signale auf die Steuer-Busleitung (12), mit der er an seinen Ausgängen verbunden ist, wobei dieser Multiplexerblock (236) über Adressierleitungen (PMC-ADR09, PMC-ADR10, PMC-ADR15) adressiert wird und die Auswahlkriterien durch Selektionsleitungen (PMC-ADR00—PMC-ADR02) definiert sind, wobei diese Adressierleitungen und diese Selektionsleitungen zu der Steuer-Busleitung (12) gehören.

15. Versorgungssystem nach Anspruch 13, dadurch gekennzeichnet, daß die Selektions- und Umlenkungsmittel der Anwendungs-Schnittstelleneinheit (74) enthalten:
einen Schnittstellenblock (235) zum Anpassen und/oder Anschließen der intern rückgeschleiften Signale (REG), die von den Schaltungen des Anwendungs-Schnittstellenmoduls (74) selbst empfangen werden, an die Eingangsschaltungen des Multiplexerblocks (236),
einen Multiplexerblock (236) zum Auswählen von bestimmten an seine Eingänge angelegten Signalen und Übertragen dieser ausgewählten Signale auf die Steuer-Busleitung (12), mit der er an seinen Ausgängen verbunden ist, wobei dieser Multiplexerblock (236) über Adressierleitungen (PMC-ADR09, PMC-ADR10, PMC-ADR15) adressiert wird und die Auswahlkriterien durch Selektionsleitungen (PMC-ADR00—PMC-ADR12) definiert sind, wobei diese Adressierleitungen und diese Selektionsleitungen zu der Steuer-Busleitung (12) gehören.

16. Versorgungssystem nach Anspruch 12, dadurch gekennzeichnet, daß die adressierbaren Mittel (238, 239, 240, 241, 242) zum Speichern der Steuer- und Kontrollsignale enthalten:
eine Mehrzahl von Registern (238, 239, 240, 241, 242) zum Speichern der Anwendungsbefehle (REG), welche zu den Anwendungsvorrichtungen (9, 18, 11, 48) zu übertragen sind, wobei die Eingänge dieser Register (238, 239, 240, 241, 242) zum Speichern der Anwendungsbefehle parallel mit der Steuer-Busleitung (12) verbunden sind und die Übertragung des Inhalts dieser Steuer-Busleitung (12) unter Steuerung durch den Monitor zu einem der Register (238, 239, 240, 241, 242) zum Speichern der Anwendungsbefehle erfolgt, die zuvor über die Adressierleitungen (PMC-ADR (00, 02, 09, 10, 15)) adressiert wurden, wobei die Übertragung des Inhalts der Steuer-Busleitung (12) ihrerseits über eine Steuerleitung (PMC-MEMW) getastet wird, und wobei die Ausgänge dieser Register (238, 239, 240, 241, 242) zum Speichern der Anwendungsbefehle mit den Eingängen der Steuerschaltungen (243, 244, 245, 246, 247) der Anwendungsvorrichtungen (9, 18, 11, 48) verbunden sind,
eine Mehrzahl von Schaltungen (243, 244, 245, 247) zum Steuern der Anwendungsvorrichtungen (9, 11, 18, 48) für die Anpassung der von den Registern (238, 239, 240, 241, 242) zum Speichern der Anwendungsbefehle empfangenen Befehle an die Steuerleitungen (CMD1, CMD2, POUT) der Anwendungsvorrichtungen.

17. Versorgungssystem nach einem der vorstehenden Ansprüche, dadurch gekennzeichnet, daß der Anwendungs-Schnittstellenmodul (74) umfaßt:
Mittel (248) zur Erzeugung von Aufforderungen zu Änderung der Betriebsweise des Versorgungssystems, um ausgehend von den durch die Anwendungsvorrichtungen (9, 11, 18, 48) abgegebenen Anforderungen (PREGOV, PREGUV, LOGON, LOGOFF, ENI, COOLF1, COOLF2, COOLF3, COMREL) Unterbrechungssignale (MCRINT*, INTR1, INTR2, INTR5, INTR) zu erzeugen, welche auf den Unterbrechungsabrufleitungen der Steuer-Busleitung (12), zu dem Monitor (10) übertragen werden.

18. Versorgungssystem nach einem der vorstehenden Ansprüche, dadurch gekennzeichnet, daß jede stromabwärts liegende Schnittstelleneinheit (51-1, 52-2, 56-1, 56-2, 61-1, 61-2, 66-1, 66-2) Mittel (350 und 358) zur Selektion und Umlenkung von Stromab-Schnittstellensignalen umfaßt, um unter Steuerung durch den Monitor (10) bestimmte Stromab-Schnittstellensignale unter denjenigen (DIN, REG.ET) auszuwählen, die von den Zwischenmodulen (52 bis 65, 67, 68) abgegeben werden, und um diese ausgewählten Signale über die Steuer-Busleitung (12) zu dem Monitor (10) zu übertragen.

19. Versorgungssystem nach einem der Ansprüche 3 bis 8, dadurch gekennzeichnet, daß jede stromabwärts liegende Schnittstelleneinheit (51-1, 51-2, 56-1, 56-2, 61-1, 61-2, 66-1, 66-2) adressierbare Mittel (360, 361, 363, 364) zum Speichern der Kontroll- und Steuersignale (ISM1, ISM2) der Quellen umfaßt, um die Steuer- und Kontrollsignale zu speichern, welche durch den Monitor (10) zu den Quellen geschickt werden, wobei diese Mittel (360, 361, 363, 364) an ihren Eingängen mit der Steuer-Busleitung (12) verbunden sind.

20. Versorgungssystem nach einem der Ansprüche 3 bis 19, dadurch gekennzeichnet, daß jede stromabwärts liegende Schnittstelleneinheit (51-1, 51-2, 56-1, 56-2, 61-1, 61-2, 66-1, 66-2) adressierbare Mittel (362, 365) zum Speichern der Kontroll- und Steuersignale (LSSCI) der Vorrichtungen umfaßt, welche durch die Quellen versorgt werden, um die Kontroll- und Steuersignale zu speichern, die durch den Monitor (10) zu den Vorrichtungen geschickt werden, welche durch die Quellen versorgt werden, wobei die genannten Mittel (362, 365) an ihren Eingängen mit der Steuer-Busleitung (12) verbunden sind.

21. Versorgungssystem nach Anspruch 19 oder 20, dadurch gekennzeichnet, daß die Selektions- und Umlenkmittel jeder stromabwärts liegenden Schnittstelleneinheit (51-1, 51 2, 56-1, 56-2, 61-1, 61-2, 66-1, 66-2) umfassen:
einen Eingangs-Schnittstellenblock (350) zum Anpassen und/oder Anschließen der von den Zwischenmodulen (AM908), ((52, 53) oder (54, 55) oder (57, 58) oder (59, 60) oder (62, 63) oder (64, 65) oder (67) oder (68)) empfangenen Quellen-Steuer- und Kontrollsignale an die Eingänge des Multiplexerblocks (358),
einen Multiplexerblock (358) zum Auswählen von bestimmten an seine Eingänge angelegten Signalen und Übertragen dieser ausgewählten Signale auf die Steuer-Busleitung (12), an die er angeschlossen ist, wobei dieser Multiplexerblock (358) adressiert wird und die Auswahlkritereien für die Signale durch den Monitor (10) über Adressierleitungen (PMC-ADR (00, 01, 08, 15)) definiert werden.

22. Versorgungssystem nach einem der Ansprüche 18 bis 21, dadurch gekennzeichnet, daß die Selektions- und Umlenkmittel jeder stromabwärts liegenden Schnittstelleneinheit (51-1, 51-2, 56-1, 56-2, 61-1, 61-2, 66-1, 66-2) enthalten:
einen Eingangs-Schnittstellenblock (350) zum Anpassen und/oder Anschließen der Rückschleifsignale (REG.ET), die von den Registern (360, 361, 362) zum Speichern der Befehle empfangen werden, an die Eingänge des Multiplexerblocks (358),
einen Multiplexerblock (358) zum Auswählen von bestimmten an seine Eingänge angelegten Signalen und Übertragen dieser ausgewählten Signale auf die Steuer-Busleitung (12), mit welcher er verbunden ist, wobei dieser Multiplexerblock (358) durch den Monitor (10) über Adressierleitungen (PMC-ADR (00, 01, 08, 15)) gesteuert wird.

23. Versorgungssystem nach einem der Ansprüche 19 bis 22, dadurch gekennzeichnet, daß die adressierbaren Mittel zum Speichern der Quellen-Kontroll- und Steuersignale (ISM1, ISM2) umfassen:
eine Mehrzahl von Registern (360, 361) zum Speichern der Betriebsbefehle (REG.ET), die zu den Quellen zu übertragen sind, wobei die Eingänge dieser Befehlsregister (360, 361, 362) parallel mit der Busleitung (12) verbunden sind und die Überführung des Inhalts dieser Steuer-Busleitung (12) unter Steuerung durch den Monitor (10) zu einem dieser Befehls-Speicherregister (360, 361) erfolgt, nachdem dieses zuvor über Adressierleitungen (PMC-ADR (00, 01, 08, 15)) adressiert wurde, wobei die Überführung des Inhalts der Steuer Busleitung (12) ihrerseits mittels einer Steuerleitung (PMC-MEMW) getastet wird, wobei die Ausgänge dieser Register (360, 361, 362) zum Speichern der Befehle mit den Eingängen der Steuerschaltungen (363, 364) verbunden sind,
eine Mehrzahl von Steuerschaltungen (363, 364, 365) zur Anpassung der von den Befehls-Speicherregistern (360, 361, 362) empfangenen Befehle an die Quellen-Steuerleitungen (ISM1, ISM2).

24. Versorgungssystem nach einem der Ansprüche 20 bis 23, dadurch gekennzeichnet, daß die adressierbaren Mittel zum Speichern der Steuer- und Kontrollsignale (LSSC1) der durch die Quellen versorgten Vorrichtungen umfassen:
eine Mehrzahl von Registern (362) zum Speichern der Betriebsbefehle (REG.ET), die zu den durch die Quellen versorgten Vorrichtungen zu übertragen sind, wobei die Eingänge dieser Befehlsregister (360, 361, 362) parallel mit der Steuer-Busleitung (12) verbunden sind und die Überführung des Inhalts dieser Steuer-Busleitung (12) unter Steuerung durch den Monitor (10) zu einem der Befehlsspeicherregister (362) erfolgt, welches zuvor über Adressierleitungen (PMC-ADR (00, 01, 08, 15)) adressiert wurde, wobei die Überführung des Inhalts der Steuer-Busleitung (12) ihrerseits über eine Steuerleitung (PMC-MEMW) getastet wird und wobei die Ausgänge dieser Befehlsspeicherregister (360, 361, 362) mit den Eingängen der Steuerschaltungen (363, 364) verbunden sind,
eine Mehrzahl von Steuerschaltungen (365) zur Anpassung der von den Befehlsspeicherregistern (360, 361, 362) empfangenen Befehle an die Steuerleitungen der durch die Quellen (LSSC1) gespeisten Vorrichtungen.

25. Versorgungssystem nach einem der vorstehenden Ansprüche, dadurch gekennzeichnet, daß jede stromabwärts liegende Schnittstelleneinheit (51-1, 51-2, 56-1, 56-2, 61-1, 61-2) Mittel (367) zur Erzeugung von Aufforderungen zum Stillsetzen bei Zwischenfällen umfaßt, um aus Zwischenfall-Signalen (GFLT, PMVFLT), die von den Quellen oder von den durch diese versorgten Vorrichtungen abgegeben werden, Unterbrechungssignale (INTR*, PMW INTR, GLFT, PMVFLT, DDR (01—03) zu erzeugen, welche über die Unterbrechungsabrufleitungen der Steuer-Busleitung (12) zu dem Monitor (10) übertragen werden.

26. Versorgungssystem nach einem der vorstehenden Ansprüche, dadurch gekennzeichnet, daß die Piloteinheit (75) umfaßt:
einen Mikroprozessor (451) mit seiner Taktschaltung; wobei dieser Mikroprozessor (451) einen Eingang (451-1) für Aufforderungen (INTERRUPTIONS) umfaßt, welcher mit einem Block (450) zur Erzeugung von Aufforderungen verbunden ist, und drei Ausgänge (451-2, 451-3, 451-4) aufweist; einen ersten Ausgang (451-2) für Steuer- und Kontrollsignale, der mit einer internen Steuer- und Kontroll-Busleitung (473) verbunden ist, einen zweiten Ausgang (451-3), der mit
einer internen Adressier-Busleitung (464) verbunden ist, einen dritten Ausgang (451-4), der mit einer internen Daten-Busleitung (462) verbunden ist,
eine interne Steuer- und Kontroll-Busleitung (473) zur Beförderung der internen Steuer- und Kontrollsignale (HLDA, REST, WR*, CSIO, RD*, INTA*, DBS0, DBS1, ALE) sowie der Taktsignale (SCLK),
eine interne Adressier-Busleitung (464) zur Beförderung der internen Adreßsignale (TA (08—15)),
eine interne Daten-Busleitung (462) zum Befördern der internen Datensignale (IDB (00—07)),
einen Block (450) zur Erzeugung von Aufforderungen für den Emfang von internen Aufforderungen (PMC-TOUT1, PMC-TOUT2) und von externen Aufforderungen (BPC-REST-IN, BPC-INTR4*, BPC-INTR5*) sowie zur Umformung derselben in Unterbrechungsabrufe (REST-IN-10, INTR4, INTR5, INTR0, INTR6); wobei dieser Block (450) zur Erzeugung von Aufforderungen die internen Aufforderungen an seinem Eingang (450-1) und die externen Aufforderungen an seinem Ein/Ausgang (450-3) empfängt sowie die Unterbrechungssignale an seinem Ausgang (450-2) und an seinem Ein/Ausgang (450-3) abgibt,
einen Block (452) zur Erzeugung von internen Steuer- und Kontrollsignalen für die Erzeugung von Signalen aus diesen internen Steuer- und Kontrollsignalen, die für Peripherorgane (453, 454, 455, 456, 460) bestimmt sind, welche der Steuerung des Mikroprozessors (451) unterworfen sind, wobei dieser Block (452) zur Erzeugung der Steuer- und Kontrollsignale einen Eingang (452-1) enthält, an dem er die internen Steuer- und Kontrollsignale empfängt, sowie zwei Ausgänge (452-2) und (452-3) umfaßt, auf denen er die Befehlssignale für die Peripherorgane abgibt,
einen Block (453) zur Umlenkung von Adressen/Daten, um die vorübergehende Benutzung der internen Daten-Busleitung (469) zu gestatten, damit die niederwertigen Adreßteile übertragen werden können, die der Mikroprozessor (451) abrufen will, wobei dieser Block (453) zur Umlenkung von Adressen/Daten vom Ausgang (452-3) des Befehlserzeugungsblocks,
eine Busleitung (465) für interne Befehle empfängt, um die internen Befehle der Piloteinheit (75) zu befördern, wobei diese Busleitung (465) für interne Befehle durch den Ausgang (452-2) des Befehlserzeugungsblocks (452) gespeist wird,
eine Busleitung (467) für die internen Adressen der Piloteinheit (75), wobei diese Busleitung (465) durch den Ausgang (453-3) des Adressen/Daten-Umlenkblocks (453) gespeist wird,
einen Block-Vorselektor (455), um unter Steuerung durch den Mikroprozessor (452) die Vorselektion eines Blockes vorzunehmen, den der Mikroprozessor zum Betrieb auffordert; wobei der Eingang (455-3) dieses Vorselektors mit der Busleitung (465) für interne Adressen verbunden ist und sein Eingang (455-1) mit der Busleitung (465) für interne Befehle verbunden ist, während sein Ausgang (455-2) mit der Busleitung (468) für die Block-Vorselektion verbunden ist,
eine Block-Vorselektion-Busleitung (465) zum Befördern der Block-Vorselektionssignale,
einen Speicherblock (454) zum Speichern der Daten sowie bestimmter Betriebsparameter des Versorgungssystems; wobei dieser Speicherblock (454) an seinem Eingang (454-1) mit der Busleitung (465) für interne Befehle verbunden ist, an seinem Eingang (454-2) mit der Block-Vorselektion-Busleitung (468) verbunden ist, an seinem Eingang (454-4) mit der Busleitung (467) für interne Adressen verbunden ist und an seinem Ausgang (454-3) mit der internen Daten-Busleitung (462) verbunden ist,
einen Block (456) zur Steuerung auf zweitem Niveau, um die Steuersignale zu erzeugen, die zu den durch die Quellen des Versorgungssystems gespeisten Schaltungen zu übertragen sind; wobei dieser Steuerblock (456) für das zweite Niveau an seinem Eingang (456-1) mit der Block-Vorselektion-Busleitung (468) verbunden ist, an seinem Eingang (456-2) mit der Busleitung (465) für interne Befehle verbunden ist und an seinem Ausgang (456-3) mit den Befehlsübertragungsleitungen (471) zur Befehlsübertragung an die durch die Quellen versorgten Schaltungen verbunden ist,
einen Steuerblock (458) zur Steuerung auf dem ersten Niveau, um die zu den Quellen zu übertragenden Steuersignale zu erzeugen; wobei dieser Block (458) für die Steuerung auf dem ersten Niveau an seinem Eingang (458-1) mit der Busleitung (465) für interne Befehle verbunden ist und an seinem Ausgang (465-2) mit den Leitungen (465) zur Übertragung der Befehle zu den Quellen verbunden ist,
ein Pufferregister (459) für die externen Adressen, um die Adreßsignale zu speichern, die durch den Mikroprozessor (451) zu den peripheren Organen geschickt werden; wobei dieses Adressen-Pufferregister (459) an seinem Eingang (459-1) mit der Busleitung (467) für interne Adressen und an seinem Ausgang (459-2) mit der Busleitung (459) für externe Adressen verbunden ist,
eine Vorrichtung (460) zur Steuerung der Datenübertragungsrichtung, um die einlaufenden Daten von den externen Organen zu dem Mikroprozessor (451) und die abgehenden Daten von dem Mikroprozessor (451) zu den externen Organen zu lenken;
wobei diese Vorrichtung (460) zur Steuerung der Datenübertragungsrichtung an ihrem Ein-/Ausgang (460-1) mit der internen Daten-Busleitung (462) verbunden ist, an ihrem Ein-/Ausgang (460-3) mit der externen Daten-Busleitung (472) verbunden ist und an ihrem Eingang (460-2) mit der Busleitung (465) für interne Befehle verbunden ist.

27. Versorgungssystem nach Anspruch 26, dadurch gekennzeichnet, daß es einen Zeitbasisblock (457) umfaßt, der mehrere Abwärtszählschaltungen enthält, deren Anfangsinhalt durch den Mikroprozessor (451) eingeladen wird und deren Abwärtszählung durch ein von dem Mikroprozessor (451) abgegebenes Taktsignal gesteuert wird; wobei jeder Abwärtszähler beim Nulldurchgang ein Anforderungssignal (PMCTOT1, PMCTOUT2) abgibt, um dem Mikroprozessor (451) zu signalisieren, daß sein Inhalt Null ist; wobei der Eingang (457-1) des Zeitbasisblocks (457) mit der Busleitung (465) für interne Befehle verbunden ist, sein Ein-/Ausgang (457-2) mit der Busleitung (467) für interne Adressen verbunden ist und sein Eingang (457-3) mit der internen Daten-Busleitung (462) verbunden ist.

## Claims

1. System for supplying electrical power to a plurality of user units (Fig. 1; 1 to 11), the said system comprising a plurality of controllable devices (Fig. 2; 95 to 137) referred to as »supply sources« intended to distribute the electrical power coming from a primary feed device (Fig. 1c; 14, 18) to the said user units (1 to 11), the said system comprising a monitor (Fig. 2c; 10) for monitoring the operation and for controlling the system, of which the processor referred to as »driving unit« (75) is connected by a driving bus (12) on the one hand, by means of interfaces (Fig. 2; 51, 56, 61, 66), so-called downstream interfaces, to the said supply sources, and on the other hand by means of an interface, so-called exploitation interface (74), to the other elements of the system which form the means for monitoring and controlling the exploitation of the said supply system and comprising the said primary supply device and slave devices (18), a slave supply (9) for the monitor (10) serving to supply the monitor (10) independently of the primary supply source (18), and an operating panel (11) and possibly an exploitation console (48), the said driving unit (75) being programmed so that it may trigger the energisation of all the supply sources of the system and of the slave devices, for detecting the states of the different elements of the system and for transmitting these states to the operating panel (11), characterised in that the configuration of the assembly of the supply sources is such that each supply source is formed by one or more elementary supply modules or groups of modules connected in parallel (Fig. 3 to 5; 200 to 243, 268 to 279, 300 to 319, 60) in that each elementary supply module or group of elementary supply modules is in communication with a downstream interface (51, 56, 61, 66) by means of an interface referred to as an intermediate module (52 to 65, 67, 68), a downstream interface (51, 56, 61, 66) being connectable to several intermediate modules (52 to 65) and each intermediate module containing storage means able to store the parameters defining the operating state of the elementary supply modules associated with the said storage means, in that the driving unit (75) is connected by the said driving bus to a unit referred to as a configuration definition unit (76) comprosing an adressable read only memory in which are defined the distribution and type of the elementary supply modules, thereby reproducing the said configuration, and in that the driving unit (75) has acces via a data bus (DMB-EDB) to the data of each storage means of the said intermediate interfaces (52 to 65) by adressing on an address bus (PMC-ADR) of the downstream interfaces of which the addresses are defined in the configuration definition unit (76).

2. System according to claim 1 characterised in that the state of at least one of the said other exploitation monitoring and control means (9, 11, 18, 48) of the system accessible to the driving unit by addressing (PMC-ADR) the exploitation interface (74) of which the address is equally defined in the configuration definition unit (76).

3. Supply system according to one of the preceding claims characterised in that each downstream interface unit comprises a control and monitoring linkage [Fig. 2; (153) or (154) or (155) or (156) or (157) or (158) or (159) or (160)] connected to the circuits supplied by the said sources (interface LSSCI).

4. Supply system according to one of the preceding claims characterised in that the exploitation console (48) is connected to the exploitation interface unit (74) by means of a linkage (43) referred to as an intersystem supply linkage (SPCI) which has two separate linkages:
a so-called input (SPCI-IN) linkage (Fig. 11; 187) which, amongst other signals, carries all the signals transmitted from the exploitation console (48) to the exploitation interface unit (74),
a so-called output (SPCI-OUT) linkage (193) which, amongst other signals, carries all the signals transmitted from the exploitation interface unit (74) to the exploitation console (48).

5. Supply system obtained by combination of a supply system according to claim 4, characterised in that the supply systems are connected in series forming a chain starting from the exploitation console (Fig. 1c; 48) and coupled via the so-called output linkage (187), the exploitation interface unit (74) of the first supply system, carrying on from the exploitation interface unit (74) of the first supply system for connection via the intersystem supply linkage (188) to the exploitation interface unit (179) of the second supply system, continuing from the exploitation inerface unit (179) of the second supply system and via the intersystem linkage (189) to the exploitation interface unit (181) of the third supply system, and so on in this manner in sequence up to the exploitation interface unit (185) of the last supply system of the chain, finally looping the chain by connecting the exploitation interface unit (185) of the last supply system, via the so-called output linkage (192), to the exploitation console (48).

6. Supply system according to claim 4 characterised in that the so-called input linkage (187) comprises:
an energisation request linkage carrying a stored signal (Fig. 25; LOGON) indicating that the operator has logged a request to the console (48) for a supply system energisation sequence,
an input synchronisation linkage carrying a synchronising signal (Fig. 15; ENI) indicating to the exploitation interface unit (74) that the monitor (10) should satisfy the request for energisation it the corresponding signal (LOGON) is active or satisfy the request for de-energisation it the corresponding signal (LOGOFF) is active.

7. Supply system according to claim 6 characterised in that the so-called output linkage (193) comprises:
a linkage for monitoring receipt of the energisation request carrying the stored (LOGON) signal requesting exploitation after traversal of the exploitation interface unit (74),
a linkage for monitoring receipt of the de-energisation request carrying the stored de-energisation request signal (LOGOFF) after traversal of the exploitation interface unit (74),
a sequence termination linkage carrying a synchronising signal (ENO) indicating that the monitor (10) has stopped implementation of the sequence requested by the operator.

8. Supply system according to claim 5 characterised in that the so-called input linkage (187) comprises:
an energisation request linkage carrying a stored signal (LOGON) indicating that the operator has logged a request at the console (48) for a supply system energisation sequence,
a de-energisation request linkage carrying a stored signal (LOGOFF) indicating that the operator has logged a request at the console (48) for a supply system de-energisation sequence,
an input synchronisation linkage carrying a synchronising signal (ENI) indicating for the exploitation interface unit (74) that the monitor (10) should satisfy the energisation request if the corresponding signal (LOGON) is actife or satisfy the corresponding de-energisation request if the corresponding signal (LOGOFF) is active.

9. Supply system according to claim 8 characterised in that the so-called output linkage (193) comprises:

a linkage for monitoring reception of the energisation request carrying the stored energisation request signal (LOGON) after traversal of the exploitation interface unit (74),
a linkage for monitoring reception of the de-energisation request carrying the stored de-energisation request signal (LOGOFF) after traversal of the exploitation interface unit (74),
a sequence termination linkage carrying a synchronising signal (ENO/SEQC) indicating that the monitor (10) has stopped execution of the sequence requested by the operator.

10 Supply system according to claim 9 characterised in that the intersystem linkages (188, 189, 190, 191) each comprises:
a linkage for monitoring propagation of the energisation request carrying the stored signal (LOGON) which traversed the exploitation interface unit of the preceding supply system to the input to the exploitation interface unit of the following supply system,
a linkage for monitoring propagation of the de-energisation request carrying the stored signal (LOGOFF) which traversed the exploitation interface unit of the preceding supply system to the input of the exploitation interface system of the following supply unit,
a sequence driving linkage transmitting the sequence termination signal (ENO) of the preceding supply system to the input of the exploitation interface unit of the following supply system where it constitutes the sequence initiation synchronisation signal (ENI) of this said supply system, or the sequence termination signal (SEQC) if the preceding supply system was the last.

11. Supply system according to one of the preceding claims characterised in that the exploitation interface unit (74) comprises means (Fig. 15; 235 and 236) for selecting and directing exploitation signals in order to select, under instructions from the monitor (10), certain of the said exploitation signals (Fig. 23a; BPC-IN, PIN, CONSOLE, PRIM.FEED) transmitted by the exploitation checking and control means (9, 11, 18, 48) and for transmitting these said selected exploitation signals to the monitor (10) via the data bus of the driving bus (12).

12. Supply system according to the preceding claim characterised in that the exploitation interface unit (74) comprises addressable storage means (238, 239, 240, 241, 242) for storing the control and monitoring signals transmitted by the monitor (10) towards the exploitation control and monitoring means (9, 11, 18, 48) of the supply system, the said addressable storage means (238, 239, 240, 241, 242) having their inputs connected to the data bus of the driving bus (12).

13. Supply system according to the preceding claim characterised in that the exploitation interface (74) comprises means (235 and 236) for internal recirculation of control and monitoring signals (CMD1, CMD2, POUT) stored in the means (238, 239, 240, 241, 242) in order to select, under instructions from the monitor (10), certain of these control and monitoring signals (CMD1, CMD2, POUT) and transmit these said selected control and monitoring signals (CMD1, CMD2, POUT) to the monitor (10) via the data bus of the driving bus (12).

14. Supply system according to claim 11 characterised in that means for selecting and directing exploitation signals of the exploitation interface module (74) comprises:
an interface block (235) for adapting and/or connecting the control and monitoring signals (BPC-IN, PIN, CONSOLE, PRIM.FEED) received from the exploitation devices (9, 18, 11, 48) to the input circuits of the multiplexer block (236),
a multiplexer block (236) for selecting certain of the signals fed to these inputs and transmitting these said selected on the driving bus (12) to which it is connected by its outputs, the said multiplexer block (236) being addressed via addressing lines (PMC ADR09, PMC ADR10, PMC ADR15) and the selection criteria being established by selection lines (PMC ADR00—PMC ADR02), which addressing lines and selection lines appertain to the driving bus (12).

15. Supply system according to claim 13 characterised in that the selecting and directing means of the exploitation interface module (74) comprises:
an interface block (235) for matching and/or connecting the internal recirculating signals (REG) received by the same circuits of the exploitation interface module (74) to the input circuits of the multiplexer block (236),
a multiplexer block (236) for selecting certain of the signals fed to its inputs and transmitting these said selected signals on the driving bus (12) to which it is connected by its outputs, the said multiplexer block (236) being addressed via addressing lines (PMC ADR09, PMC ADR10, PMC ADR15), and the selection criteria being established by selection lines (PMC ADR00—PMC ADR12), which addressing lines and selection lines appertain to the driving bus (12).

16. Supply system according to claim 12 characterised in that the addressable storage means (238, 239, 240, 241, 242) for control and monitoring signals, comprise:
a plurality of registers (238, 239, 240, 241, 242) for storing exploitation instructions, for storing the exploitation instructions (REG) which are to be transmitted to the exploitation devices (9, 18, 11, 48), the inputs of these said exploitation instruction storage registers (238, 239, 240, 241, 242) being connected in parallel to the driving bus (12) and the transfer of the contents of this driving bus (12) being effected under control of the monitor to one of the exploitation instruction storage registers (238, 239, 240, 241, 242) previously addressed by means of the addressing lines (PMC ADR (00, 02, 09, 10, 15)), the transfer of the contents of the driving bus (12) being itself sampled by means of a control line (PMC-MEMW), the output of these said registers (238, 239, 240, 241, 242) for storing exploitation instructions being connected to the inputs of the circuits (243, 244, 245, 246, 247) for controlling the exploitation devices (9, 18, 11, 48),
a plurality of circuits (243, 244, 245, 247) for controlling the exploitation devices (9, 11, 18, 48) for matching the instructions received from the registers (238, 239, 240, 241, 242) for storage of the exploitation instructions with the lines (CMD1, CMD2, POUT) for controlling the exploitation devices.

17. Supply system according to one of the preceding claims characterised in that the exploitation interface module (74) comprises:
means (248) of engendering requests for changing the state of operation of the supply system so that, in response to requests (PREGOV, PREGUV, LOGON, LOGOFF, ENI, COOLF1, COOLF2, COOLF3, COMREL) issued by the exploitation devices (9, 11, 18, 48), it is possible to generate interrupt signals (MCRINT*, INTRI1, INTR2, INTR5, INTR) transmitted on the lines for requests for an interrupt of the driving bus (12) leading to the monitor (10).

18. Supply system according to one of the preceding claims characterised in that each downstream interface unit (51-1, 52-2, 56-1, 56-2, 61-1, 61-2, 66-1, 66-2) comprises means (350 and 258) for selecting and directing downstream interface signals so that under control of the monitor (10) certain downstream interface signals may be selected those (DIN REG AND) transmitted by the intermediate modules (52 to 65, 67, 68) and that these said selected signals may be transmitted to the monitor (10) via the driving bus (12).

19. Supply system according to one of the claims 3 to 18 characterised in that each downstream interface unit (51-1, 51-2, 56-1, 56-2, 61-1, 61-2, 66-1, 66-2) comprises addressable means (360, 361, 363, 364) of storing the monitoring and control signals (ISM1, ISM2) for the sources, for storing the control and monitoring signals transmitted by the monitor (10) to the sources, the said means (360, 361, 363, 364) having their inputs connected to the driving bus (12).

20. Supply system according to one of the claims 3 to 19 characterised in that each downstream interface unit (51-1, 51-2, 56-1, 56-2, 61-1, 61-2, 66-1, 66-2) comprises addressable means (362, 365) of storing the signals (LSSCI) for monitoring and control of the devices supplied by the sources for storing the control and monitoring signals transmitted by the monitor (10) to the devices supplied by the sources, the said means having their inputs connected to the driving bus (12).

21. Supply system according to claim 19 or 20 characterised in that the means for selecting and directing each downstream interface unit (51-1, 51-2, 56-1, 56-2, 61-1, 61-2, 66-1, 66-2) comprises:
an input interface block (350) for matching and/or connecting the signals (DIN) received from the intermediate modules (AM908, ((52, 53) or (54, 55) or (57, 58) or (59, 60) or (62, 63) or (64, 65) or (67) or (68)) for control and monitoring of the sources to the inputs of the multiplexer block (358),
a multiplexer block (358) for selecting certain of the signals fed to its inputs and transmitting these said selected signals on the driving bus (12) to which it is connected, this said multiplexer block (358) being addressed and the signal selection criteria being established by the monitor (10) by means of addressing lines (PMC ADR (00, 01, 08, 15)).

22. Supply system according to one of the claims 18 to 21 characterised in that the selecting and directing means for each downstream interface unit (51-1, 51-2, 56-1, 56-2, 61-1, 61-2, 66-1, 66-2) comprises:
an input interface block (350) for matching and/or connecting the recirculation signals (REG.ET) received from the instruction storage registers (360, 361, 362) to the inputs of the multiplexer block (358),
a multiplexer block (358) for selecting certain of the signals fed to its inputs and transmitting these said selected signals on the driving bus (12) to which it is connected, this said multiplexer block (358) being specified by the monitor (10) by means of an addressing line (PMC ADR (00, 01, 08, 15)).

23. Supply system according to one of the claims 19 to 22, characterised in that the addressable means for storing of the signals (ISM1, ISM2) for monitoring and controlling the sources, comprise:
a plurality of registers (360, 361) for storing operating instructions to store the instructions (REG ET) to the transmitted to the sources, the inputs of these said instruction registers (360, 361, 362) being connected in parallel to the bus (12), the contents of this bus (12) being transferred under control by the monitor (10) to one of the instruction storage registers (360, 361) addressed beforehand by means of addressing liens (PMC ADR (00, 01, 08, 15)), the transfer of the contents of the driving bus (12) being itself sampled by means of a control lines (PMC MEMW), the outputs of these instruction storage registers (360, 361, 362) being connected to the inputs of the control circuits (363, 364),
a plurality of control circuits (363, 364, 365) for matching the instructions received from the instruction storage registers (360, 361, 362) with the control lines of the sources (ISM1, ISM2).

24. Supply system according to one of the claims 20 to 23 characterised in that the addressable means for storing the signals (LSSC1) for monitoring and control of the devices supplied by the sources comprise:
a plurality of operational instruction storage registers (362) for storing the instructions (REG ET) to be transmitted to the devics supplied by the sources, the inputs of these said instruction registers (360, 361, 362) being connected in parallel to the driving bus (12), and the transfer of the contents of this driving bus (12) being effected under control of the monitor (10) to one of the instruction storage registers (362) addressed beforehand by means of addressing lines (PMC ADR (00, 01, 08, 15)), the transfer of the contents of the driving bus (12) being itself sampled by means of a control line (PMC MEMW), the outputs of these said instruction storage registers (360, 361, 362) being connected to the inputs of the control circuits (363, 364) a plurality of control circuits (365) for matching the instructions received from the instruction storage registers (360, 361, 362) with the control lines of the devices supplied by the sources (LSSC1).

25. Supply system according to one of the preceding claims characterised in that each downstream interface unit (51-1, 51-2, 56-1, 56-2, 61-1, 61-2) comprise means (367) for generating stop on incident requests for engendering in response to the incident signals (GFLT, PMVFLT) transmitted by the sources or the devices supplied by the sources, interrupt signals (INTR*, PMW INTR, GLFT, PMVFLT, DDR (01—03)) transmitted via the interrupt request lines of the driving bus (12) to the monitor (10).

26. Supply system according to one of the preceding claims characterised in that the driving unit (75) comprises:

a microprocessor (451) with its clock circuit; this microprocessor (451) having a request (INTERRUPTIONS) input (451-1) connected to a request generation block (450) and three outputs (451-2, 451-3, 451-4); a first output (451-2) for controlling and monitoring signals connected to an internal control and monitoring bus (473), a second output (451-3) connected to

an internal addressing bus (464), a third output (451-4) connected to an internal data bus (462),

an internal control and monitoring bus (473) intended to carry the internal control and monitoring signals (HLDA, REST, WR*, CSI0, RD*, INTA*, DBS0, DBS1, ALE) as well as the clock signals (SCLK),

an internal addressing bus (464) for carrying the internal addressing signals (TA (08—15)),

an internal data bus (462) for carrying the internal data signals (IDB (00—07)),

a request generating block (450) for receiving the internal requests (PMC-TOUT1, PMC-TOUT2) and the external requests (BPC-REST-IN, BPC-INTR4*, BPC-INTR5*) and for converting these into interrupt requests (REST-IN-10, INTR4, INTR5, INTR0, INTR6); this request generating block (450) receives the internal requests at its input (450-1) and the external requests at its input-output (450-3) and transmits the interrupt signals on its output (450-2) and on its input-output (450-3)

a block (452) for generating internal control and monitoring signals so that in response to the said internal control and monitoring signals there are engendered signals intended for the peripheral elements (453, 454, 455, 456, 460) placed under the control of the microprocessor (451), this block (452) for engendering control and monitoring signals comprises an input (452-1) on which it receives the internal control and monitoring signals, and two outputs (452-2) and (452-3) on which it places the instruction signals for the said peripheral elements,

and address-data directing block (453) for allowing of temporary utilisation of the internal data bus (469) for transmitting the lesser address loads called by the microprocessor (451): this address-data directing block (453) receives from the output (452-3) of the instruction generation block,

an internal instruction bus (465) for carrying the internal instructions to the driving unit (75), this internal instruction bus (465) being supplied by the output (452-2) of the instruction generation block (452),

a bus (467) for the addresses internal to the driving unit (75), this bus (465) being supplied from the output (453-3) of the address-data directing bus (453),

a block preselector (455) for effecting under control the microprocessor (451) the preselection of a block from which the microprocessor requests a service; this preselector has its input (455-3) connected to the internal address bus (465), its input (455-1) connected to the internal instruction bus (465) and its output (455-2) connected to the block preselection bus (468)

a block preselection bus (465) for conveying the block preselection signals

a storage block (454) for storing the data and certain operating parameters of the supply system; this storage block (454) has its input (454-1) connected to the internal instruction bus (465), its input (454-2) connected to the block preselection bus (468), its input (454-4) connected to the internal address bus (467) and its output (454-3) connected to the internal data bus (462)

a second level control block (456) for generating the commands to be transmitted to the circuits supplied by the supply system sources; this second level control block (456) has its input (456-1) connected to the block preselection bus (468), its input (456-2) connected to the internal instruction bus (465) and its output (456-3) connected to the instruction transmission lines (471) for the circuits supplied by the sources

a first level control block (458) for generating the commands to be transmitted to the sources; this first level control block (458) has its input (458-1) connected to the internal instruction bus (465) and its output (465-2) connected to the instruction transmission lines (465) for the sources

an external address buffer register (459) for storing the address signals transmitted by the microprocessor (451) to the peripheral elements; this address buffer register (459) has its input (459-1) connected to the internal address bus (467) and its output (459-2) connected to the external address bus (459), a device (460) for monitoring the data transfer direction, for directing the data either from the external elements to the microprocessor (451) for the input data, or from the microprocessor (451) to the external elements for the output data; this device (460) for monitoring the direction of data transfer having its input-output (460-1) connected to the internal data bus (462), its input output (460-3) connected to the external data bus (472) and its input (460-2) connected to the internal instruction bus (465).

27. Supply system according to claim 26 characterised in that it comprises a time base block (457) comprising several countdown circuits, of which the initial contents are delivered by the microprocessor (451) and of which the countdown is operated by a clock signal transmitted by the microprocessor (451); upon reaching zero, each countdown unit transmits a request signal (PMCTOUT1, PMCTOUT2) to inform the microprocessor (451) that its contents are zero; the time base block (457) has its input (457-1) connected to the internal instruction bus (465), its input-output (457-2) connected to the internal address bus (467) and its input (457-3) connected to the internal data bus (462).

1
2
3
4
48
21
24
27
19
22
25
28
17
20
23
26
13
13
12
12
vers FIG1b
43
43

FIG.1a

5
6
7
8
30
33
36
45
31
34
37
46
29
32
35
44
13
12
43
vers FIG.1a
vers FIG.1c

FIG. 1b

16
15
14
13
18
42
38
9
10
13
12
vers FIG.1b
39
11
43
40
41

FIG. 1c

FIG.2a
52
AM 908
53
AM 908
(1/2 AM 903)
51 - 1
51 - 2
(1/2 AM 903)
54
AM 908
55
AM 908
57
AM 908
58
AM 908
(1/2 AM 903)
56 - 1
56 - 2
(1/2 AM 903)
59
AM 908
60 AY 05
vers FIG. 2b

vers
FIG.
2a
29
62
85
123
124
125
126
63
(1/2AM903)
86
127
128
129
61 - 1
157
12
158
61 - 2
64
130
131
(1/2AM903)
87
65
AY 05
132
88
32
12
35
(1/2AM903)
67
133
134
135
136
89
66 - 1
159
12
160
66-2
90
68
AY 05
137
(1/2AM903)
44
vers
FIG.
2c

FIG. 2b

vers
FIG.
2b
12
48
43
10
76
AM 927
11
40
12
75
AM 902B
9
39
12
74
AM 904
18
38
10

FIG. 2c

vers FIG. 3b

FIG. 3a

vers FIG. 3a

FIG. 3b

13
232
268
280
233
269
281
57
111
112
113
114
81
234
270
282
235
271
283
292
236
272
284
58
115
116
117
118
82
237
273
285
238
274
286
239
275
287
293
56
56 - 1
155
12
23
vers FIG. 4b


FIG. 4a

vers FIG. 4a
294
26
276
277
278
279
288
289
290
291
295
13
240
241
242
243
60
156
119
120
121
122
59
84
83
56-2
12
56


FIG. 4b

13
300
310
320
301
311
321
302
312
322
303
313
323
330
62
123
124
125
126
85
304
314
324
305
315
325
306
316
326
331
63
127
128
129
86
61
61 - 1
157
12
29
vers FIG. 5b


FIG.5a

vers FIG. 5a
12
61-2
158
61
87
64
130
131
307
308
327
328
317
318
332
65
88
132
309
329
319
333
13
32

FIG. 5b

Z 01
Z 02

FIG. 6

Z 01
Z 02
Y 01
Y 02
Y 03
Y 04
Y 05
Y 06

FIG. 7

AM908
AM903
AM903
AY05
Z01
Z02
Y01
Y02
Y03
Y04
Y05
Y06
51
52
53
54
55
56
57
58
59
60
77
78
79
80
81
82
83
84
95
96
97
98
99
100
101
102
103
104
105
106
107
108
109
110
111
112
113
114
115
116
117
118
119
120
121
122
153
154
155
156
12
vers FIG.8b


FIG.8a

vers FIG.8a
61
AM903
Z01
Z02
Y01
Y02
Y03
Y04
Y05
Y06
85
86
87
88
62
63
64
65
67
123
124
125
126
127
128
129
157
130
131
132
158
133
134
135
136
12
66
AM903
Z01
Z02
Y01
Y02
Y03
Y04
Y05
Y06
89
90
68
159
137
160
vers FIG.8c

FIG.8b

vers FIG.8b
Z01
AM927
Z02
76
12
Z01
AM902B
Z02
75
Z01
AM904
Z02
Y01
Y02
Y03
Y04
Y05
Y06
74
9
39
18
38
11
40
43
48

FIG.8c

160
ETATS DES SOUS SYSTEMES
160-0 160-1 160-2 160-3 160-4 160-5 160-6 160-7
161
COMMANDE GENERACE DU SYSTEME
MONIT M A M A
161-1 161-2 161-3 161-4 161-5
162
COMMANDE DES SOUS SYSTEMES
M M M M M M M M
A A A A A A A A
162-0 162-1 162-2 162-3 162-4 162-5 162-6 162-7
163
OCTETS INTERNES D'ETAT
N T EXPLO
163-0 163-1 163-2 163-3 163-4 163-5 163-6 163-7 163-8 163-9
164
COMMANDES DE MAINTENANCE
VISU DIR
164-8 164-9
LOC
SEQ
INHI
MODE
N° SYSTEME N° OCTET
1 1 1 1 1 1 1 1
0 0 0 0 0 0 0 0
164-0 164-1 164-2 164-3 164-4 164-5 164-6 164-7
11
11
40

FIG. 9

192
174
185
2
197
186
178
1
191
173
183
196
184
177
190
172
181
195
182
176
189
171
179
194
180
175
188
170
74
12
75
10
187
3
48

FIG.10

48
48-2
193
48-1
187
74
1
2
75
10
170

FIG. 11

INTERFACE SPCI
t0 t1 t2 t3 t4 t5 t6 t7 t8 t9 t10 t11 t12 t13 t14 t15 t16 t17 t18 t19 t20
LØG ØN
LØG ØFF
PØWER ØN
PØWER ØFF
ENI
ENØ
ENI
ENØ
ENI
ENØ/SEØC
200
201
202
203
204
205
206
207
208
209
200-1
200-2
201-1
201-2
202-1
203-1
204-1
204-2
205-1
205-2
206-1
206-2
207-1
207-2
208-1
208-2
209-1
209-2
θ1
θ2
θ3
θ4
console
systeme d'alimentation N° 1
systeme d'alimentation N° 2
systeme d'alimentation N° 3

FIG. 12

221
222
223
224
225
226
228
229
230
231
232
227
220
SPCI
OUT
SPCI
IN
Y01
Y02
Y03
Y04
Y05
Y06
AM 904
74
Z01
Z02
11
12

FIGURE 13

DBM-EDB(00-07)
285
CONSOLE
ALIM. PRIM.
BPC IN(00-07)
BPC IN(10-07)
PIN (00-07)
PIN(10-17)
PIN(20-27)
PIN(30-37)
REG(00-05)
REG(10-15)
PMC-ADR(00-02)
ADR*(00-02)
236
ØUT(00-07)
ØUT(10-17)
ØUT(20-27)
ØUT(30-37)
ØUT(40-47)
ØUT(50-57)
ØUT(60-67)
ØUT(70-77)
EDB(00-05)
256
257
258
vers FIG.14b
BPC-DTWØ
RDCD*
PMC-MEMR*
PM-MEMW*
PMC-ADR*(00-02)
PMC-ADR(09,10,15)
PMC REST-20
WREG 0
WREG 1
WREG 2
WREG 3
WREG 4
WRAZ 1
WRAZ 2
REST*
vers FIG.14b
237

FIG.14a

238
REG(00-05)
243
CMD1(00-03)
REG(02-05)(+)
239
244
REG(10-15)
CMD2(00-04)
REG(10-15)(+)
240
245
POUT(00-05)
POUT(00-05)
vers FIG.14a
EDB(00-05)
258
241
246
POUT*(10-15)
POUT(10-15)
242
247
POUT*(20-25)
POUT(20-25)
POUT 30
250
249
251
255
INTR5
MCR INT*
vers FIG.14a
248
OUT(00,01,05,06,07)
OUT(12,13,14,17)
INTR1,INTR2,INTR3,INTR5,INTR
252
253
OUT 16 (FIG.16)
WRAZ 1
WRAZ 2
OUT15 (FIG.16)
254

FIG.14 b

Z02-04 ØUT00
(+) PREGØV-10(FIG.25)
Z01-63 ØUT01
(+) PREGUV-10(FIG.25)
Z01-65 ØUT02
Z01-61 ØUT03
236
235
Y04-12 PREGØV
Y04-14 PREGUV
Y04-16 DCØFF
Y04-18 DCØN
Y03-18 SERVUV
Y01-06 LØGØN
Y01-02 LØGØFF
Y01-14 ENI
A
ØUT00 1-0
ØUT01 1-1
ØUT02 1-2
ØUT03 1-3
ØUT04 1-4
ØUT05 1-5
ØUT06 1-6
ØUT07 1-7
Z01-45 ØUT05
(+) LØG-ØFF-10(FIG.25)
Z01-17 ØUT06
(+) LØG-ØN-10(FIG.25)
Z01-22 ØUT07
(+) ENI -10(FIG.25)

FIG.15

Z01-67 ØUT12
Z01-68 ØUT13
Z01-15 ØUT14
(+) CØØL F3-10(FIG.25)
(+) CØØL F2-10(FIG.25)
(+) CØØL F1-10(FIG.25)
Y06-02 PIN 20
Y05-21 PIN 21
Y03-12 CØØLF3
Y03-08 CØØLF2
Y03-06 CØØLF1
(+) SYSØFF (FIG.25)
(+) SYSØN (FIG.25)
Y03-02 CØMREL
F
F
A
A
A
A
235
ØUT10 2-0
ØUT11 2-1
ØUT12 2-2
ØUT13 2-3
ØUT14 2-4
ØUT15 2-5
ØUT16 2-6
ØUT17 2-7
236
Z01-46 ØUT15
Z01-18 ØUT16
Z01-21 ØUT17
(+) COMREL-10(FIG.25)


FIG.16

236
3-0
3-1
3-2
3-3
3-4
3-5
3-6
3-7
ØUT20
ØUT21
ØUT22
ØUT23
ØUT24
ØUT25
ØUT26
ØUT27
235
(+) INTR1 *
(+) INTR2 *
Z01-32 BPC-IN02
Z01-36 BPC-IN03
Z01-38 BPC-IN04
Z01-40 BPC-IN05
Z01-28 BPC-IN06
Z01-26 BPC-IN07

FIG.17

236
4-0
4-1
4-2
4-3
4-4
4-5
4-6
4-7
ØUT30
ØUT31
ØUT32
ØUT33
ØUT34
ØUT35
ØUT36
ØUT37
235
BPC-IN10
BPC-IN11
BPC-IN12
BPC-IN13
BPC-IN14
BPC-IN15
BPC-IN16
BPC-IN17
Z01-66
Z01-64
Z01-31
Z01-35
Z01-37
Z01-39
Z01-27
Z01-25

FIG.18

236
5-0
5-1
5-2
5-3
5-4
5-5
5-6
5-7
ØUT40
ØUT41
ØUT42
ØUT43
ØUT44
ØUT45
ØUT46
ØUT47
F
F
F
F
F
F
F
F
235
PIN-00
PIN-01
PIN-02
PIN-03
PIN-04
PIN-05
PIN-06
PIN-07
Y05-01
Y05-03
Y05-05
Y05-07
Y05-11
Y05-14
Y05-15
Y05-19

FIG.19

236
6-0
6-1
6-2
6-3
6-4
6-5
6-6
6-7
OUT50
OUT51
OUT52
OUT53
OUT54
OUT55
OUT56
OUT57
F
235
PIN-10
PIN-11
PIN-12
PIN-13
PIN-14
PIN-15
PIN-16
PIN-17
Y05-02
Y05-04
Y05-06
Y05-08
Y05-13
Y05-16
Y05-17
Y05-22

FIG. 20

236
235
7-0
7-1
7-2
7-3
7-4
7-5
7-6
7-7
ØUT60
ØUT61
ØUT62
ØUT63
ØUT64
ØUT65
ØUT66
ØUT67
F
F
F
AI
AI
AI
BPC-OU27
BPC-OU26
Z02-06
Z02-05
REG10
REG11
REG12
REG13
REG14
PIN35
PIN26
PIN27
(+)
(+)
(+)
(+)
(+)
Y06-18
Y05-18
Y05-23

FIG.21

236
8-0
8-1
8-2
8-3
8-4
8-5
8-6
8-7
ØUT70
ØUT71
ØUT72
ØUT73
ØUT74
ØUT75
ØUT76
ØUT77
F
F
235
(+) REG00
(+) REG01
(+) REG02
(+) REG03
(+) REG04
(+) REG05
Y05-20 PIN36
Y05-24 PIN37

FIG.22

PREGØV
PREGUV
DCØFF
DCØN
SERWV
LØGØN
LØGØFF
ENI
INTR1*
INTR2*
BPCIN02
BPCIN03
BPCIN04
BPCIN05
BPCIN06
BPCIN07
PIN00
PIN01
PIN02
PIN03
PIN04
PIN05
PIN06
PIN07
REG10
REG11
REG12
REG13
REG14
PIN35
PIN26
PIN27
OUT66
OUT67
(ØUT00-03, ØUT05-07)
Z01
(ØUT00-01, ØUT05-07)
+
ØUT60-67
ØUT40-47
ØUT20-27
ØUT00-07
ØUT10-17
ØUT30-37
ØUT50-57
ØUT70-77
vers FIG.24b
ØUT12-17
Z01
Z02
ØUT13-14, ØUT17
+
PIN20
PIN21
CØØLF3
CØØLF2
CØØLF1
OUT15
OUT16
COMREL
BPCIN10
BPCIN11
BPCIN12
BPCIN13
BPCIN14
BPCIN15
BPCIN16
BPCIN17
PIN10
PIN11
PIN12
PIN13
PIN14
PIN15
PIN16
PIN17
REG00
REG01
REG02
REG03
REG04
REG05
PIN36
PIN37

FIG.23a

PMC-ADR00
PMC-ADR01
PMC-ADR02
ADR00*
ADR01*
ADR02*
Z02
DBM-EDB(00-07)
257
10-3
10-2
10-1
ØUT60-67
ØUT40-47
ØUT 20-27
ØUT 00-07
ØUT 10-17
ØUT 30-37
ØUT 50-57
ØUT 70-77
vers FIG. 24a
7
5
3
1
2
4
6
8
9
11
236
RDCD*
DBM-EDB0
DBM-EDB1
DBM-EDB2
DBM-EDB3
DBM-EDB4
DBM-EDB5
1-1
2-1
1-2
2-2
1-3
2-3
1-4
2-4
1-5
2-5
1-6
2-6
EDB0*
EDB1*
EDB2*
EDB3*
EDB4*
EDB5*
258
256


FIG.23b

INTERFACE SPCI
ALIM.PRIM.
INT SPCI
(260)
(262)
(263)
(263)
(264)
(265)
(266)
(267)
(268)
(269)
(270)
(271)
(272)
(273)
(274)
ENI
ENØ
SEQUERR
AUXVOL
SYSFLT
FANFLT
CØMREL
DCRES
RELCØN
BLDCØN1
BLDCØN2
SEQCØMP
SEQCØMP
CRERRØR
CRERRØR
Y01-14
Y02-14
Y02-12
Y01-18
Y01-20
Y01-16
Y04-02
Y04-04
Y03-24
Y04-06
Y04-08
Y01-8
Y02-8
Y01-4
Y02-4
OUT07(FIG.15)
(+)
259
294
243
244
(+)OUT(70-75)(FIG.22)
(+)OUT(60-64)(FIG.21)
MSKIT1(FIG.25)
MSKIT2(FIG.25)
REG(00-05)
REG(10-14)
REG 00
REG 01
REG 02
REG 03
REG 04
REG 05
REG10
REG11
REG12
REG13
REG14
REG15
238
239
REST*(FIG.25)
WREG0(FIG.25)
REST*(FIG.25)
WREG1(FIG.25)
258
EDB*(00-05)
vers FIG.24b

FIG.24a

VERS PANNEAU DE SERVICE (11)
(275)
(292)
(293)
Y06-03 PØUT00
Y06-04 PØUT01
Y06-05 PØUT02
Y06-06 PØUT03
Y06-07 PØUT04
Y06-08 PØUT05
Y06-11 PØUT10
Y06-13 PØUT11
Y06-14 PØUT12
Y06-15 PØUT13
Y06-16 PØUT14
Y06-17 PØUT15
Y06-19 PØUT20
Y06-20 PØUT21
Y06-21 PØUT22
Y06-22 PØUT23
Y06-23 PØUT24
Y06-24 PØUT25
Y06-01 PØUT30
245
246
247
251
249
PØUT*00
PØUT*01
PØUT*02
PØUT*03
PØUT*04
PØUT*05
PØUT*10
PØUT*11
PØUT*12
PØUT*13
PØUT*14
PØUT*15
PØUT*20
PØUT*21
PØUT*22
PØUT*23
PØUT*24
PØUT*25
240
241
242
(295)
250
REST*
WREG2 (FIG.25)
REST* (FIG.25)
WREG3 (FIG.25)
REST* (FIG.25)
WREG 3 (FIG.25)
Z02-09 BPC-DTWØ
vers FIG.24a
258
EDB (00-05)

FIG. 24b

ØUT-17 COMREL-10
ØUT-14 CØØLF1-10
ØUT-13 CØØLF2-10
ØUT-12 CØØLF3-10
FIG.16
ØUT-01 PREGUV-10
ØUT-00 PREGOV-10
ØUT-07 ENI-10
ØUT-05 LØGØN-10
ØUT-06 LØGØFF-10
FIG.15
301
302
303
304
305
306
307
308
309
310
311
312
313
314
315
316
317
318
296
297
298
299
300
237
INTR3
REG01
(MSKIT2)
INTR2*
INTR2*
(+) ØUT 21(FIG.17)
INTR5
MCR-INT*
Z02-43
AIMF
CDIMF
REG 00
(MSKIT1)
INTR1*
(+) ØUT 20(FIG.17)
(FIG.24)
Z01-42 PMC-MEMR*
RDCD*
(+)
Z02-13 PMC-ADR09
Z02-14 PMC-ADR10
Z02-03 PMC-ADR15
CS*
LØGØN-10
MØDØN
ØUT16
(+) SYSØN(FIG.16)
LØGØFF-10
MØD ØFF
ØUT15
(+) SYSØFF(FIG.16)
Z01-44 PMC MEMW*
WRAZ1*
WRAZ2*
WREG0*
WREG1*
WREG2*
WREG3*
WREG4*
(+)
PMC-ADR00
ADR00*
PMC-ADR01
ADR01*
PMC-ADR02
ADR02*
Z01-62 PMC-REST
REST*
REST*
(+)(FIG.24)

FIG.25

# FIG. 26

AM904

| REFERENCE PANNEAU SERVICE (11) | | | REFERENCE AM 904 (74) | | | | |
|---|---|---|---|---|---|---|---|
| FONCTION | REF. FIG. 9 | APPELLATION SYSTEME | CONNECT. | BROCHE | APPELLATION INTERNE | NOM | FIGURES |
| **ETATS DES SOUS-SYSTEMES (160)** | | | | | | | |
| VISUALI- SATION | 160-0 | ETAT S/S 0 | YO6 | 15 | POUT 13 | | 14,24 |
| | 160-1 | ETAT S/S 1 | YO6 | 14 | POUT 12 | | |
| | 160-2 | ETAT S/S 2 | YO6 | 13 | POUT 11 | | |
| | 160-3 | ETAT S/S 3 | YO6 | 11 | POUT 10 | | |
| | 160-4 | ETAT S/S 4 | YO6 | 06 | POUT 03 | | |
| | 160-5 | ETAT S/S 5 | YO6 | 05 | POUT 02 | | |
| | 160-6 | ETAT S/S 6 | YO6 | 04 | POUT 01 | | |
| | 160-7 | ETAT S/S 7 | YO6 | 03 | POUT 00 | | |
| **COMMANDE GENERALE (161)** | | | | | | | |
| VOYANT | 161-1 | MONITEUR | YO6 | 01 | POUT 30 | MONITEUR | 14,24 |
| VOYANT | 161-2 | MARCHE | YO6 | 08 | POUT 05 | ØN | |
| VOYANT | 161-3 | ARRET | YO6 | 07 | POUT 04 | ØFF | |
| BOUTON POUSSOIR | 161-4 | MARCHE | YO5 | 03 | PIN 01 | GEN.ØN | 14,19 |
| " " | 161-5 | ARRET | YO5 | 01 | PIN 00 | GEN.ØFF | |
| **COMMANDE DE SOUS-SYSTEMES (162)** | | | | | | | |
| INTERR./ INVER. | 162-0 | KEY 0 | YO5 | 24 | PIN 17 | | |
| " " | 162-1 | KEY 1 | YO5 | 20 | PIN 16 | | 14,20 |
| " " | 162-2 | KEY 2 | YO5 | 18 | PIN 15 | | |
| " " | 162-3 | KEY 3 | YO6 | 18 | PIN 14 | | |
| " " | 162-4 | KEY 4 | YO5 | 11 | PIN 13 | | |
| " " | 162-5 | KEY 5 | YO5 | 07 | PIN 12 | | |
| " " | 162-6 | KEY 6 | YO5 | 21 | PIN 11 | | |
| " " | 162-7 | KEY 7 | YO6 | 22 | PIN 10 | | |

0296

# FIG. 26 (suite)

AM904

| REFERENCE PANNEAU SERVICE (11) | | | REFERENCE AM 904 (74) | | | | |
|---|---|---|---|---|---|---|---|
| FONCTION | REF.FIG.9 | APPELLATION SYSTEME | CONNECT | BROCHE | APPELLATION INTERNE | NOM | FIGURES |
| **OCTETS INTERNES D'ETAT (163)** | | | | | | | |
| VISUA-LISATION | 163-0 | VISU 0 | Y06 | 17 | POUT 15 | | 14,24 |
| " " | 163-1 | VISU 1 | Y06 | 16 | POUT 14 | | |
| " " | 163-2 | VISU 2 | Y06 | 24 | POUT 25 | | |
| " " | 163-3 | VISU 3 | Y06 | 23 | POUT 24 | | |
| " " | 163-4 | VISU 4 | Y06 | 22 | POUT 23 | | |
| " " | 163-5 | VISU 5 | Y06 | 21 | POUT 22 | | |
| " " | 163-6 | VISU 6 | Y06 | 20 | POUT 21 | | |
| " " | 163-7 | VISU 7 | Y06 | 19 | POUT 20 | | |
| BOUTON-POUSSOIR | 163-8 | INITIALISA-TION | Y05 | 05 | PIN 02 | | 14,19 |
| " " | 163-9 | EXPLORATION | Y05 | 19 | PIN 07 | | |
| **MAINTENANCE (164)** | | | | | | | |
| CLEF | 164-0 | KEY/VISU 0 | Y05 | 22 | PIN 37 | | 14,15,17 |
| CLEF | 164-1 | KEY/VISU 1 | Y05 | 17 | PIN 36 | | |
| CLEF | 164-2 | KEY/VISU 2 | Y05 | 16 | PIN 26 | | |
| CLEF | 164-3 | KEY/VISU 3 | Y05 | 13 | PIN 35 | | |
| CLEF | 164-4 | KEY/VISU 4 | Y05 | 08 | PIN 04 | | |
| CLEF | 164-5 | KEY/VISU 5 | Y05 | 06 | PIN 03 | | |
| CLEF | 164-6 | KEY/VISU 6 | Y05 | 04 | PIN 21 | | |
| CLEF | 164-7 | KEY/VISU 7 | Y05 | 02 | PIN 20 | | |
| INTERRUPT /INVERS. | 164-8 | ADRESS/MODE | Y05 | 15 | | | |
| " " | 164-9 | INHIBIT/LOCAL | Y05 | 14 | | | |
| **COMMUTATEUR EXPLOITATION MAINTENANCE (HORS FIGURE)** | | | | | | | |
| INTERRUPT /INVERS. | | MAINT/EXPL. | Y05 | 23 | ØUT 67 | PIN 27 | 14,21 |

# FIG. 27

AM904

| | INTERFACE SPCI | | | REFERENCE AM 904 (74) | | | | |
|---|---|---|---|---|---|---|---|---|
| | FONCTION | REF. FIG. 10/11/13 | APPELLATION SYSTEME | CONNECT. | BROCHE | APPELLATION INTERNE | NOM | FIGURES |
| SPCI-IN | COMMANDE | 74-1 | LØGØFF | Y01 | 2 | LØØFouØUT06 | LØGØFF | |
| | COMPTE-RENDU | ou | CRERRØR | Y01 | 4 | CRER | CRERRØR | |
| | COMMANDE | 179-1 | LØGØN | Y01 | 6 | LØØNouØUT05 | LØGØN | |
| | COMPTE-RENDU | ou | SEQCOMP | Y01 | 8 | SEQC | SEQCØMP | 14 |
| | COMPTE-RENDU | 181-1 | SEQERR | Y01 | 12 | SEQE | SEQUERR | 15,23 |
| | SYNCHRONISATION | ou | ENI | Y01 | 14 | ENAB | ENI | 24 |
| | COMPTE-RENDU | 183-1 | FANFLT | Y01 | 16 | SYCF | FANFLT | |
| | COMPTE-RENDU | ou | AUXVØL | Y01 | 18 | +VAUX | AUXVØL | |
| | COMPTE-RENDU | 185-1 | SYSFLT | Y01 | 20 | SYPF | SYSFLT | |
| | | ou | | | | | | |
| | | 227 | | | | | | |
| SPCI-OUT | COMMANDE | 74-2 | LØGØFF | Y02 | 2 | LØØFouØUT06 | LØGØFF | |
| | COMPTE-RENDU | ou | CRERROR | Y02 | 4 | CRER | CRERROR | |
| | COMMANDE | 179-2 | LØGØN | Y02 | 6 | LØØNouØUT05 | LØGØN | |
| | COMPTE-RENDU | ou | SEQCØMP | Y02 | 8 | SEQC | SEQCØMP | |
| | COMPTE-RENDU | 181-2 | SEQERRØR | Y02 | 12 | SEQE | SEQERRØR | 14,15,23,24 |
| | SYNCHRONISATION | ou | ENØ | Y02 | 14 | ENAB | ENØ | |
| | COMPTE-RENDU | 183-2 | FANFLT | Y02 | 16 | SYCF | FANFLT | |
| | COMPTE-RENDU | ou | AUXVØL | Y02 | 18 | +VAUX | AUXVØL | |
| | COMPTE-RENDU | 185-2 | SYSFLT | Y02 | 20 | SYPF | SYSTFLT | |
| | | ou | | | | | | |
| | | 228 | | | | | | |

FIG.28

| ALIMENT. PRIMAIRE / SERVITUDES | | | REFERENCE AM904 | | | | |
|---|---|---|---|---|---|---|---|
| FONCTION | REF. FIG.13 | APPELLATION SYSTEME | CONNECT. | BROCHE | APPELLATION INTERNE | AUTRES NOMS | FIGURES |
| **ALIMENTATION DE SERVITUDE (222)** | | | | | | | |
| COMPTE-RENDU | 229 | SERVUV | Y03 | 18 | ØUT04 | SERVUV | 15,23 |
| **CONTACTEUR DE MISE SOUS TENSION (223)** | | | | | | | |
| COMPTE-RENDU | 229 | CØMREL | Y03 | 02 | ØUT17 | CØMREL | 15,16 |
| COMMANDE | 229 | RELCØN | Y03 | 24 | REG12 | RELCØN | 23,24 |
| **CONTROLE THERMIQUE (224)** | | | | | | | |
| COMPTE-RENDU | 229 | CØØLF1 | Y03 | 06 | ØUT14 | CØØLF1 | |
| COMPTE-RENDU | 229 | CØØLF2 | Y03 | 08 | ØUT13 | CØØLF2 | 15,16 |
| COMPTE-RENDU | 229 | CØØLF3 | Y03 | 12 | ØUT12 | CØØLF3 | 23,24 |
| **CONTROLE DES BALLASTS (225)** | | | | | | | |
| COMMANDE | 229 | BLDCØN1 | Y04 | 06 | REG13 | BLDCØN1 | 15,16 |
| COMMANDE | 229 | BLDCØN2 | Y04 | 08 | REG14 | BLDCØN2 | 23,24 |
| **ALIMENTATION PRIMAIRE (226) (CONTROLE DE REGULATION ET RAZ)** | | | | | | | |
| COMPTE-RENDU | 230 | DCØN | Y04 | 18 | ØUT03 | DCØN | |
| COMPTE-RENDU | 230 | DCØFF | Y04 | 16 | ØUT02 | DCØFF | |
| COMPTE-RENDU | 230 | PREGUV | Y04 | 14 | ØUT01 | PREGUV | 15,16 |
| COMPTE-RENDU | 230 | PREGØV | Y04 | 12 | ØUT00 | PREGØV | 23,24 |
| COMPTE-RENDU | 230 | DCRES | Y04 | 04 | DCRES | DCRES | |

FIG.29

AM904

| REFERENCE AM903 | | | REFERENCE AM 904 | | | | |
|---|---|---|---|---|---|---|---|
| FONCTION | APPELLATION | POSITION AM 903 | CONNECT. | BROCHE | APPELLATION INTERNE | NOM | FIGURES |
| C-R | GFLT 12 | OA | Z01 | 26 | BPC-IN 07 | GFLT | 14,17,18, 23 |
| C-R | GFLT 11 | | Z01 | 25 | BPC-IN 17 | GFLT | |
| C-R | GFLT 10 | OB | Z01 | 28 | BPC-IN 06 | GFLT | |
| C-R | GFLT 09 | | Z01 | 27 | BPC-IN 16 | GFLT | |
| C-R | GFLT 08 | 9A | Z01 | 40 | BPC-IN 05 | GFLT | |
| C-R | GFLT 07 | | Z01 | 39 | BPC-IN 15 | GFLT | |
| C-R | GFLT 06 | 9B | Z01 | 38 | BPC-IN 04 | GFLT | |
| C-R | GFLT 05 | | Z01 | 37 | BPC-IN 14 | GFLT | |
| C-R | GFLT 04 | 8A | Z01 | 36 | BPC-IN 03 | GFLT | |
| C-R | GFLT 03 | | Z01 | 35 | BPC-IN 13 | GFLT | |
| C-R | GFLT 02 | 8B | Z01 | 32 | BPC-IN 02 | GFLT | |
| C-R | GFLT 01 | | Z01 | 31 | BPC-IN 12 | GFLT | |
| C-R | GFLT 14 | | Z01 | 66 | BPC-IN 10 | GFLT | |
| C-R | GFLT 13 | | Z01 | 64 | BPC-IN 11 | GFLT | |

# FIG.30

## CONNEXION DU MODULE D'INTERFACE D'EXPLOITATION AM 904 (74) AVEC L'OMNIBUS DE PILOTAGE (12)

CONNECTEUR Z01

| Broche | Signal | Signal | Broche | Signal | Signal |
|---|---|---|---|---|---|
| Z01 - 1 | | | Z01 - 36 | BPCIN03 | GFLT04 |
| 2 | | | 37 | BPCIN14 | GFLT05 |
| 3 | | | 38 | BPCIN04 | GFLT06 |
| 4 | | | 39 | BPCIN15 | GFLT07 |
| 5 | | | 40 | BPCIN05 | GFLT08 |
| 6 | | | 41 | | |
| 7 | | | 42 | PMC | MEMR |
| 8 | | | 43 | | |
| 9 | | | 44 | PMC | MEMW |
| 10 | | | 45 | ØUT05 | LØGØN-10 |
| 11 | | | 46 | ØUT15 | SYSTØFF |
| 12 | | | 47 | | |
| 13 | | | 48 | | |
| 14 | | | 49 | DBM | EDB7 |
| 15 | ØUT14 | CØØLF1 | 50 | DBM | EDB6 |
| 16 | BPCØUT4* | | 51 | | |
| 17 | ØUT06 | LØGØFF10 | 52 | | |
| 18 | ØUT16 | SYSTØN | 53 | DBM | EDB5 |
| 19 | | | 54 | DBM | EDB4 |
| 20 | | | 55 | DBM | EDB3 |
| 21 | ØUT17 | CØMREL | 56 | DBM | EDB2 |
| 22 | ØUT07 | EN1 | 57 | DBM | EDB1 |
| 23 | | | 58 | DBM | EDB0 |
| 24 | | | 59 | | |
| 25 | BPCIN17 | GFLT11 | 60 | | |
| 26 | BPCIN07 | GFLT12 | 61 | ØUT03 | DCØN |
| 27 | BPCIN16 | GFLT09 | 62 | PMC-REST | |
| 28 | BPCIN06 | GFLT10 | 63 | ØUT01 | PREGUV-10 |
| 29 | | | 64 | BPCIN11 | GFLT13 |
| 30 | | | 65 | ØUT02 | DCØFF |
| 31 | BPCIN12 | GFLT01 | 66 | BPCIN10 | GFLT14 |
| 32 | BPCIN02 | GFLT02 | 67 | ØUT12 | CØØLF3 |
| 33 | | | 68 | ØUT13 | CØØLF2 |
| 34 | | | 69 | | |
| 35 | BPCIN13 | GFLT03 | 70 | | |

# FIG.31

## CONNEXION DU MODULE D'INTERFACE D'EXPLOITATION AM 904 (74) AVEC L'OMNIBUS DE PILOTAGE (12)

CONNECTEUR ZO2

| Broche | Signaux | | Broche | Signaux | |
|---|---|---|---|---|---|
| ZO2 - 1 | | | ZO2 - 34 | REG13 | BLDCØN1 |
| 2 | | | 35 | | |
| 3 | PMC ADR15 | | 36 | | |
| 4 | ØUTOO | PREGØV-10 | 37 | | |
| 5 | BPCOU26 | KEY/VISU2* ØUT66* | 38 | REG14 | BLDCØN2 |
| 6 | BPCOU27 | MAINT/EXPL ØUT67 | 39 | | |
| 7 | | | 40 | | |
| 8 | | | 41 | | |
| 9 | BPC | DTWO | 42 | | |
| 10 | | | 43 | MCR | INT* |
| 11 | | | 44 | | |
| 12 | | | 45 | | |
| 13 | PMC ADRO9 | | 46 | | |
| 14 | PMC ADR10 | | 47 | | |
| 15 | | | 48 | | |
| 16 | | | 49 | | |
| 17 | | | 50 | | |
| 18 | PMC ADRO2 | | 51 | DBM-EDB5 | |
| 19 | | | 52 | DBM-EDB4 | |
| 20 | | | 53 | DBM-EDB3 | |
| 21 | PMC ADRO1 | | 54 | DBM-EDB2 | |
| 22 | PMC ADROO | | 55 | DBM-EDB1 | |
| 23 | | | 56 | DBM-EDBO | |
| 24 | | | 57 | | |
| 25 | REGO3 | SEQUERR | 58 | | |
| 26 | REGO2 | ENØ | 59 | | |
| 27 | REGO5 | FANFLT | 60 | | |
| 28 | REGO4 | SYSFLT | 61 | | |
| 29 | | | 62 | | |
| 30 | REG12 | RELCØN | 63 | | |
| 31 | REG11 | DCRES | 64 | | |
| 32 | REG10 | ØNØFF | 65 | | |
| 33 | | | 66 | | |
| | | | 67 | | |
| | | | 68 | | |
| | | | 69 | | |
| | | | 70 | | |

INTERFACE LSSCI/VREF
INTERFACE LSSCI/VREF
52
AM 908
53
AM 908
54
AM 908
55
AM 908
153
154
77
78
79
80
ISM1
ISM 2
ISM1
ISM2
Y01
Y 02
Y03
Y04
Y05
Y06
51
51 - 1
1/2 AM 903
51 - 2
1/2 AM 903
Z01
Z02
12

FIG. 32

FIG.33a
FIG.33b
(Z01) DBM-EDB(00-07)
(+)EA*(00,01,08)
358
351
352
353
354
355
356
359
Y01 DIN*(10-17)
Y02 CIN*(20-27)
Y03 DIN*(30-37)
(+) REG.ET. (12-17)
(+) REG.ET (22-27)
(+) REG.ET. (32-37)
350
357
vers fig. 33b
366
RDEN*
WMPI*(01-03)
GD0,GD1,DDW0,DDW1
REST*
DDR(01-03)
EA*(00,01,08)
Z01
PMC-MEMR*
PMC-MEMW*
PMC-ADR(00,01,08,15)
SEL0,SEL1
GD0,GD1
DDW0,DDW1
PMC-REST

FIG. 33a

ISM 1 (Y01)
(ØUT 11-17)
ISM 2 (Y02)
(ØUT 21-27)
LSSCI (Y03)
[(ØUT 31-37)+CHLC K-ØUT]
CHLCK-IN
INTR *
PMW-INTR *
GFCT
PMVFLT
DDR (01-03)
ELØG 1
Z01
363
364
365
367
360
361
361
REG.ET.(12-17)(+)
REG.ET.(22-27)(+)
REG.ET.(32-37)(+)
WPMI*01
WPMI*02
WPMI*03
REG.ET.(12,13,22,23,33)
DDR (01-03)
REST*
EDB*(00-07)
vers fig. 33a
FIG.33a
FIG.33b

FIG. 33b

350
ISM1
Y01
(24) DIN*10
(22) DIN*11
(20) DIN*12
(19) DIN*13
(18) DIN*14
(16) DIN*15
(14) DIN*16
(13) DIN*17
1-1 7-1 351-1
1-2 7-2 351-2
1-3 7-3 351-3
1-4 7-4 351-4
1-5 7-5 351-5
1-6 7-6 351-6
1-7 7-7 351-7
1-8 7-8 351-8
368
DDR1 (+)
ISM 2
Y02
(24) DIN*20
(22) DIN*21
(20) DIN*22
(19) DIN*23
(18) DIN*24
(16) DIN*25
(14) DIN*26
(13) DIN*27
2-1 8-1 352-1
2-2 8-2 352-2
2-3 8-3 352-3
2-4 8-4 352-4
2-5 8-5 352-5
2-6 8-6 352-6
2-7 8-7 352-7
2-8 8-8 352-8
369
DDR2 (+)
vers fig.34b
LSSC1
Y03
(24) DIN*34
(22) DIN*35
(19) DIN*36
(13) DIN*37
3-5 9-5 353-5
3-6 9-6 353-6
3-7 9-7 353-7
3-8 9-8 353-8
370
DDR3 (+)
(+) REG.ET.12
(+) REG.ET.13
(+) REG.ET.14
(+) REG.ET.15
(+) REG.ET.16
(+) REG.ET.17
4-3 10-3 354-3
4-4 10-4 354-4
4-5 10-5 354-5
4-6 10-6 354-6
4-7 10-7 354-7
4-8 10-8 354-8
(+) REG.ET.22
(+) REG.ET.23
(+) REG.ET.24
(+) REG.ET.25
(+) REG.ET.26
(+) REG.ET.27
5-3 11-3 355-3
5-4 11-4 355-4
5-5 11-5 355-5
5-6 11-6 355-6
5-7 11-7 355-7
5-8 11-8 355-8
(+) REG.ET.32
(+) REG.ET.33
(+) REG.ET.34
(+) REG.ET.35
(+) REG.ET.36
(+) REG.ET.37
6-3 12-3 356-3
6-4 12-4 356-4
6-5 12-5 356-5
6-6 12-6 356-6
6-7 12-7 356-7
6-8 12-8 356-8

FIG. 34a

EA*00,EA*01,EA*08
7
358
1-1
1-2
1-3
1-4
1-5
1-6
1-7
1-8
2-1
2-2
2-3
2-4
2-5
2-6
2-7
2-8
OLØG
3-2
3-3
3-4
3-5
3-6
3-7
3-8
4-3
4-4
4-5
4-6
4-7
4-8
5-3
5-4
5-5
5-6
5-7
5-8
6-3
6-4
6-5
6-6
6-7
6-8
8
RDEN *
EDB (00-07)
Z01 [DBM-EDB(00-07)]
9-1 EDB00
9-2 EDB01
9-3 EDB02
9-4 EDB03
9-5 EDB04
9-6 EDB05
9-7 EDB06
9-8 EDB07
359
1-2
373
2-2
EDB*02
1-3
374
2-3
EDB*03
1-4
375
2-4
EDB*04
1-5
376
2-5
EDB*05
1-6
377
2-6
EDB*06
1-7
2-7
EDB*07
378


FIG. 34b

363
REST *
360
(+) DDWO
(+) GD0
(+) GD1
REG.ET. 12
REG.ET. 13
REG.ET. 14
REG.ET. 15
REG.ET. 16
REG.ET. 17
MSKIT1(+)
3
2-2
2-3
2-4
2-5
2-6
2-7
1
4
WPMI*01
380
381
382
383
REG.ET.15
DDW1
384
385
386
387
ØUT11 Y01-01 RESET INHIBIT
ØUT12 Y01-04 GD0
ØUT13 Y01-02 GD1
ØUT14 Y01-06 DC RESET
ØUT15 Y01-12 POWER-LOCK
ØUT16 Y01-08 DCØNCD2
ØUT17 Y01-07 DCØNCD1
ISM 1
REG.ET.(12-17)
(+)
364
REST *
361
(+) DDWO
(+) GD0
(+) GD1
REG.ET. 22
REG.ET. 23
REG.ET. 24
REG.ET. 25
REG.ET. 26
REG.ET. 27
MSKIT2(+)
WPMI*02
388
389
390
391
REG.ET. 25
DDW1
392
393
394
395
ØUT21 Y02-01 RESET INHIBIT
ØUT22 Y02-04 GD0
ØUT23 Y02-02 GD1
ØUT24 Y02-06 DC RESET
ØUT25 Y02-12 POWER LOCK
ØUT26 Y02-08 DCØNCD2
ØUT27 Y02-07 DCØNCD1
ISM 2
REG.ET.(22-27)
(+)
EDB*(02-07)
vers fig.35b

FIG. 35a

LSSCI
ØUT 31 Y03-01 RESET INHIBIT
ØUT 32 Y03-07 DCØNCD
ØUT 33-1 Y03-16 CHLCK-ØUT 01
ØUT 33-2 Y03-18 CHLCK-ØUT 02
ØUT 33-3 Y03-20 CHLCK-ØUT 03
ØUT35 Y03-12 WARNING
ØUT36 Y03-14 PWRS
ØUT37 Y03-06 DC RESET
396
397
398
399
400
401
402
CHLCK-IN (Z01)
(+)
REG.ET.(32-37)
365
MSKI T3(+)
(+) DDWO
REG.ET. 32
REG.ET. 33
REG.ET. 34
REG.ET. 35
REG.ET. 36
REG.ET. 37
2-2
2-3
2-4
2-5
2-6
2-7
3
4
1
REST*
362
WPMI*03
vers fig. 35a

FIG. 35b

DDR (1,2,3)
Z01-(37,39,41)
367
DIN 17 (+) DDR1
MSKIT1 (+) REG13
DIN 27 (+) DDR2
MSKIT2 (+) REG 23
DIN37 (+) DDR3
MSKIT3 (+) REG33
ATITS (+) REG12
ATITR (+) REG22
410
411
412
413
414
415
416
417
418
MDR1 *
MDR2 *
MDR3 *
INTR * Z01-43 BPC-INTR4 *
GFLT Z01-33 BPC-IN 0X
PMV-INT* Z01-22 BPC-INTR5 *
PMV-FLT Z01-21
PMC-GD0
PMC-GD1
BPC-DDW0 (GD3)
BPC-DDW1 (GD2)
420
421
422
423
424
425
426
427
419
0LØG
ELØG1
GD0 (+)
GD1 (+)
DDW0 (+) RESET - INHIBIT
DDW1 (+) POWER - LØCK
PMC-ELØG1 Z01-27
PMC-MEMR *
PMC-MEMW *
RDEN
428
429
RDEN * (+)
SEL0
SEL1
430
CS *
1
7
4
5
6
2
3
436
WPIM 01 (+)
WPIM 02 (+)
WPIM 03 (+)
PMC-ADR 00
PMC-ADR 01
PMC-ADR 08
PMC-ADR 15
431
432
433
434
EA * 00
EA * 01
EA * 08
EA * 15
336
PMC-REST
435
REST * (+)
EA * (00,01,08,15)
(+)
FIG. 36

| | REFERENCES LOGIQUES | | LIAISON 77 FIGURE 13 | | | LIAISON 79 FIGURE 13 | | |
|---|---|---|---|---|---|---|---|---|
| | | | REFERENCES 1/2 AM 903 (51-1) | | | REFERENCES 1/2 AM 903 (51-2) | | |
| | | | CONNECT | BROCHE | FIGURES | CONNECT | BROCHE | FIGURE |
| ISM1-IN | DIN 10 | STATUS≠7 | Y01 | 24 | 33 34 | Y04 | 24 | |
| | DIN 11 | STATUS≠6 | | 22 | | | 22 | |
| | DIN 12 | STATUS≠5 | | 20 | | | 20 | |
| | DIN 13 | STATUS≠4 | | 19 | | | 19 | |
| | DIN 14 | STATUS≠3 | | 18 | | | 18 | |
| | DIN 15 | STATUS≠2 | | 16 | | | 16 | |
| | DIN 16 | STATUS≠1 | | 14 | | | 14 | |
| | DIN 17 | DEFC | | 13 | | | 13 | |
| ISM1-ØUT | ØUT 11 | RESET-INHIBIT (INRZ) | Y01 | 01 | 33 35 | Y04 | 01 | |
| | ØUT 12 | GD0 (ADRE 2) | | 04 | | | 04 | |
| | ØUT 13 | GD1 (ADRE 1) | | 02 | | | 02 | |
| | ØUT 14 | DC RESET (RZCP) | | 06 | | | 06 | |
| | ØUT 15 | POWER LOCK (INVA) | | 12 | | | 12 | |
| | ØUT 16 | DCØNCD1 (CDMA2) | | 08 | | | 08 | |
| | ØUT 17 | DCØNCD2 (CDMA1) | | 07 | | | 07 | |

FIG. 37

| | REFERENCES LOGIQUES | | LIAISON 78 FIGURE 13 | | | LIAISON 80 FIGURE 13 | | |
|---|---|---|---|---|---|---|---|---|
| | | | REFERENCES 1/2 AM903(51-1) | | | REFERENCES 1/2 AM903(51-2) | | |
| | | | CONNECT | BROCHE | FIGURES | CONNECT | BROCHE | FIGURE |
| ISM2-IN | DIN 20 | STATUS≠7 | Y02 | 24 | | Y05 | 24 | / |
| | DIN 21 | STATUS≠6 | | 22 | | | 22 | |
| | DIN 22 | STATUS≠5 | | 20 | 33 | | 20 | |
| | DIN 23 | STATUS≠4 | | 19 | 34 | | 19 | |
| | DIN 24 | STATUS≠3 | | 18 | | | 18 | |
| | DIN 25 | STATUS≠2 | | 16 | | | 16 | |
| | DIN 26 | STATUS≠1 | | 14 | | | 14 | |
| | DIN 27 | DEFC | | 13 | | | 13 | |
| ISM2-OUT | ØUT 21 | RESET-INHIBIT(INRZ) | Y02 | 01 | 33 | Y05 | 01 | / |
| | ØUT 22 | GD0 (ADRE2) | | 04 | 35 | | 04 | |
| | ØUT 23 | GD1 (ADRE1) | | 02 | | | 02 | |
| | ØUT 24 | DC RESET (RZCP) | | 06 | | | 06 | |
| | ØUT 25 | POWER LOCK(INVA) | | 12 | | | 12 | |
| | ØUT 26 | DCØN CD1 (CDMA2) | | 08 | | | 08 | |
| | ØUT 27 | DCØN CD2 (CDMA1) | | 07 | | | 07 | |

FIG.38

AM 903 - INTERFACE LSSCI

| | REFERENCES LOGIQUES | | LIAISON 153 FIGURE 13 REFERENCES 1/2 AM 903 (51-1) | | | LIAISON 154 FIGURE 13 REFERENCES 1/2 AM 903 (51-2) | | |
|---|---|---|---|---|---|---|---|---|
| | | | CONNECT | BROCHE | FIGURES | CONNECT | BROCHE | FIGURE |
| LSSCI-IN | DIN 34 | STAT * 04 | Y03 | 24 | | Y06 | 24 | |
| | DIN 35 | STAT * 03 | | 22 | 33 | | 22 | |
| | DIN 36 | STAT * 02 | | 19 | 34 | | 19 | |
| | DIN 37 | STAT * 01 | | 13 | | | 13 | |
| LSSCI-ØUT | ØUT 31 | DESET INHIBIT (INRZ) | Y03 | 01 | | Y06 | 01 | |
| | ØUT 32 | DCØNCD (CMDA) | | 07 | 33 | | 07 | |
| | ØUT 33-1 | CHLCK ØUT 01 (CLCK) | | 16 | 35 | | 16 | |
| | ØUT 33-2 | CHLCK ØUT 02 (CLCK) | | 18 | | | 18 | |
| | ØUT 33-3 | CHLCK ØUT 03 (CLCK) | | 20 | | | 20 | |
| | ØUT 35 | WARNING (ETNA) | | 12 | | | 12 | |
| | ØUT 36 | PWRS | | 14 | | | 14 | |
| | ØUT 37 | DC RESET (CDRZ) | | 06 | | | 06 | |

FIG.39

CONNEXION DU MODULE D'INTERFACE AVAL AM903 AVEC L'OMNIBUS DE PILOTAGE (12)

CONNECTEUR Z01

| BROCHE N° | | BROCHE N° | |
|---|---|---|---|
| 1 | | 36 | |
| 2 | | 37 | DDR 1 |
| 3 | PMC ADR 15 | 38 | |
| 4 | | 39 | DDR 2 |
| 5 | | 40 | |
| 6 | | 41 | DDR 3 |
| 7 | SEL 0 | 42 | PMC MEMR* |
| 8 | | 43 | BPC INTR 4* |
| 9 | SEL 1 | 44 | PMC MEMW* |
| 10 | PMC-ADR 08 | 45 | |
| 11 | | 46 | |
| 12 | | 47 | |
| 13 | | 48 | |
| 14 | | 49 | DBM-EDB7 |
| 15 | | 50 | DBM-EDB6 |
| 16 | | 51 | DBM-EDB5 |
| 17 | | 52 | DBM-EDB4 |
| 18 | | 53 | DBM-EDB3 |
| 19 | PMC-ADR 01 | 54 | DBM-EDB2 |
| 20 | PMC-ADR 00 | 55 | DBM-EDB0 |
| 21 | PMV-FLT | 56 | |
| 22 | BPC-INTR 5*(PMV INT*) | 57 | |
| 23 | | 58 | PMC-REST |
| 24 | | 59 | |
| 25 | BPC- DDW 0 | 60 | |
| 26 | BPC - DDW 1 | 61 | |
| 27 | ELOG1 | 62 | |
| 28 | | 63 | |
| 29 | | 64 | |
| 30 | | 65 | PMC-GD0 |
| 31 | | 66 | PMC-GD1 |
| 32 | | 67 | |
| 33 | BPC-IN + | 68 | CHLCK-IN |
| 34 | | 69 | |
| 35 | | 70 | |

FIG. 40

CONNEXION DU MODULE D'INTERFACE AVAL AM903 AVEC L'OMNIBUS DE PILOTAGE (12)

CONNECTEUR Z02

| BROCHE N° | | BROCHE N° | |
|---|---|---|---|
| 1 | | 36 | |
| 2 | | 37 | DDR1 |
| 3 | PMC-ADR 15 | 38 | |
| 4 | | 39 | DDR2 |
| 5 | | 40 | |
| 6 | | 41 | DDR3 |
| 7 | SEL0 | 42 | PMC MEMR* |
| 8 | | 43 | BPC INTR 4* |
| 9 | SEL1 | 44 | PMC MEMW * |
| 10 | PMC-ADR 08 | 45 | |
| 11 | | 46 | |
| 12 | | 47 | |
| 13 | | 48 | |
| 14 | | 49 | DBM-EDB7 |
| 15 | | 50 | DBM-EDB6 |
| 16 | | 51 | DBM-EDB5 |
| 17 | | 52 | DBM-EDB4 |
| 18 | | 53 | DBM-EDB3 |
| 19 | PMC-ADR 01 | 54 | DBM-EDB2 |
| 20 | PMC-ADR 00 | 55 | DBM-EDB0 |
| 21 | PMC-FLT | 56 | |
| 22 | BPC-INTR 5*(PMV INT*) | 57 | |
| 23 | | 58 | PMC-REST |
| 24 | | 59 | |
| 25 | BPC-DDW 0 | 60 | |
| 26 | BPC-DDW 1 | 61 | |
| 27 | -ELOG1 | 62 | |
| 28 | | 63 | |
| 29 | | 64 | |
| 30 | | 65 | PMC-GD0 |
| 31 | | 66 | PMC-GD1 |
| 32 | | 67 | |
| 33 | BPC-IN ×× | 68 | CHLCK-IN |
| 34 | | 69 | |
| 35 | | 70 | |

FIG. 41

RANG DU BIT →

| ADRESSE GD0 | GD1 | 7 | 6 | 5 | 4 | 3 | 2 | 1 | 0 |
|---|---|---|---|---|---|---|---|---|---|
| **SOURCE D'ENERGIE UNIQUE MONOTENSION (INTERFACE ISM)** | | | | | | | | | |
| X | X | DCFLT * | BF * | ØT * | RET. DCØNCD | ØC * | ØV * | DCØN INFØ | DCØFF INFØ |
| **SOURCE D'ENERGIE QUADRUPLE MONOTENSION (INTERFACE ISM)** | | | | | | | | | |
| 0 | 0 | DCFLT * | BF1 * | ØT1 * | UC1 * | ØC * | ØV * | DCØN INFØ | DCØFF INFØ |
| 0 | 1 | DCFLT * | BF2 * | ØT2 * | UC2 * | RET. DCØNCD | ØV * | DCØN INFØ | DCØFF INFØ |
| 1 | 0 | DCFLT * | BF3 * | ØT3 * | UC3 * | PØWER LØCK | ØV * | DCØN INFØ | DCØFF INFØ |
| 1 | 1 | DCFLT * | BF4 * | ØT4 * | UC4 * | RET. RESET | ØV * | DCØN INFØ | DCØFF INFØ |
| **SOURCE D'ENERGIE BITENSION (H+, H-) (INTERFACE ISM)** | | | | | | | | | |
| 0 | 0 | DCFLT * | H+DCØFF INFØ | H+ BF * | H + ØV * | RS DCØN INFØ | ØT * | H+DCØN INFØ | H-DCØN INFØ |
| 0 | 1 | DCFLT * | RET. H+ DCØNCD | RET. DC RESET | RET.PØWER LØCK | RS DCØN INFØ | RET.RS DCØNCD | H+DCØN INFØ | H-DCØN INFØ |
| 1 | 0 | DCFLT * | H-DCØFF INFØ | H- BF * | H- ØV * | RS DCØN INFØ | RET.H- DCØNCD | H+DCØN INFØ | H-DCØN INFØ |
| 1 | 1 | | | | | | | | |
| **SOURCE DE REFERENCE VREF (INTERFACE LSSCI)** | | | | | | | | | |
| | | ØV * | UV * | UL * | ØT * | — | — | — | — |

FIG. 42

DEFINITION DES SIGNAUX SPECIFIQUES A CHACUN DES MODULES D'INTERFACE AVAL AM903

| POSITION DANS LE RATELIER | 7 | | 8 | | 9 | | 10 | |
|---|---|---|---|---|---|---|---|---|
| REFERENCE FIGURE 2 | 51-1 | 51-2 | 56-1 | 56-2 | 61-1 | 61-2 | 66-1 | 66-2 |
| Z01/Z02-30 - GFLT | BPC IN 11 | BPC IN 10 | BPC IN 03 | BPC IN 02 | BPC IN 05 | BPC IN 04 | BPC IN 07 | BPC IN 06 |
| Z01/Z02-07 - SELO | PMCADR-03 | PMCADR-03 | PMCADR-02 | PMCADR-03 | PMCADR-02 | PMCADR-02 | PMCADR-02 | PMCADR-02 |
| Z01/Z02-09 - SELO | PMCADR-05 | PMCADR-06 | PMCADR-07 | PMCADR-04 | PMCADR-05 | PMCADR-06 | PMCADR-03 | PMCADR-04 |

FIG.43

PMC-GD
PMC-ADR
DATA-OUT
DATA IN
450
451
452
453
454
455
456
457
458
459
460
461
462
463
464
465
466
467
468
470
471
472
473

FIG. 44

480
482
PMC $CLK 20
PMC-CLK 2
SCLK
(37)
483
HLDA-20
HLDA
(38)
484
HLDAM
PMCREST*10
BPC.REST-IN*
495
REST-IN-10
(36) RESET IN
REST
(3)
485
(+)
PMC MEMW
WR*
(31)
CSIØ
(34)
RD*
(32)
ECIO
486
PMC MEMR
(+) PMC-TOUT 1
496
INTR6
TRAP (6)
INTR0
(+)PMC-TOUT 2
497
INTR4
BPC-INTR4*IT SOURCES
BPC-INTR5*IT VREF
INTR5.5(9)
INTR6.5(8)
INTR7.5(7)
498
499
INTR3
INTA*
(11)
DBS 0
(29)
DBS 1
(33)
487
488
489
INTA
DBS0*10
DBS1*10
464
(22-28)
INTERNALE ADDRESS-I.A.(08-15)
451
ALE
(30)
490
453
(12-19)
INTERNALE ADDRESS-I.A(00-07)
INTERNAL DATA BUS-IDB(00-07)
491
INTR6*10
PMC REST*20
490


FIG.45

(+) WR*
(+)HLDA 20
(+)RD*
(+)INTA*10
(+)HLDA*10
492
493
494
EDB ØUT* (+)
(+)HLDA 20
459
PMC ADR (00-15)
(+) INTA*
(+) RD*
455
CSEPR* (00-03)
CSPRK* (00-07)
CSGD*
CSTIMR*
CSEDB
CSRAM
IA (08-15)
IA(00-07)
467
IA(00-15)
(IA 08, IA 09)
(+)WR*
(+)RD*
(+)PMC CLK 2
IDB(00-07)
PMC TØUT 1 (IT TRAP) (+)
PMC TØUT 2 (IT TIME BASE) (+)
457

FIG. 46

IDB (00-07)
(+) RD*
(+) CSEPR* (00-03)
500
458
(+) WR*
(+) CSGD
469
PMC-GD (00-03)
IDB (00-07)
503
(+) CSRAM*
(+) RD*
(+) RD*
(+)CSPRK*(00-07)
501
460
472
DBM EDB(00-07)
IA (00-15)
DTR(00-07)
(+)EDBØUT*
(+)HLDA*10
(+)CSEDB
EDBEN*10
504
(+) WR*
(+) CSRAM*
502
DTR(00-07)
DTW (00-07)


FIG. 47

CONNEXION DU MODULE (75°) DE PILOTAGE AM902B AVEC L'OMNIBUS DE PILOTAGE(12)

CONNECTEUR Z01

| BROCHE N° | | BROCHE N° | |
|---|---|---|---|
| 1 | | 36 | |
| 2 | | 37 | |
| 3 | PMC-ADR 15 | 38 | |
| 4 | PMC-ADR 14 | 39 | |
| 5 | PMC-ADR 13 | 40 | |
| 6 | PMC-ADR 12 | 41 | |
| 7 | PMC-ADR 11 | 42 | PMC MEM R* |
| 8 | PMC-ADR 10 | 43 | |
| 9 | PMC-ADR 09 | 44 | PMC MEM W* |
| 10 | PMC-ADR 08 | 45 | |
| 11 | | 46 | |
| 12 | | 47 | |
| 13 | PMC-ADR 07 | 48 | |
| 14 | PMC-ADR 06 | 49 | |
| 15 | PMC-ADR 05 | 50 | |
| 16 | PMC-ADR 06 | 51 | |
| 17 | PMC-ADR 03 | 52 | |
| 18 | PMC-ADR 02 | 53 | |
| 19 | PMC-ADR 01 | 54 | |
| 20 | PMC-ADR 00 | 55 | |
| 21 | | 56 | |
| 22 | | 57 | |
| 23 | | 58 | PMC-REST 20 |
| 24 | | 59 | |
| 25 | | 60 | |
| 26 | | 61 | BPC-RZ* |
| 27 | | 62 | |
| 28 | | 63 | |
| 29 | | 64 | |
| 30 | | 65 | BPC-INTR IN(BPC-REST-IN) |
| 31 | | 66 | PMC-$ CLK2 |
| 32 | | 67 | |
| 33 | | 68 | |
| 34 | | 69 | |
| 35 | | 70 | |

FIG.48

CONNEXION DU MODULE (75) DE PILOTAGE AM902 B AVEC LOMNIBUS DE PILOTAGE (12)

CONNECTEUR Z02

| BROCHE N° | | BROCHE N° | |
|---|---|---|---|
| 1 | | 36 | |
| 2 | | 37 | |
| 3 | PMC-ELOG 1 | 38 | BPC INTRO*(IT BASE TEMPS |
| 4 | | 39 | (1) |
| 5 | | 40 | |
| 6 | | 41 | |
| 7 | | 42 | |
| 8 | | 43 | BPC INTR 4*IT SOURCES+RC |
| 9 | | 44 | BPC INTR 5*IT VREF |
| 10 | BPC $ CLK2 | 45 | BPC INTR6*(PMC TOUT1) |
| 11 | | 46 | |
| 12 | | 47 | |
| 13 | | 48 | |
| 14 | | 49 | DBM EDB7 |
| 15 | PMC-WR * | 50 | DBM EDB6 |
| 16 | | 51 | DBM EDB5 |
| 17 | | 52 | DBM EDB4 |
| 18 | | 53 | DBM EDB3 |
| 19 | | 54 | DBM EDB2 |
| 20 | | 55 | DBM EDB1 |
| 21 | PMC-RD* | 56 | DBM EDB0 |
| 22 | | 57 | |
| 23 | | 58 | |
| 24 | | 59 | |
| 25 | | 60 | |
| 26 | | 61 | |
| 27 | | 62 | |
| 28 | | 63 | |
| 29 | | 64 | |
| 30 | | 65 | PMC-GD0 (ADRE 2) |
| 31 | EDB OUT | 66 | PMC-GD1 (ADRE1) |
| 32 | | 67 | PMC-GD2 (BPC DDW1)(2) |
| 33 | EDB EN | 68 | PMC-GD3 (BPC DDW0)(3) |
| 34 | | 69 | |
| 35 | SELRP * 10 | 70 | |

(1) BPC INTR*=IT BASE DE TEMPS=PMC TOUT 2
(2) PMC GD2 =BPC DDW1= POWER LOCK
(3) PMC GD3 =BPC DDW0= RESET INHIBIT

FIG. 49

512
EDB(00 03)
2
3
4
1
510
511
PMC ADR 14
PMC ADR15
PMC ADR(00 09)
MEMR*

FIG.50

CONNEXION DU MODULE (76) DE CONFIGURATION AM927 AVEC L'OMNIBUS DE PILOTAGE (12)

CONNECTEUR Z02

| BROCHE N° | | BROCHE N° | |
|---|---|---|---|
| 1 | | 36 | |
| 2 | | 37 | PMC ADR 15 |
| 3 | | 38 | |
| 4 | | 39 | |
| 5 | | 40 | |
| 6 | | 41 | |
| 7 | | 42 | |
| 8 | | 43 | MEMR * |
| 9 | | 44 | |
| 10 | | 45 | |
| 11 | | 46 | |
| 12 | | 47 | |
| 13 | | 48 | |
| 14 | | 49 | |
| 15 | PMC ADR 00 | 50 | |
| 16 | PMC ADR 01 | 51 | |
| 17 | | 52 | |
| 18 | PMC ADR 03 | 53 | DBM EDB 03 |
| 19 | PMC ADR 04 | 54 | DBM EDB 02 |
| 20 | PMC ADR 05 | 55 | DBM EDB 01 |
| 21 | | 56 | DBM EDB 00 |
| 22 | PMC ADR 07 | 57 | |
| 23 | | 58 | |
| 24 | | 59 | |
| 25 | | 60 | |
| 26 | | 61 | |
| 27 | | 62 | |
| 28 | | 63 | |
| 29 | | 64 | |
| 30 | | 65 | |
| 31 | PMC ADR 08 | 66 | |
| 32 | | 67 | |
| 33 | PMC ADR 09 | 68 | |
| 34 | | 69 | |
| 35 | PMC ADR 14 | 70 | |

FIG. 51

| NOM DES MODULES | AM 902 | | AM 903A | | AM 903B | | AM903C | | AM 903D | | AM 904 | | AM 927 | |
|---|---|---|---|---|---|---|---|---|---|---|---|---|---|---|
| REFERENCE FIG.2 | 75 | | 51 | | 56 | | 61 | | 66 | | 74 | | 76 | |
| EMPLACEMENT | 14 | | 7 | | 8 | | 9 | | 10 | | 16 | | 13 | |
| CONNECTEURS | Z01 | Z02 | Z01 | Z02 | Z01 | Z02 | Z01 | Z02 | Z01 | Z02 | Z01 | Z02 | Z01 | Z02 |
| DBM EDB 07 | | 49 | 49 | 49 | 49 | 49 | 49 | 49 | 49 | 49 | 49 | 49 | | |
| DBM EDB 06 | | 50 | 50 | 50 | 50 | 50 | 50 | 50 | 50 | 50 | 50 | 50 | | |
| DBM EDB 05 | | 51 | 51 | 51 | 51 | 51 | 51 | 51 | 51 | 51 | 53 | 51 | | |
| DBM EDB 04 | | 52 | 52 | 52 | 52 | 52 | 52 | 52 | 52 | 52 | 54 | 52 | | |
| DBM EDB 03 | | 53 | 53 | 53 | 53 | 53 | 53 | 53 | 53 | 53 | 55 | 53 | | 53 |
| DBM EDB 02 | | 54 | 54 | 54 | 54 | 54 | 54 | 54 | 54 | 54 | 56 | 54 | | 54 |
| DBM EDB 01 | | 55 | 55 | 55 | 55 | 55 | 55 | 55 | 55 | 55 | 57 | 55 | | 55 |
| DBM EDB 00 | | 56 | 56 | 56 | 56 | 56 | 56 | 56 | 56 | 56 | 58 | 56 | | 56 |
| PMC ADR 15 | 03 | | 03 | 03 | 03 | 03 | 03 | 03 | 03 | 03 | | 03 | | 37 |
| PMC ADR 14 | 04 | | | | | | | | | | | | | 35 |
| PMC ADR 13 | 05 | | | | | | | | | | | | | |
| PMC ADR 12 | 06 | | | | | | | | | | | | | |
| PMC ADR 11 | 07 | | | | | | | | | | | | | |
| PMC ADR 10 | 08 | | | | | | | | | | | | | |
| PMC ADR 09 | 09 | | | | | | | | | | | | | 33 |
| PMC ADR 08 | 10 | | 10 | 10 | 10 | 10 | 10 | 10 | 10 | 10 | | | | 31 |
| PMC ADR 07 | 13 | | | | 09 | | | | | | | | | 22 |
| PMC ADR 06 | 14 | | | 09 | | | | 09 | | | | | | 21 |
| PMC ADR 05 | 15 | | 09 | | | | 09 | | | | | | | 20 |
| PMC ADR 04 | 16 | | | | | 09 | | | | 09 | | | | 19 |
| PMC ADR 03 | 17 | | 07 | 07 | | 07 | | | 09 | | | | | 18 |
| PMC ADR 02 | 18 | | | | 07 | | 07 | 07 | 07 | 07 | | 18 | | 17 |
| PMC ADR 01 | 19 | | 19 | 19 | 19 | 19 | 19 | 19 | 19 | 19 | | 21 | | 16 |
| PMC ADR 00 | 20 | | 20 | 20 | 20 | 20 | 20 | 20 | 20 | 20 | | 22 | | 15 |
| | | | | | | | | | | | | | | |
| | | | | | | | | | | | | | | |
| | | | | | | | | | | | | | | |
| | | | | | | | | | | | | | | |
| | | | | | | | | | | | | | | |

FIG. 52

| NOM DES MODULES | AM 902 | | AM 903A | | AM 903B | | AM 903 C | | AM 903D | | AM 904 | | AM 927 | |
|---|---|---|---|---|---|---|---|---|---|---|---|---|---|---|
| REFERENCE FIG. 2 | 75 | | 51 | | 56 | | 61 | | 66 | | 74 | | 76 | |
| EMPLACEMENT | 14 | | 7 | | 8 | | 9 | | 10 | | 16 | | 13 | |
| CONNECTEURS | Z 01 | Z 02 | Z 01 | Z 02 | Z 01 | Z 02 | Z 01 | Z 02 | Z01 | Z 02 | Z 01 | Z 02 | Z01 | Z02 |
| PMC MEMR * | 42 | | 42 | 42 | 42 | 42 | 42 | 42 | 42 | 42 | 42 | | 42 | 43 |
| PMC MEMW * | 44 | | 44 | 44 | 44 | 44 | 44 | 44 | 44 | 44 | 44 | | | |
| PMC REST 20 | 58 | | 58 | 58 | 58 | 58 | 58 | 58 | 58 | 58 | 62 | | | |
| PMC REST 10 | 61 | | | | | | | | | | | | | |
| PMC $CLK 2 | 66 | | | | | | | | | | | | | |
| PMC GD1 | | 66 | 66 | 66 | 66 | 66 | 66 | 66 | 66 | 66 | | | | |
| PMC GD0 | | 65 | 65 | 65 | 65 | 65 | 65 | 65 | 65 | 65 | | | | |
| BPC INTR 4 | | 43 | 43 | 43 | 43 | 43 | 43 | 43 | 43 | 43 | | 43 | | |
| BPC INTR 5 | | 44 | 22 | 22 | 22 | 22 | 22 | 22 | 22 | 22 | | | | |
| BPC INTR 6 | 36 | | | | | | | | | | | | | |
| BPC DDW 0 | | 68 | 25 | 25 | 25 | 25 | 25 | 25 | 25 | 25 | | | | |
| BPC DDW1 | | 67 | 26 | 26 | 26 | 26 | 26 | 26 | 26 | 26 | | | | |
| BPC REST IN * | 65 | | | | | | | | | | 16 | | | |
| BPC IN 07 | | | | | | | | | 33 | | 26 | | | |
| BPC IN 06 | | | | | | | | | | 33 | 28 | | | |
| BPC IN 05 | | | | | | | 33 | | | | 40 | | | |
| BPC IN 04 | | | | | | | | 33 | | | 38 | | | |
| BPC IN 03 | | | | | 33 | | | | | | 36 | | | |
| BPC IN 02 | | | | | | 33 | | | | | 32 | | | |
| BPC IN 11 | | | 33 | | | | | | | | 64 | | | |
| BPC IN 10 | | | | 33 | | | | | | | 66 | | | |

FIG. 53